# EUROPEAN PATENT APPLICATION

(11) **EP 1 083 699 A1**
(43) Date of publication of application: **14.03.2001**
(21) Application number: 99919583.7
(22) Date of filing: 14.05.1999
(51) Int. Cl.: H04L 9/08, H04L 9/32, G09C 1/00, G06F 17/30

(54) **INFORMATION SHARING SYSTEM**

(30) Priority: 18.05.1998 JP 13550298; 11.08.1998 JP 22741098; 28.10.1998 JP 30765898; 29.10.1998 JP 30922398; 28.12.1998 JP 37218798; 05.02.1999 JP 2938499
(71) Applicant: Mitsubishi Materials Corporation, Chiyoda-ku, Tokyo 100-004 (JP)
(72) Inventor: OHKUBO, Tatsuma, Mitsubitshi Materials Corp., Omiya-shi, Saitama 330-0835 (JP); TOYODA, Shouichi, Mitsubitshi Materials Corp., Omiya-shi, Saitama 330-0835 (JP); NAKANE, Kazunari, Mitsubitshi Materials Corp., Omiya-shi, Saitama 330-0835 (JP); SABURI, Tetsu, Mitsubitshi Materials Corp., Omiya-shi, Saitama 330-0835 (JP); OKI, Naoto, Mitsubitshi Materials Corp., Omiya-shi, Saitama 330-0835 (JP)
(74) Representative: HOFFMANN - EITLE
(86) International application number: JP9902510
(87) International publication number: WO9960749

(57) **Abstract**

The present invention relates to an information sharing system.

An information sharing system employs the secret key cryptography and public key cryptography, wherein a secret key can be shared within at least a group, the information sharing system comprising: an information storing device which can at least be accessed by multiple members, and which is capable of storing the signature of the team master, a member list including public key information regarding members, a secret key list including encrypted key information, and encrypted data; a storing unit for storing the public key for at least one member which is permitted to view information; an encryption unit for encrypting input information based on the secret key cryptography which uses a secret key for encrypting information, thereby generating encrypted data; an encrypted key generation unit for encrypting the secret key used for encryption with a public key stored in the storing unit and specified, thereby creating an encryption key; a transmitting unit for transmitting the plurality of encrypted keys and encrypted data to the information storing device; a list administration unit which obtains a member list from the information storing device, judges whether or not the signature of the team master of the member list matches the specified signature, performs registration of public keys of members to be added or deletion of public keys of members canceling membership only in the event that the signatures match, and in the event of additional registration or cancellation, creates a new member list including at least the signature of the team master and public key information of members, and transmits the created member list to the information storing device; and an encryption/decryption device which has a decrypting unit for obtaining desired encrypted key information and encrypted data from the information storing device, decrypting the secret key from this encrypted key information, and decrypting the obtained encrypted data with the decrypted secret key.

## Description

### FIELD OF THE INVENTION

The purpose of this invention is to share an information among multiple users and to offer such an information sharing system, its processing method and a record medium, in order to prevent peeping and tampering of an information.

### DESCRIPTION OF THE RELATED ART

Various digital information came to be used on the computer network according to the development of the computer network technology in recent years.
However, peeping and tampering of these digital information by others are easy in the network on the computer.
Therefore, user's private information or business information etc. which especially must be kept confidentially is necessary to be acquired, transmitted, processed and recorded after encrypting by using an encryption technique.
The secret key cryptography, such as data encryption standard (DES), etc., was developed to encrypt such information, which must be kept confidentially.
In this system, it was necessary to deliver and record the encryption key, which encrypts data, in order to share it among users and to prevent acquiring by other users.
Therefore, an unit, which delivers the encryption key that is encrypted by another encryption key, is proposed to prevent peeping, tampering or acquiring this encryption key.
When there are multiple users, who want to share a certain information, in order to encrypt said information by the process above, it is necessary to use a key administration system which administrates these encryption keys and the keys which are used to encrypt said encryption keys, a group administration server wherein the users sharing information are grouped and administrated, and an access controlling unit for information, etc.
When the data needed to be kept confidentially is shared in a specific group like this, the secret key administration is done by a server, and a server administrator is assigned in this server.
However, if the server administrator is not included in the specific group, it is possible to peep the data without any hindrances.
Moreover, if the server administrator is included in the specific group, he can change the group member with his own decision and therefore, it can not be said that it is sure enough in data administration.

### SUMMARY OF THE INVENTION

Therefore, one of the purposes of this invention is to offer an information sharing system, its processing method and record media, which prevents peeping or tampering of information by the administrators, who are engaging in a database storing encrypted information, a server or a file system etc.
In the present invention, the purpose is accomplished by an information sharing system which employs the secret key cryptography and public key cryptography, wherein the secret key can be shared within at least a group, and said information sharing system comprising:
an information storing device which can be accessed by at least multiple members, and is capable of storing a signature of the team master, a member list including public key information regarding members, a secret key list including an encrypted key information, and encrypted data;
a memory unit for memorizing the public key for at least one member who is permitted to view information;
an encryption unit for generating encrypted data by encrypting input information based on said secret key cryptography which uses the secret key for encrypting an information;
an encrypted key generation unit for generating an encrypted key by encrypting the secret key by using a specified public key which is memorized in said memory unit;
a transmitting unit for transmitting said multiple encrypted keys and encrypted data to said information storing device;
a list administration unit which obtains the member list from said information storing device, judges whether or not the signature of the team master of said member list matches the specific signature, performs registration of public keys of members to be added or deletion of public keys of members canceling membership only in the event that said signatures match, and in the event of additional registration or cancellation, generates the new member list including at least the signature of the team master and the public key information of members, and transmits the generated member list to said information storing device; and
an encryption/decryption device which has a decryption unit for obtaining desired encrypted key information and encrypted data from said information storing device, decrypting said secret key from this encrypted key information, and decrypting the obtained encrypted data with the decrypted secret key.

According to this invention, it is possible to share the secret key in the group and there is no possibility to be seen by the group administrator who is engaged in the database storing encrypted data, the server or the file system.

Moreover, according to this invention, the purpose is accomplished by an information tamper detection device having a sending terminal located at the sender side, and a receiving terminal located at the recipient side which is connected with said sending terminal by a network, whereby information is sent and received between said sending terminal and receiving terminal, said information tamper detection device comprising:
a received contents confirmation data creation unit for creating received contents confirmation data indicating that said receiving side terminal has confirmed recipient of said data;
a transmitting unit for transmitting said received contents confirmation data by said network;
a receiving unit for receiving said received contents confirmation data by said network; and
an information tamper detection unit which compares said data sent from said sender terminal with said received contents confirmation data, and detects tampering by the comparison results.

According to this invention, since this information tamper detection device is constituted by using the received contents confirmation data and the transmitted contents confirmation data, the informational tampering is detectable even if it is a terminal which has not right to carry out the decryption of the received data.
According to this invention, the purpose is accomplished by an encryption device comprising a key encryption unit and an encryption unit;
said key encryption unit comprising:
a secret key obtaining unit for either obtaining or generating a secret key used for encryption employing the secret key cryptography;
a secret key encryption unit for encoding said secret key employing the public key cryptography so as to create an encrypted secret key; and
a first secret key tamper detection code creation unit for creating key code from said secret key, to be used for secret key tamper detection;
and said encryption unit comprising:
a data encrypting unit for encrypting plain text using said secret key to create encrypted text; and
a first data tamper detection code creation unit for creating first data tamper detection code from said plain text.

According to this invention, since it does not carry out tamper detection information for every plain text but carry out key information as tamper detection information for the secret key which encrypts each plain texts and consequently, it was enabled to detect tampering and to confirm himself who carried out the secret key, it can decrease the overhead of encryption information in which every information were encrypted. Consequently, such a loading to the network when the encrypted information is transmitted, and a required capacity of the memory unit when an encryption information is stored, can be decreased.

Moreover, according to this invention, the purpose is accomplished by a team data list administration device for administration of team data lists for hierarchical ordering of the team, said device comprising;
a authentication unit for requesting operation of team data list to a certain request destination, and according to the operation request, obtaining from the request destination the following for each team from the team which is the object of operation to the root team;
authority data including the identifier indicating the parent team of own team, and the digital signature of the administrator of said parent team;
   and
a team data list having an authority list including administrator information relating to authorized administrator personnel of sub-teams under own team, and the digital signature of the team master which is the administrator of own team or the administrator of the parent team;
   wherein confirmation is made for each team while backtracking the obtained team to said root team using said identifier, that there has been no tampering with the digital signature on said team data list and that the signature is that of one having authority using said administrator information;
a team data list modification unit for changing said team data list according to said operation request, once the validity thereof has been confirmed by said authentication unit; and
a signing unit for creating the digital signature of the individual instructing said operation request and attaching said digital signature said changed team data list, and sending this to said request destination.

According to this invention, it is possible to create sub-teams under each teams and construct hierarchical ordered teams by using team data lists including authority lists and authority data

Moreover, according to this invention, the purpose of this invention is accomplished by a member list administration device in a broadcast communication system, said system comprising:
an encrypted massage generating device which creates encrypted message including encrypted information, the formation which is formed by encrypting information to be sent;
a member list administration device performing administration of members lists including public keys of members, who are recipient of the broadcast;
an encrypted message decrypting device which decrypts said encrypted message; and
an message broadcast device which receives code information sent from said encrypted message generating device and distributes said code information to one or more of said encrypted message decrypting devices, based on said member list;
said member list administration device comprising:
a list creating unit for creating a member list including the public key(s) of one or more members for broadcast communication; and
a public key administration unit for obtaining and saving said public keys.

According to this invention, since an encrypted information is not decrypted at the message broadcast device in this system, it becomes to prevent improper acts, such as leakage and tampering, of contents of broadcast communication by administrators of the message broadcast device and to be sharable only to the member with the need of sharing an information truly said contents of broadcast communication .

Moreover, according to this invention, the purpose of this invention is accomplished by a team data list administration device, comprising:
a list creator verification unit for notifying a certain request destination of information for performing personal identification/authentication regarding a director of modification, the team data list which includes information relating to a team comprised of members mutually sharing resources and the digital signature of the master having administrative privilege regarding said information and which has been prepared according to the privilege of the members of the team is obtained from said request destination, and for verifying whether or not a master having privilege created said team data list, based on the contents of said received team data list;
a list modification unit for changing said team data list which has been verified to be the team data list created by said master having privilege, according to said change request; and
a digital signature unit for creating the digital signature of the individual instructing the change, and attaching said digital signature to the changed team data list and sending said team data list to said request destination.

According to this invention, the team data administration device above acquires the team data list of the master list being saved in the server etc. and the member list etc. responding to the change request from the master with the just permission, and returns these lists adding required changes to request destination after confirming these lists being justly created by said master having permission. Therefore, it can detect to operate unjustly data lists by ones having not proper permission i.e., general members except the master, the administrator of the server and crackers etc.

### BRIEF DESCRIPTION OF THE DRAWINGS

Figure 1 shows the basic construction of information sharing system in Example 1.
Figure 2 shows the block diagram indicating the construction example of the encryption/decryption device in Example 1.
Figure 3 shows the construction example of the decryption unit in Figure 2.
Figure 4 shows various lists stored in WWW server.
Figure 5 shows the explanation of the detailed function of DBMS in WWW server as the informational administration device in Example 1.
Figure 6 shows the explanation of the registration example of the public key ID for the group when the secret key is shared within the group.
Figure 7 shows the explanation of the registration example of the secret key when the secret key is shared within the group.
Figure 8 shows the explanation of the operational example of encryption of data when the secret key is shared within the group.
Figure 9 shows the explanation of the operational example of encryption of data when the secret key is shared with the respectively selected user.
Figure 10 shows the explanation of the operational example of decryption of data.
Figure 11 shows a block diagram explaining the theory of operation of the information tamper detection device in Example 2.
Figure 12 shows the block diagram indicating the construction of the information tamper detection device in Example 2.
Figure 13 shows the flow chart explaining the operation of the received contents confirmation data verification unit 103β in Figure 12.
Figure 14 shows the flow chart explaining the operation of the sent contents confirmation data creation unit 104β in Figure 12.
Figure 15 shows the flow chart explaining the operation of the received contents confirmation data creation unit 202β in figure 12.
Figure 16 shows the flow chart explaining the operation of the sent contents confirmation data verification unit 205β in Figure 12.
Figure 17 shows the explanation of the theory of operation of the usual information tamper detection device.
Figure 18 shows the explanation of faults of the usual information tamper detection device.
Figure 19 shows the block diagram indicating the construction of the encryption/decryption device as one of the enforcement form of invention in Example 3-1 to 3-3.
Figure 20 shows one of the utilization form of invention in Example 3-1 to 3-3.
Figure 21 shows the flow chart explaining the operation concerning encryption.
Figure 22 shows the construction indicating information before encryption and encrypted information.
Figure 23 shows the flow chart explaining the operation concerning decryption.
Figure 24 shows the flow chart explaining the operation when other information is added to the encrypted information.
Figure 25 shows the construction of encrypted information before and after when other information is added to encrypted information.
Figure 26 shows the flow chart explaining the operation when data sharing member B permits the addition of data sharing member C to the same team.
Figure 27 shows the construction of the encrypted information before and after when information sharing member C is added to the team.
Figure 28 shows the flow chart explaining the operation when the information sharing member is deleted from the team.
Figure 29 shows the construction of encrypted information before and after when the information sharing member A is deleted from the team.
Figure 30 shows the information memorized in the information storing device in Example 3-1.
Figure 31 shows the information memorized in the information storing device when the information is added in Example 3-2.
Figure 32 shows the example of display of the schedule after decryption in Example 3-3.
Figure 33 shows the flow chart explaining the operation of encryption by the usual encryption/digital signature method.
Figure 34 shows the flow chart explaining the operation of decryption by the usual encryption/digital signature method.
Figure 35 shows the construction the information before encryption and the encrypted information by the encryption method indicated in Japanese Patent Laid-Open Hei 8-156964.
Figure 36 shows the construction the information before encryption and the encrypted information by the encryption method indicated in Japanese Patent Laid-Open Hei 9-71388.
Figure 37 shows the block diagram indicating the construction of the system having the team data list administration device and the team data list storing device in Example 4-1.
Figure 38 A, B, C and D show structures of the team data lists memorized at the server side where the team data list storing device is installed, in Example 4-1.
Figure 39 shows one example of the hierarchical orderings of teams in Example 4-1.
Figure 40 shows the explanation filled detailed values of team data lists about each team in hierarchical ordering teams in Figure 39.
Figure 41 shows the explanation indicating the process to create sub-teams in Example 4-1.
Figure 42 shows the explanation indicating the process of the authority confirmation function in the server side when creation of subteams is required in the process in Figure 41.
Figure 43 shows the explanation indicating the process concerning list authentication request at client side operated in the process in Figure 41.
Figure 44 shows the explanation indicating the process when the privilege of the team data list, which is created newly in the client side, is confirmed in the server side, in the process in Figure 41.
Figure 45 shows the explanation indicating the process of modification the team master of the subteam in Example 4-1.
Figure 46 shows the explanation indicating the process of modification (deletion) of the creation privilege of sub-authority in Example 4-1.
Figure 47 shows the explanation indicating the process of deletion the sub-team in Example 4-1.
Figure 48 shows the explanation indicating the process of the method called Shake Hand or Challenge Response which is used by the server when the privilege of users in the client side is confirmed.
Figure 49 shows the explanation indicating one example of the hierarchical orderings of teams in Example 4-2.
Figure 50 shows the explanation indicating one example of the hierarchical orderings of teams in Example 4-3.
Figure 51 shows the block diagram of the construction of the usual system doing information sharing by utilizing the access control lists.
Figure 52 shows the scheme of the broadcast communication system in Example 5.
Figure 53 shows the example of the general member list.
Figure 54 shows one example of the member list constituted by the multiple lists.
Figure 55 shows the operational form of the member list administration device of this invention.
Figure 56 shows the flow chart of the operation of the list creation unit.
Figure 57 shows the operational form of the encrypted message creation device in Example 5.
Figure 58 shows the process the encryption/decryption in the broadcast communication system in Example 5.
Figure 59 shows the explanation of the scheme of the multiple parts sending and the multiple parts receiving of the broadcast communication system in Example 5.
Figure 60 shows the operational form of the encryption/decryption device in Example 5.
Figure 61 shows the operational form of the message broadcast device in Example 5.
Figure 62 shows the operational example in which the broadcast communication system in Example 5 is applied to the distribution system of stock news.
Figure 63 shows one example of the broadcast communication system of this invention utilizing the mailing list server.
Figure 64 shows the explanation of the scheme of the usual broadcast communication system.
Figure 65 shows the explanation of the scheme of the broadcast communication system disclosed in Japanese Patent Laid-open Hei 7-245605.
Figure 66 shows the block diagram of the system construction having the team data list administration device and the team data list storing device in one example of Example 6.
Figure 67 is the first figure to explain the premised technology in Example 6 and shows the block diagram of the construction dividing the member list administration unit and the member list storing unit between the client and the server.
Figure 68 is the second figure to explain the premised technology in Example 6 and shows the explanation of the process when the member in the member list in the server is modified by the request of the client side.
Figure 69 shows the explanation of the process of the method called Shake Hand or Challenge Response, which is used by the server, when the authority of users in the client side is confirmed.
Figure 70 shows the explanation of the process concerning the member change when the members are administrated by the multiple administrators, in the performance foam in Figure 69.
Figure 71 shows the flow chart of the process of the confirming the list creator being done in the client side in the performance form in Figure 69.
Figure 72 shows the explanation of the process concerning the sub-master change when the members are administrated by the multiple administrators in the performance foam in Figure 69.
Figure 73 shows the explanation of the process concerning the team master change when the members are administrated by the multiple administrators in the performance foam in Figure 69.
Figure 74 shows the flow chart of the process of the privilege confirming being done in the server side when the team master is changed in Figure 73 in the performance foam in Figure 69.
Figure 75 shows the explanation of the situation of the team master list and the team member list being compared and collated at the each step in Figure 74 when the privilege confirmation is done in the performance form in Figure 69.
Figure 76 shows the block diagram of the construction of the usual system doing the information sharing by utilizing the access control list.
Figure 77 shows the explanation of the process done between the client and the server to share the information only with the members belonging to the specific group.

### DESCRIPTION OF PREFERRED EMBODIMENT

The following Examples do not restricted the claims of this invention and all of the combinations of characteristics explained in Example is not necessary to accomplish the object.

### Example 1

The invention of Example 1 aimed at the information sharing between multiple users and relates to the information sharing system, its processing method and the record medium to prevent peeping and tampering of the information.
The following techniques are usually known regarding to the invention of Example 1.
According to the development of recent computer network technique, various digital information have been used on computer networks.

However, it is easy for others to peep or tamper these digital information on computers or networks.
Therefore, it is necessary to retrieve, transfer, process and record for the user's private information or business information, etc. which especially needs to be kept secret, after encrypting these information by using encryption technology.

In order to encrypt such information that needs to be kept secret, the secret key encryption systems, such as Data Encryption Standard (DES) etc., were developed.
In this system, to share the data encryption key between them, users should distribute and record said key without others intercepting it.
Therefore, in order to prevent the peeping, tampering and acquirement of the encrypted key above, the distributing method, which uses the encrypted key which is encrypted again by other encryption key, is proposed.

When there are the multiple users who want to share a certain information, in order to encrypt the information by the method above, it is necessary to utilize the key administration system which administrates these encrypted keys or keys which encrypt said encrypted keys, the group administration server which administrates the users sharing the information by grouping and the access controlling unit for information, etc.
Thus, when the secret data are shared by the designated group, the secret key administration has been done in the server and the server administrator is assigned.

However, when the server administrator above is not in the designated group above, he can peep the data without any hindrance.
Moreover, though the server administrator above is included in the designated group above, he can change the group members at his own decision and it cannot be said that it is faultless on administration of data.

The present invention has been done in such situation above and the purpose is to offer the information sharing system which can prevent the peeping and tampering the contents of said information by the administrators who are engaging in the database storing the encrypted information, the server and the file system, etc., and its processing method and record mediums.

According to the invention of Example 1, for example, the secret key cryptography and public key cryptography are used together in order to keep confidentiality of the information which multiple users want to share. The inputted information is encrypted by the secret key encryption method using the secret key.

Moreover, according to this invention, for example, it becomes possible to realize the information sharing system on the net work.
In this system, at least the signature of the team master, the member list including public key information of members, the secret key list including the encrypted key information and an encrypted data, are served in the information storing device on which at least multiple members can access. When the additional registration of the member belonging in the group is done, the member list is obtained from the information storing device and it is judged whether or not the signature of the group administrator of the member list matches the designated signature.
Then, only in the event that said signature matches, the new member list which includes at least the signature of the team master and the member public key information is made and said member list is transmitted to the information storing device and stored.

Moreover, when the registration of the secret key utilized by the group member is done, the member list is acquired from the information storing device and it is checked that whether or not the signature of the team master of the member list matches the designated signature.
Then, only in the event that said signature matches, the secret key, which must be registered, is encrypted by using the specified public key and said encrypted secret key is transmitted to the information storing device and stored.

Moreover, when the data is encrypted by using the secret key, at least the encrypted key message is retrieved from the secret key list in the information storing device and the secret key is decrypted by said encrypted key information.
Then, the inputted message is encrypted based on the secret key cryptography by using the decrypted secret key to create the encrypted data, and this data is transmitted to the information storing device and stored.

Moreover, when data is decrypted, the requested encrypted key message and encrypted data are retrieved from the information storing device and the secret key is decrypted by using said encrypted key message.
Then, the encrypted data obtained by the decrypted secret key is decrypted.

Moreover, when the member list manipulation is requested, the member list manipulation corresponding to the request is done in the information storing device by the group administration method.
Moreover, when the secret key registration is requested, the requested secret key is registered with including its encrypted key message. Moreover, when the secret key is requested, the most suitable secret key for information sharing in the designated group is selected by the secret key administration unit and is transmitted to the claimant.
Moreover, when the encrypted data registration is requested, the encrypted data is stored with the secret key message used in encryption of such data, in the encrypted data administration unit. Moreover, when the encrypted data obtaining is requested, the stored encrypted data and the secret key message are transmitted to the claimant.

Hereafter, Example 1 is explained in detail with relating to the figures.

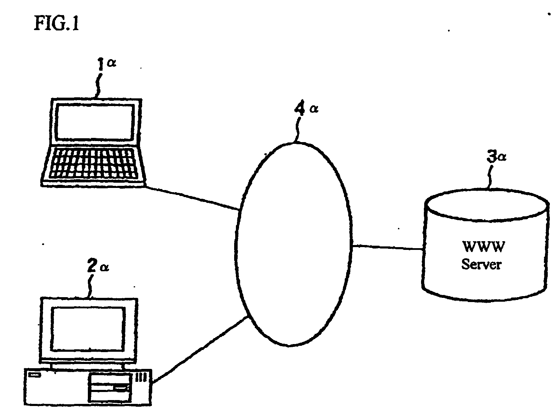

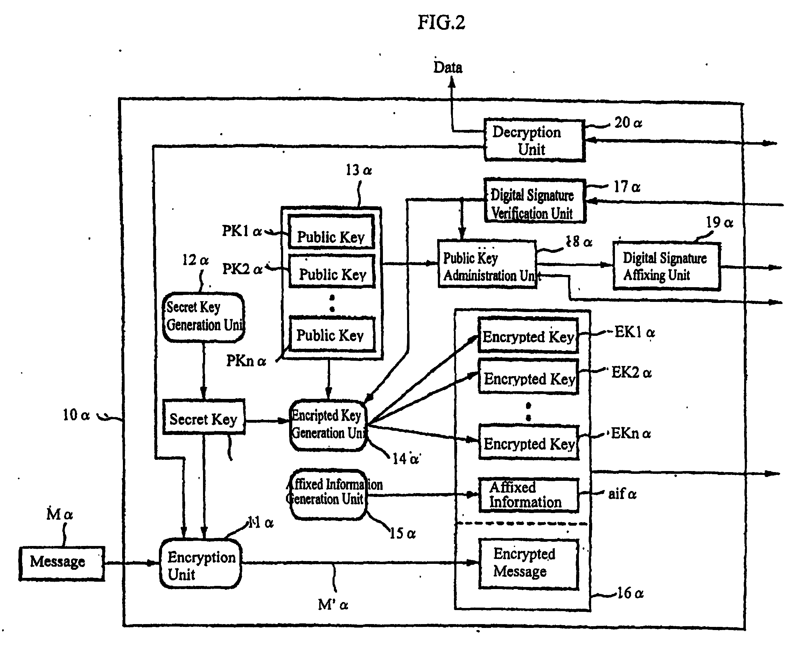

Figure 1 shows a basic topology of the information sharing system in the present invention, and Figure 2 shows a block diagram indicating the example topology of the encryption/decryption device in the present invention.

As shown in Figure 1, the information sharing system of the present example (Example 1) comprising:
the 1st terminal unit 1α and the 2nd terminal unit 2α wherein the encryption/decryption device 10α is incorporated as shown in Figure 2;
WWW server 3α which stores the member list generated in said encryption/decryption device 10α, the secret key list and the encrypted data, as the information storing device,
and these devices are connected by the net work (for example, inter-net) 4α.

The encryption/decryption device 10α comprises the encryption unit 11α, the secret key generation unit 12α, the memory unit 13α, the encrypted key generation unit 14α, the affixed information creation unit 15α, the transmitting unit 16α, the digital signature verification unit 17α, the public key administration unit 18α, the digital signature affixing unit 19α, and the decryption unit 20α.
And furthermore, the list administration unit comprises the digital signature verification unit 17α, the public key administration unit 18α, and the digital signature affixing unit 19α, as main elements.

The encryption unit 11α encrypts the inputted message Mα to generate the encrypted data M'α based on the secret key cryptography (for example, DES), by using the secret key dkα or the secret key ckα which is read out from WWW server 3α and outputs said encrypted data M'α to the transmitting unit 16α.
Moreover, the encryption unit 11α requests the member list of the designated group, i.e., the member list including the group ID and the user public key ID in detail, to WWW server 3α, when the secret key is shared in the group and data is encrypted. The transmitting of this request is done through the transmitting unit 16α.

The secret key generation unit 12α comprises, for example, the random-number-generation circuit, etc, and generates the secret key dkα to encrypt the message and outputs to the encryption unit 11α and the encrypted key generation unit 14α. In addition, the secret key dkα is generated as, for example, 64 bits data

The memory unit 13α comprises, for example, a hard desk wherein the each specific pubic key of multiple users n PK1α, PK2α, ..., PKnα is already recorded and is accessed by the encrypted key generation unit 14α and the public key administration unit 18α.

The encrypted key generation unit 14α encrypts the secret key dkα (or secret key ckα) used in encryption, based on the public key cryptography (for example, RSA) by using the user's public key recorded in the memory unit 13α, and generates multiple encrypted keys EK1α, EK2α, ..., EKnα, and outputs these generated encrypted keys EK1α, EK2α, ..., EKnα to the transmitting unit 16α.
Moreover, the encrypted key generation unit 14α requests the member list of the specific group to WWW server 3α when said specific group members want to share the information only in them and register the secret key to utilize in them. The transmitting of this request is done through the transmitting unit 16α.

The affixed information generation unit 15α generates, for example, the message digest kmdα of the secret key dkα by using Hash function and outputs it to the transmitting unit 16α as the affixed information ajfα.
In addition, as the affixed information, it may be sufficient that ID, user passwords, certificates, e-mail addresses, public keys, order information which are to specify the secret key being able to decrypt by user's secret key, or combined these information.

The transmitting unit 16α transmits one or more encrypted keys EK1α, EK2α, ..., Eknα, encrypted data M'α and affixed information ajfα which are generated with encryption of inputted message Mα, to WWW server 3α which works as the information storing device through the network 4α. However, such the transmitting operation doesn't be done at the secret key registration.

The digital signature verification unit 17α receives the member list GLα of the public key of the specific group which is stored in WWW server 3α through the net work 4α, and verifies the digital signature of the team master, and in the event that said verification is affirmative, outputs the public key PK to the public key administration unit 18α from the memory unit 13α when there is the addition of the public key of the new user who wants to enter into the specific group, and when there is the withdrawing member, deletes said member from the members recorded in the received member list, and moreover, outputs the public key PKα corresponding to the public key ID list, to the encrypted key generation unit 14α from the memory unit 13α when the secret key is registered.

When the public key of the user, who wants to enter into the group newly, is added, the public key administration unit 18α generates the new member list, sets the public key number (No) and the member's public key in said member list, and moreover, outputs the new member list to the digital signature affixing unit 19α with adding the group ID, after receiving the specific public key PKα outputted from the memory unit 13α. Moreover, for example, when the member list request of the specific group is needed, this request is done to WWW server 3α by the public key administration unit 18α.

The digital signature affixing unit 19α affixes the digital signature of the team master to the new member list generated by the public key administration unit 18α, transmits said list to WWW server 3α, i.e., an information storing device, and registers said list through the network 4α, .

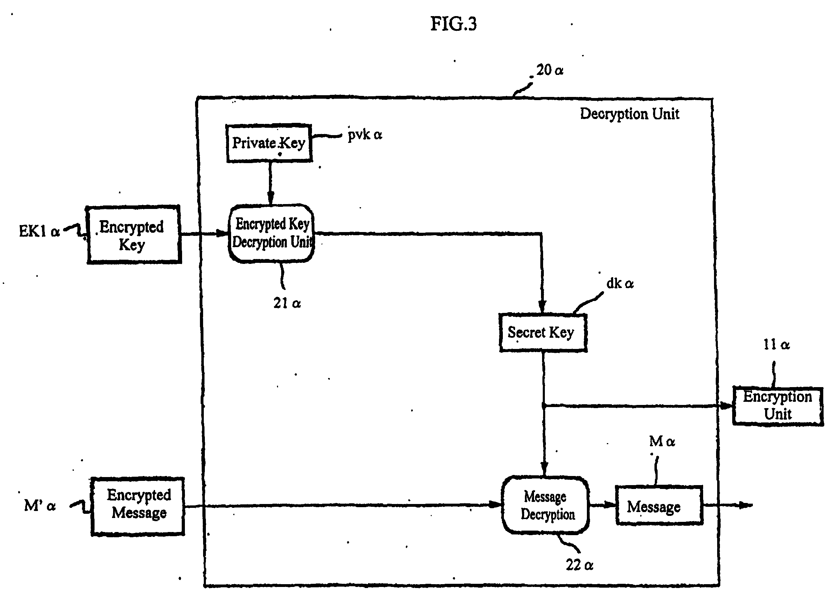

The decryption unit 20α retrieves the desired secret key number (No) and the encrypted key from the secret key list CKLα registered in WWW server 3α, decrypts the encrypted key to obtain the secret key based on the public key cryptography (for example, RSA) by the user's private key pvkα, and transmits said secret key to the encryption unit 11α.
Moreover, when the data registered in WWW server 3α is decrypted, the decryption unit 20α transmits the data ID and the public key number (No) to WWW server 3α, obtains the encrypted key and data, decrypts the secret key by using the public key cryptography, and decrypts the data by using the secret key cryptography.
This decryption unit 20α comprises the encrypted key decryption unit 21α and the message decryption unit 22α as shown in Figure 3.

Moreover, in addition to multiple encrypted keys, affixing data, and encrypted data stored in WWW server 3α, the decryption unit 20α obtains, for example, the algorithm identification information "desrsa" (for example, it is encrypted by using DES and RSA), the identification information which is used to identify the algorithm of secret key cryptography and public key cryptography, and information "info" (for example, to initialized random numbers utilized in DES, etc.), information which is not mentioned above and is necessary to perform the encryption algorithm.

Then, the decryption unit 20α mentioned above initializes the algorithm to be able to utilize on decryption based on the algorithm identification information "desrsa" and information "info".

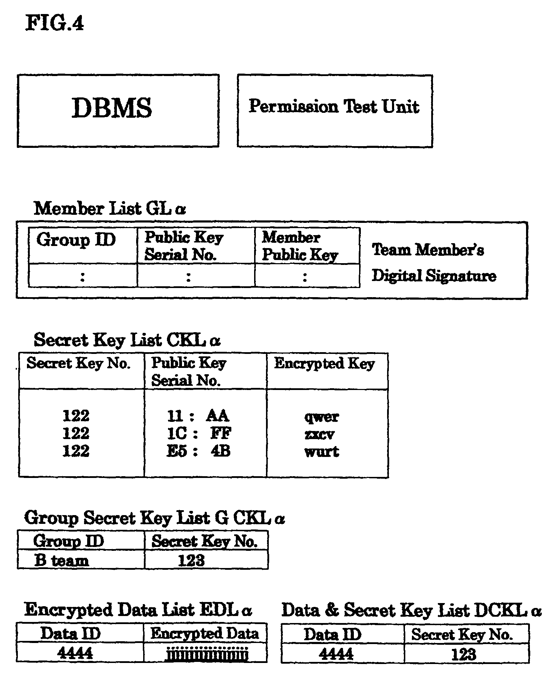

WWW server 3α has the data base management system (DBMS) 31α and the permission test unit 32α which has a permission test function as shown in Figure 4, and records and stores the group list GLα, the secret key list CKLα, group secret key list GCKLα, the encrypted data list EDLα and the data secret key list DCKLα, in the specific memory unit.

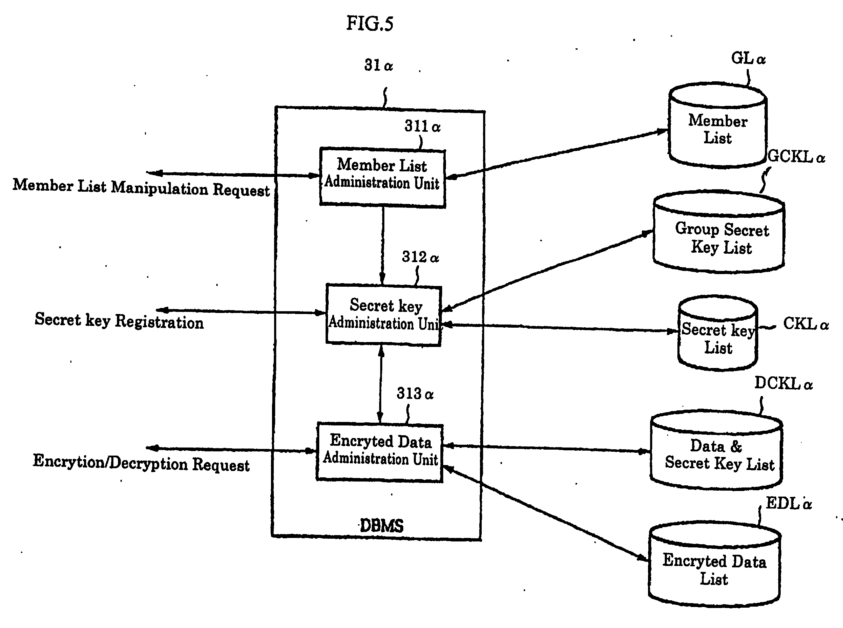

DBNS31α has three information administration storing functions that are the member list administration unit 311α, the secret key administration unit 312α and the encrypted data administration unit 313α as shown in Figure 5. These units confirms whether or not each manipulation, registration or data storing request fulfills their privilege, by using authentication unit.

When the member list changing request is done from the client side, the member list administration unit 311α accesses to the member list GLα, responses to the member list manipulation request, and manipulates the member list GLα according to the replied team master's request. Moreover, the member list administration unit 311α has the addition/deletion function of whole group.

When the secret key registration is done, the secret key administration unit 312α accesses to the secret key list CKLα and the group secret key list GCKLα, and registers the secret key.
The secret key administration unit 312α selects the optimum secret key (the newest key when the specific group has the multiple secret keys which are updating at any time) for the information sharing in the specific group at the point, and transmits to the client, when the secret key request is done by the client. Moreover, when the secret key administration unit 312α receives, for example, the encrypted key and the group ID information concerning the secret key which is about to be registered, said secret key administration unit 312α classifies and stores them to each list. At this time, the secret key ID is generated.

Moreover, at the new registration of the member to the specific group, when the each list is changed to allow the new member to read the information which was shared in the group before the registration by the new member, the member list administration unit 311α and the secret key administration unit 312α collaborate and perform the following processing.

In this case, the member list administration unit 311α confirms the authority and obtains the public key numbers (No) and public keys of the members in the specific group, from the member list GLα by referring the group ID.

The secret key administration unit 312α retrieves all the secret key number (No) used in the specific group from the group by referring to the group ID from the group secret key list GCKLα. Then, the secret key administration unit 312α obtains all the encrypted keys wherein each secret key numbers (No) matches the team master's public key number (No), and transmits to the clients.
Then, the member list administration unit 311α and the secret key administration unit 312α modify the member list GLα, the secret key list CKLα and the group secret key list GCKLα, after receiving the encrypted key, the member list, the public key number (No), and the secret key ID which are returned as the result of the processing, such as modification or encryption etc. in the clients side, .
Therefore, the newly added member can acquire the information shared in the past since public key of the member is included in the secret key list.

Moreover, in the case of the cancellation of the members from the specific group, when the each lists is modified in order to prevent the canceled member reading the information shared in the group after cancellation, the member list administration unit 311α and the secret key administration unit 312α collaborate and perform the following processing.

In this case, the member list administration unit 311α updates the member list. At the last reply, the member list administration unit 311α compares the new member list and the member list before update, deduces the canceled member's public key number (No), and transmits the group ID and the canceled member's public key number (No) to the secret key administration unit 312α.
The secret key administration unit 312α retrieves all the secret key numbers (No) used in the specific group by referring the group ID from the group secret key list GCKLα, and deletes the all the encrypted keys wherein the each secret key numbers (No) matches the canceled member's public key numbers (No) from the secret key list CKLα.

In addition, at the DBMS31α, the processes above are combined and performed when the addition and cancellation of members are performed simultaneously.

The encrypted data administration unit 313α accesses the group secret key list GCKLα, the secret key list CKLα, the data secret key list DCKLα and the encrypted data list EDLα, by collaborating with the secret key administration unit 312α, and transmits the member list, registers the encrypted data according to the client request, and generates the data ID. Moreover, when the decryption request is received, the encrypted data administration unit 313α refers the data ID, the public key number (No), and the three lists above, and transmits the encrypted data and the encrypted key.

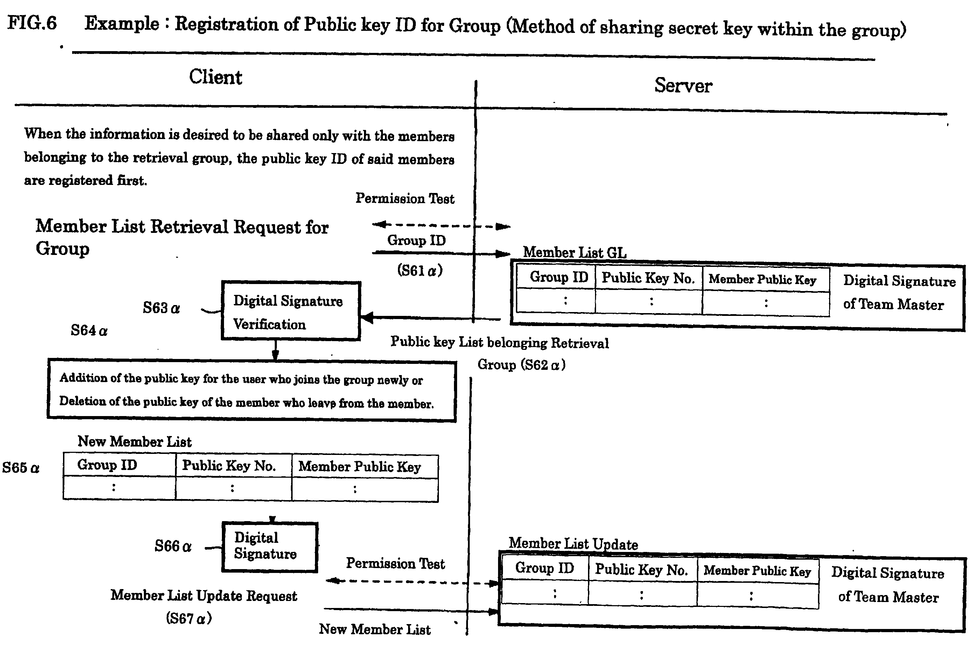

Then , the performance by the constitution above is explained as following. Furthermore, in the case that the secret key is shared in the specified group, the following examples related with Figure 6 to Figure 10, are explained orderly, i.e., the registration example of the public key to said group, the registration example of the secret key, the examples of the encryption and the registration of data, the encryption example in the case that the user sharing key is selected separately, and the data decryption example.

At first, when the secret key is shared within the group, the registration example of public keys ID to the group is explained in relating with Figure 6. When the member wants to share the information among the members of the specific group, at first, the registration of the member's public key ID is done.

In this case, the permission test of the authorities, i.e., access right etc., is done and the member list request of the specific group is done from the client side (the station side), for example, from the public key administration unit 18α to WWW server 3α (S61α).

According to the member list request, the public key ID list of the specific group is transmitted from WWW server 3α to the encryption/decryption unit 10α in the client side through the net work 4α (S62α) .
In the encryption/decryption unit 10α, the member list, i.e., the public key list, is inputted to the digital signature verification unit 17α and the digital signature verification of the group administrator is done here.(S63α)
If the verification is positive, the public key is outputted from the memory unit 13α to the public key administration unit 18α when the public key of new user who wants to enter the group is added, and the public key of corresponding member is canceled from the members recorded in the received member lists when there is the member who wants to withdraw. (S64α)
In the public key administration unit 18α, after receiving the specified public key PK outputted from the memory unit 13α, the new member list is created (S65α). Then, the list is set with public key numbers (No), public keys of the member and the group ID and outputted to the digital signature affixing unit 19α.

In the digital signature affixing unit 19α, the digital signature of the group administrator is affixed to the new member list made in the public key administration unit 18α. (S66α)
Then, for example, member list update request is done from the digital signature affixing unit 19α to WWW server 3α and the member list GLα is updated at WWW server by member list administration unit 311α. (S67α)

In addition, at the step S63α, if the digital signature verification is negative, the corresponding group administrator doesn't have privilege to update or cancel etc. and therefore, the processes after step S64α are not done.

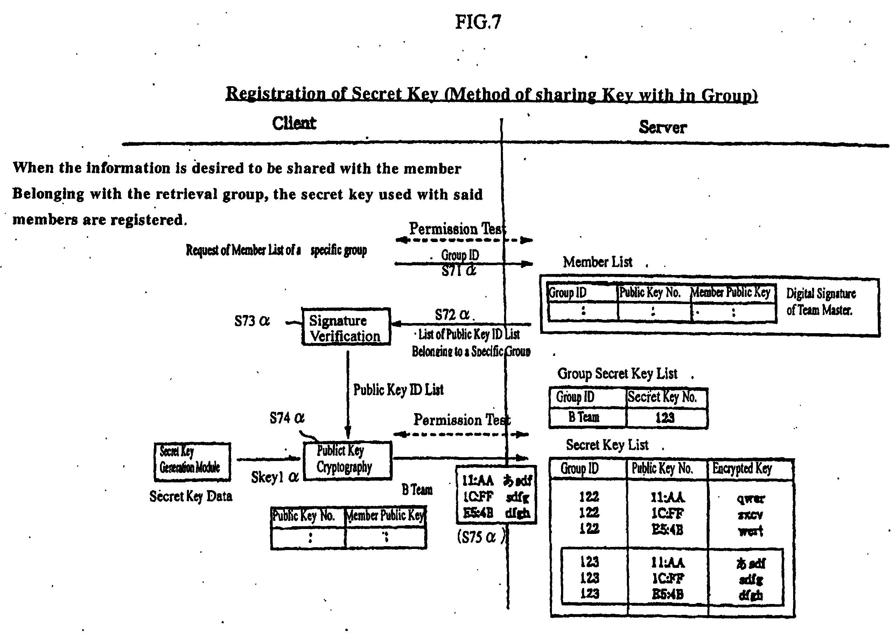

Next, when the secret key is shared within the group, the registration example of the secret key is explained in Figure 7.
When only the member belonging to the specific group wants to share information, the registration of the secret key used by said member is done. In this case, the permission test of authorities, i.e., access right etc. is done and the member list request of the specific group is done from the client side (terminal side) i.e., for example, the encrypted key unit 14α, to WW server 3α. (S71α)

For the member list request, the public key ID list of the specific group is transmitted from WWW server 3α to the encryption/decryption unit 10α through the network 4. (S72α)
In the encryption/decryption unit 10α, the member list, i.e., the public key list, is inputted to the digital signature verification unit 17α and the digital signature of the group administrator is verified here. (S73α)

If the verification is positive, the public key PK corresponded to the public key ID list is outputted from the memory unit 13α to the encrypted key generation unit 14α.
In the encrypted key generation unit 14α, the secret key Skey1α generated at the secret key generation unit 12α is encrypted, for example, based on the public key cryptography, by using the given public key. Then, as shown in Figure 7, one or more encrypted keys EKα are generated by affixing the public key number and data for the secret key list including the member public key, and outputted to the transmitting unit 16α. (S74α)
Then, at the transmitting unit 16α, the public key number and the secret key list data including the encrypted key wherein the secret key list data which includes the member public key is affixed, is transmitted to WWW server 3α through the network 4α, and stored at the specified location in the public key administration unit 312α as shown in Figure 7. (S75α)
In addition, the affixed information generated at the affixed information generation unit 15α may be included in the transmitted information from the transmitting unit 16α.

In addition, at the step S73α, if the digital signature verification is negative, the corresponding administrator has no privilege to register the secret key and therefore, the processes after step S74α are not done.

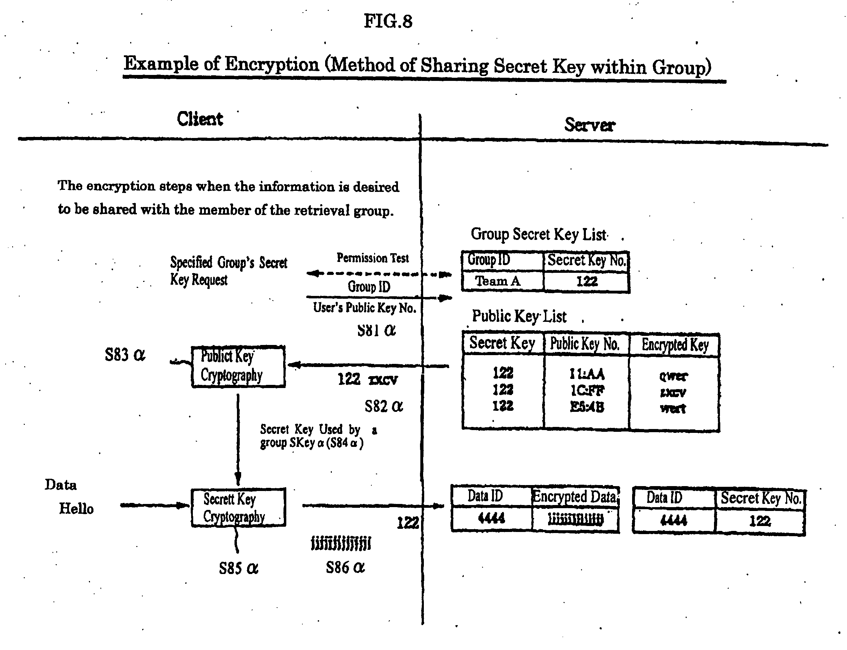

Next, when the secret key is shared within the group, the encryption of the data is explained in Figure 8.
In this case, after verification of the privilege of access right etc., the secret key request of the specific group, i.e., the request of the group ID and the user public key ID (for example, No. IC:FF) in detail, is done from the client side (the station side), i.e., for example, from the encryption unit 11α, to WWW server 3α. (S81α)

For the group list request, the secret key of the specific group, i.e., for example, 122, and the encrypted key of the specific group, i.e., for example, zxcv, are transmitted to the encryption/decryption device 10α of the client side. (S82α)

In the encryption/decryption device 10α, the secret key number (122) and the encrypted key (zxcv) are obtained at the decryption unit 20α, and the secret key Skey2α is obtained after decryption of the encrypted key by using the user's private key pvkα, based on the public key cryptography. Then, the obtained number and said secret key Skey2α are outputted to the encryption unit 11α. (S83α, S84α)

In the encryption unit 11α, the input message Mα ("Hello") is inputted, and this input message Mα is encrypted based on the secret key cryptography (for example, DES) by using the secret key Skey2α, and the encrypted date M'α (for example, jjjjjj, ) which is affixed the secret key number (122) is generated and outputted to the transmitting unit 16α. (S85α)
Then, at the transmittance unit 16α, the encrypted date M'α (for example, jjjjjj) which is affixed the secret key number (122) is transmitted to WWW server 3α through the net work 4α, and is stored at the predetermined location by the encrypted data administration unit 313α as shown Figure 8. (S86α)

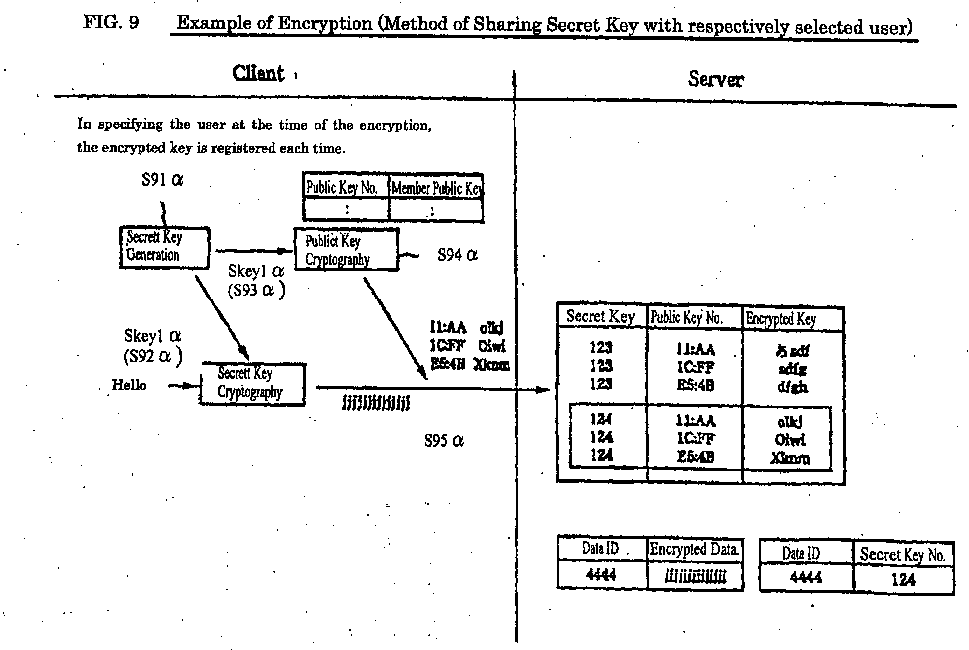

Next, in the case of sharing secret key with separately selected user, the encryption of data is explained in Figure 9.
In this case, the in put message Mα ("Hello") is inputted to the encryption unit 11α of the encryption device 10α. Then, the secret key Skey1α is generated at the secret key generation unit 12α (S91α), and this secret key Skey1α is transferred to the encryption unit 12α and encrypted key generation unit 14α. (S92α, S93α)

At the encryption unit 11α, the input message Mα is encrypted based on the secret key cryptography DES by using the secret key Skey1α, and the encrypted date M'α (for example, "jjjjjj") which is affixed the secret key number (for example, "124") is generated and outputted to the transmittance unit 16α.

Moreover, the public key PKα based on the public key cryptography ( for example, RSA) of user A, B and C is read from the memory unit 13α at the encrypted key generation unit 14α.
At the encrypted key generation unit 14α, the secret key Skey1α is encrypted based on the public key cryptography by using each public key. Then, or example, the encrypted key (olkj, Oiwi, Xknm) are obtained and the data including the public key numbers ("11:AA", 21C:FF","2E5:4B") are outputted to the transmittance unit 16α. (S94α)

Then, the data which includes the encrypted data M'α (for example, "jjjjjj") affixed the secret key number (for example, "124") in the transmitting unit 16α, the encrypted keys ("olkj"," Oiwi", "Xknm") and the public key numbers, is transmitted to WWW server 3α trough network 4α and stored to the specified location shown in Figure 9. (S95α)

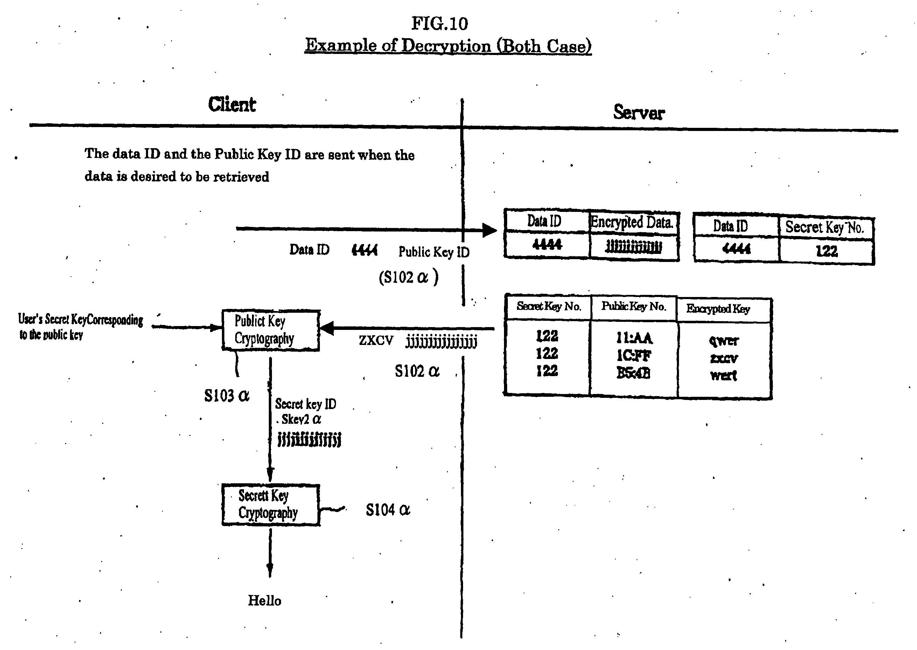

Next, the case of acquirement of the data stored in WWW server 3α is explained in Figure 10.
In this case, for example, the data ID (for example,"4444") and the public key ID are transmitted to WWW server 3α from the decryption unit 20α. (S101α)
At WWW server 3α, the encrypted data (for example, "jjjjjj") and the encrypt key zxcv corresponding to this data are read from the established location in the encrypted data administration unit 313α, by using the received data ID and the secret key number (for example, "122") based on this data ID, and are transmitted to the client side through the network 4α. (S102α)

In the decrypted unit 20α, the secret key is decrypted as Skey2α by using the secret key corresponding to the public key ID based on the public key cryptography. (S103α)
Then, by using this secret key Skey2α, the data is decrypted as "Hello" in based on the secret key cryptography. (S104α)

Next, the operation at WWW server 3α is explained in the following two cases. One case is that the each list is manipulated for the new member who can read the information shared in the specific group before the registration, at the new member registration to the specific group. The other case is that each list is manipulated to prevent that the canceled member reads the information shared in the specific group after cancellation, at the member cancellation from the specific group.

At first, it is explained that the former case i.e., the each list is modified for the new member who can read the shared information in the specific group before the registration, at the new member registration to the specific group.

In this case, at WWW server 3α, while the privilege is confirmed by the group administration unit 311α, the public key number (No) and the public key of the member belonging the specific group (for example, B team) are obtained from the member list GLα by referencing the group ID.
Then, at the secret key administration unit 312α, the group ID is referred from the group secret key list GCKLα and all the secret key numbers (for example, 52, 111, 123 ) used in the specific group (for example, B team) is retrieved.
Moreover, at the secret key administration unit 312α, all the encrypted key (for example, qwer, phea, gobp) wherein each secret key number (for example, 52, 111, 123) matches the public key number of the group administrator (for example, 11:AA), is obtained by the secret key list CKLα and is transmitted to the client of the team master.

In the encryption/decryption device of the team master 10α, the member list and the secret keys (for example, Skey100α, Skey105α, Skey80α) wherein all of the encrypted keys are decrypted, are obtained. As shown in Figure 6, after the member list is manipulated, these secret keys are encrypted by using the public key of newly registered member. (for example, xhen, mxco, henc)
Then, these encrypted keys, member lists, public key numbers (for example, L2: CA) and secret keys are outputted to WWW server 3α.

In the member list administration unit 311α and secret key administration unit 312α, the member list GLα, the secret key list CKLα and the group secret key list (GSKLα) are modified, after receiving the encrypted keys, the group lists, public key numbers (No) and the secret key ID which are replied as a result of the modification and encryption etc. at the client side.
By this way, the newly added member can obtain the information shared in the past since own public key is included in the secret key list.

Next, when a member is canceled from the specific group, the manipulation of each list in order to prevent the canceled member reading the shared information in the group after cancellation is explained.

In this case, at the member list administration unit 311α in WWW server 3α, the member list is modified. In this time, at the last replied part, the new member list is compared with the member list before modification and then, the canceled public key number (No) is deduced. Then, the group ID and the public key number of the canceled member (No) are transmitted to the secret key administration unit 312α.
At the secret key administration unit 312α, by using the group secret key list GCKLα, all the secret key numbers (for example, 38, 444, 133) which are used in the specific group (for example, B team) is retrieved by referring the group ID.
Next, at the secret key administration unit 312α, all the encrypted key wherein each secret members (for example, 38,444,133) matches the public key number of canceled member (for example, LL:BB) are deleted from the secret key list CKLα.

In addition, at WWW server 3α, i.e., at DBMS31α in detail, when the addition and cancellation of the members are done simultaneously, the combination of methods above is performed.

As explained above, according to the example of this invention, the information sharing system of this invention comprising;
WWW server 3α which can be accessed by at least multiple members, and can store at least the signature of the team master, the member list including member's public key information, the secret key list including encrypted key information, and the encrypted data, and
the encryption/decryption device 10α, which is comprising;
the memory unit 13α which memorizes the public key of at least one member who is permitted to view information;
the encryption unit 11α which encrypts the input information to generate the encrypted data, based on the secret key cryptography by using the secret key for encrypting information;
the encrypted key generation unit 14α which encrypts the secret key used for encryption to generate an encrypted key by using the public key memorized and specified in said storing unit;
the transmitting unit 16α which transmits and stores the multiple encrypted keys and encrypted data to WWW server;
the list administration unit 17α, 18α, 19α which retrieves the member list from WWW server, judges whether or not the signature of the group administrator of said member list matches the specific signature, performs additional registration of member public key or cancellation of member public key only in the event that said signature matches, and, in the event of additional registration or cancellation, creates the new member list including at least the signature of the team master and public key information of members, and transmits the created member list to said information storing device; and
the decryption unit 20α for obtaining desired encrypted key information and encrypted data from WWW server, decrypting said secret key from this encrypted key information, and decrypting the acquired encryption data with the decrypted secret key.

Since said WWW server 3α and said encryption/decryption device 10α mentioned above are connected with internet, it is possible to share the secret key in the group and there is no possibility to be seen by the team master engaging in a data base storing encrypted data, the server or the file system.
Therefore, it is possible to prevent administrator's peeping and tampering of information, who have no privilege and are of information storing device such as server..

Moreover, according to the examples of this invention, in this information sharing system, as the information storing device, WWW server 3α comprising;
the member list administration unit 311α which can access the member list GLα, reply to a request of member manipulation, and can manipulate a member list GLα according to the request returned from an administrator, when a member list is requested to manipulate from a client side;
the secret key administration unit 312α which selects the most suitable key for information sharing at that time and to the specific group, and transmits to the client when the secret key is required by the client;
the encrypted data administration unit 313α which accesses the group secret key list GCKLα, the secret key list CKLα, the data secret key list DCKLα and the encrypted data list EDLα, and sends the member list and register the encrypted data as following the client request, and can create the data ID, and answers the encrypted data and the encrypted key as referencing the data ID, the public key number (No) and said 3 lists in the event of receiving a decryption request.

Since these units are built in WWW server 3α, it is possible to prevent administrator's peeping and tampering of information, who have no privilege and are of information storing device such as server. Therefore, data administration can be done surely.

In addition, programs for executing the process on the encryption/decryption device 10α, processes
such as creation, registration and cancellation of group lists, creation and registration of secret keys, encryption of data by using a registered secret key, and decryption process of data registered in a server 3α, or programs for manipulation, registration and storing of lists on a server 3α, are memorized in record media that are built in the encryption device 10α or the server. These programs in record media such as floppy desks, hard desks, optical disks and semiconductor memories, are read out by 1st and 2nd terminals (computers) 1α and 2α and are executed.

Moreover, as other example, when data is transmitted in the communication program (for example, a dedicated line of internet or a telephone line), it is said that data transmittance which holds this communication program in a fixed time.

Moreover, it is possible that an information storing device and an encryption/decryption device 10α of this invention comprises a transmission/reception notification unit (not drawn in a figure) that executes the transmission notification which announces said transmission to the reception side, and the receipt notification which announces said reception to the transmission side, when information or data is transmitted from a sender side to recipient side.

By using the transmission/reception notification unit above, it is possible at reception time that the recipient can transmit the received message which confirms reception surely, to a sender, an information communication device or an information storing device in which an information is relayed. As informations in these messages above, there are a full content of information being transmitted from the sender (or a part), abstract, the information that specifies the sender, the information that specifies the recipient, the storing place of the information acquirement (for example, URL address, Directory etc.) and time and date of information acquirement etc.

In detail, at the information storing device 313α in Figure 5, the function of transmission/reception notice unit is given in the encrypted data administration unit 313α. Moreover, at the encryption/decryption device, the sending or receiving message is build by using information which are included in messages above that are used at encryption or obtained at decryption, and is transmitted. As the transmission way, an external communication facilities such as a mail protocol connected to terminals or HTT protocol stored in Prauza etc., can be used substitutionally.

The reason why the structure above is build that, when the high confidential information (for example, an agreement etc.) is transmitted, the sender or the recipient can confirm that the transmission is performed surely. The sender can transmit the transmission message that the transmission is performed surely, to the recipient, the information relay device or information storing device, at transmission time (encryption time) by using the transmission/reception notification unit. For example, when transmission of the information is performed by HTTP communication, by transmitting the message using another protocol such as SMTP etc., existing of the communication can be confirmed by both of the sender and the recipient and safety of communication grows up.

As mentioned above, by the 1st Example of this invention, it becomes possible to share the secret key by the group and there is no possibility to be seen the content of information by the group administrator who is engaged in the database storing the encrypted data, the server and the file system.

### Example 2

The 2nd Example of this invention is concerning, for example, the information tamper detection device which is used in detection of an information tampering at transmission through network, and the record medium which can be read from a computer in which the tampering detection program is installed.

Concerning about Example 2 of this invention, the following techniques are known before.
In former times, as the technology to detect the information tampering (hereinafter describes as information tampering detection technology), a digital signature technology has been practically used by the information tamper detection device. As general examples of the digital signature technology, Digital Signature Algorithm and a combination system of public key cryptography (for example, RSA system) and Hash function (for example, MD2) are known.

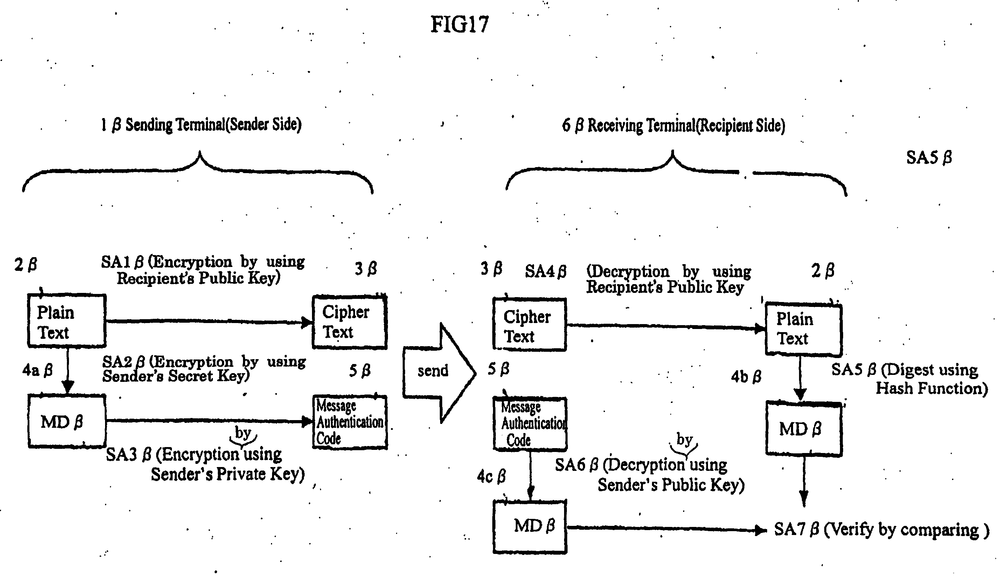

Figure 17 shows the explanation of an operation theory of the conventional information tamper detection device mentioned above. An information tamper detection device in Figure 17 consists roughly of the sending terminal established in sender side 1β and the receiving terminal established in recipient side 6β which is connected with said sender terminal 1β through the network which is not drown in this figure (for example, internet etc.). At this information tamper detection device, the public key and the private key are used in encryption and decryption. About this public key and private key, there is a relationship that it is possible to obtain the public key from the private key by calculation but, on the other hand, is impossible to obtain the private key from the public key.

About the construction mentioned above, the sending terminal 1β encrypts the plain texts 2β that should be sent to the receiving terminal 6β at Step SA1β. In detail, the sending terminal 1β creates the cipher text 3β from the plain text 2β by using the recipient's public key (the receiving terminal 6β). Next, the sending terminal 1β creates MDβ (the message digest) 4aβ by using Hash function to digest the plain text 2β at Step SA2β.

In this case, Hash function is a function in which it is impossible computationally to identify two arbitrary different inputs having same output level. This is an unidirectional function in which the digested data which is relatively short and fixed length is created from a long message as Hash code, in order to use as a part of mechanism of the digital signature etc.

Next, the sending terminal 1β creates the message authentication code 5β from MD4aβ by using the sender's private key (the sending terminal 1β) at Step SA3β. This message authentication code 5β is the digital signature which was signed to the plain text 2β that is an origin of the cipher text 3β.

In this case, the digital signature has been signed through the two processes that are the 1st process in which the message digest is made and the 2nd process in which encryption to said message digest is done by the private key. Moreover, as other process except above, the digital signature also includes the case signed by the process in which encryption is done to the message which is not message digested yet or the combination of the message digest and said message by the private key.

Then, the sending terminal 1β sends the cipher text 3β and the message authentication code 5β mentioned above to the receiving terminal 6β through the network. By this way, after receiving the cipher text 3β and the message authentication code 5β, the receiving terminal 6β decrypts first the cipher text 3β by using the receiver's private key (the receiving terminal 6β) and creates the plain text 2β at Step SA4β. Then, at Step SA5β, the receiving terminal 6β creates MDβ4bβ by digesting the decrypted plain text 2β in use of Hash function.

Moreover, at Step SA6β, the receiving terminal 6β decrypts the received message authentication code 5β by using the sender's public key (the sender terminal 1β) to make MDβ4cβ.
Then, at Step SA7β, the receiving terminal 6β performs tamper detection whether tampering was done or not on the transmitted information (the cipher text 3β and the message authentication code 5β) by comparing MDβ4bβ and MDβ4cβ. When MDβ4bβ matches MDβ4cβ, it means that there was not tampering on the transmitted message. On the other hand, when MDβ4bβ not matches MDβ4cβ, it means that tampering was done.

By the way, as showing in Figure 17, at the conventional information tamper detection device, the receiving terminal 6β having the privilege to decrypt the received cipher text 3β, can detect whether tampering was done or not in the transmitting (in the sending) from the result of comparing MDβ4bβ and MDβ4cβ.

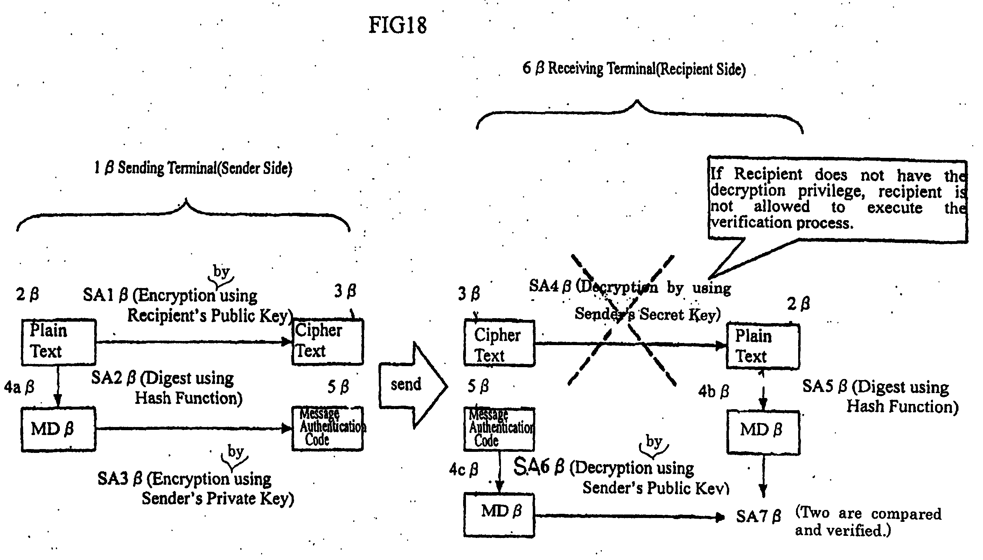

However, as showing Figure 18, at the conventional information tamper detection device, there is a fault that the receiving terminal 6β which doesn't have the privilege to decrypt the received cipher text 3β, i.e., in other word, which doesn't have the recipient's private key, can not execute tamper detection on a transmitted information since it can not create the plain text 2β, and MDβ4bβ.

Therefore, at the conventional information tamper detection device, when the receiving terminal 6β transmits further the information to other terminal being not illustrated, said terminal can not detect when and where the tampering has been done even if said terminal has privilege to decrypt the cipher text 3β. Moreover, at the conventional information tamper detection device, when the sending terminal 1β which transmits an information first, transmits an digital signature which is not the message authentication code 5β ( the digital signature) made from the original plain text 2β, the receiving terminal mentioned above can not detect tampering. That is, at the conventional information tamper detection device, when the important transmitted information is tampered, it is important to specify the terminal (place) where the tampering was done and when it was done. However, it is difficult to do such detection and specification in the conventional method.

This invention has been done under the background mentioned above and aims to offer an information tamper detection device in which information tampering can be detected even if the receiving terminal doesn't have the privilege to decrypt the received information, and the record medium in which the tampering detection program is recorded and is readable by the computer.

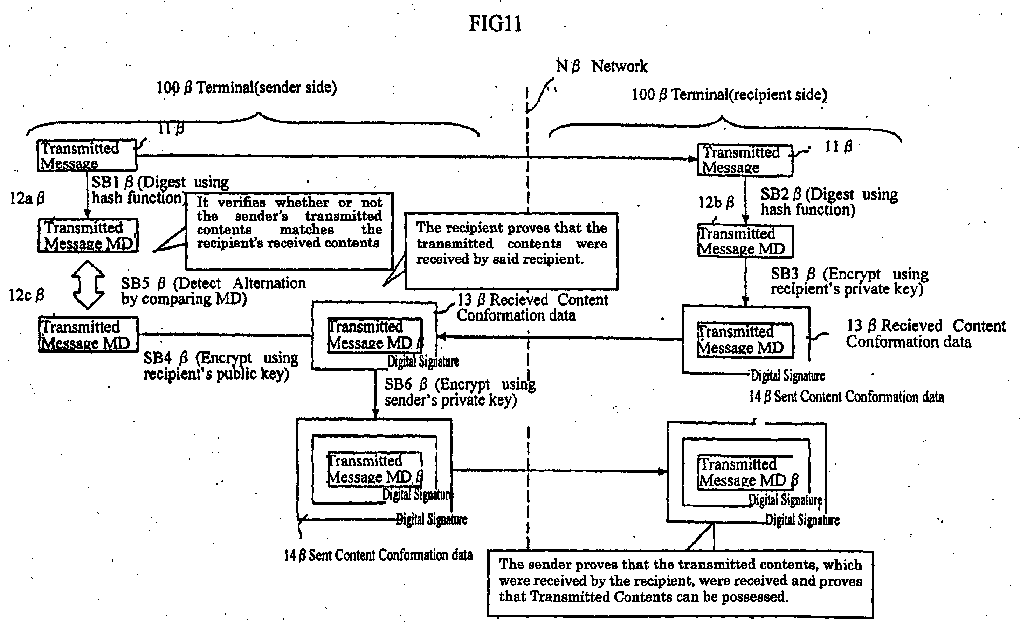

Example 2 of this invention is explained by referencing figures as following. Figure 11 shows the operation theory of the information tamper detection device of the Example 2 of this invention. The information tamper detection device in this figure consists roughly of the terminal 100β established in the sender side and the terminal 200β which is connected with said terminal 100β through the network Nβ that is inter net etc.

In this construction mentioned above, the terminal 100β digests the transmitted message 11β by using Hash function to make the transmitted message MDβ (Message Digest) 12aβ at Step SB1β. This transmitted message MDβ12aβ is used to verify whether sender's transmitted contents and recipient's received contents are matching or not as it mentions later. Next, the terminal 100β sends (transmits) the transmitted message 11β mentioned above to the terminal 200β through the network Nβ.

By this way, after receiving the transmitted message 11β, the terminal 200β digests the transmitted message 11β by using Hash function to create the transmitted message MDβ12bβ at Step SB2β. At this time, when the transmitted message 11β was not tampered, the transmitted message MDβ12bβ mentioned above and the transmitted message MDβ12aβ are matching. On the other hand, when tampering was done, the transmitted message MDβ12bβ mentioned above and the transmitted message MDβ12aβ are different.

Then, at Step SB3β, the terminal 200β encrypts the transmitted message MDβ12bβ by using the recipient's private key to make the received content confirmation data 13β. This received content confirmation data 13β is the message in which the digital signatures was done to the transmitted message MDβ12bβ by the recipient (the terminal 200β), and was verified that the recipient (the terminal 20β) received the transmitted content (the transmitted message 11β).
In this case, the digital signature has been done through two processes that are message digesting and message encrypting.
Moreover, the digital signature also includes the case done by the process in which the encryption is done to the not digested message or the combination of the message digest and said message by the secret key, in excepting two processes mentioned above.
In conclusion, the digital signature is the signature that is encrypted to a certain message by the secret key regardless of being digested or not.
Next, the terminal 200β sends the received content confirmation data 13β mentioned above to the terminal 100β through the network Nβ.

By this process, after receiving the received contents confirmation data 13β mentioned above, the terminal 100β encrypts said received content confirmation data 13β by using the recipient's (the terminal 200β) public key to make the transmitted message MDβ12cβ at Step SB4β. Next, at Step SB5β, the terminal 100β verifies whether tampering is done or not by comparing the transmitted message MDβ12aβ and the transmitted message MDβ12cβ. In detail, the terminal 100β confirms the verified result to be not tampered when the transmitted message MDβ12aβ and the transmitted message MDβ12cβ are matching. On the other hand, the terminal 100β confirms the verified result to be tampered when the transmitted message MDβ12aβ and the transmitted message MDβ12cβ are different.

Next, at Step SB6β, the terminal 100β encrypts the received content confirmation data 13β by using the sender's (the terminal 100β) private key to make the sent content confirmation data 14β. This sent content confirmation data 14β is the message in which the digital signatures was done to the received content conformation data 13β by the sender (the terminal 100β), and is the message to verify that the sender (the terminal 100β) sent the transmitted content (the transmitted message 11β) which is received by the recipient (the terminal 200β). Moreover, the sent contents confirmation data 14β is the message to verify that the recipient (the terminal 200β) can store the transmitted contents (the transmitted message 11β).

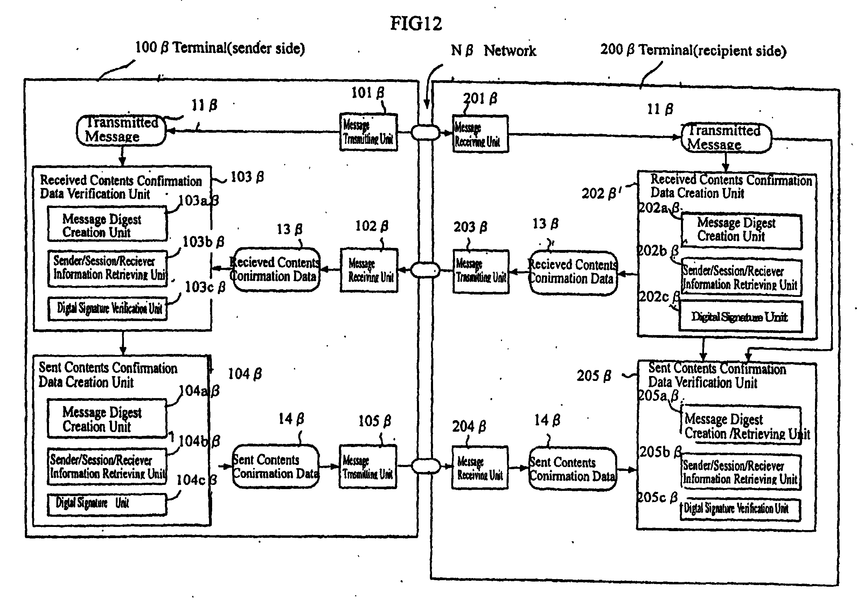

Figure 12 shows a block diagram that indicates the detailed construction of the information tampering detection device of one operation form of this invention. In this figure, the same code is allotted with corresponding to each segment in Figure 11. At the terminal 100β in Figure 12, 101β is the message transmitting unit which sends the transmitted message 11β to the terminal 200β through the network Nβ. 102β is the message receiving unit which receives the received content conformation data 13β (shown in Figure 11) which is sent from the terminal 200β through the network Nβ.

103β is the received contents confirmation data verification unit which performs the processing of Step SB1β, SB4β and SB5β in Figure 11 and consists of the message digest creation unit 103aβ , the sender/session/receiver information retrieving unit 103bβ and the digital signature verification unit103cβ. At the received contents confirmation data verification unit 103β, the message digest creation unit 103aβ performs the processing of Step SB1β in Figure 11 and digests the transmitted message 11β by using Hash function to create the transmitted message MDβ12aβ. The sender/session/receiver information retrieving unit 103bβ retrieves each information, i.e., the sender information, the session information and the recipient information, from the transmitted message 11β and the received contents confirmation data 13β.

In this case, the sender information is the message about the sender (the terminal 100β) and includes the sender name, ID, public key ID, the mail address and the digital certificate which is published by the reliable third-party organization, etc. Moreover, the session information is the information about the transmission between the terminal 100β and the terminal 200β and includes transmitting time, receiving time, transmitting method and transmitting ID etc. Moreover, the recipient information is the message about the recipient (the terminal 200β) and includes the recipient name, ID, the public key ID, the mail address and the digital certificate which is published by the reliable third-party organization, etc.
The digital signature verification unit 103cβ in Figure 12 confirms that the digital signature of the received contents confirmation data 13β (shown in Figure 11) is surely signed by the recipient (the terminal 200β).

104β is the sent contents confirmation data creation unit, which performs the processing of Step SB6β etc., in Figure 11, and consists of the message digest creation unit 104aβ, the sender/session/receiver information retrieving unit 104bβ and the digital signature verification unit 104cβ. This sent contents confirmation data creation unit 104β creates the sent contents confirmation data 14β based on the received contents confirmation data 13β.

At this sent contents confirmation data creation unit 104β, the message digest creation unit 104aβ creates the message digest from the received contents confirmation data 13β. The sender/session/receiver information receiving unit 104bβ retrieves the sender information,, the session information and the recipient information from the received contents confirmation data 13β as same as that of the sender/session/receiver information retrieving unit 103bβ mentioned above. The digital signature addition unit 104cβ adds the digital signature to the received contents confirmation data 13β by encrypting the received contents confirmation data 13β in use of the sender's (the terminal 100β) secret key.
105β is the message transmitting unit which sends the sent contents confirmation data 14β to the terminal 200β through the network Nβ.

On the other hand, at the terminal 200β, 201β is the message receiving unit which receives the transmitted message 11β sent from the terminal 100β through the network Nβ. 202β is the received contents confirmation data creation unit which performs the processing of Step SB2β and SB3β in Figure 11 and consists of the message digest creation unit 202aβ, the sender/session/receiver information retrieving unit 202bβ and the digital signature verification unit 202cβ. This received contents confirmation data creation unit 202β creates the received contents confirmation data 13β based on the transmitted message 11β.

At this received contents confirmation creation unit 202β, the message digest creation unit 202aβ digests the transmitted message 11β by using Hash function to make the transmitted message MDβ12bβ (shown in Figure 11). Like the sender/session/receiver information retrieving unit 103bβ mentioned above, the sender/session/receiver information retrieving unit 202bβ retrieves the sender information, the session information and the recipient information about the transmitted message 11β. The digital signature addition unit 202cβ adds the digital signature to the transmitted message MDβ12bβ by encrypting the transmitted message MDβ12bβ (shown in Figure 11) in use of the recipient's secret key of (the terminal 200β). Here, the transmitted message MDβ12bβ added this signature is the received contents confirmation data 13β.

Moreover, 205β is the sent contents confirmation data verification unit which verifies the contents of the sent contents conformation data 14β sent from the terminal 100β, based on the transmitted message 11β and consists of the message digest creation retrieving unit 205aβ, the sender/session/receiver information retrieving unit 205bβ and the digital signature verification unit 205cβ. At this sent contents confirmation data verification unit 205β, the message digest creation retrieving unit 205aβ has two functions which are creating the message digest mentioned above and retrieving the transmitted message MDβ12bβ (shown in Figure 11) which is already created by the message digest creation unit 202aβ in the received contents confirmation data creation unit 202β. Then, when the transmitted message MDβ12bβ is retrieved, the message digest creation retrieving unit 205bβ does not create the message digest. The sender/session/receiver information retrieving unit 205bβ retrieves sender information, session information and receiver information same as the sender/session/receiver information retrieving unit 103bβ mentioned above. The digital signature verification unit 205cβ verifies the digital signature to the received contents confirmation data 13β by using the sender's public key (the terminal 100β).

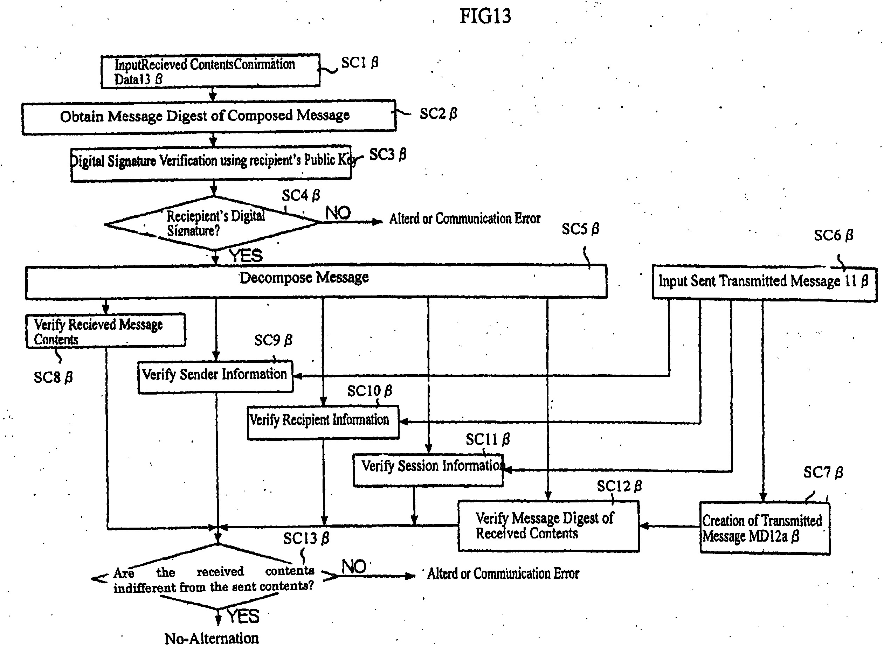

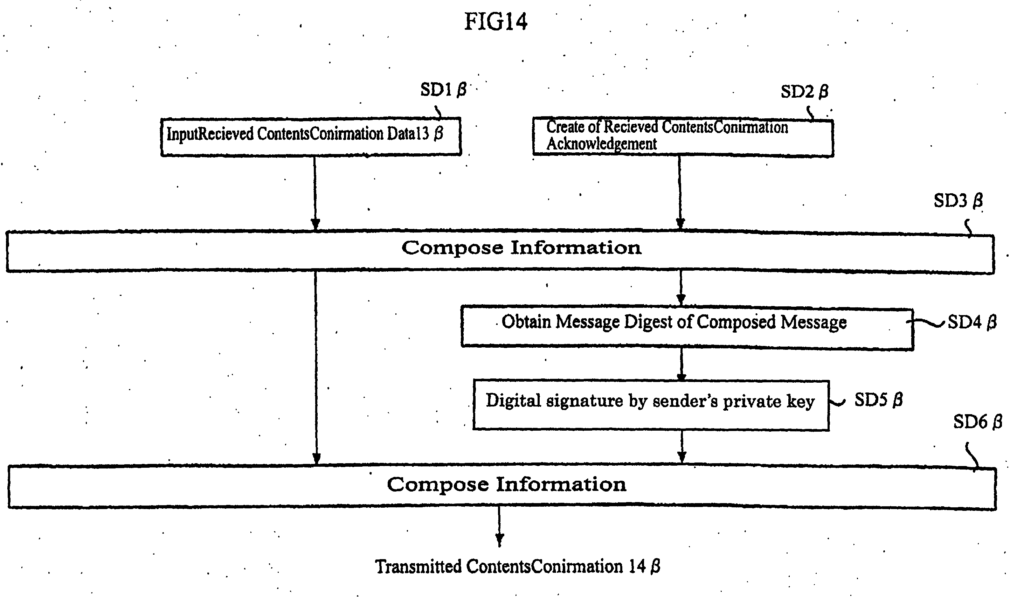

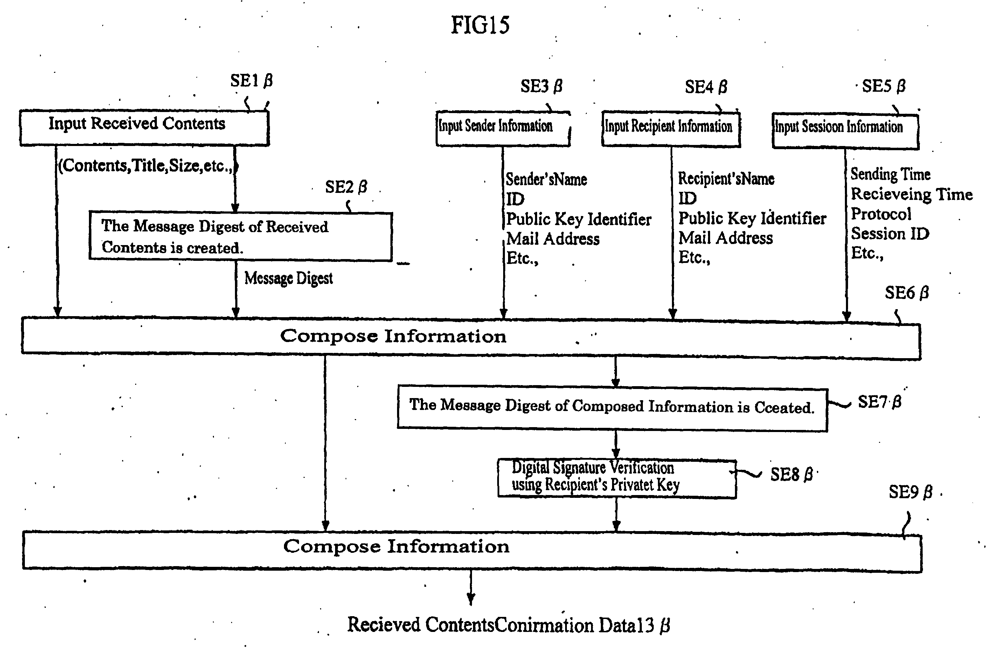

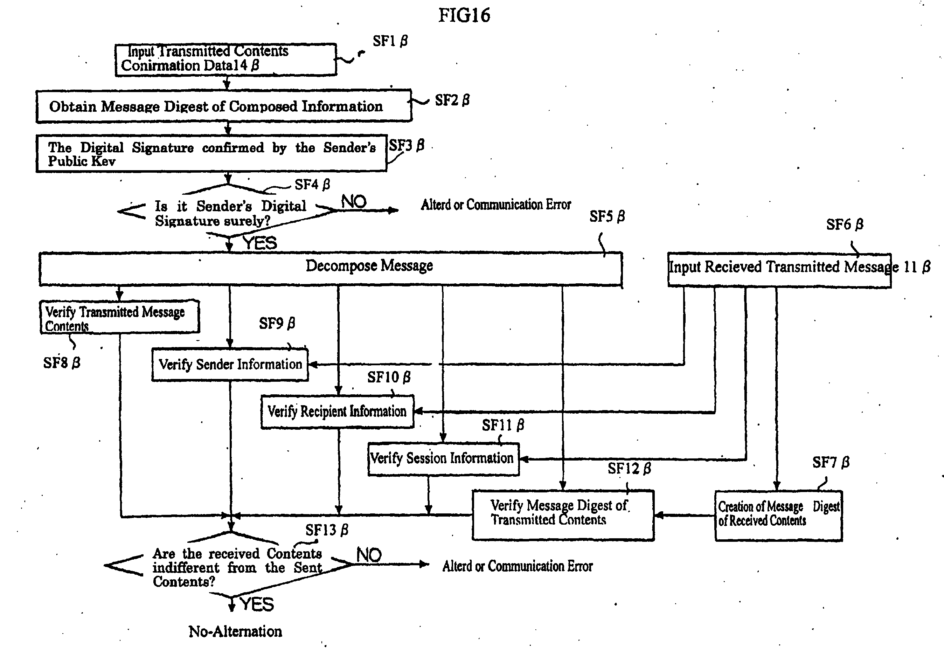

Next, the processing of this information tampering detection device in this Example mentioned above is explained by referring to the flow charts in Figure 13 to Figure 16. Figure 13 shows the flow chart explaining the processing of the received contents confirmation data verification unit 103β in Figure 12 and Figure 14 shows the flow chart explaining the processing of the sent contents confirmation data creation unit 104 . Moreover, Figure 15 shows the flow chart explaining the processing of the received contents confirmation data creation unit 202β in Figure 12 and Figure 16 shows the flow chart explaining the processing of the sent contents confirmation data verification unit 205β.

In Figure 12, when the transmitted message 11β in the terminal 100β is sent from the message transmitting unit 101β to the terminal 200β through the network Nβ, said transmitted message 11β is received by the message receiving unit 201β in the terminal 200β. By this way, the received contents confirmation data creation unit 202β creates the received contents confirmation data 13β according to the flow chart in Figure 15.

In detail, at Step SE1β in Figure 15, the received contents confirmation data creation unit 202β inputs the received contents (the transmitted message 11β). Thereby, at Step SE2β, the message digest creation unit 202β digests the received contents (the transmitted message 11β) by using Hash function to create the message digest (the transmitted message MDβ12bβ in Figure 11). In addition, in the example in Figure 15, it may also progress to Step SE6β from Step SE1β without the processing of Step SE2β.

Moreover, at Step SE3β to Step SE5β, the received contents confirmation data creation unit 202β retrieves sender information (sender's name, ID, the public key ID, the mail address and the digital certificate etc.), recipient information (recipient's name, ID, the public key ID, the mail address and the digital certificate etc.) and session information (sending time, receiving time, protocol and the session ID etc.) from the transmitted message 11β.

Thereby, at Step SE6β, the sender/session/receiver information retrieving unit 202bβ retrieves sender information, recipient information and session information that were input at Step SE3β to SE5β and the received contents confirmation data creation unit 202β composes the received contents (the transmitted message 11β) mentioned above, the transmitted message MDβ12bβ and each information of sender information, recipient information and session information. In this case, the composing of information is to combine all or one part of the transmitted message MDβ12bβ being digested by Hash function and one or more information of the sender information which are the sender's name, ID etc. the recipient information which are the recipient's name, ID etc. and the session information which are the sending time, the receiving time etc.

Next, at Step SE7β, the message digest creation unit 202β creates the message digest by digesting the composed information at Step SEβ6 in use of Hash function. Then, at Step SE8β, the digital signature verification unit 202cβ encrypts the message digest created at Step SE7β by using recipient's private key to add the digital signature to said message digest. Then, at Step SE9β, the received contents confirmation data verification unit 202β creates the received contents confirmation data 13β by composing each information and then, outputs them to the message transmitting unit 203β.
Moreover, the message digest creation unit 202aβ outputs the transmitted message MDβ12bβ to the message digest creation / retrieving unit 205aβ in the sent contents confirmation data verification unit 205β if needed. In this case, the message digest creation / retrieving unit 205aβ retrieves the transmitted message MDβ12bβ mentioned above without creation of the message digest.

Then, the receiving contents confirmation data 13β mentioned above is received by the message receiving unit 102β in the terminal 100β after transmitting to the terminal 100β by the message transmitting unit 203β through the network Nβ. By this way, the received contents confirmation data verification unit 103β in the terminal 100β detects tampering by verifying the contents of the received contents confirmation data 13β according to the flow chart in Figure 13.

In detail, at Step SC1β in Figure 13, the received contents confirmation data verification unit 103β progresses to Step SC2β after inputting the received contents confirmation data 13β which is received by the message receiving unit 102β. At Step SC2β, the message digest creation unit 103aβ decrypts the received contents confirmation data 13β by using recipient's public key to create (retrieve) the message digest (the transmitted message MDβ12cβ in Figure 11).

Then, at Step SC3β, the digital signature verification unit 103cβ verifies whether the received contents confirmation data 13β is signed by the recipient or not, by using the recipient's (the terminal 200β) public key. In this time, when the received contents confirmation data 13β can be decrypted by the recipient's (the terminal 200β) public key, the received contents confirmation data 13β is the data signed by the recipient. On the other hand, when the received contents confirmation data 13β cannot be decrypted by the recipient's public key, the received contents confirmation data 13β is the data not signed by the recipient.

Next, at Step SC4β, the received contents confirmation data verification unit 103β judges whether the signature of the received contents confirmation data 13β is the recipient's digital signature or not from the verification result of Step SC3β. When the judgement is negative (NO), it is judged that tampering or communication error occurs. On the other hand, when the judgement at Step SC4β is positive (YES), the receiving contents confirmation data verification unit 103β progresses to Step SC5β.

At Step SC5β, the each information in the received contents confirmation data 13β is decomposed. In this time, as the each information mentioned above, there are the received message contents, the sender information, the recipient information, the session information and the message digest (the transmitted message MDβ12cβ) etc. mentioned above.

Moreover, the received contents confirmation data verification unit 103β progresses to Step SC6β and inputs the transmitted message 11β and the communication information, i.e., the sender information, session information and recipient information etc. which are transmitted by the sender. Next, at Step SC7β, the message digest creation unit 103aβ in the received contents confirmation data verification unit 103β digests the transmitted message 11β by using Hash function to create the transmitted message MDβ12aβ (shown in Figure 11).

Then, the received contents confirmation data verification unit 103β verifies the received message contents for every message by comparing the received contents and sent contents at Step SC9β to SC12β. Then, at Step SC13β, after receiving the results of verification at Step SC9β to SC12β, the received contents confirmation data verification unit 103β judges whether the received contents matches the sent contents or not. When the judgement is negative (NO), it is judged that tampering or communication error occurs. On the other hand, when the received contents matches the sent contents, the result of judgement at Step SC13β may be positive (YES) and there is no tampering or no communication error.

Next, the sent contents confirmation data creation unit 104β performs the processing to create the sent contents confirmation date 14β (shown in Figure11) according to the flow chart in Figure 14. Namely, the sent contents confirmation data creation unit 104β creates the received contents confirmation data acknowledgement message after inputting the received contents confirmation data 13β at Step SD1β in Figure 14. In this case, the received contents confirmation data acknowledgement message is the message indicating that the received contents confirmation data verification unit 103β acknowledges (confirms) the contents of the received contents confirmation data 13β. This acknowledgment (confirmation) message is created based on the information about the acknowledging time, the terminal and the acknowledging person (the sender in this Example).

Next, at Step SD3β, the sent contents confirmation data creation unit 104β composes the received contents confirmation data 13β and the received contents confirmation data acknowledgement message. Next, at Step SD4β, the message digest creation unit 104aβ progresses to Step SD5β after obtaining the message digest of the message composed at Step SD3β. At Step SD5β, the digital signature addition unit 104cβ signs to the message digest by encrypting in use of the sender's (the terminal 100β) private key.

Then, at Step SD6β, the sent contents confirmation data creation unit 104β composes the each information at Step SD3β and the message digest signed at Step SD5β. Thereby, the sent contents confirmation data 14β is created and output to the message transmitting unit 105β in the sent contents confirmation data creation unit 104β.

Then, the sent contents confirmation data 14β is received by the message receiving unit 204β in the terminal 200β after being sent to the terminal 200β by the message transmitting unit 105β through the network Nβ.

By this way, the sent contents confirmation data verification unit 205β in the terminal 200β performs the verification of the sent contents confirmation data 14β according to the flow chart in Figure 16.
In detail, at Step SF1β in Figure 16, the sent contents confirmation data verification unit 205β progresses to Step SF2β after inputting the sent contents confirmation data 14β which is received from the message receiving unit 204β. At Step SF2β, the message digest creation / retrieving unit 205aβ creates (retrieves) the message digest by decrypting the sent contents confirmation data 14β in use of the sender's (the terminal 100β) public key.

Then, at Step SF3β, the digital signature verification unit 205cβ verifies whether the sent contents confirmation data 14β is signed by the sender or not, by using the sender's (the terminal 100β) public key. In this time, when the sent contents confirmation data 14β can be decrypted by the sender's (the terminal 100β) public key, it is judged that the sent contents confirmation data 14β was signed by the sender. On the other hand, when the sent contents confirmation data cannot be decrypted, it is judged that the sent contents confirmation data 14β was not signed by the sender.

Next, at Step SF4β, the sent contents confirmation data verification unit 205β judges whether the signature of the sent content confirmation data 14β is the sender's (the terminal 100β) signature or not, from the results of verification at Step SF4β. When such judgement is negative (NO), it is judged that tampering or communication error occurs. On the other hand, when the judgement at Step SF4β is positive (YES), the sent contents confirmation data verification unit 205β progresses to the Step SF5β.

At Step SF5β, various messages in the sent contents confirmation data 14β are decomposed. In this case, as the various messages mentioned above, there are the received information contents, the sender information, the recipient information, the session information and the message digest etc. mentioned above.

Moreover, the sent contents confirmation data verification unit 205β progresses to the Step SF6β and inputs the received transmitted message 11β and the communication information i.e., sender information, session information and recipient information which are transmitted by the sender. Next, at Step SF7β, the message digest creation / retrieving unit 205aβ in the sent contents confirmation data verification unit 205β digests the transmitted message 11β by using Hash function to create the transmitted message MDβ12bβ (the message digest). However, the message digest creation / retrieving unit 205aβ does not perform the creation mentioned above when said unit retrieves the transmitted message MDβ12bβ from the message digest creation unit 202aβ.

Then, the sent contents confirmation data verification unit 205β verifies the received contents for every message by comparing the received contents and the sent contents at Step SF9β to SF12β. Then, at Step SF13β, after receiving the results of the verifications at Step SF9β to SF12β mentioned above, the sent contents confirmation data verification unit 205β judges whether the received contents matches the sent contents or not. When the judgement is negative (NO), it is judged that tampering or communication error occurs. On the other hand, when the received contents amtches the sent contents, the sent contents confirmation data verification unit 205β judges that the result of Step SF13β is positive (YES) and regards that there is no tampering or communication error.

As mentioned above, according to the example of the information tamper detection device , it becomes possible to detect the information tampering even if the terminal doesn't have the privilege to decrypt the received information since said device is constructed to detect tampering by using the received contents confirmation data 13β and the sent content confirmation data 14β.

Example 2 of this invention is explained exactly as mentioned above. However, the detail constitution of this invention is not limited by the example mentioned above. For example, in the example of the information tamper detection device mentioned above, the information tamper detection may be done by performing a tamper detection program which can perform these functions mentioned above, in a computer system . In this case, such program is recorded in the readable medium and is installed in the computer system.

Moreover, the tamper detection program mentioned above may be recorded or memorized of the overall or part by a portable medium such as the floppy disk or the CD-ROM etc. and the recording device such as the hard disk. This tampering detection program is read by computers and performed the overall or part of an operation.
Moreover, the recording medium in this case may include not only the static recording medium such as the optical-magnetic disk etc. but also the dynamic recording medium which keeps the tamper detection program in short time, for example, the communication line such as the exclusive line of internet and the telephone line, when the tamper detection program is transmitted. In addition, the recording medium in this case mentioned above may also include the server and the inner memory of computers in which the tampering detection programs are kept at a constant time when said programs are transmitted.

As mentioned above, according to Example 2 of this invention, it becomes possible to detect an information tampering even if the terminal doesn't have privilege to decrypt received information, since the system of said device is constructed to detect tampering by using the received contents confirmation data and the sent content confirmation data.

### Example 3

Example 3 of this invention is concerning to the encryption / decryption device which encrypts or decrypts information, these methods and recording media.

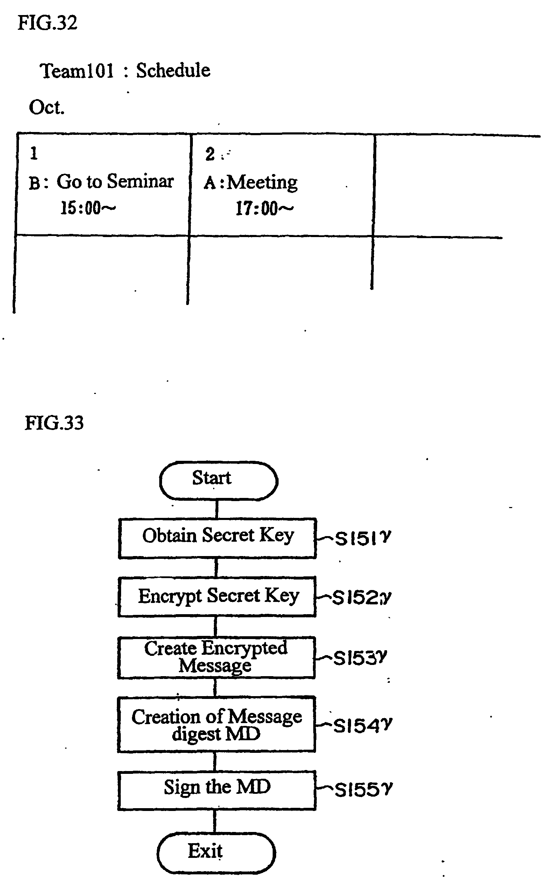

The following techniques have been known about Example 3 of this invention.
In general, when the information is communicated, there are some needs to keep secret about this information. Therefore, various encryption methods are designed. An operation flow chart of one example of an encryption device which uses a conventional encryption / signature method is shown in Figure 33. In this example method, the combination method of the public key cryptography and the secret key cryptography is used.
At first, the encryption device obtains the secret key by inputting the secret key from the sender or generating random numbers to create the secret key at the encryption device side. (Step S151γ)
Next, the secret key is encrypted to create the encrypted secret key by using the receiver's public key in utilization of the public key cryptography. (Step S152γ)
Next, the plain text is encrypted to create the encrypted message by utilizing the secret key cryptography. (Step S153γ)
Moreover, the plain text is digested to create the message digest MDγ by using Hash function. (Step S154γ)
Then, this MDγ is encrypted by using the sender's secret key and the digital signature is added. (Step S155γ)
The sender sends the created encrypt secret key and the encrypted message to the recipient through the network etc.

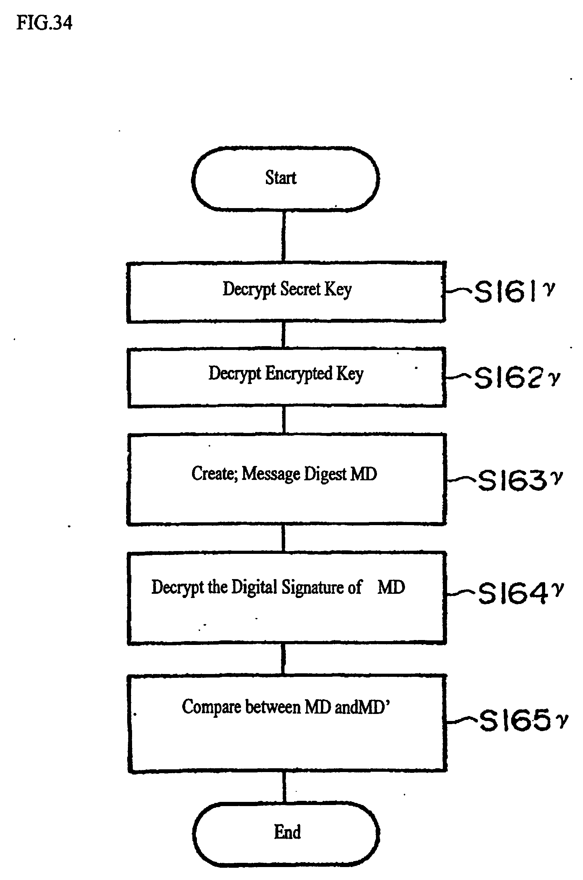

In Figure 34, the operation flow chart of the decryption device, in which the decryption method corresponding to the encryption / signature method mentioned above is used, is shown.
At first, the decryption device decrypts the encrypted secret key to obtain the secret key by using the recipient's private key when the encrypted secret key, the encrypted message and the signature are received. (Step S161γ)
Then, the encrypted message is decrypted to obtain the plain text by using this secret key. (Step S162γ)
Next, the decrypted plain text is digested to create the message digest MD'γ by using Hash function. (Step S163γ)
Moreover, the digital signature of the received message digest MDγ is decrypted to obtain MD'γ by using the sender's public key. (Step S164γ)
Next, the verification whether the original plain text is tampered or not is done by comparing between MDγ and MD'γ. In this method, there is an advantage that the author of the plain text can confirm the signature by himself by verifying the signature.

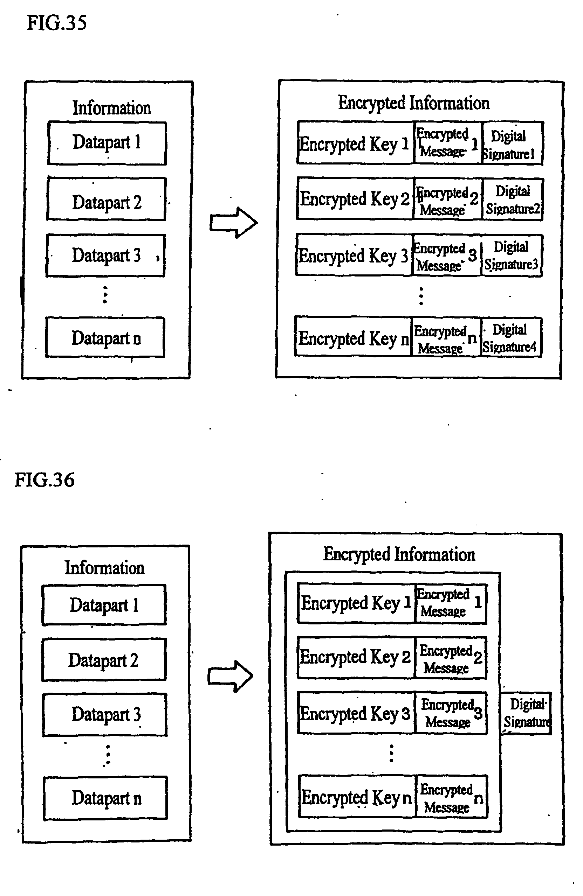

Next, according to the cryptography published on the patent application No. Hei 8-156964, information consisting of plural plain text data parts is encrypted by the cryptography mentioned above. In Figure 35, the construction of the information consisting of n data parts and the encrypted information being created by said information is shown. In this encrypted information, the encrypted secret key corresponding to the each data part, the encrypted message of the data parts and the digital signature of the data parts are included. For one example, the digital signature size corresponding to the data part of 69 bit is 2329 bits. There is a minimum limit about the digital signature size and even if the data part size is small, the digital signature size has the magnitude more than a certain size. For example, according to the information consisting of 100 data parts which are 69 bits each other, the information being 2329 x 100 = 232900 bits is added when the digital signatures are added to prevent tampering.

Next, according to the cryptography published on the patent application No. Hei 9-71388, the message digests of each data parts, which compose the information, are signed and encrypted collectively. In Figure 36, the construction of the information consisting of n data parts (plain texts) and the encrypted information created by said information is shown.

When the information consisting of plural data parts is encrypted, for example, in the method on the patent No. Hei 8-156964, there are some problems such as much time is required to transmit the encrypted information and much resources such as memory devices etc. are needed since the overhead of data becomes too much. Moreover, in the method on the patent No. Hei 9-71388, since all message digest of each data part are signed collectively, verification of the signature can not be done unless all plain messages become. Moreover, when there is an user to whom only the reference of a part of data parts is permitted, there are problems such as tampering of the data parts is unverifiable and each data part cannot be changed simultaneously etc.

This invention was made in view mentioned above and provides the encryption device, the decryption device, these methods and these recording media which can make less overhead of the encrypted information which encrypts the information including plural data parts (plain text). And it also provides that above mentioned devices, method and media which can be used by plural users, detect tampering of each data parts, and change each data parts simultaneously.

Hereinafter, Example 3 is explained by referring to figures.

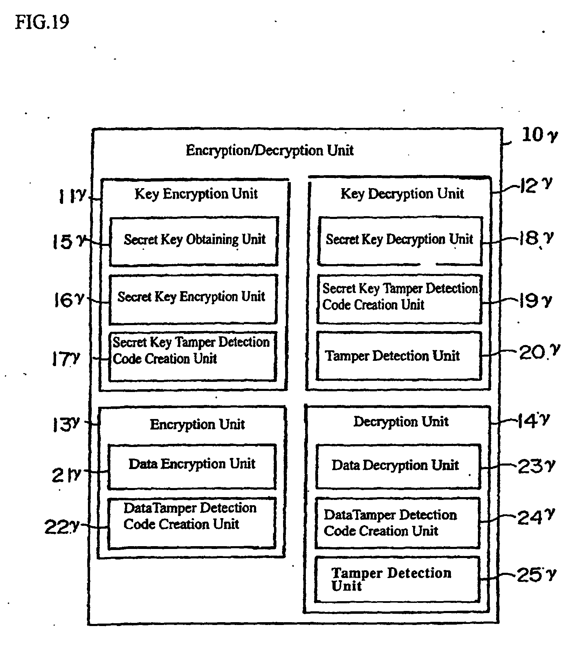

Figure 19 shows the block diagram showing the construction of an encryption device and a decryption device in the example of this invention. In addition, in this example, an encryption / decryption device in which the encryption device and the decryption device are united is explained.

The encryption / decryption device 10γ of this invention consists of a key encryption unit 11γ, a key decryption unit 12γ, an encryption unit 13γ and a decryption unit 14γ. The key encryption unit 11γ consists of a secret key obtaining unit 15γ, a secret key encryption unit 16γ and a secret key tamper detection code creation unit 17γ which is the 1st secret key tamper detection code creation unit. The key decryption unit 12γ consists of a secret key decryption unit 18γ, a secret key tamper detection code creation unit 19γ which is the 2nd secret key tamper detection code creation unit and a tamper detection unit 20γ which is as the 1st tamper detection unit. The encryption unit 13γ consists of a data encryption unit 21γ and a data tamper detection code creation unit 22γ which is the 1st data tamper detection code creation unit. The decryption unit 14γ consists of a data decryption unit 23γ, a data tamper detection code creation unit 24γ which is the 2nd data tamper detection code creation unit and a tamper detection unit 25γ which is the 2nd tamper detection unit.

The secret key obtaining unit 15γ obtains or creates the secret key which is used in encryption. In order to create the secret key, a random number creation device etc., for example, is used. The secret key encryption unit 16γ encrypts the secret key by using a public key cryptography such as RSA method or an elliptic curve cryptography etc. As the public key used for encryption, the public key of members sharing information is used. For example, when there are 3 members sharing information, the secret key is encrypted by using the public key of 3 members and 3 encrypted secret keys are created. The secret key tamper detection code creation unit 17γ creates the used key information to verify the authentication of the secret key (1.not tampered, or 2.created by justified users etc. ). For one example, the secret key is digested by Hush function such as MD5 or SHA-1 etc. to create the message digest MDγ of the secret key and then, the message digest which is signed to this MDγ by using the private key of the secret key's creator, is usable as the key information. For the creation / detection of the signature, it may be used that digital signature methods such as DSA etc. excepting the public key cryptography mentioned above.

The secret key decryption unit 18γ decrypts the encrypted secret key which is encrypted in the secret key encryption unit 16γ by using the public key cryptography. As the private key used for decryption, the private key of the user, who decrypts, is used. The secret key tamper detection code creation unit 19γ creates the secret key tamper detection code to verify the secret key. For example, the secret key tamper detection code creation unit 19γ digested the secret key decrypted in the secret key decryption unit 18γ by using Hash function to create the message digest MD'γ. The tamper detection unit 20γ verifies the secret key by comparing the key information (for example MDγ) and the secret key tamper detection code (for example MD'γ) which is created in the secret key tamper detection code creation unit 19γ. When the secret key is verified, the secret key's creator also should be verified and this is defined separately.

The data encryption unit 21γ encrypts data parts (plain texts) by using the secret key cryptography to create the encrypted messages. As the secret key used for encryption, the secret key which is obtained or created in the secret key obtaining unit 15γ is used at the first time of the encryption. When the existing encrypted information is used, the secret key decrypted in the secret key decryption unit 18γ is used. The data tamper detection code creation unit 22γ creates the 1st data tamper detection code to detect whether the data parts are tampered or not. For example, the data message digest which was digested by using Hash function, the part of information extracted from the data parts and ID number etc. can be used as the 1st data tamper detection code.

The data decryption unit 23γ decrypts the encrypted text by using the secret key cryptography. As the secret key used for decryption, the secret key decrypted in the secret key decryption unit 18γ is used. The data tamper detection code creation unit 24γ creates the 2nd data tamper detection code to detect whether the data parts are tampered or not, which corresponds with the 1st data tamper detection code. For example, the message digest created by digesting the original data part decrypted in the data decryption unit 23γ in use of Hash function, the part of information extracted from the data parts and ID number etc. may be used as the 2nd data tamper detection code. The tamper detection unit 25γ confirms the authentication of the decrypted original data part by comparing and detecting the 1st data tamper detection code and the 2nd data tamper detection code.

In addition, it is possible to realize the secret key encryption unit 16γ and the data encryption unit 21γ in the same device. Moreover, it is also possible to realize the secret key decryption unit 18γ and the data decryption unit 23γ in the same device. Moreover, it is possible to realize the secret key tamper detection code creation unit 17γ and 19γ or the data tamper detection code creation unit 22γ and 24γ in the same device. Similarly, it is possible to realize all of the secret key tamper detection code creation unit 17γ and 19γ and the data tamper detection code creation unit 22γ and 24γ in the same device. Moreover, it is possible to realize the tamper detection unit 20γ and the tamper detection unit 25γ in the same device. Moreover, it is also possible to use to realize the encryption / decryption device as the device which is not a single device but a composite device consisting of each isolated units. In addition, the encryption device in claim 51 and claim 52 can consist of the key encryption unit 11γ and the encryption unit 13γ. Moreover, the encryption device in claim 53 can consist of the key encryption unit 11γ, encryption unit 13γ and the key decryption unit 12γ. The decryption unit in claim 54 and 55 can consist of the key decryption unit 12γ and the decryption unit 14γ.

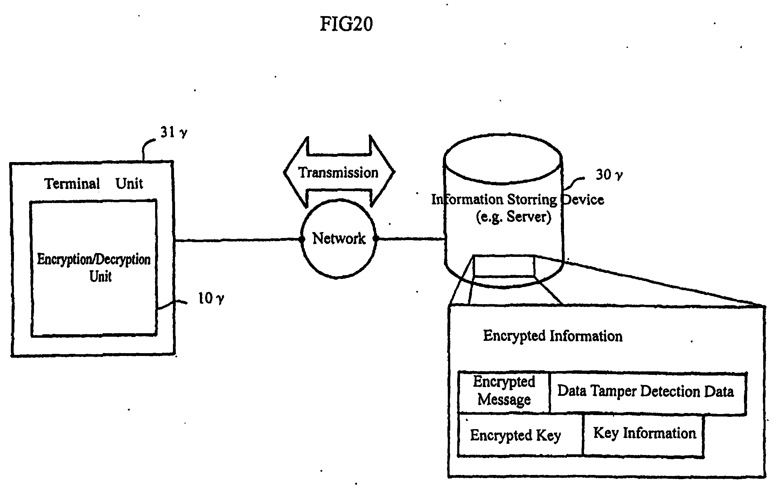

In Figure 20, one utilization form of the encryption / decryption unit 10γ of this example.
In this utilization form, an information storing device 30γ consisting of the server which is connectable with the network and other terminal devices etc. is connected with a terminal unit 31γ having the encryption / decryption device 10γ through the network. The information storing device 30γ has nonvolatile recording devices such as the hard disk or the optical-magnetic disk etc. and can store the encrypted information such as the encrypted message, the data tamper detection code, the encrypted secret key and the key information, and other related information. Moreover, at the terminal unit 31γ, an input unit and a display unit (not shown in Figure 20) are connected as circumscription units. In this case, the input unit means the input device such as a keyboard or a mouse etc. The display unit means CRT (Cathode Ray Tube) and LCD (Liquid Crystal Display). In addition, it is also possible to store the encrypted information at the local terminal to use at stand-alone.

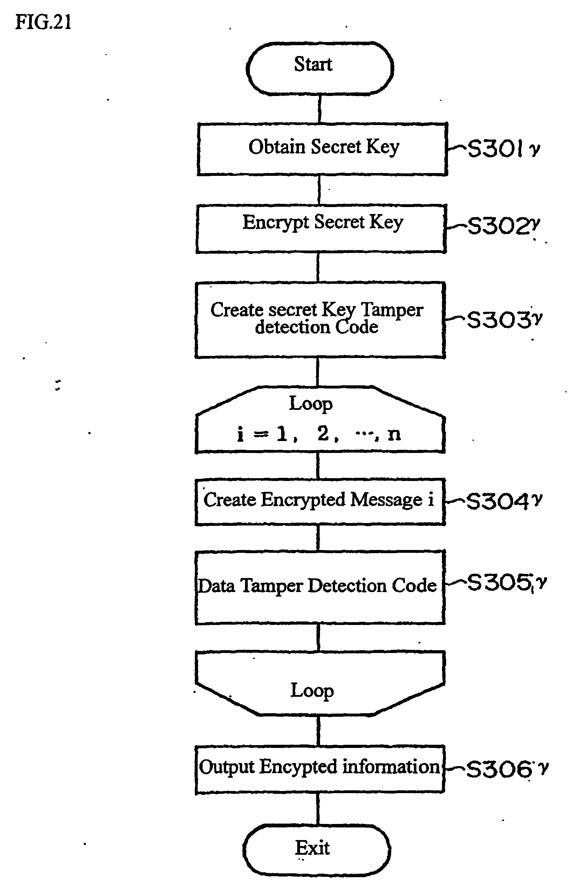

Next, the operation of the encryption / decryption device 10γ of this Example in the utilization form constructed mentioned above is explained.
First, when the first data parts are encrypted, the operation of the encryption / decryption device 10γ is explained by referring to the flow chart in Figure 21. In addition, the operation step in following explanation is one example of the operation of this Example and is not limited to operate other steps.

At first, the secret key obtaining unit 15γ obtains or creates the secret key by inputting from the out side of the encryption / decryption device 10γ. (Step S301γ)

Then, the secret key encryption unit 16γ creates the encrypted secret key in which the secret key is encrypted by utilizing the user's public key already obtained through the net work. (Step 302γ)

Moreover, the secret key tamper detection code creation unit 17γ creates the secret key creator's information such as the private key of the secret key creator etc., as the key information for the secret key tamper detection code. (Step S303γ)

Data encryption unit 21γ encrypts the data parts 1γ (the plain text) to create the encrypted message 1γ. (Step S304γ)

Moreover, the data tamper detection code creation unit 22γ creates the data tamper detection code 1γ which is the information about data parts 1γ from data parts 1γ. (Step S305γ) In addition, when the data parts consist of n parts, the operation from Step S304γ to Step S305γ is repeated n times.

Then, the set of the encrypted message 1,2,···,n, the data tamper detection code 1,2, ··· ,n, the key information and the encrypted secret key is transmitted to the information storing device 30γ as the encrypted information. (Step S306γ)

In addition, the explanation mentioned above is the case when the number of the user is one and the number of the encrypted secret key to be used is one. When the number of the user who shares the encrypted information is plural (for example, m), m kinds of the encrypted secret key are created by using every each user's public key. Namely, the encrypted secret keys corresponding for every users are created.

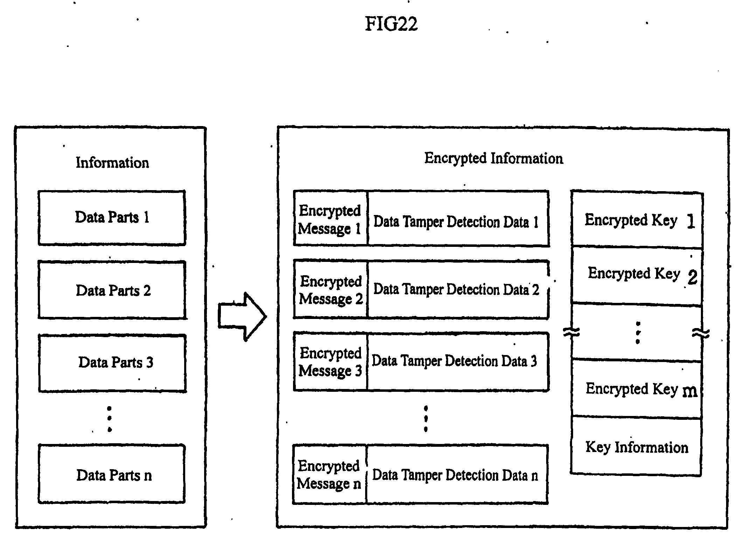

In Figure 22, the construction of the information before encryption and the encrypted information are shown. Here, it is shown that, as the encrypted information, encrypted message 1,2,···,n, the data tamper detection code 1,2,···,n, the encrypted secret key 1,2,···,m and the key information are created from the before encrypted data parts 1,2,···,n.

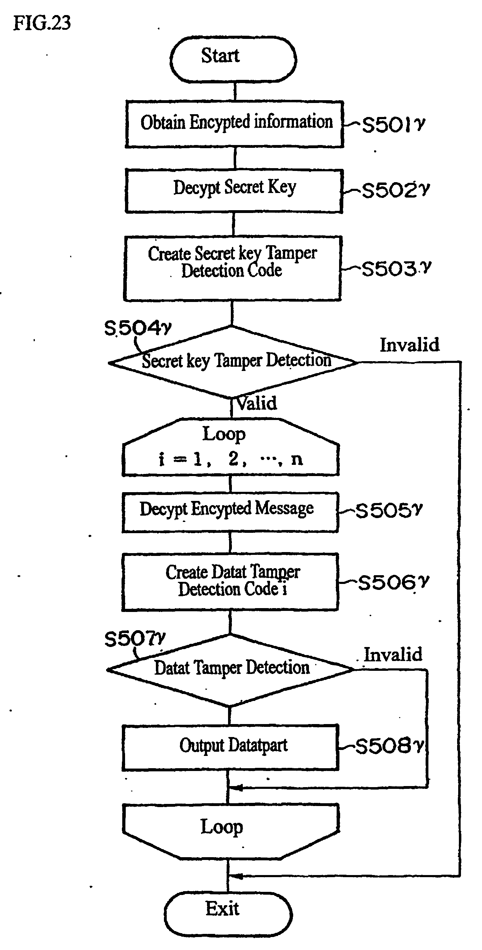

Next, the operation of the encryption / decryption device 10γ is explained by using the operation flow chart in Figure 23 when the encrypted information which includes the encrypted messages of plural data parts (n) is decrypted. In addition, only the person who has the private key corresponding to the public key which was used when the encrypted secret key was created, can perform this operation.

First, the encryption / decryption device 10γ obtains the encrypted information which is memorized in the information storing device 30γ. (Step S501γ) In addition, the encrypted secret key, which is included in the encrypted information, is corresponded with user's name and user's ID etc. and the encrypted secret key corresponding to the user is transmitted from the information storing device 30γ to the encryption / decryption device 10γ.

Then, the secret key decryption unit 18γ decrypts the encrypted secret key by using the user's private key, to obtain the secret key. (Step S502γ) Here, the user's private key is already inputted.

Next, the secret key tamper detection code creation unit 19γ creates the secret key tamper detection code by using the secret key obtained in Step 502γ. (Step 503γ)

Then, the tamper detection unit 20γ authenticates the key creator by comparing the obtained key information with the secret key tamper detection code. (Step S504γ) In this case, the creator's authentication is judged when these two information match together.

At Step S504γ, when it is judged that the key creator is valid, the set of n encrypted messages and n data tamper detection codes is operated in the following orders.
First, the data decryption unit 23γ decrypts the encrypted message by using the secret key. (Step S505γ)

Then, the data tamper detection code creation unit 24γ creates the data tamper detection code by using the decrypted data parts. (Step S506γ) In addition, the data tamper detection code created in this step is called as the 1st data tamper detection code and the data tamper detection code which is stored as the encrypted information is called as the 2nd data tamper detection code.

Next, the tamper detection unit 25γ detects whether tampering is done or not by comparing the created 1st data tamper detection code with the 2nd data tamper detection code which is a part of the encrypted information. (Step S507γ) When these two information match, it is detected that tamper is not done.

At Step S507, when it is judged that tamper is not done, the decrypted data parts (plain texts) are outputted. (Step S508γ)

In addition, in the above explanation, the key decryption unit 12γ is made to use only the encrypted secret key corresponding to the user by matching the user name, the user ID etc. and the encrypted secret key. When there are multiple encrypted secret keys (i.e., there are multiple users sharing the encrypted information), as the other method to obtain the encrypted key corresponding to the user, Step S502γ to S504γ mentioned above are performed as follows. First, all encrypted secret keys are decrypted at Step 502γ. When the multiple encrypted secret keys are decrypted, the multiple secret keys, in which the not formal type keys are also included, are created. At Step 503γ, the secret key tamper detection codes are created corresponding to all secret keys created at Step S502γ. Next, at Step S504γ, each secret key tamper detection code is compared and verified with the key information. When all of the pairs are different each other, it is judged that tampering is done. If there is one matching, it is judged that the corresponding secret key is the correct secret key.

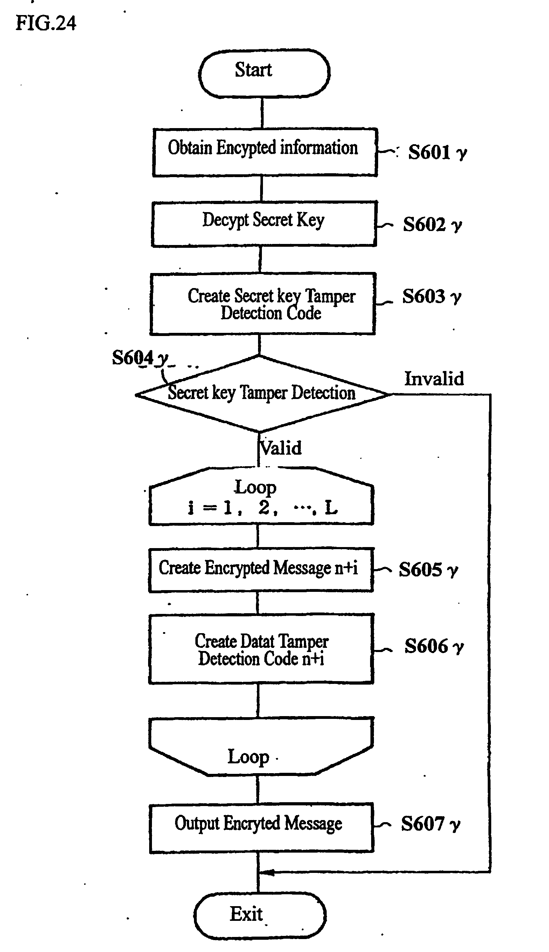

Next, after mentioning the processing in which the encrypted information is created from the data parts 1,2,···,n and is transmitted to the information storing device 30γ, here, the operation of the encryption / decryption device 10γ is explained by referring to the operation flow chart in Figure 24 when the information is added furthermore to said encrypted information.

First, the encrypted secret key and key information is obtained from the information storing device 30γ where the encrypted information is stored. (Step S601γ) In addition, the encrypted secret key in the encrypted information is corresponded by the user name and user ID etc. and the encrypted secret key corresponding to the user is transmitted to the encryption / decryption device 10γ from the information storing device 30γ.
Then, the secret key decryption unit 18γ decrypts the encrypted secret key corresponding to the user by using the user's private key. (Step S602γ) In this time, the user's private key shall be input previously.

Next, the secret key tamper detection code creation unit 19γ creates the secret key tamper detection code from the secret key obtained at Step S602γ. (Step 603γ)

The tamper detection unit 20γ compares and verifies whether the key information mentioned above matches the secret key tamper detection code or not, and authenticates the key creator. (Step S604γ) In this time, the authentication of the key creator can be judged by these two information being matched.

When it is judged that the key creator is authenticated at Step S604γ, the data encryption unit 21γ creates the encrypted messages n + 1 by encrypting the additional data parts n + 1. (Step S605γ)

Furthermore, the data tamper detection code creation unit 22γ creates the tamper detection codes n + 1 from the data parts n + 1. (Step S606γ)
In addition, when the additional data parts consists of L pieces, the operation from Step S605γ to Step S606γ is repeated L times.

Then, the encrypted messages n + 1, n +2, ---, n + L and the tamper detection codes n + 1, n + 2, ---, n + L are transmitted to the information storing device 30γ and additionally stored as the encrypted information. (Step S607γ)

In addition, in the above explanation, the key decryption unit 12γ uses only the encrypted secret key corresponding to the user by matching the user name, the user ID, etc. and the encrypted secret key. When there are multiple encrypted secret keys (i.e., there are multiple users who share the encrypted information), the above-mentioned Step S602γ to S604γ are performed as follows as the other method to obtain the encrypted secret key corresponding to the user. First, all encrypted secret keys are decrypted at Step S602γ. When multiple encrypted secret keys are decrypted at Step S602γ, multiple secret keys, which also include not correct keys, are created. At Step S603γ, the secret key tamper detection codes are created to all secret keys created at Step S602γ. Next, at Step S604γ, each secret key tamper detection code and key information are compared and verified. When all combinations are different, it can be judged that tampering is done. If there is one matching, it can be judged that the secret key corresponding to said one is the correct secret key.

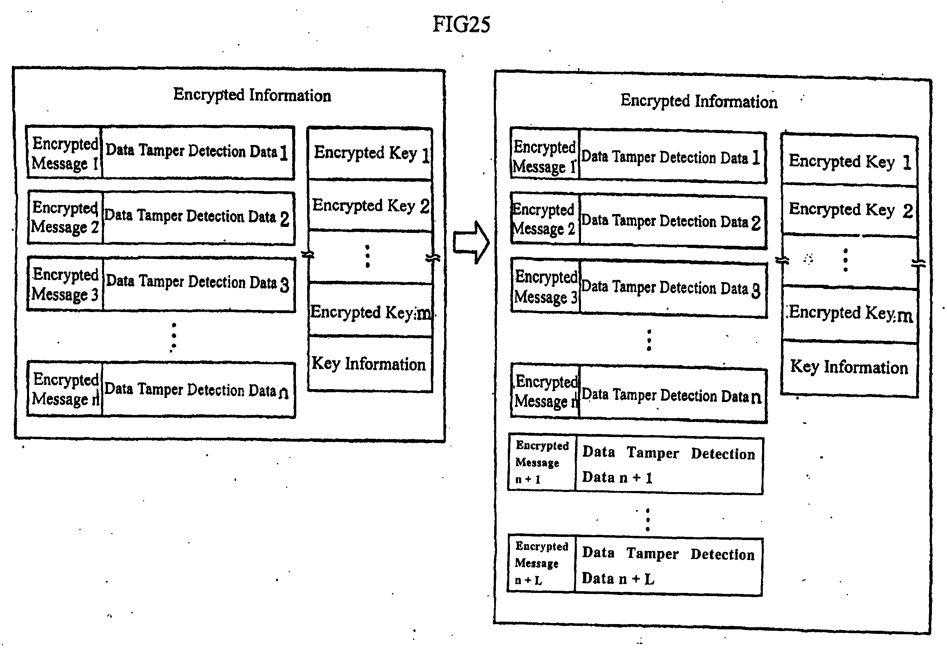

The structures of the encrypted information before and after addition are shown in Figure 25. In this figure, it is shown that the encrypted message n + 1, n +2, ···, and n + L and the data tamper detection code n + 1, n + 2, ···, and n + L are added to the original encrypted information as the encrypted information.

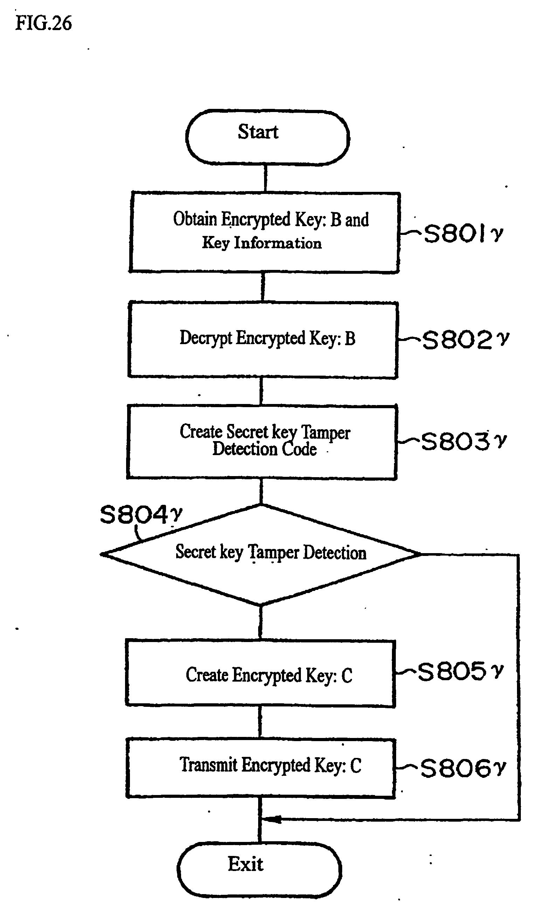

Next, the operation of the encryption / decryption unit 10γ is explained as referring to the operation flow chart in Figure 26 when a sharing member is added to the team which shares the encrypted information memorized in the information storing device 30γ. Here, it is explained when the sharing member C is added to the team where the sharing member A and B are affiliated, as a new member by said member B.

At first, the encryption / decryption device 10γ accesses to the information storing device 30γ and obtains the key information and the encrypted secret key B corresponding to the sharing member B by the operation of the sharing member B. (Step S801γ)

The secret key decryption unit 18γ decrypts the encrypted secret key B to obtain the secret key by using the private key of the sharing member B who is the recipient. (Step S802γ)

The secret key tamper detection code creation unit 19γ creates the secret key tamper detection code from the secret key. (Step S803γ)

Then, the tamper detection unit 20γ confirms the validity of the key creator by comparing and verifying the obtained key information and secret key tamper detection code. (Step S804γ) In this case, it is verified that the tampering has not done when these two information match.

When the validity of the key creator was confirmed in Step S804γ, the secret key encryption unit 16γ encrypts the secret key to create the encrypted secret key C by using the public key of the sharing member C who is added as the new member. (Step S805γ)

The key encryption unit 12γ transmits the created encrypted secret key C to the information storing device 30γ. (Step S806γ)

By this way, the encrypted secret key A, B and C corresponding to the three sharing members are stored in the information storing device 30γ. After this time, the added sharing member C can do the reference and the manipulation etc. to the encrypted information of the team.

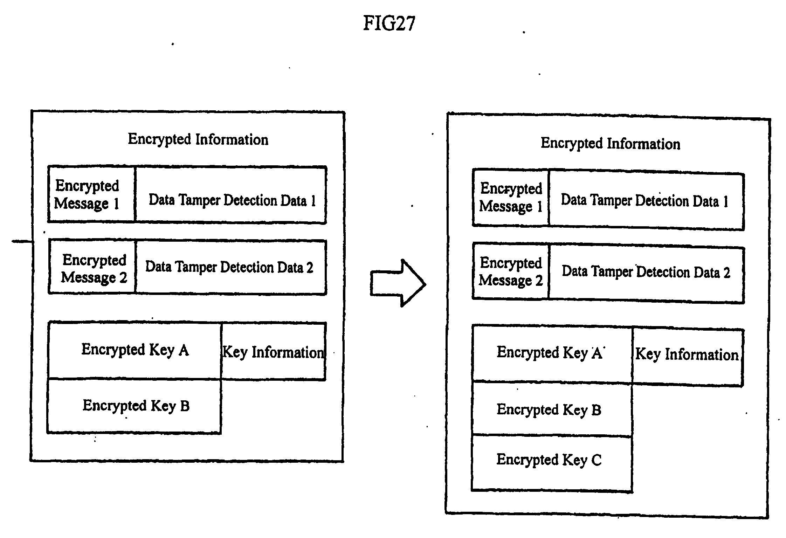

The structures of the encrypted information before and after of the addition of the sharing member C is shown in Figure 27. In this figure, it is shown that the encrypted secret key C for the new sharing member C is added to the original encrypted information as the encrypted information.

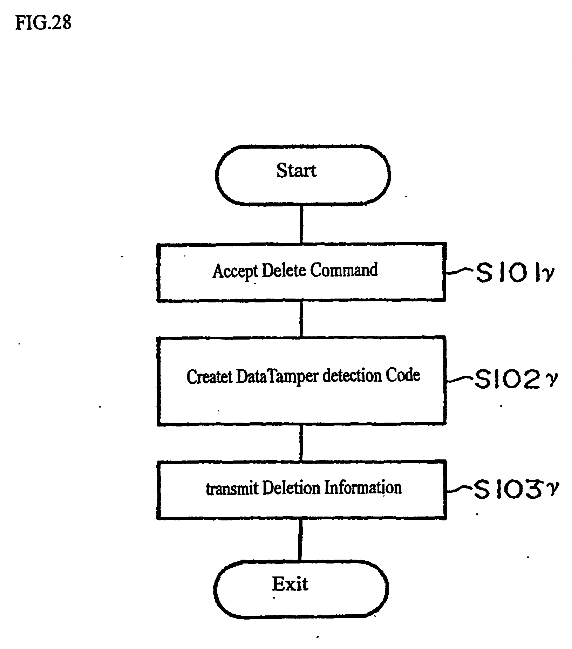

Next, the operation of the encryption / decryption device 10γ is explained as referring to the operation flow chart in Figure 28 when a sharing member is deleted. Here, it is explained when the sharing member B deletes the sharing member A in the team where the sharing member A, B and C are affiliated.

The encryption / decryption device 10γ accepts the delete command for deleting the sharing member A by the input operation of the sharing member B. (Step S101γ)

The data tamper detection code creation unit 22γ creates the data tamper detection code corresponding to the delete command of the sharing member A. (Step S102γ)

Next, the encryption / decryption device 10γ transmits the delete command which consists of the delete command of the sharing member and the data tamper detection code which identifies the principal who issued the delete command, to the information storing device.(Step S103γ)

In addition, the information storing device 30γ has the function to identify the principal who issued the delete command and can delete the encrypted secret key corresponding to the delete command. Moreover, the digital signature of sharing member B who issued the delete command of sharing member A may be used as the data tamper detection code used in this case. Moreover, as the identification information to identify the principal who issued the delete command, the information storing device 30γ may verify the identification information which is registered in the information storing device 30γ by using ID or pass word etc.

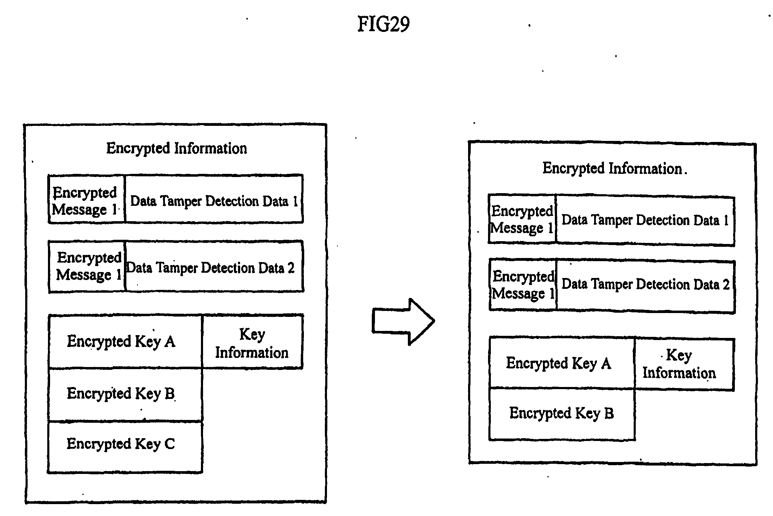

The structures of the encrypted information before and after deletion of sharing member A are shown in Figure 29
Here, it is shown that encrypted secret key A for sharing member A is deleted from the original encrypted information as the encrypted information.

Next, the performance of the encryption / decryption unit 10γ of this Example is explained in detail as using a concrete example.
At first, as the example of No.3-1, the transaction is explained when user B adds the business which are "seminar entry" and "from 15:00" to the items on October 1, 1998 of the schedule which is shared by the team 101γ (three users, i.e., A, B, and C are belonging). In this example, the information about the schedule includes the encrypted and not encrypted information and is stored in the outside information storing device 30γ. Moreover, the information storing device 30γ can restrict the access to the information which is kept according to the user's privilege. Moreover, the encryption / decryption unit 10γ which is used by user B has an input unit (not drown) which receives the data inputted by user B and a display unit (not drown) which display the information.

First, user B accesses to the information storing device 30γ from the encryption / decryption unit 10γ and confirms whether user B can access to the schedule on October, 1998 of team 101γ or not.

If it [he] can access, user B accesses to the schedule on October, 1998 of team 101γ. The information storing device 30 transmits the schedule on October, 1998 of the team 101γ to the encryption / decryption unit 10γ and the encryption / decryption unit 10γ displays the schedule on its display unit. In addition, at this step, the information of the schedule is not encrypted.

User B inputs "go to seminar" and "from 15:00" on the item on October 1, 1998, by using the input unit of the encryption / decryption unit 10γ.

Next, the secret key is created in the secret key encryption unit 16γ.In this example, this secret key is called cKey1γ.

Next, at the secret key encryption unit 16γ, this cKey1γ is encrypted with the public keys of user A, user B and user C by using the public key cryptography such as RSA system. By this way, three encrypted secret keys are created corresponding to three users at the secret key encryption unit. In this example, these encrypted secret keys are each called as eKey1Aγ, eKey1Bγ and eKey1Cγ.

Next, the secret key tamper detection code creation unit 17γ creates MDγ which is the message digest of the secret key and signs to the MDγ by using the private key of user B. This signed MDγ is SignedKey1γ which is the key information.

The data encryption unit 21γ encrypts "go to seminar" which is the data parts of the schedule by using the secret key cKey1γ to create the encrypted message CryptData1γ.

Next, the data tamper detection code creation unit 22γ creates MessageD1γ which is the message digest of "go to seminar" by using, for example, MD 5 which is Hush function.

The operation steps applied to "go to seminar" are performed to "from 15:00" which is also the data parts of the schedule and then, the encrypted message CryptData2γ and the message digest MessageD2γ are obtained.

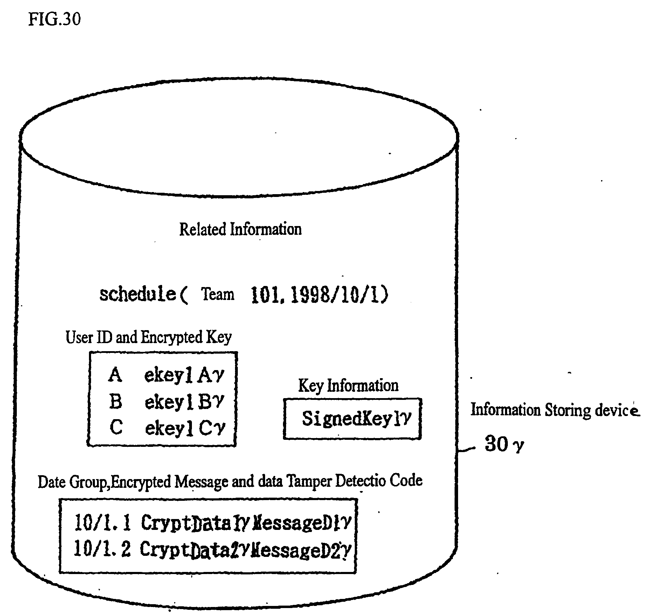

Then, these information are transmitted from the encryption / decryption unit 10γ to the information storing device 30γ.
In addition, the structure of the memorized information in the information storing device 30γ at this time is shown in Figure 30. In this information storing device 30γ, the following information are memorized, i.e., the information which distinguishes the schedule created by the transaction mentioned above, the user ID, the encrypted secret key, the key information, the encrypted message, the data tamper detection code and the related information.

Next, as Example 3-2, the transaction is further explained from Example 3-1 when user A adds the businesses, i.e., "meeting" and "from 17:00" to the items on October 2. 1998 of the schedule which is shared by the team 101γ (user A, B and C are belonging). In this case, the encrypted information is the one created at Example 3-1.

First, user A accesses the information storing device 30γ from the encryption / decryption device 10γ to confirm whether he can access the schedule on October, 1998 of the team 101γ or not.

If he can access, user A accesses the schedule on October, 1998 of the team 101γ. The information storing device 30γ transmits the encrypted secret key eKey1Aγ and the key information SingnedKey1γ to the encryption / decryption device 10γ.

User A inputs "meeting" and "from 17:00" to the business items on October, 1998 by using the input unit of the encryption / decryption device 10γ.

Next, the secret key decryption unit 18γ decrypts the encrypted secret key eKey1Aγ to create the secret key cKey1γ

Next, the secret key tamper detection code creation unit 19γ creates the message digest keyD1'γ of the secret key cKey1γ.

Next, the tamper detection unit 20γ the key information Signedkey1γ by using the public key of user B to obtain the message digest keyD1γ of the secret key which is before encryption. Then, keyD1γ are compared with keyD1'γ. When keyD1γ matches keyD1'γ, it is judged that the created secret key by user B, which belongs to team 10γ, are obtained without tampering. Thereby, the validity of the secret key can be verified.

Here, it is necessary to obtain the confirmation whether it is right that user B creates the secret key or not, i.e., the confirmation of the validity of the secret key creator himself, as the secret key creator validity confirmation information. As an example of the obtaining method of the secret key creator validity confirmation information in this case, the method in which the display of the information that the secret key creator is user B is shown on the display unit of the encryption / decryption unit 10γ as a dialog box, and said information is confirmed by users, may be permitted. As the other method, it may be obtained from the information storing device 30γ as the related information through the network.

Next, the data encryption unit 21γ encrypts "meeting" which is the data parts of the schedule by secret key cKey1γ to create the encrypted message CryptData3γ.

Next, the data tamper detection code creation unit 22γ creates the message digest MessageD3γ of "meeting" by using MD5 which is Hush function as an example.

The step applied to "meeting" is done to "from 17:00" which is the data parts of the schedule, and encrypted message of "from 17:00" CryptData4γ and message digest MessageD4γ are obtained.

Then, these information are transmitted to the information storing device 30γ from the encryption / decryption unit 10γ.

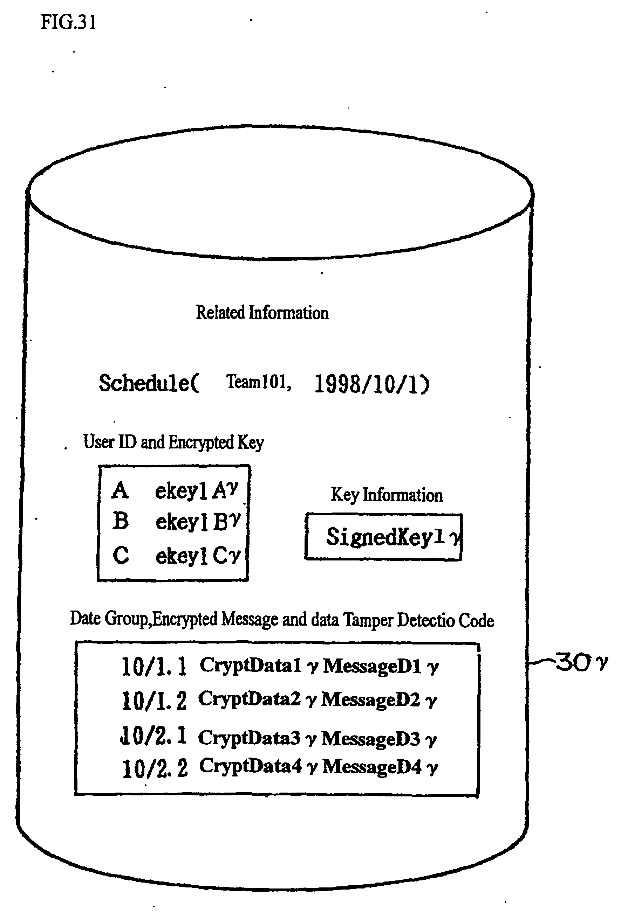

In addition, the structure of the information memorized in the information storing device 30γ at this time is shown in Figure 31. In this figure, the case when the encrypted message and the data tamper detection code are added by the processing mentioned above is shown.

Next, as Example 3-3, it is explained that the processing of the case where user C refers the schedule on October, 1998 of team 101γ which was created in Example 3-1 and 3-2 and was stored in the information storing device 30γ.

First, user C accesses from the encryption / decryption unit 10γ to the information storing device 30γ, and confirms whether the schedule on October, 1998 of team 101γ can be accessed or not.

When it can be accessed, user C accesses the schedule on October, 1998 of team 101γ. The information storing device 30γ transmits the schedule on October, 1998 of team 101γ, the encrypted secret key ekey1Cγ and the key information Signedkey1γ to the encryption / decryption unit 10γ.

The secret key decryption unit 18γ decrypts the encryption secret key ekey1Cγ by using the private key of user C, and obtains the secret key cKey1γ.

Next, the message digest CKeyD'γ of the secret key CKey1γ is created at the secret key tamper detection information creation unit 19γ

In the tamper detection unit 20γ, the Signedkey1γ is decrypted by using the public key of user B, and message digest CKeyDγ of the secret key, which is before encryption, is obtained. Then, this message digest CKeyDγ is compared with previous message digest CKeyD'γ. When these two message digest are equal, it is verifiable that the secret key cKey1γ created by user B which belongs to team 101γ is obtained without tampering.
Moreover, although it is necessary to do the validity confirmation of the secret key creator himself here, it is explained as Example 3-2.

Next, the data decryption unit 23γ decrypts the encrypted message CryptData1γ by using the secret key CKey1γ obtained from the secret key decryption unit 18γ. Then, the plain text "go to seminar" is obtained.

Next, the message digest MessageD1'γ of the plain text is created by using MD5 which is one of Hush functions at the data tamper detection code creation unit 24γ.

The message digest MessageD1γ transmitted from the information storing device 30γ is compared with the message digest Message D1'γ created by the data tamper detection code creation unit 24γ. When these two message digests are equal, it is judged that the data parts created by the person who belongs to team 101γ is obtained without tampering.

The same procedure mentioned above is repeated about the encrypted message CryptData2γ ... CryptData4γ and thereby, the data parts "from 15:00", "meeting" and "from 17:00" are obtained.

The display example of the schedule after decryption is shown in Figure 32. As shown in Figure 32, user C who belongs to the same team can see the data parts "go to seminar", "from 15:00" which user B inputted, and the data parts "meeting", "from 17:00" which user A inputted.

As mentioned above, the sharing member who belongs to one team can do freely the addition and the modification of the data parts to an encrypted information, and the reference of another sharing member's data parts, etc. But confidentiality to persons who is not the sharing member is kept.

And as an example, if each size of MessageD1γ, --, MessageD4γ may be under 16 bytes and the size of the key information may be under 2300 bytes(there is a lower limit), 16 x 4 + 2300 = 2364 bytes will be the overhead as in this Example.

When each of 4 encrypted messages is attached signatures by the conventional method, 2300 x 4 = 9200 bytes becomes overhead. Therefore, the method of this invention can be suppressing the amount of information from the conventional method.

In addition, the invention of Example 3 can also use the network by LAN, and a dial up other than the internet.

Moreover, in order to realize the encryption device, the decryption device and the method of this invention, the encryption and decryption processing may be also done by the program which is memorized in the record medium which is readable by computers, and is read in the computer system.

That is, in the record medium which recorded the encryption program and is readable by computers, the encryption program makes the computer to realize the following functions comprising;
the function which obtains or creates the secret key used for an encryption by using the secret key encryption system;
the function which encrypts the secret key mentioned above to create the encrypted secret key by using the public key cryptography;
the function which creates the key information from the secret key mentioned above;
the function which encrypts the plain message by using the secret key cryptography to create the encrypted message; and
the function which creates the 1st data tamper defection code from the plain message mentioned above.

Moreover, in the record medium which recorded the decryption program and is readable by computers, the decryption program makes the computer to realize the following functions comprising;
the function which decrypts the encrypted secret key mentioned above by using the public key cryptography;
the function which creates the secret key tamper defection code from the secret key which decrypted the encrypted secret key mentioned above;
the function which detects tampering from the key information and the secret key tamper detection code mentioned above;
the function which decrypts the encrypted message mentioned above by using the secret key cryptography;
the function which creates the 2nd data tamper defection code from the plain message in which the encrypted message mentioned above is decrypted; and
the function which detects tampering from the 1st and 2nd data tamper defection code mentioned above.

As exactly mentioned above, according to the invention of the Example 3, the overhead of the encrypted information can be decreased since the tamper detection code is not created for every plain texts but the key information which becomes the tamper detection code is created for the secret key which encrypts each plain text and it becomes possible to detect tampering and to confirm the secret key creator . Therefore, the loading to a net work at the time of the transmitting of the encrypted information and the capacity of the memory device at the time of storing the encrypted information can be decreased. Moreover, the tamper detection can be done for every plain texts since the 1st data tamper detection code is added to each plain text. Moreover, the encrypted information can be shared between multiple users by creating the encrypted secret key for every user.

### Example 4

The invention of Example 4-1 to 4-4 relates to the team data list processing system in order to share safely among users, the various kinds of information and functions offered to users, while said team data list processing system creates, administrates and stores the team data list to hierarchize teams, such as divisions and sections of companies which consist of multiple users (members). Furthermore, in detail, this invention mentioned above relates to the system which consists of the team data list storing device which processes to store the team data list and the team data list administration device which executes various kinds of administration of the team data list which is obtained from the team data list storing device.

The following technology is conventionally known about the invention of Example 4-1 to 4-4.
In order to share such various resources as various kinds of functions and information offered to users, among the multiple users, it is necessary to prepare the function which verifies whether the user, who requires the access to these resources, has the privilege surely to access the resources or not. In order to perform such verification, the list called access control list (it is hereafter written as ACL) is utilized conventionally. ACL is the list which defined beforehand the user to whom the proper permission of the access to the resource was given. In addition, ACL said here is one example of the list which includes only the information for controlling the access to the shared resource, among the various information included in the team data list mentioned above.

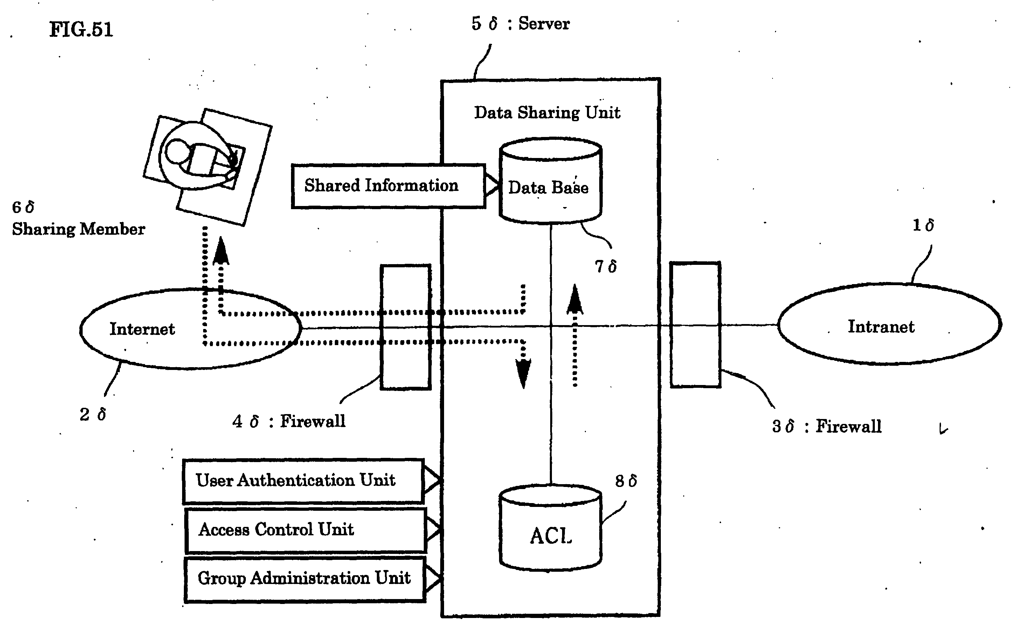

The scheme of the conventional system of the information sharing among the multiple users using ACL is shown in Figure 51. The system shown in this figure, the intranet 1δ and the internet 2δ are connected to the server 5δ through each fire walls 3δ and 4δ, and not only the person of the intranet 1δ interior but also the sharing member 6δ outside intranet is sharing the information for each other through the internet 2δ. As everyone knows, the intranet 1δ is a closed network which is a improved network in the companies, etc., on the other hand, the internet 2δ is a public network all over the world.

And, the fire walls 3δ and 4δ are the computers to prevent that the malicious invader accesses unjustly to intranet 1δ. The server 5δ is a terminal (a computer) in which various kinds of resources are stored, and has the database 7δ, in which the sharing information is stored, and ACL8δ which stores the group, which can access the specific information or functions, and the member list of members in said group. This server 5δ has the data storing unit which administrates the sharing information stored in the database 7δ and also has following units comprising;
the user authentication unit to verify whether the communication partner who is equivalent to a client is permitted or not beforehand;
the access control unit to verify whether the access to the sharing information is possible or not based on ACL8δ; and
the group administration unit that makes the access to the specific sharing information possible by only the member who belongs to the specific group based on ACL8δ.

In the system of Figure 51, when the access is requested to the database 7δ from the sharing member 6δ or the user in the internet 1δ, the server 5δ does the user authentication by referring to ACL8δ each time. Then, if the concerned user is defined in ACL8δ as the member, such access is permitted, and if not defined as the member, said access is rejected. Moreover, when the access is permitted to the concerned user, the server 5δ investigates whether said concerned user is permitted the access about the information shared or not, with confirming whether said concerned member is included in the specific group or not by referring to ACL8δ.

By the way, when the resource is shared among multiple users, it may not be desirable to include the administrator in the sever side to the sharing member. For example, it is considered that the system administrator who belongs to the information system division of a certain company is required to be unable to access the company's personnel information which should share only within the personnel division. However, in the system as shown in Figure 51 mentioned above, the server administrator 5δ is permitted the privilege to do setup and administration of ACL8δ. For that reason, the server administrator 5δ is able to do an unjust access to ACL86, and there is a fault which can not prevent the intentional tampering of the established contents of ACL8δ. In addition, there is also possibility that ACL86 is unjustly tampered by a person (a so-called cracker) who invades into the server SVδ unjustly other than the server administrator.

And, when the application to the usage to share information in a company is considered, it is desirable to build the system, which suited such usage well. That is to say, in general, the organization of the company, whose size is larger than some degree, is formed in a hierarchical structure as the shape of a pyramid. For example, it is very general that the 1st personnel section and the 2nd personnel section are installed under the personal division etc. Moreover, in the development division etc., it is considered that the general manager of said development division has the privilege to make the section newly, unifies some sections or abolishes a certain specific section, according to the development process of the goods. Moreover, each section is sometimes divided into some groups by the business function.

In such system, it is an awful burden that the general manager of the development division administrates the constituent members of each section and all groups belonging to each section. Therefore, in order to distribute such administration burden, it is often done that several persons, who assist the general manager of the development division, is assigned and executes a part or all of his management job as the deputy. Furthermore, it is explored that the general manager of the development division is awarded only the privilege to do creation, consolidation or abolition of sections and the section manager or the group leader, etc., under said section manager are entrusted to the inside administration of the section, and the information sharing itself. However, in the conventional system mentioned above, there is the problem in which the flexible administration and information sharing which suited the system form of the company explained above are not considered.

This invention has been made in view of the points mentioned above and the object is to offer the team data list processing system for realizing the team hierarchization and various kinds of information and functions, while preventing crackers and outsiders of the team, including the authorities such as server administrators, the team is in equivalent to the organization unit of the companies, etc., doing wrong with the team data list. Furthermore, in detail, it is to offer the team data list processing system in which only the specially established persons from the members belonging each team can create the sub team under the team, assign the privilege creating the sub team to the established multiple persons, and make the administration in the sub team to the established persons who are specified by the privileged persons to create the sub team.

Hereafter, the Examples 4-1 to 4-4 are explained by referring to figures. At first, the team data list of this invention is explained. The team data list is the general term of the lists defining the information about the team and is for defining "aggregation of members" which is applied to the uses required highly confidential administration like ACL mentioned above. As mentioned above, in the conventional system, the information about the team can be modified by the terminal administrator, the net work administrator and the server administrator, etc. who are not the team members. On the other hand, in the team data list of this invention, it becomes possible that only the team member does the team administration, such as the team hierarchization or the modification of the team master himself, by dividing and administrating the team information to the multiple lists (an authority list, an authority data, a member list, team master list and an application list as mentioned later).

In the following Examples explained in detail, at first, it becomes to realize the structure in which the information sharing is done by imitating the hierarchical relationship in the company organization, etc., by enabling to create the sub team to the subordinate of the team. In the second, it becomes to realize the structure which can award the creation privilege of the sub team to the especially specified plural persons. By this way, the administration loading is dispersed. In the third, it becomes to realize the structure in which the privileged person of the sub team creation makes the specified person chosen in the sub team do the administration in the sub team. By this way, it enables that the team administrator does not participate the administration or the information sharing at the inside of the sub team.

### Example 4-1

In this Example, by connecting with the hierachized team, the person who can access the team data list is classified into three kinds, the member, the sub authority, and the team master, according to the description of the privilege and the privilege given to said person expands in this order. The team master is the administrator of a certain team and has the administrational privilege to create the sub team which is the subordinate organization of said team. On the one hand, the sub authority is the person who is nominated by the team master and also has the administrational privilege of the creation of the sub team like the team master but is not allowed to nominate the other person as the sub authority. The sub authority may be two or more in one case, but may be no person in other case. On the other hand, the general member who is other than the sub authority and the team master, is the person who shares the information and functions but is not given any privileges such as the sub team creation privilege. In addition, although the sub authority and the team master are given the special privilege, there is no positional change for them as the member of the team and therefore, they may be called as the member. In addition, in the following explanations and figures, the team master and the sub authority may be written briefly for "TMδ" and "sub AUδ".

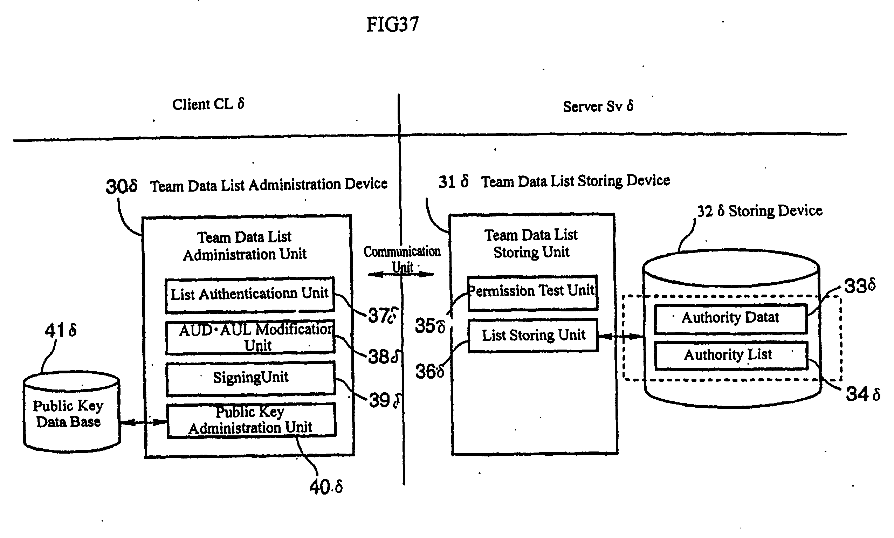

Hereafter, as this Example, the system equipped with two devices, which are the team data list administration device and the team data list storing device, is explained. Figure 37 shows the block diagram of the structure of the whole system of this invention, in which the team data list administration device and the team data list storing device are equipped. In this figure, the team data list administration device 30δ and the team data list storing device 31δ have the team data administration unit and the team data list storing unit respectively, which are explained in detail as followings, and the data are delivered and received each other by using communication facility. The team data list administration device 30δ and the team data list storing device 31δ can be realized by general computers, such as a work station. On the main memories on these computers, the programs (the team data list administration program and the team data list storing program) are memorized to realize the team data list administration unit and team data list storing unit.

These programs are memorized a part or all in a portable memory medium, such as a floppy disk, an IC (integrated circuit) card, an optical-magnetic disk, and a CD ROM (compact disk-read only memory), and a memory medium in which computer reading is possible, such as the mass storage medium, for example, a hard disk built in a computer, etc. That is, such programs may be ones which realize a part of the functions explained in detail as follows and furthermore, may also be ones which realize these functions by combining the programs which are already memorized in computers. Then, when the team data list administration device and the team data list storing device are operated, these programs are beforehand transmitted to the main memory from the storing medium under the indication of CPU (central processing unit) on the computers. Then, CPU performs the transmitted programs on the main memory, controls each unit of the device by these programs and realizes the various processing mentioned in detail as follows.

In addition, the hardware, such as OS (operating system) and peripheral devices, is included in the "computer" said here. Moreover, as the memory medium in which computer reading is possible, it is not restricted to what memorizes statically the programs which was described now, but includes what stores the programs dynamically in short time through the communication line, such as the exclusive line or the telephone line, etc. That is, all of the memories which can store the program at definite time are included. Such memories are the main memory equipped in the computers, i.e., a server, a router or a gateway which stores, transmits and relays the program and data on the network, such as internet, etc., the cash memory and the volatile memory in the computers which operates as a server and a client.

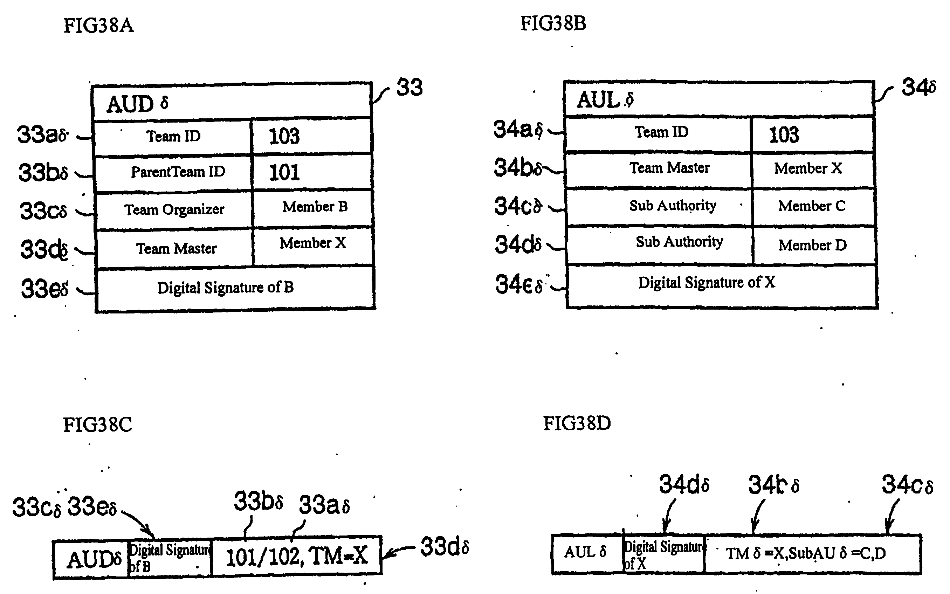

Now, the storing device 32δ which can construct database, such as the hard disk, etc., is connected to the team data list storing device 31δ shown in Figure 37. This storing device 32δ has stored the group of the team data list which consists of the authority data 33δ and the authority list 34δ, for every team which consists of the multiple members. Although this figure shows only one group of the authority data 33δ and the authority list 34δ from the convenience of an explanation, in fact, these groups exist only in the number of teams. Here, Figure 38A and Figure 38B show the detailed constructions of the authority data 33δ and the authority list 34δ. Moreover, in Figure 38C and Figure 38D, the notation is shown each other in order to show the memory contents of authority data 33δ and authority list 34δ simply in the figures shown after this figure. In addition, in the following explanations and figures, the authority data may be written as "AUDδ" and the authority list may be written as "AULδ."

The authority data 33δ is the data showing the relation between a certain team and the sub team of its subordinate, and the concerned team which is in a high order in the relation with the sub team is called as a parent team. As shown in Figure 38A, the notation "AUDδ" is shown as the authority data, and this authority data 33δ includes the team ID 33aδ which is the identifier given to the own team, the parent team ID 33bδ which is the team ID given to the parent team of said team, the team originator 33cδ indicating who is the originator of this team, the team master 33dδ showing to whom the team master privilege is given, in the member of this team, and the digital signature 33eδ which is signed by the team originator 33cδ (it is also called as the electronic signature). Moreover, in Figure 38C, it can be understood that this authority data is about the team 102δ which is the sub team of the team 101δ. In addition, from the digital signature, it can be understood that the team originator of this authority data is the member Bδ and also be understood that the team master is the member Xδ.

On the other hand, the authority list 34δ is the list which registered the multiple administrators in each team, and includes the data about the team master and the sub authority of the concerned team. As shown in Figure 38B, the notation "AULδ" means the authority list, and this authority list 34δ includes the team ID 34aδ, the team master 34bδ, the sub authority 34cδ (in the case of this figure, they are 2 persons), and the digital signature 34dδ of the team master 34bδ, concerning of this team. And according to Figure 38D, the team master is the member Xδ and its signature was made, and also it is understood that the sub authority are the member Cδ and the member Dδ. In addition, the notation of team ID itself is omitted in Figure 38D. As mentioned above, the team data list of this Example is the divided structure between the AUDδ which is the list where the relation between the parent team and the sub team is shown, and the AULδ which is the list about the sub team administration.

In addition, besides having been shown in Figure 38A, 38B, 38C, and 38D, the authority data 33δ and the authority list 34δ also include the time stamp in which the creation time of these data or lists is shown, the signature algorithm used for creating the signature 33eδ and 34dδ, the effective period of the authority data 33δ and the authority list 34δ themselves, and the data about the identification number of the authority data 33δ and the authority list 34δ, etc. Moreover, as the ID (identifier) for the identification of the member, the sub authority, and the each people of the team master, it is possible to use various identifiers, such as the name, the mail address, the title on the organization, the personal serial number, and the digital certificate, etc.

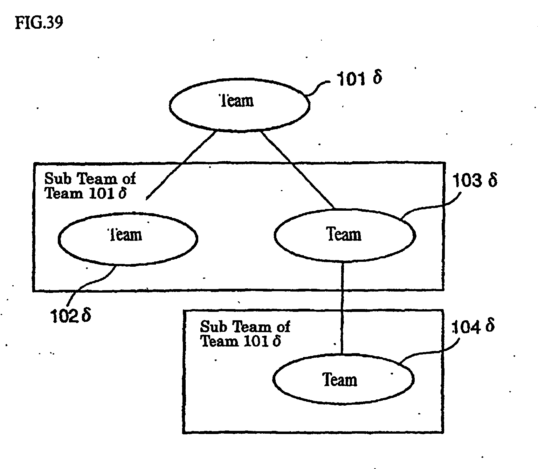

Next, Figure 39 shows the example about the conceptual diagram of the hierarchized team. As shown in this figure, the hierarchy of the team is the tree structure like the file system of the computer, and the ellipse form in the figure expresses the team, and the parent team and its sub team are connected each other by the straight line. The multiple sub teams are able to be registered into each team, for example, it is possible that the multiple sub teams, such as the 1st personnel section and the 2nd personnel section, are registered under the team in the personal division. Moreover, in this Example, since the team 101δ, which exists at the vertex of this figure, is equivalent to the root of the tree structure, it is called as "the root (Rootδ)" or the root team, as imitating of the root directory on the file system. Furthermore, the team 102δ and the team 103δ are both sub teams of the team 101δ, and they are the team belonging in the same hierarchy on the tree. On the other hand, the team 104δ is the sub team of the team 103δ.

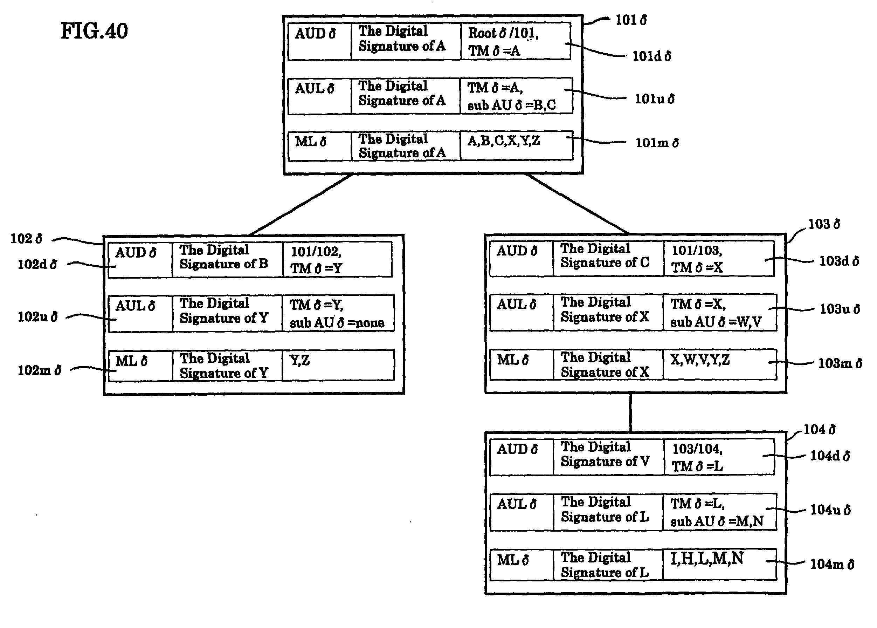

On the other hand, Figure 40 is the figure which is entered in detail value about the authority list and authority data of each team by corresponding to the team hierarchy shown in Figure 39. In addition, in this figure, the example in which the member list ("MLδ" in this figure), which shows the list of the information or functions sharing member, is included in each team, is shown other than the authority list and authority data.
That is to say, in this figure, the team data list consists of three kinds of lists which are the authority list, the authority data, and the member list. In the each of the member list 101mδ-104mδ, the signature of the member list originator and the list of the members are shown and, also except them, the various team administration information, which match for the object of the team usage, are included. That is to say, these information are included, i.e., the identification information of each member, the public key given to each member in the public key cryptography (i.e., bit line with designated length) and the identifier of the holder corresponding to this public key (hereinafter said to as "public key ID"), the team ID, the time stamp showing the creation time of the member list, and the information about the functions which can be used by the team member (for example, the application), etc. In addition, as the information for each member, the e-mail (electronic mail) addresses and the member's own addresses are also included in the member list, and it is possible to administrate the information resource about each member simultaneously by using these information.

According to the structure in this figure, it is possible to reach the root team 101δ from any sub teams by tracing the parent team ID described in the authority data. In addition, in each team, the multiple administrators can create the sub team. For example, in the team 101δ, the team master A and the sub authorities B and C have the creation privilege of the sub team, it can be understood that the sub teams 102δ and 103δ are created by the sub authorities B and C in the team 101δ each other, from the signatures in the authority data 102dδ and 103dδ.

The authority data of the concerned sub team should be created by the administrator who is registered in the parent team of said sub team. Moreover, anyone in the concerned sub team can become the team master of this sub team by the direction of the parent team administrator. For example, in the team 104δ, since the digital signature of the authority data 104dδ is member V, the sub authority V who is one of the administrators of the team 103dδ which is the parent team is creating authority data 104dδ, and nominates member L as the team master of the team 104δ.

On the other hand, the team master of each team should create and sign the authority list. For example, the authority list 103uδ of the team 103δ is created by the member Xδ who is the team master, and the digital signature of the member Xδ is made there. Therefore, the data about the sub authority in the authority list 103uδ can be administrated by member Xδ only, and does not receive the interference of the administrator of the team 101δ which is the parent team (i.e., the team master A or the sub authorities B or C). If it is said by another words, when the signer of the authority list is made into the originator of the team (i.e., the team master or sub authority of the parent team), for example, the personnel general manager becomes unable to leave the administration of the section to the personnel section manager, and has to administrate by himself. Similarly, since the team master of each team signs the member list, the administration about the sharing member in each team does not receive the interference of the parent team. For example, since the member list 103mδ of the team 103δ is signed by the team master X, the administrator of the parent team cannot administrate. However, when the team master or sub authority of the parent team modifies the initial state of the sub team created or the team master of said sub team, the signature of the authority list is the signature of the team master or the sub authority of the parent team which created said sub team.

If the above points are collected, in this Example, the authority data and the authority list are separated in the structure and it makes that the parent team can not participate the administration of the sub team, since the parent team administrator can not tamper the authority list and member list, while the parent team can refer the authority data AUDδ of the sub team. By this way, the team master of each team can choose the sub authority by himself, and also can do the member administration of the information sharing in the team.

Next, in the team data list storing device 31δ of Figure 37, when the each request of the reference, the modification, and the deletion to the authority data 33δ or the authority list 34δ is required from the client CLδ side, the permission test unit 35δ identifies the claimant, and judges whether these requests are permitted or not. In this judgement, the privilege of the members, etc., of the team and the privilege given to the claimant himself, etc., are referred, besides the relation between the team master or sub authority of the objective team of the request and parent team or sub team of the concerned team. That is to say, since the processing of the judgement is different in detail in according to the request contents, the detail is mentioned later in the processing explanation. Next, when the permission test unit 35δ uses the authority data 33δ and authority list 34δ, the list storing unit 36δ obtains these lists from the storing device 32δ, deletes these lists from the storing device 32δ or stores these lists in the storing device 32δ. In the following explanation, when the permission test unit 35δ accesses to the authority data 33δ or authority list 34δ, it is the premise that the list storing unit 36δ surely intervenes. However, it does not explain one by one, because it is complicated.

Next, in the team data list administration device 30δ, the list authentication unit 37δ traces the authority list and the authority data of the parent team one by one until to reach the root team, then finally, confirms the signature of team master A of the team 101δ, and verifies the authentication of the authority list and the authority data. In addition, the authentication said here means that there is neither tampering nor action exceeding privilege and the administration of the team hierarchy is done through right steps. Next, the AUD·AUL modification unit 38δ does the modification, such as addition, deletion, and displacement, etc., of the members or administrators to the authority data 33δ and the authority list 34δ which are obtained by the list authentication unit 37δ. In addition, the AUD·AUL modification unit 38δ also creates the authority data 33δ and the authority list 34δ newly when the sub team is created. Next, the signing unit 39δ adds the digital signature of the originator or the modifier (i.e., the team master or the sub authority) to the authority data 33δ or the authority list 34δ which was processed by the AUD·AUL modification device 38δ, by using together the encryption which is made in use of the private key or the signed key, on which only the modifier can know, and Hash function.

Next, the public key administration unit 40δ accesses the public key database 41δ connected to the team data list administration device 30δ, and obtains the public key and the public key ID corresponding to said public key. Incidentally, in an actual form, it is naturally considered that the public key database 41δ is not only the local form which is directly connected with the team data list administration device 30δ but also the form which exists in the server (for example, certification office) which is installed on networks, such as, internet. According to such a form, the public key administration device 40δ can access the public key database 41δ through the homepage registered on the certification office, and from there, said public key administration device 40δ can also obtain the public key and public key ID mentioned above in the form of the file.

Next, the operation of the above mentioned system which has the team data list administration device 30δ and team data list storing device 31δ is explained for every requested contents, which are done from the client CLδ to the server SVδ.

### [The creation of the sub team]

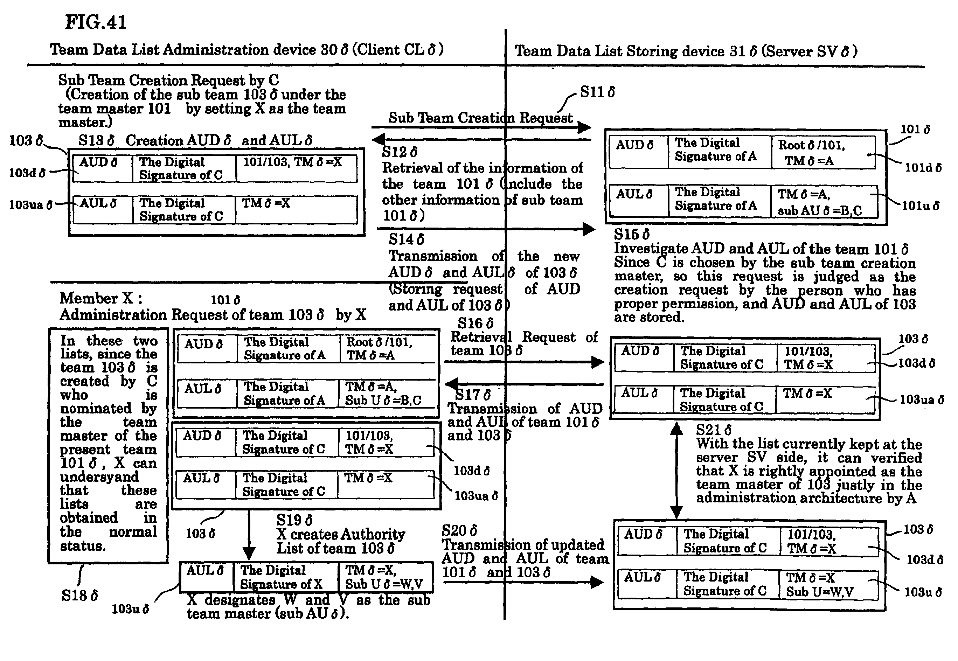

Figure 41 shows the procedure for creating the sub team. In this case, member C, which is the sub authority of the team 101δ in Figure 40, creates the sub team 103δ in which the team master is the member X in the subordinate of the team 101δ. This corresponds that the deputy general manager performs the enterprise function, which establishes new section in the personal department, as an agency of the personnel general manager. Here, in team data list store equipment 31δ, the team data list about the team 101δ created according to the proper step is beforehand stored in the storing device 32δ, and the creation of the sub team is done in the administration architecture by the team master A of the root team 101δ. In addition, as shown in Figure 40, since the parent team does not exist in the team 101δ, the fixed value "Rootδ" is installed to the parent team ID of the authority data 101dδ, and since the team master is member A, the digital signature of the member A is done in the authority data 101dδ and the authority list 101uδ each other. However, it can consider that there is the parent team "Rootδ" among the root teams virtually, and it can be also considered that this parent team has nominated the member A as the team master.

First, according to the sub team creation directive from the member Cδ, the team data list administration device 30δ sends the sub team creation request to the team data list storing device 31δ. (Step S11δ) The team data list storing device 31δ obtains the authority data 101dδ and the authority list 101uδ from the storing device 32δ, and sends them to the team data list administration device 30δ. In this case, if the team 101δ has the sub teams (i.e., the team 102δ shown in Figure 40), the team data list storing device 31δ also sends together with the team data lists about these teams to the team data list administration device 30δ. (Step S12δ)
In the team data list administration device 30δ, the AUD·AUL modification unit 38δ creates the authority data 103dδ in which the team101δ is set as the parent team ID, the team 103δ is set as the team ID and the member X is set as the team master, according to the directive from the member Cδ, and also creates the authority list 103uaδ in which Member X is set as the team master. Next, the AUD·AUL modification unit 38δ makes together the created authority list 103uaδ with the authority data 103dδ, and delivers them to the signing unit 39δ.

The signing unit 39δ obtains the private key about the member C from the IC card, etc., in which the private key file and the private key were recorded, and, on the basis of this private key, does the digital signature of member C who is the claimant, to the authority data 103dδ and authority list 103uaδ sent from AUD·AUL modification unit 38δ. At this time, the signature of the authority list 103uaδ is the signature of the sub team originator instead of the team master X (in the above, Step S13δ). Next, the signing unit 39δ sends the authority data 103dδ and the authority list 103uaδ, which are created about the team 103δ, to the team data list storing device 31δ, and does these storing requests .(Step S14δ)

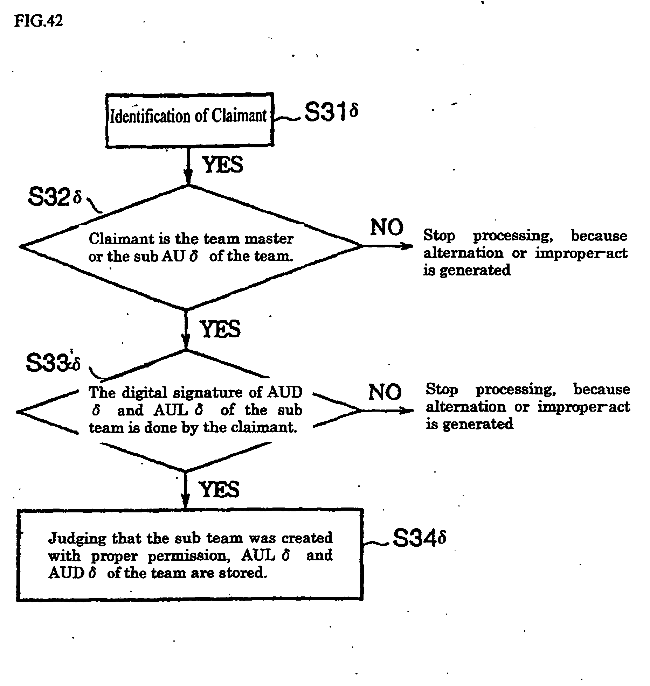

In the team data list storing device 31δ, the permission test unit 35δ does the permission test shown in the flow chart of Figure 42. First, the permission test unit 35δ identifies that the claimant, who done the storing request, is member C (Step S31δ), and investigates whether the member C is the team master or the sub authority of the team 101δ or not, on the basis of the authority data 101dδ and the authority list 101uδ about the team 101δ. (Step S32δ) In this case, since the member C is the sub authority of the team 101δ, it is judged that the storing request of the data is created by the person having the proper permission. (the decision result of this step is "YES"). By the way, when the decision result of this step serves as "NO", the tampering or the improper act exists, and therefore, the permission test unit 35δ stops the processing without doing the requested storing operation.

Next, the permission test unit 35δ confirms that both of the signatures of the authority data 103dδ and the authority list 103uaδ of the created sub team 103δ are signed by the member C which is the claimant. (Step S33δ) In this case, since member C has both signed as mentioned above, the decision result of this step serves as "YES.", and the permission test unit 35δ finally judged that the sub team was created by the proper permission, and stores the authority data 103dδ and the authority list 103uaδ of the created sub team in the storing device 32δ. (Step S34δ) By the way, when the decision result of step S33δ serves as "NO", the tampering or the improper act exists, and therefore, the permission test unit 35δ stops the processing without doing the requested storing operation. (the processing mentioned above is suited to Step S15δ of Figure 41)
The creation of the sub team is completed with the above steps.

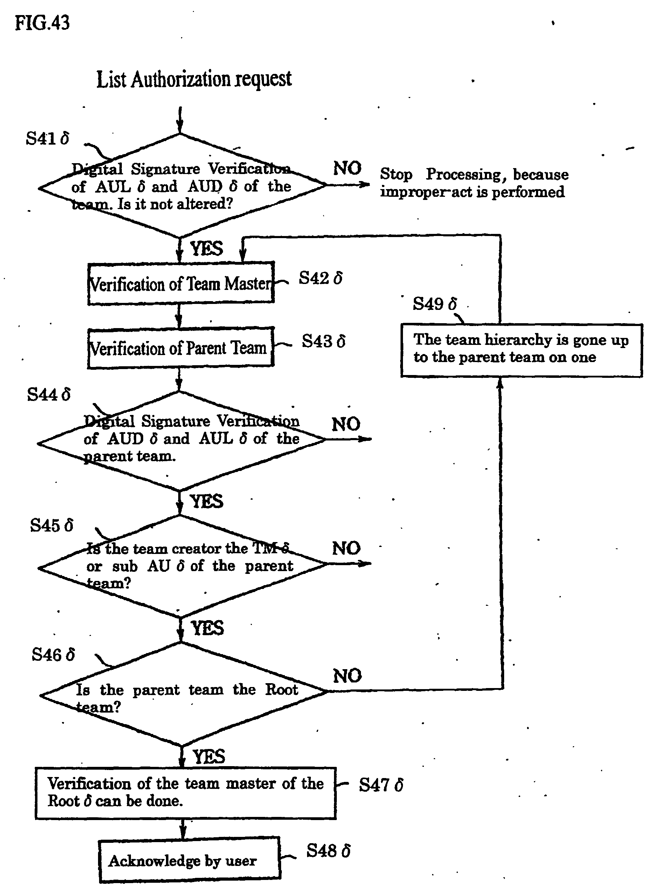

Then, the operation processing is considered when the administration requests, such as the set up of the information sharing member or the sub team originator having proper permission, is done from the member X who is the team master of the team 103δ. In addition, as an example, the case that the member W and the member V are newly registered as the sub authority of the team 103δ is explained. As shown in Figure 41, first, the team data list administration device 30δ requires the team data list about the parent team 103δ to the team data list storing unit 31δ based on the administration request directed from member X. (Step S16δ) Then, the team data list storing device 31δ transmits all team data lists about all parent teams until the root team besides the sub team 103δ (in this case, only the team 101δ which is the root team ), to the team data list administration device 30δ side, on the basis of the content of the request. (Sep S17δ) In the team data list administration device 30δ, the list authentication unit 37δ investigates the authentication of the transmitted list according to the procedure shown in the flow chart of Figure 43. (Step S18δ).

First, the list authentication 37δ refers to the digital signature of the authority data 103dδ and the authority list 103uaδ of the team 103δ being the administration object, and confirms whether the tampering is done or not. (Step S41δ) When the tampering is done, it stops the processing about the administration request as being the improper act. (the judgement result of this step is "NO") One the other hand, when the judgement result of this step is "YES", i.e., there is no tampering, the list authentication unit 37δ can confirm that the member X is the team master of the team 103δ from the authority data 103dδ. Here, if it is usual, the list authentication unit 37δ may confirm that its signatory is the member X who is the team master, from the authority list 103uaδ. However, as mentioned above, since this time is the transit period on the way of the sub team creation and the signatory of the authority list 103uaδ is the member Cδ who is the originator of the sub team, it may be confirmed later whether member C has the proper permission to create the sub team or not, by investigating whether the member C is registered or not as the team master or sub authority of the parent team 101δ, in the processing mentioned later (Step S45δ). (Step S42δ)

Next, the list authentication unit 37δ knows that the parent team is the team 101δ from the parent team ID of the authority data 103dδ (Step S43δ), and investigates whether the authority list 101uδ of the parent team and the digital signature of authority data 101dδ is tampered or not. (Step S44δ) Then, the processing of the list authentication unit 37δ is stopped by judging that an improper act was done, if it was supposed that these list and signature mentioned above either was tampered.(the decision result of this Step is "NO") However, the list authentication unit 37δ continuously verifies whether the creator of the team 103δ is the team master or the sub authority of the parent team or not, when the judgement of this Step is "YES", i.e., there is no tampering. (Step S45δ) In this case, it can be understood that the signer of the authority data 103dδ of the team 103δ is member C, and the member C has been registered as the sub authority of the parent team, from the authority list 101uδ of the team 101δ which is the parent team. Therefore, it can be verified that the team 103δ has been created by the person having the proper permission (the decision result of this Step is "YES") In addition, when the result of judgement is "NO", the processing of the list authentication unit 37δ is stopped by judging that the improper act was done.

Next, the authentication unit 37δ investigates whether the team 101δ, which is the parent team, is the root or not. In this case, the parent team ID of the authority data 101dδ of the team 101δ is "Rootδ", so that it can be understood that the team 101δ is the root team. (the decision result of Step S46δ is "YES") Then, the list authentication unit 37δ can understand that the team master is the member A by investigating the authority data 101dδ of the team 101δ. And, since the authority data 101dδ and the authority list 101uδ are signed by this member A, it can be verify that the team hierarchy is administered properly under team master A (Step S47δ). Finally, the member X operates the team data list administration device 30δ by himself, and acknowledges that the usage of the team data list, such as an information sharing, and the hierachized team, has been done. Then, these results are transmitted to the list authentication unit 37δ.

According to the Step mentioned above, the list authentication unit 37δ can verify that the sub authority C, who is nominated by the team master A of the team 101δ, is creating the authority data and authority list about the team 103δ, and these data lists are obtained normally from the team data list storing device 31δ. Then, the list authentication unit 37δ delivers the team data list transmitted from team data list storing unit 31δ to AUD·AUL modification unit 38δ. In addition, in the case that the parent team is not judged to be the root team at step S46δ in Figure 43, for example, when the administration request is done to the team 104δ which is the sub team of the team 103δ, the list authentication unit 37δ modifies the objective team into the parent team, and goes up the team hierarchy by one step toward the root team (Step S49δ), and repeats the looping which consists of Step S42δ-S46δ and Step S49δ until the parent team becomes to the team 101δ which is the root team (the decision result of Step S46δ is "YES").

Next, AUD·AUL modification unit 38δ creates the authority list 103uδ in which the member W and the member V are added as the sub authority, to the authority list 103uaδ of the team 103δ, and sends said authority list 103uδ to the signing unit 39δ with the authority data 103dδ. The signing unit 39δ obtains the secret key about the team master X from the private key file, etc., mentioned above, and after signing of the team master X to the delivered authority list 103uδ (above, Step S19δ), said signing unit 39δ transmits said private key to the team data list storing unit 31δ with the authority data 103dδ, and requires the storing request about these team data lists. (Step S20δ).

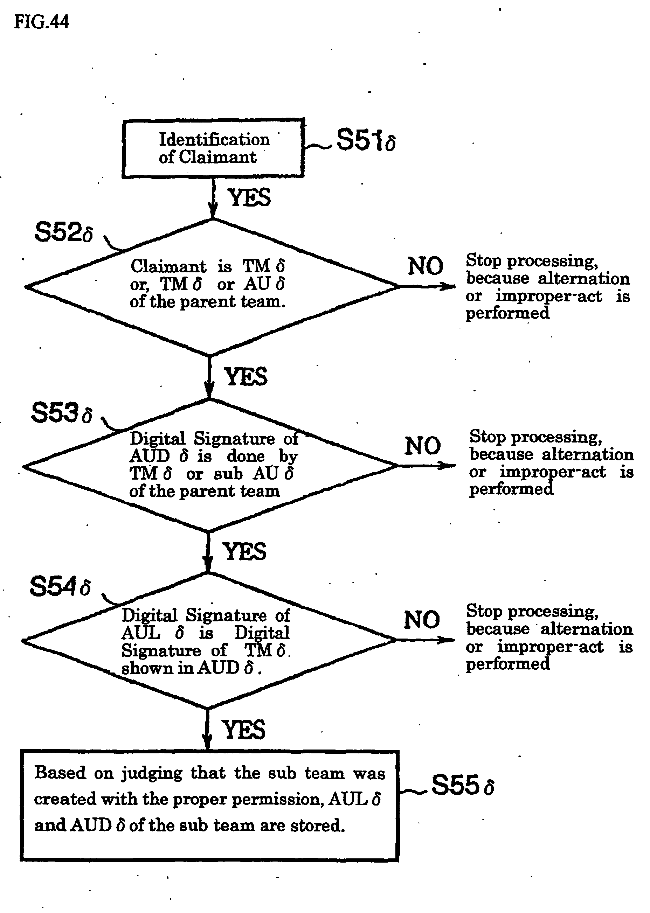

In the team data list storing unit 31δ, the permission test unit 35δ does the permission test shown in the flow chart of Figure 44 to the storing request from the team data list administration unit 30δ, based on the team data list about the team 101δ, which is stored in the storing device 32δ, and the team data list about the team 103δ transmitted from the client side. That is, at first, the permission test unit 35δ identifies that the claimant, who directed the storing request, is the member X (Step S51δ), and confirms whether the above-mentioned claimant matches with either among three persons of the team master of a team 103δ, the team master or sub authority of the team 101δ which are the parent team, based on the authority data 103dδ and the authority list 103uδ which have been transmitted. In this case, the member X, who is the claimant, is registered as the team master of the team 103δ (the decision result of Step S52δ is "YES"), so that the permission test unit 35δ judges that the claimant has the proper permission to the storing request. Incidentally, if the decision result of this step is "NO", the permission test unit 35δ stops the processing as the proper permission is not granted to the claimant.

Next, the permission test unit 35δ confirms whether or not the signer of the authority data 103dδ corresponds with either the team master or the sub authority of the parent team. In this case, the signer of the authority data 103dδ is the member C, and is the sub authority of the parent team 101δ (the judged result of Step S53δ is "YES"), so that the permission test unit 35δ judges that the claimant has the proper permission to the storing request. Incidentally, if the decision result of this step is "NO", the permission test unit 35δ stops the processing as judging that there is the tampering or the improper act. Next, the permission test unit 35δ confirms whether the signer of the authority list 103uδ matches with the team master registered in the authority data 103dδ or not. In this case, the signer of authority list 103uδ is the team master X to whom authority data 103dδ indicates (the decision result of step S54δ is "YES"), so that the permission test unit 35δ finally judges that the team 103δ was created by the person having the proper permission, and stores the team data list transmitted from team data list administration device 30δ in the storing device 32δ, and updates the content of the team data list about the team 103δ (Step S55δ). In addition, it' the decision result of step S54δ is "NO", the permission test unit 35δ stops the processing as judging that there is the tampering or the improper act, and the storing processing in Step S55δ mentioned above is not done

As mentioned above, it can be verified that the member X is properly nominated as the team master of the team 103δ in the administration system by the team master A in the root team, based on the team data list stored in the server SVδ side. (Step S21δ of Figure 41)

### (Modification of the team master in the sub team)

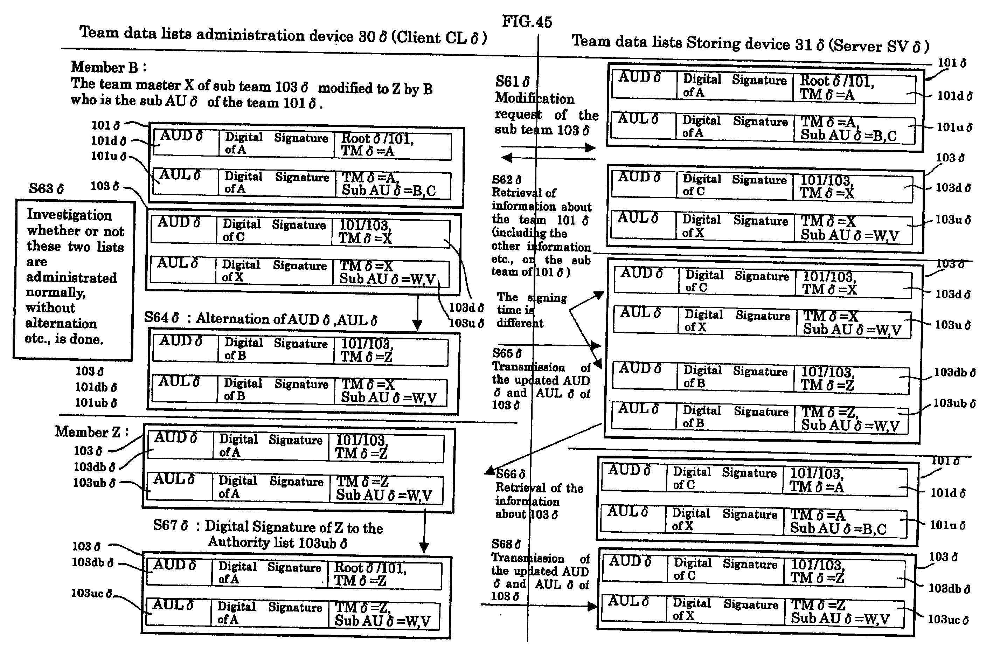

Next, the processing step for the modification of the team master of the sub team is explained by using the Figure 45. In this case, it is explained as an example that the member B, who is registered in the team 101δ which is the root team, as the sub authority, modifies the team master of the team 103δ which is the sub team, from the member X to the member Z. This example corresponds, when the deputy personnel general manager modifies the section manager instead of the personnel general manager since the 1st personnel section manager was transferred. First, the team data list administration device 30δ sends the modification request of the team data list about the sub team 103δ, to the team data list storing device 31δ (Step S61δ). Thereby, the team data list storing device 31δ transmits the team data list about the team 101δ and its subordinate sub team, to the team data list administration device 30δ side like Step S12δ in Figure 41. (Step S62δ).

In the team data list administration unit 30δ, the list permission test unit 37δ verifies the authentication of the team data list transmitted according to the procedure explained in Figure 43 (Step S63δ), and delivers the team data list transmitted to the AUD·AUL modification unit 38δ when said authentication is verified. The AUD·AUL modification unit 38δ modifies the team master from member X to member Z about the authority data 103dδ among the delivered team data lists, according to the directed content from the member B, and sends this modifies authority data and the delivered authority list to the signing unit 39δ. The signing unit 39δ obtains the private key about member B from each above mentioned private key file, etc., to the sent team data list, and signs the digital signature. Thereby, after creating the authority data 103dbδ and authority list 103ubδ (Step S64δ), these team data lists are transmitted to the team data list storing unit 31δ, and the storing request is done. (Step S65δ).

In the team data list storing device 31δ, the permission test unit 35δ performs the permission test according to the steps shown in Figure 44, on the basis of the transmitted team data list, and when the authentication is confirmed, the transmitted team data list is stored in the storing device 32δ. In this case, the different point from the time of the sub team creation (Step S21δ of Figure 41) is that the member Z who is the team master nominated in the authority data 103dbδ is different from the member B who is the signer of authority list 103ubδ, at the time of the team master modification. (the case where the decision result of step S54δ is "NO") Then, in this case, if the signer of authority list 103ubδ matches with either team master A, sub authority B, or sub authority C, who were registered administrators in the parent team, the permission test unit 35δ judges that the signer of authority list 103ubδ is signed by the person having the proper permission. And as mentioned above, 2 sets of the authority list and the authority data in which these creation times are different, i.e., the each team data list before and after of the modification of the team master, are stored in the server SVδ side, as the team data list about the team 103δ. After then, the team data list storing device 31δ transmits the authority data 103dbδ and the authority list 103ubδ to the team data list administration device 30δ, in order to give the signature of the member Z, who is the new team master of the team 103δ, to the authority list 103ubδ. (Step S66δ)

In the team data list administration unit 30δ, after the list authentication unit 37δ verifies the authentication of the team data list transmitted according to the procedure of Figure 43, said team data list is delivered to the signing unit 39δ through AUD·AUL modification unit 38δ. The signing unit 39δ obtains the private key about member Z from the private key file, etc., mentioned above, and does the digital signature of the member Z to the authority list 103ubδ and creates the authority list 103ucδ, on the basis of said private key (Step S67δ). Next, the signing unit 39δ transmits the created authority list 103ucδ to the team data list storing device 31δ with the authority data 103dbδ (Step S68δ). In the team data list storing device 31δ, the permission test unit 35δ does the permission test following the procedure of Figure 44, on the basis of the team data list which has been transmitted, and stores the team data list transmitted in the storing device 32δ, when the authentication is confirmed, and does the updating processing of the team data list about the team 103δ. By the above processing, the team master has been modified with completing the normal steps.

### (Modification of the sub authority)

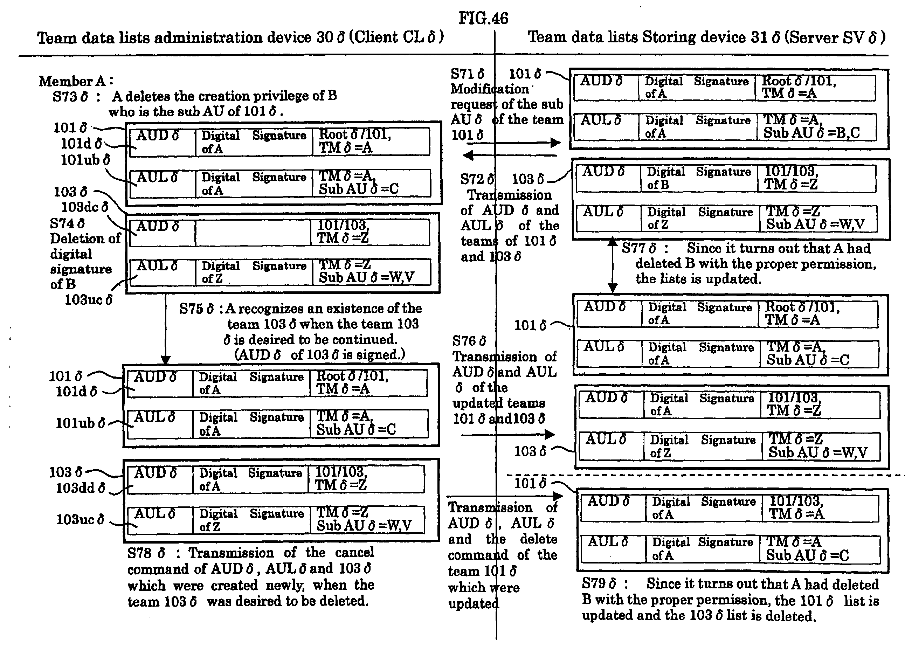

Next, the procedure for modification of the sub authority is explained with referring to Figure 46. In this case, it is explained as an example that the team master Aδ of the team 101δ, which is the root team, deprives the creation privilege of member Bδ registered as the sub authority in this team 101δ. This case corresponds to the case in which the deputy general manager is transferred etc. so that the personnel general manager deletes this deputy general manager from the personal department. In addition, in this figure, the team 103δ, in which the sub authority Bδ has become the originator by modifying the team master in Figure 45, is shown as a premise. Moreover, in this figure, two cases are illustrated collectively, i.e., the case in which the team 103δ is deleted in connection with that the creation privilege of the sub authority B is deleted, and the case which makes the team 103δ to continue. Therefore, when the member A directs the request to the team data list administration unit 30δ, the member A should direct collectively whether the team 103δ is retained or not.

First, the team data list administration device 30δ sends out the modification request (deletion request) of the sub authority Bδ registered in the team 101δ, to the team data list storing device 31δ (Step S71δ). Thereby, the team data list storing device 31δ transmits the team data list about the team 101δ and the team 103δ to the team data list administration device 30δ side, after retrieving the team 103δ, in which sub team B serves as the originator in these sub team, with referring the authority data of the sub team which is the subordinate of the team 101δ (Step S72δ). In the team data list administration device 30δ, the list authentication unit 37δ verifies the authentication of the transmitted team data list, according to the procedure explained with Figure 43, and delivers said transmitted team data list to the AUD·AUL modification unit 38δ, when the authentication can be verified.

The AUD·AUL modification unit 38δ creates the authority list 101ubδ in which the member B was deleted out from the sub authorities described in the authority list 101uδ, among the delivered team data lists, based on the description of the directed content from member A (Step S73δ). In addition, the AUD·AUL modification unit 38δ deletes the signature of the member B given to the authority data 103dbδ, and creates the authority data 103dcδ (Step S74δ). Then, the AUD·AUL modification unit 38δ sends out the authority data 103dcδ and the authority list 103ucδ to the signing unit 39δ.

The signing unit 39δ does one of two kinds of following processing according to the description of the directed content from member A. First, if the request which makes the team 103δ to continue is coming, the signing unit 39δ considers that the member A acknowledged the entity of the team 103δ, and obtains the private key about the member A from the private key file mentioned above, etc., and, on the basis of this, creates the authority data 103ddδ with appending the signature of the member A to the authority data 103dcδ (Step S75δ). Next, the signing unit 39δ transmits the authority data 101dδ, 103ddδ and authority list 101ubδ, 103ucδ to the team data list storing device 31δ, and requires the storing request of these team data lists. (Step S76δ) In the team data list storing device 31δ, the permission test unit 35δ does the permission test according to the step shown in Figure 44, on the basis of the transmitted team data list, and updates the content of the storing device 32δ by the transmitted team data list, when the authentication is confirmed. (Step S77δ)

Second, if the deletion request of the team 103δ is coming, the signing unit 39δ sends out the cancel command of the team 103δ to the team data list storing device 31δ, while said signing unit 39δ transmits the team data list about the team 101δ, i.e., the authority data 101dδ and the authority list 101ubδ, to the team data list storing device 31δ (Step S78δ). In the team data list storing device 31δ, the permission test unit 35δ can acknowledge the deletion of the sub authority B by verifying the authority list 101uδ stored in the storing device 32δ and the transmitted authority list 101ubδ. In addition, the permission test unit 35δ can understand, that the team master is member A and the digital signatures of both these team data lists are done by this member A, from the description of the authority data 101dδ and the authority list 101ubδ. From these results, the permission test unit 35δ judges that the team master A deleted the sub authority Bδ with the proper permission, and updates the team data list of the team 101δ in the storing device 32δ with the contents of the authority data 101dδ and the authority list 101ubδ. Next, the permission test unit 35δ deletes the authority data and the authority list about the team 103δ in the storing device 32δ. (Step S79δ) By this way mentioned above, the creation privilege of the sub authority B had been deleted from the team data list in the server SVδ.

### (Deletion of the sub team)

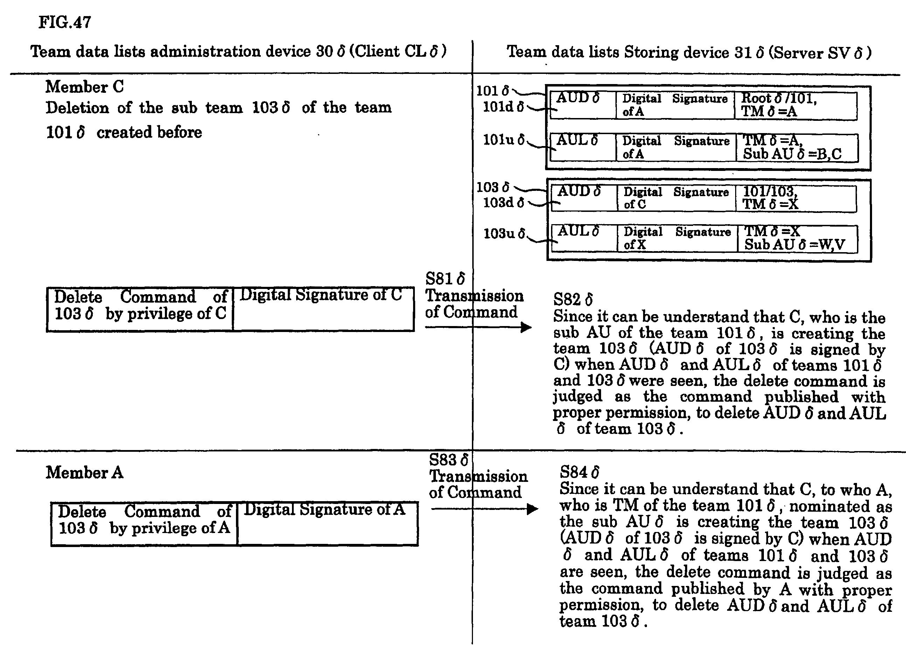

Next, the procedure for deleting the sub team is explained with reference to Figure 47. In this case, it is explained as an example that the member C registered in the team 101δ, which is the root team, as the sub authority, deletes the team 103δ created by the procedure of Figure 41 mentioned above. This corresponds that since the 1st personal section under the personal department were abolished, the deputy general manager of the personal division performs the work about the section abolition. Here, it is necessary that the member C proves that he is the genuine member C rightly to the team data list storing device 31δ, in order to delete the team 103δ by the privilege of the sub authority of the team 101 which is equivalent to the parent team of the team 103δ which is the sub team. Therefore, the team data list administration unit 30δ is made to notify the digital signature of the member C to the team data list storing unit 31δ so that it may mention later.

First, when the member C directs the deletion of the team 103δ to the team data list administration unit 30δ, the team data list administration unit 30δ transmits the set consisting of the delete command of the team 103δ by the privilege of the member C and the digital signature of the member C , to the team data list storing device 31δ, after creating the digital signature of member C by the signing unit 39δ.(Step S81δ). In addition, as a method except appending the digital signature, although it can be considered that recruiting the method, which is called the "shake-hand" or the "challenge response" (they will be mentioned in detail later) and is proved at the time of the transfer of the cancel command, but here, the method using the digital signature will be explained and then, finally, "shake-hand" will is explained.

When the team data list storing unit 31δ receives the cancel command of the team 103δ from the team data list administration unit 30δ, the permission test unit 35δ understands that the sub authority C, which is registered in the team 101δ, is the originator of the team 103δ, by referring to the team data list about the team 101δ and the team 103δ. Moreover, after verifying the signature of the member C described in the authority data 103dδ and the signature of the member C appended to the cancel command, the permission test unit 35δ can confirm that the person, who directs the deletion, is surely the member C, when said signatures are matched. In this way, the permission test unit 35δ judges that the cancel command was published by the proper permission, and deletes the authority data 103dδ and the authority list 103uδ about the team 103δ in the storing device 32δ. (Step S82δ) Then, the delete process of the team 103δ was completed by sub authority C.

By the way, since the member A is the team master of the team 101δ, said A has the proper permission which can delete the sub team 103δ instead of the sub authority C. In this case, when the member A directs the cancel command of the team 103δ to the team data list administration device 30δ, the team data list administration device 30δ creates the digital signature of the member A by the signing unit 39δ, and transmits the cancel command of the team 103δ made by the privilege of the team master A and the digital signature of the member A, to the team data list storing unit 31δ. (Step S83δ) In the team data list storing unit 31δ, by referring to the team data list about the team 101δ and the team 103δ, the permission test unit 35δ understands that the sub authority C registered in the team 101δ is the originator of the team 103δ and said sub authority C was nominated as the sub authority by the team master A of the parent team 101δ. Moreover, the permission test unit 35δ confirms that the person who directed the deletion is surely the member A himself by verifying the signature of the member A written in the authority data 101dδ and the appended signature of the member A in the cancel command. In this way, the permission test unit 35δ judges that the cancel command was published by the proper permission, and deletes the authority data 103dδ and the authority list 103uδ about the team 103δ in the storing device 32δ (above, Step S84δ).

By this way mentioned above, that deletion process of the team 103δ by team master A was finalized. In addition, to except for the member mentioned above, for example, it is also possible that the member B, who is registered in the team 101δ as the sub authority, deletes the sub team 103δ.

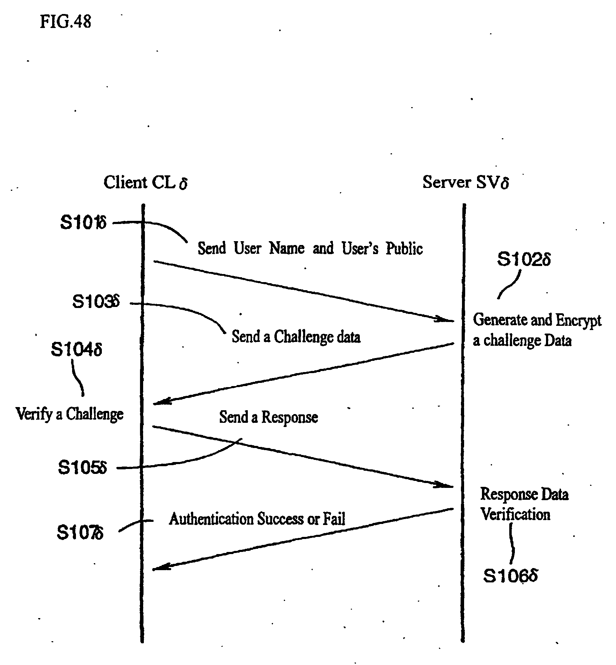

Finally, the detail of the procedure of the "hand-shake" and the "challenge-response" mentioned above are demonstrated by referring to Figure 48. First, when the client CLδ accesses the server SVδ, said client CLδ sends the user's (if it says in Figure 47, they are the member C or the member A) name and user's public key to the server SVδ (Step S101δ). The server SV generates a random number to memorize inside and encrypts said random number by the user's public key (Step S102δ) and sends the encrypted data to the client CLδ as a "challenge data". (Step 103δ)
The client CLδ decrypts the "challenge data", which was sent from the server SVδ, with the private key corresponding to the user public key (Step S104δ), and returns the obtained decryption data as the "challenge response" to the server SVδ (Step S105δ). The server SVδ confirms the communication partner by comparing the "challenge response" sent from the client CLδ and the random number generated in the Step S102δ. That is to say, if both are matched, it can confirm that the person, who knows the private key corresponding to the user's public key sent by step S101δ, is the communication partner (authentication success). On the other hand, if both are not matched, it can understand that the communication partner is the person who may not have the proper permission (authentication fail). (above, Step S106δ) Then, the server SVδ informs the verification result (authentication success or authentication fail) obtained at Step S106δ to the client CLδ (Step S107δ). By making it above, it can confirm by the server SVδ side that the member C and the member A are the persons themselves as well as the case that the digital signature is appended.

In addition, it also can send an "user public key number" instead of sending the user public key to the server SVδ from the client CLδ. The user public key number said here is the information for identifying and authenticating the user himself and is the serial number which beforehand given to each user public key. If it says in detail furthermore, the user public key number is the information corresponding to each user public key for identifying the user public key in the uniformity, for example, said number is the serial number of the certificate included in the certificate published from the certificate authority mentioned above. Moreover, various information, such as the ID and the name, etc., which actually identify the key originator himself, can be utilized besides the user public key number said now, as the information for identifying and authenticating the user himself.

### Example 4-2

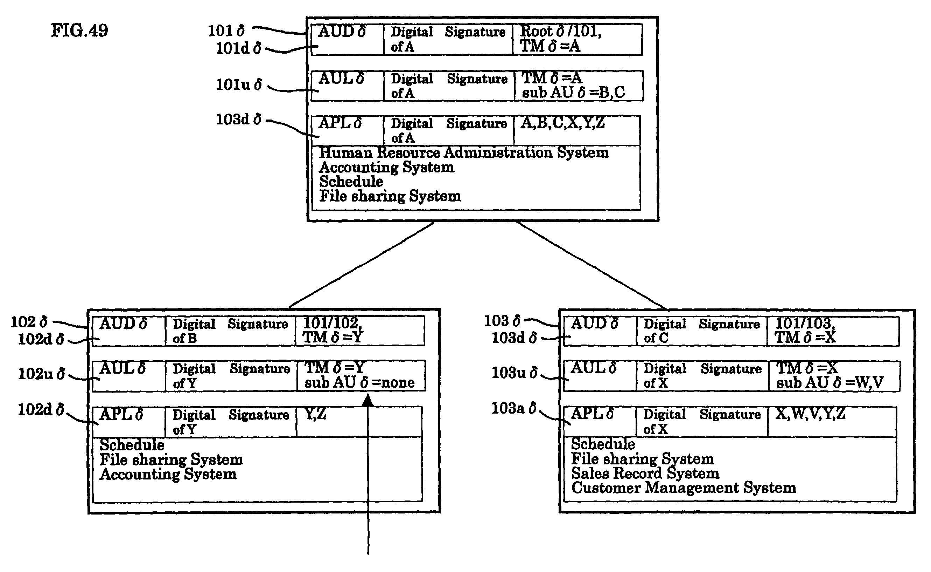

Figure 49 shows about hierarchization of the team by this example and realizes the forms where the application, which can be utilized by the member in the team, is different for every teams. In this figure, only the teams, which correspond to the team 101δ-103δ in the teams in Figure 40, are shown. Although about the authority list and the authority data are the same as shown in Figure 40, besides them, the application lists 101aδ, 102aδ, 103aδ, which include the content of the member list instead of the member list, are formed in each team. That is to say, the list of the member belonging to its team besides the system, which can be utilized by the member belonging to each team, is shown in these application lists. About the application, for example, the personal administration system, the accounting system, the schedule and the file sharing system are registered in the application list 101aδ of a team 101δ. Moreover, about the list of the member, it is the same as the drawn member list in Figure 40.

In this Example 4-2, although the formation of the team is received interference of the parent team, like Example 4-1, the administration in the team can be done without receiving interference from the parent team, since the team master of each team signs in the application list. That is to say, the team master can administrate independently, about what member can share the utilizable application in the team, from the administrator of the parent team. For example, in the team 102δ which is the sub team of the team 101δ, the signature of the application list 102aδ is signed by the member Yδ who is the team master of the team 102δ, and there is no interference by the team master Aδ who is the administrator of the team 101δ and the sub authority Bδ, and Cδ.

### Example 4-3

In this Example, the person, who belongs to each team as an administration privilege apportionment in the team for sharing information, is categorized into three kinds, such as, the member, the sub master, and the team master, in addition to the above-mentioned privilege apportionment called the member, the sub authority and the team master who are shown from the viewpoint of administrating the sub team. Among these, the sub master is the administrator who is nominated by the team master in the team, and is not allowed to modify the team master, but is the person who can do the addition, the deletion, and the modification about general members. On the one hand, the team master can do the modification of the sub master or the members, and also is the person who can modify even the team master of the own team. On the other hand, the general members, other than the sub master and the team master, are the persons who share the information and the functions, which are offered, and are not granted the privilege, such as the modification, etc., to the content of the team data list. In addition, although the sub master and the team master are granted the special privilege, there is no change in being the member in the team, so that the sub master or the team master may be called as the member sometimes.

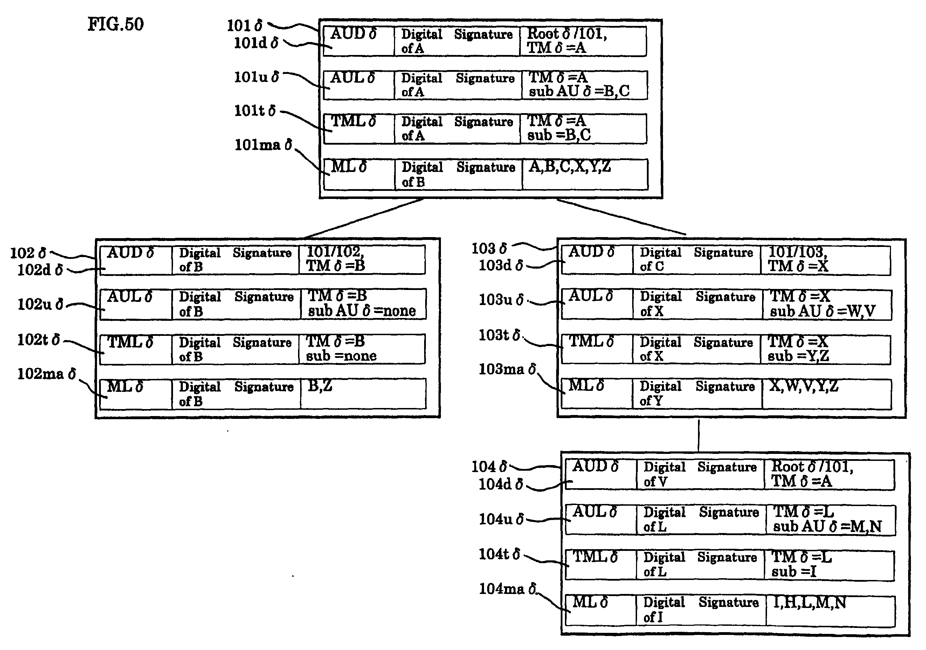

Figure 50 shows about the team hierarchization in this Example. In this figure, the team master list is further added to each team of Example 4-1 shown in Figure 40. By this way, the multiple administrators can do the administration of the information sharing members in each team while the information sharing is administrated for every team. In the team master list 101tδ-104tδ in Figure 50, the list of the team masters and the sub masters who are registered in each team and the signatures of the team masters are written. However, the identification information of the team master or the sub master, the public key, the public-key ID, the team ID, and the time stamp, in which the creation time of the team master list is shown, are included in the team master list besides them mentioned above. In addition, as an information about the team, the number of members of the team, the time when the team was created, and the information, such as the various functions of which each member in the team can utilize (for example, the application list mentioned above) are also included in the team master list 34δ, and the administration of the information resource about each team can be simultaneously done by using these information.

About the signature of the team master, the team master of each team signs the signature of the team master list at the time of the team creation, and thereafter, said signature is used as the signature of the team master. On the other hand, about the member list, since the administration privilege is given to the sub master, other than the team master in each team, the signature of the sub master is sometimes signed in addition to the team master. For example, about the member list 101maδ, the signature of the member Bδ, who is registered as the sub master of the team 101δ, is signed. On the other hand, , when the sub master is not registered in the team master list 102tδ, such as the team 102δ, the member Bδ, who is the team master, signs in the member list 102maδ.

In the Figure 50, since the administration privilege of the sub team and the administration privilege of the member are divided in the authority list/authority data and the team master list, it is possible to assign the person who is different from the sub authority and the sub master in the each team. For example, in the team 103δ, the member W and the member V are the sub authorities and the member Y and the member Z are the sub masters, so that it can be planned that the different persons take charge of the administration of the sub team and member administration to distribute the load. Reasonably, in practice, the sub authority and the sub master may be made the same member. In this case, it is possible to make one list by unifying the authority list and the member list.

### Example 4-4

In the each Example mentioned above, whenever the team data list is used, it is necessary for the user that he confirms whether the team master is the team master of the own team rightly or not, in the client CLδ side . For example, the following messages are displayed on the display of the computer which comprises the team data list administration device 30δ.
"This list is administrated normally by the following members who became the administrators.
Identifier: Member A.
Organization: MITSUBISHI MATERIALS CORP.
When you continue the working, please click O.K. button by a mouse."

In this way, since the user will need to confirm the concerned message visually, it cannot be said that there are not any troublesome impressions for the user. In order to improve such a point, it is solved to add the following units as the new unit to cooperate with the list permission test unit 37δ, or to incorporate as one unit of the list permission test unit 37δ.

That is to say, the public key of the team master in the root team 101δ is beforehand registered for every team, for example, in the public-key database 41δ (refer to Figure 37) in the client CLδ side, and then, the public key administration unit 40δ obtains the public key about the team master of the team 101δ from the public-key database 41δ, and notifies the said key to the list permission test unit 37δ. On the other way, at first, the serial number for identifying the public key, etc., as the information about the public key is registered in the public key database 41δ, and then, after the public key administration unit 40δ obtains said serial number from the public-key database 41δ, it can be constituted that the said public key administration unit 40δ obtains separately the public key registered in the exterior of the team data list administration unit 30δ (for example, on internet), on the basis of said serial number, and delivers said public key to the list permission test unit 37δ.

On the other hand, the list permission test unit 37δ confirms the digital signature of the team master included in the authority data 101dδ, which is transmitted from the team data list storing device 31δ, on the basis of the public key of the team master of team 101δ notified from the public key administration unit 40δ, instead of the announcing the message on the computer display mentioned above, and then, said list permission test unit 37δ judges whether the concerning digital signature is the signature of the team master registered or not. By carrying out like this, the user can verify the proper permission of the team master of the root team 101δ without confirming visually on the basis of the viewing on the display.
In addition, of course, various information besides the public key can be used as the information for confirming the team master.

As mentioned above, the team data list administration program makes the computer do the following processing in the record media which recorded the team data list administration program which administrates the team data list for hierarchizing the team.
(1) The processing which gives the operation request of the above-mentioned team data list to the designated claimant.
(2) The processing which obtains the authority data including the identifier indicating the parent team of the own team and the digital signature of the administrator of said parent team, and the team data list which has the authority list including the administrator information about the administration privilege person of the sub team and the digital signature of the team master, who is the administrator of own team, or the administrator of the said parent team.
(3) The permission test processing which confirms the acknowledgement of the above mentioned the team master of the root team by the user, after confirming that the digital signature of the above mentioned team data list is not tampered and is the signature of the person having the proper permission by using the above mentioned administrator information, while following the each team to the said root team by using the above mentioned identifier.
(4) The modification processing which adds the modification according to the above mentioned operation request to the above mentioned team data list in which the authentication was confirmed by this permission test processing.
(5) The processing which creates digital signature of the directive person who did the above mentioned operation request, and sends the team data list modified by the above mentioned modification processing, to the above mentioned request source, by appending said digital signature.

Moreover, in the above mentioned team data list administration program, the above mentioned permission test processing may also use the information about the one or more sub authority who has the administration privilege of said sub team and is nominated from the own team member by the above mentioned team master, and the information about the above mentioned team master who has the administration privilege to the said sub authority in addition to said sub authority's privilege, as the above mentioned administrator information.

Moreover, the above-mentioned team data list administration program may also make the computer do the processing which obtains the identification information in order to identify the principal of the team master of the root team mentioned above from the designated place to register beforehand, and which confirms that the digital signature of these authority data is the digital signature of the above-mentioned team master by using the above-mentioned identification information beforehand registered, whenever the authority data of the above-mentioned root team are sent from the above-mentioned claimant.

On the other hand, in the record media which recorded the team data list storing program which stores the team data list for hierarchizing the team, the team data list storing program makes the computer to do the following processing.
(1) The processing which memorizes beforehand the authority data, in which the identifier indicating the parent team of the own team and the digital signature of the above mentioned administrator of the parent team are included, for every team.
(2) The processing which memorizes beforehand the authority list, in which the administrator information about the administration privilege person of the sub team which is under the own team administration, and the digital signature of the team master, who is the administrator of the own team or the administrator of the above mentioned parent team, are included, for every team.
(3) The permission test processing which confirms the following processing comprising;
   the processing which confirms that the designated claimant has the proper permission by using above mentioned administration information, when the operation request to the team data list, in which the above mentioned authority data and the above mentioned authority list are at least included, is required from said designated claimant,
   the processing which returns or deletes the required team data list to the above mentioned claimant when above mentioned operation request is the reference request or the deletion request,
   the processing which updates the above mentioned authority data and authority list which are memorized in the above mentioned sent team data list, after confirming that the digital signature of said team data list from above mentioned claimant is the signature which was done by the claimant having proper permission, by using the above mentioned administrator information, when the operation request is the update request.

Moreover, in the above-mentioned the team data list storing program, the above-mentioned permission test processing may also use the information about one or more sub authority who is nominated by the above-mentioned team master from the member in the own team, and the information about the above mentioned team master who has the administration privilege to said sub authority in addition to said sub authority's privilege, as the above-mentioned administrator information.

As explained above, there are the following effects in invention of Example 4-1-4-4.

In this invention, the sub team can be created under each team by using the team data list, in which the authority list and the authority data were included, and the hierarchized teams can created. Moreover, the user can confirm the proper permission of the team data list about each team from the objective team for operation to the root team, by confirming only the signature of the team master of the root team. Furthermore, everyone can become the team master which administrates the sub team by the directive of the administrator of the parent team.

Moreover, in this invention, the team data list is divided into the authority data under the administration of the parent team and the authority list about the administration of own team. The team master of each team can administrate in the own team about the administration of the information sharing member, without receiving interference of the parent team. On the other hand, the administrator of the parent team becomes unnecessary to participate the administration of the sub team.

Moreover, in this invention, since the digital signature by the person who has proper permission to the team data list is included, it is enabled to detect unjust acts, such as tampering. Moreover, in this invention, when the operation request of the team data list is done, it can be prevented to do the unfair practice by the person who doesn't have the privilege, such as the administrator of the server, the general member in the team and the cracker, etc., since the permission test, i.e., the judgement whether these claimants have the proper permission or not, is done.

Moreover, in this invention, the team master and one or more sub authority, who was specified especially, have been granted the administration privilege of the sub team, and the team master can assign the sub authority by himself, and also since the multiple administrators can administrate the sub team, the administration burden is distributed.

Moreover, in this invention, the identification information for identifying and authenticating the team master himself of the root team, such as the public key, is registered beforehand, and the team master of the root team is confirmed on the basis of this identification information, so that it is not necessary to do the troublesome working that is the user confirming visually by himself, whenever said user operates the team data list, and then, it is enabled to recognize the team master of the root team automatically.

### Example 5

The invention shown in Example 5-1a to 5-4a, Example 5-1b to 5-3b, Example 5-1c to 5-5c, and Example 5-1d to 5-6d relates a broadcast communication system which prevents the injustice by the administrator in the information relay device used in a broad cast communication, in a field of the broadcast communication using computer net works.

The following technologies are known about the invention shown in Example 5-1a to 5-4a, Example 5-1b to 5-3b, Example 5-1c to 5-5c, and Example 5-1d to 5-6d.
Recently, by spreading the open networks, such as internet, etc., it becomes possible to do the broadcast communication in not only LAN which belongs in the company organization but also in the various members connecting with internet. The broadcast communication is the communication which aims to transmit the same information to many terminals on the communication network at once and, in the case of e-mail system, for example, the broadcast communication is realized by using mailing lists. Moreover, a real time chat, etc. can be listed as another example of broadcast communication.

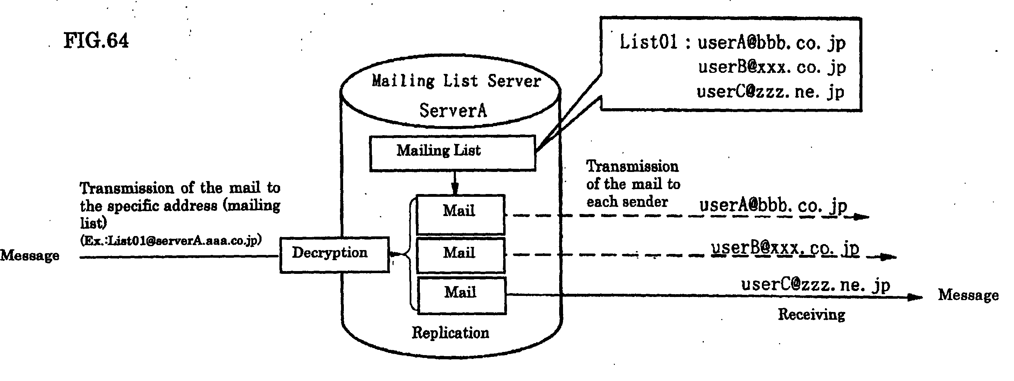

In the general example of the broadcast communication realized now, a sender terminal transmits a broadcast communication message to a message broadcast device which administrates the group (the destination list) of a recipient (a distributed person). Then, the broadcast communication is realized by doing that the message broadcast device replicates the distributed message only the number of recipients and sends these messages to the each recipient of the broadcast communication. For example, in the e-mail system in Figure 64, the broadcast communication is realized by doing that the message is sent to the mailing administration host (Server A), which administrates the mailing list (List01), which is the group of the recipients, and this mailing list administration host sends the message to the each recipients (User A, User B, User C), which is listed in the mailing list, by copying the message.

However, in the broadcast communication system, which is constructed on the opened network architecture mentioned above, there are always problems that are the peeping the delivered message for each recipient and the leaking the confidential information to outsiders, etc. By considering these problems, the need of the confidential information transmission on the network, such as, EDI (Electronic Data Interchange) and EC (Electronic Commerce), increases and, also in the broadcast communication system, the research and development for up-grading the security of broadcast communication system has been done by using the encryption technology, until today.

As the broadcast communication system to up-grade the security by using an encryption technology, there is the broadcast system disclosed on patent application No. Hei 6-152592. In this invention, the encryption communication system, which can share the data key with certain one or more communication partners, is disclosed, by creating the encrypted key based on the address information which specifies the data key used in encryption, and the commonly used master key in the system, and then, transmitting and receiving these information and said encrypted key between the communication partner.

However, in the case of utilization of this system, it is necessary to specify the group member and to deliver the memory media, such as, IC card, etc., to said member for the encrypted communication in the group. However, in the conventional broadcast communication (for example, the mailing list), since the members in the group are dynamically changed by the secession or the admission, etc., and these addresses for received information are varied at any time, it is desirable to correspond such a withdrawing or admission, etc., also in the encryption broadcast communication.

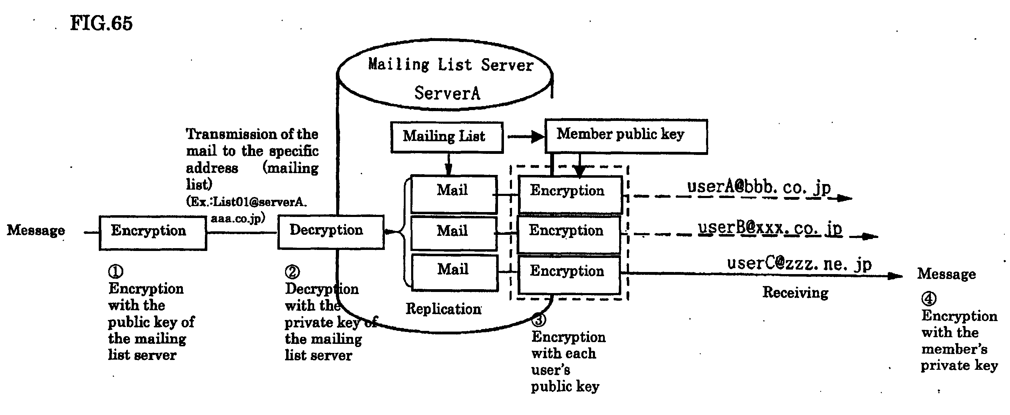

Next, in the broadcast communication system disclosed on patent application No. Hei 7-245605 in Figure 65, the broadcast communication system, which can flexibly correspond to the admission or secession of the members, is disclosed. The encrypted message broadcast device (Server A) in this broadcast communication system has the encrypted message broadcast device which comprises the encryption calculation unit which decrypts the encrypted message which is received from the members sender (②) or encrypts the information for sending to members recipient (③) , the secret private key to decrypt the encrypted message, and key storing unit which stores the respective public keys of each member for encryption corresponding to each member (User A, User B, User C).

However, the administrator of this message broadcast device or the person who is permitted the privilege from said administrator, can peep the content of the encrypted communication, even if they are not in the members of the broadcast communication. Therefore, when there is a malicious administrator of the message broadcast device, there is a danger to be leaked the transmitted confidential message in the encryption communication.
For example, the information about merger and acquisition between companies is deemed to be the confidential message broadcasted between companies. However, this message is the information, which can not be leaked to the administrator of the message broadcast device, who is influenced by said information.
Moreover, this message broadcast device surely does the decryption and encryption of the encrypted message. However, such encryption/decryption is complicated processing and is necessary to have big capacity. Therefore, when many encrypted messages arrive simultaneously to the message broadcast device, there are dangers that the broadcast communication is delayed or its operation is stopped by exceeding of the capacity of said message broadcast device.

In order to do the broadcast communication of the confidential information, which makes big damage to the companies, organizations or persons by leaking, only between the restricted multiple members, the broadcast communication system, in which the following subjects are cleared, should be realized.
(1) The system, to which also administrator can not peep the content of the encrypted broadcast communication, should be realized, and said broadcast communication content can be seen by only the members who share information truly.
(2) The system, which can correspond rapidly for the secession and admission of the recipient who is doing the broadcast communication and can prevent to transmit in error the message to the member to whom said message should not be sent if there is a dynamical change of the broadcast communication members, should be realized.
(3) The sever administrator doesn't administrate the destination members of the broadcast communication, but administrates the destination members in the members who belongs to the broadcast communication. Furthermore, the administration load, which is concentrated to the administrator of the members, is relieved as much as possible.
(4) In order to transmit the secret information, the system, on which each of many recipients can receive the information surely, should be established.

The invention shown in Example 5-1a to 5-4a, Example 5-1b to 5-3b, Example 5-1c to 5-5c, and Example 5-1d to 5-6d is made by considering these points mentioned above, and offers the broadcast communication system to clear these subjects mentioned above, which comprises the member list administration unit, the encrypted message generating device, the message broadcast device, the encrypted message decrypting device, and memory media which is memorized the program which realizes those devices on computers.

First, in the explanation of the each operation form about the member list administration device, the encrypted message generating device, the message broadcast device, the encrypted message decrypting device which comprises the broadcast communication system of the invention of Example 5-1a to 5-4a, Example 5-1b to 5-3b, Example 5-1c to 5-5c, and Example 5-1dto 5-6d, the basic technical policy and the technical terms of this invention are explained.

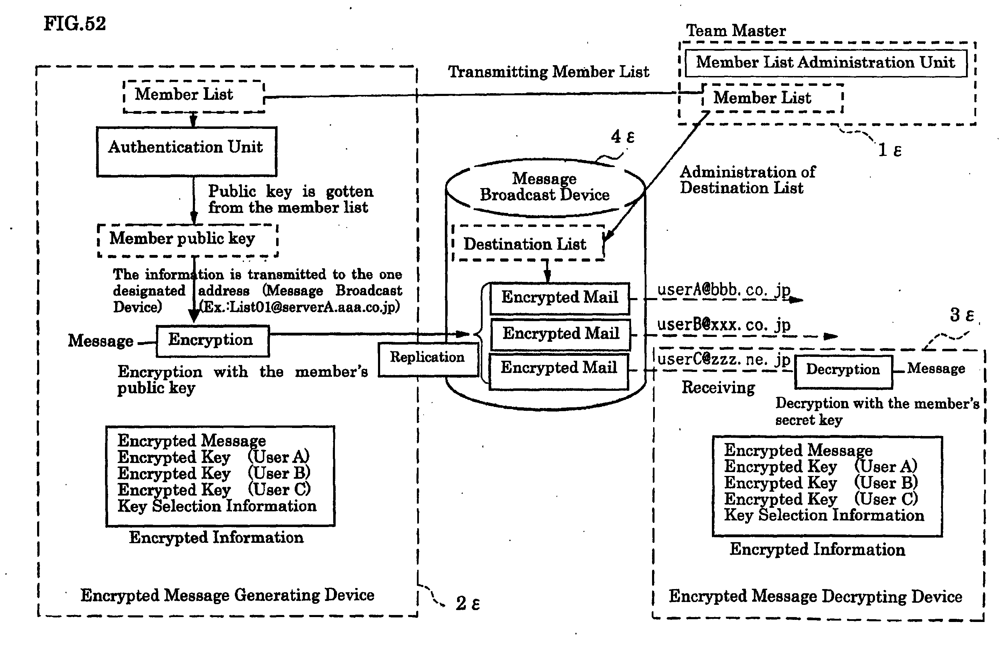

The outline of the broadcast communication system of this invention is shown in Fig. 52. In addition, the operation forms of each device, which comprises the broadcast communication system of this invention, are explained exactly later.

As mentioned above, in the conventional broadcast communication, the configuration of the distributed members (recipients) stored in the message broadcast device (server) was mainly administrated by the server administrator or the person to whom the privilege was transferred by the server administrator. However, when the broadcast communication of the confidential information is done, the server administrator may do the broadcast communication in which the server administrator should not administrate.

Then, in this invention, it realizes that the administration of the distributed member list (hereinafter referred to as the member list) is done by not the server administrator but the administrator who administrates the member in the broadcast communication member (hereinafter referred to as the team master), and the system in which this member list is not tampered by the others is offered. And the member list is shared safely and certainly by the member included in the member list, and it is done that the content of the broadcast communication message, which is sent by said member, is encrypted, and the member of the broadcast communication enables to receive the confidential message safely and certainly, without leaking said message.

First, it is necessary to make the system which identifies and authenticates the member himself, who becomes the communication partner, in order to do the broadcast communication about the confidential message safely and certainly. In this invention, as the method for identifying the principal himself, the method, in which the private key in the public key cryptography (for example, RSA (Rivest-Shamir-Adleman) cryptography or the elliptic curve cryptography) is used by only said principle himself, is used . Therefore, the public key corresponding to the private key is at least included in the member list of this invention. Moreover, in order to administrate the member list safely and to realize the method, which is not tampered by the others, the digital signature by the team master is attached.

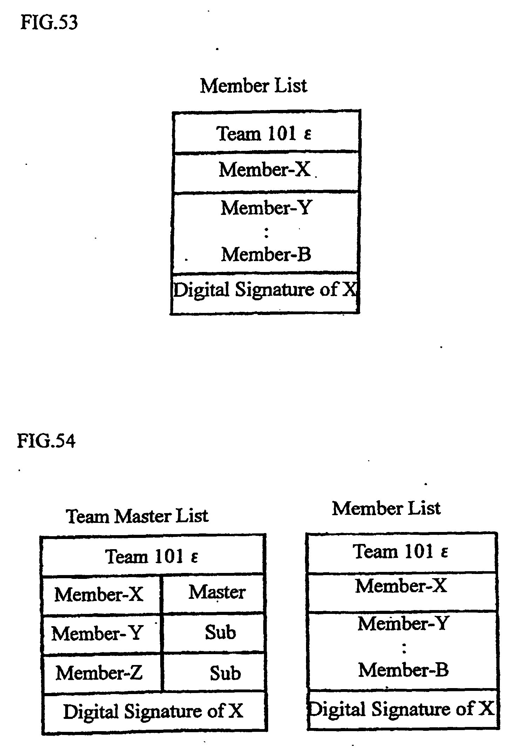

Although the member list is generally administrated by the team master, for example, when there are many members of the broadcast communication, so that they cannot be administrated by the one administrator, there is the case that said member list is divided into the multiple lists, and is administrated by the multiple administrators included in the team master list (the team master and the sub master who is given the privilege by the team master). As shown in Fig. 53, the general member list comprises the team name, the name or the identifier of the member X who is the team master, the member Y who is the member of the team, ..., the name or the identifier of the member B, and the digital signature of the team master X to this member list (electronic signature). Moreover, as mentioned above, when the member list consists of the multiple list, the example in which the member list is divided to 2 lists, i.e., the team master list in which the administrator of the team 101ε is registered and the member list in which the broadcast communication member is registered, is shown in Figure 54.
The digital signature of the member list of this example, can confirm the authentication of the member list by not only the digital signature of the team master X but also the digital signatures of the sub master Y and Z.

In this case, at first, from the digital signature of the member list, it is verified whether the member list is tampered or not, and the signer (in this example, member X) is specified. Next, from the digital signature of the team master list, it is verified whether the team master list is tampered or not, and moreover, it is confirmed whether the signer of the team master is the team master of this team rightly or not. Finally, it is verified that whether the signer of this member list is registered in the team master list as the administrator of the team or not. In the example of Figure 54, since the member X is registered as the team master, the member X can be judged to be the proper signer. Moreover, even when the signature of the member Y was appended to the member list, the member Y can be judged as the proper signer (in this case, it considers as the sub master, in Figure 54, it has written as "sub.") to whom the administration privilege was transferred from member X, so that the member Y can be authenticated.

Moreover, the member list may also be the list in which the multiple public keys can be registered for one member. For example, when the 2 different key pairs are used, i.e., the pair of the public key and the private key for utilizing in the encryption·decryption processing and the pair of the public key and the private key for utilizing in the digital signing/verification processing, the 2 public keys are registered to each member.

Moreover, although the public key is registered in the member list, the digital certificate published from the certificate authority (for example, this is the digital certificate according to the X.509 format, and hereinafter referred to as the certificate) can be used as this public key. Moreover, the method, which registers the information for identifying uniformly the substance of the public key, may also be used in the member list. In this case, when each member has already had the substance of the public key, if the information to identify the public key, (for example, the message digest, which digested the given serial No., the certificate authority name and the certificate by the hashing function, when the public key included in the certificate published from the trusted certificate authority was used), is included in the member list, each member can select or retrieve the practical substance of the public key to utilize for the encryption, after receiving said member list. For example, when the certificate authority name and the serial No. were included in the member list, at first, the certificate having this certificate authority name and serial No. is retrieved from the multiple certificates stored in the memory medium connected to the terminal, and when said certificate does not exist in said memory medium, the certificate of this serial No. may be retrieved by asking to the certificate authority of this name.

In the following, the each operation form of the member list administration device, the encrypted message generating device, the message broadcast device, and the encrypted message decrypting device which comprise the broadcast system of this invention of Example 5-1a to 5-4a, 5-1b to 5-3b, 5-1c to 5-5c, 5-1d to 5-6d, is explained in order with reference to the drawings.

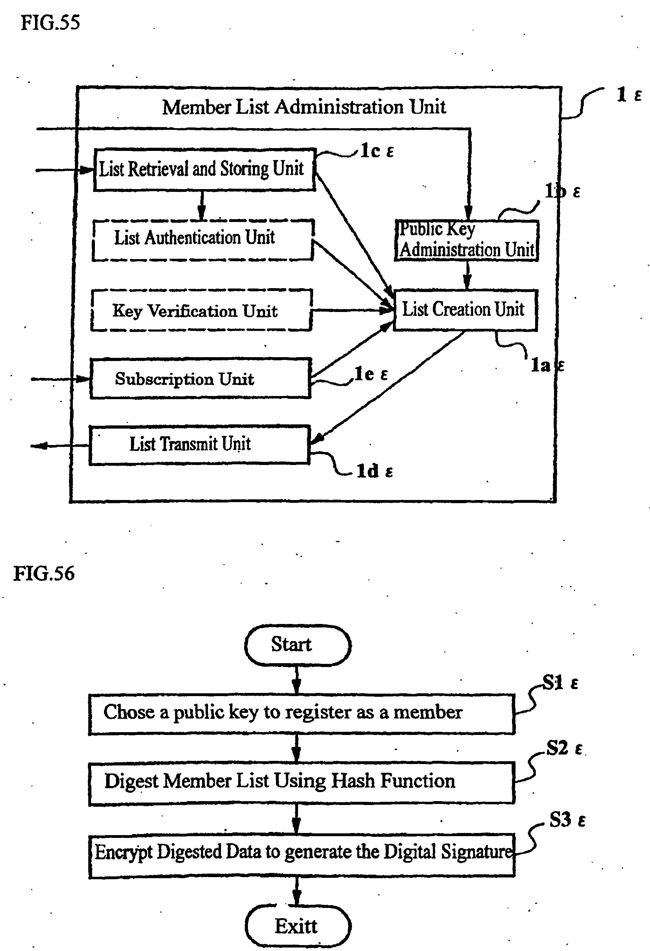

Figure 55 includes and indicates Example 5-1a to 5-4a of the member list administration device of this invention.

### Example 5-1a

First, Example 5-1a of the member list administration device 1ε is explained. This operation form comprises the list creation unit 1aε which creates the member list including the public key of one or more members who do the broadcast communication, and the public key administration unit 1bε which retrieves and stores the public key for including in the member list, in order to administrate the member list.

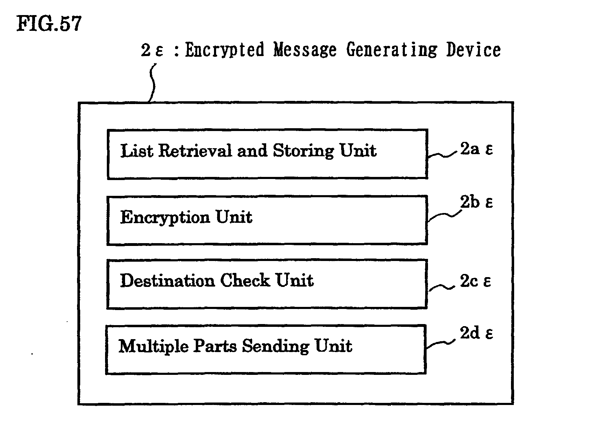

At first, the team master inputs the designated items (the member's information, etc.) for creating the member list by using the member list administration unit 1ε. After inputting of the data, as shown in Figure 56, the list creation unit 1aε chooses the public key of the member who is registered as the member. (Step S1ε). For example, when the member list shown in Fig. 53 is created, the public keys of the member X, Y, ..., B are chosen. And, the message digest of the member list is created by using Hash function (for example, MD5, SHA-1, etc.) (Step S2ε). And the construction, in which the digital signature, which is created by encrypting the created message digest in use of the private key of the team master (for example, using RSA and DSA), is attached to the member list, is made. (Step S3ε ; the digital signature of X is attached in the example of Figure 53) By this construction, there is no fear of the tampering of the member list , even if the terminal (not shown) other than the message broadcast device mentioned later is used as the member list administration device 1ε. Since the tampering can be detected by verifying the authentication of the member list when said member list is tampered actually, it is possible to stop the usage of the tampered member list.

### Example 5-2a

Next, as the Example 5-2a of the member list administration device 1ε, the structure which is equipped with the list retrieved and storing unit 1cε in the member list administration unit 1ε of Example 5-1a.
The list retrieval and storing unit 1cε operates not only to retrieve and store the member list in the memory medium connected with the member list administration device 1ε, but also to access to the terminal and the database to retrieve or store the member list by using the said terminal (for example, the server) and the database (not drawn in the figure)

As the reason to take this structure, while the certain team master has administrated the member list, it is said that is more safe to store the member list not in the terminal of the team master but in the safe terminal on the network (for example, the server) or the database, since there is the case that the hindrance occurs at said terminal of the team master or is the risk that the member list is eliminated accidentally.

Moreover, there is also the form, which administrates the member list by the multiple administrators (the team master and multiple sub masters), in order to decrease the administration load of the broadcast communication which concentrates on one administrator and to prevent the failure etc. beforehand. In this case, in order not to be used the member list of the different version by the administrator, the more perfect broadcast communication can be realized by storing the member list in the terminal or the database, in which said each administrator can access.

The broadcast communication system of this invention has realized the construction, which prevents the leakage of the message to the outside of the broadcast communication member (for example, to prevent the leakage of the message to the server manager) by encrypting with the public key included in the member list. Therefore, it is necessary to verify whether the member list is administrated with the authentication or not, in the member list administration device 1ε.
The verification of the authentication here is confirming the following states.
(1) The state that the member list is kept not to be tampered by the person who has not proper permission.
(2) The state that the person, who created the member list, is the proper team master of the team doing the broadcast communication.

For example, the state of (1) can be verified by the following steps.
At first, the digital signature attached to the member list (the digital signature of the member X in the example of Figure 53) is decrypted to retrieve the message digest of the member list,
the message digest which was retrieved by digesting the member list (the list including the team 101ε, the member X, the member Y, ....the member B as the content in the example of Figure 53) in use of the same Hash function at the creation time of the member list, is retrieved,
and finally these two member lists are compared.
Moreover, the state (2) can be verified, for example, by the way that the name of the signer to the member list (for example, the written name in the certificate which has the certificate format of the X.509), is displayed on the screen to be confirmed by the users of the member list.

The list retrieval and storing unit ice has the unit that creates and stores the corresponding table which corresponds the information identifying the member list to the team master who administrates said member list. And the list retrieval and storing unit 1cε also has the unit that can judge whether the digital signature is the signature of the proper team master himself or not by checking the corresponding table mentioned above, when said list retrieval and storing unit 1cε confirms the authentication of the digital signature attached to the member list. Then, the list retrieval and storing unit 1cε can authenticate the member list by using these units mentioned above.

Moreover, when creating the corresponding table, for example, it can be verified by the way that the member list is displayed on the screen to be confirmed the team master by the member list user, in the case of the member list retrieved for the first time. When the affirmative directive comes out here (when this team master is recognized as the signer of the member list), the authentication comes to be automatically done 2nd henceforth by having further additional unit, which adds the information which identifies the member list (the team name, i.e., the team 101ε, in the example in Figure 53) and the team master who administrates the member list (the team master, i.e., the member X, in the example in Figure 53), to the table.
The above mentioned unit to verify the authentication of the member list is equipped in the encrypted message generation device, the encrypted message decrypting device and the message broadcast device, which are mentioned later, and operates at the time of retrieving or utilizing of the member list.

### Example 5-3a

Next, as the Example 5-3a of the member list administration device 1ε, the structure, which is equipped further with the list transmit unit 1dε in the member list administration device 1ε of Example 5-1a or Example, is explained.
The list transmit unit ldε operates to transmit the member list to the terminal in which the member included in the member list uses.
By taking this structure, the newest member list can be quickly and correctly shared among the members of the member list.

Moreover, the team master further has to modify the destination list which is referred when the message broadcast unit re-distributes the message. The mechanism for modifying this destination list varies with the kind and the structure of the message broadcast device. For example, the structures and protocols of the device differ between the broadcast system of voice chat and the broadcast system of mail. In the member list administration device 1ε of this example, the unit to modify the destination list can be further added into the member list administration device 1ε, so that the operation method does not vary with the using system, and the members included the member list become the same as the members included in the destination list. As the unit to modify the destination list, the method, that the member list is transmitted from the list transmit unit 1dε in this Example to the message broadcast device and is used as the destination list at said message broadcast device, is taken as the most simple Example.

### Example 5-4a

As the Example 5-4a of the member list administration device of this invention, the structure, which is further equipped with the subscription unit 1eε in the member list administration device 1ε of the Example 5-1a or the Example 5-3a, is explained.

In order to receive a subscription on the member list of broadcast communication, the subscription unit 1eε comprising,
the subscription item setting unit in which the team master of the broadcast communication sets the subscription item to the destination list of the special broadcast communication,
the subscription item presentation unit which presents the item in which the subscription claimant should fulfill when the subscription request is received,
and the subscription license judgment unit which judges whether the subscription is permitted or not when said subscription, that the subscription claimant has transmitted, fulfills the subscription item.

Moreover, the subscription unit 1eε of this Example verifies the subscription by asking the data base or the server, etc., which is set on the network, when it is verified whether the subscription is correct or not. For example, when the credit card number is written in the subscription items, the validity of said credit card number can be verified by accessing to the terminal which is operated by the credit card company. And, when the certificate is included in the subscription mentioned above, said certificate can be verified by accessing the certificate database, which is operated by the certificate authority.

The automatic subscription of the recipient to the broadcast communication is realizable with the above-mentioned unit of the subscription unit 1eε. As one example of the automatic subscription of the recipient to the broadcast communication realized now, for example, when the subscription process to the mailing list is automated and the user registers on WWW page, there is the system, which can join the mailing list automatically. However, the present mailing list automates the process started by the privilege of the administrator of the message broadcast device, and in the present automation process, the administrator of the message broadcast device only offers the structure which can set up the destination member freely. The subscription device 1eε of this Example is for preventing the improper act by the malicious administrator of the message broadcast device etc., and offering the structure of the automatic subscription having more high safety.

Here, it is more desirable for the public key or the private key to use after verifying that whether said public key or said private key included in the member list is surely the principal's key or not, the usage period is over or not when it was set, and the private key is already leaked or not. Therefore, in the each operation form of the member list administration device 1ε, it may be taken the operation, in which the validity of the public key or the private key which is used for the digital signature, is verified by referring to the database on the network, such as directory data base, which registered the status indicating the validity and reliability of the public key, which is issued by the certificate authority and the service business company, by using the protocol, which is the same as or different from that of the broadcast communication, for example, LDAP(Lightweight Directory Access Protocol), OCSP(Online Certificate Status Protocol), etc., when SMTP (Simple Mail Transfer Protocol) is used in the broadcast communication.

The here-explained unit, which verifies the validity of the private key which is used for the public key or digital signature, becomes effective in the case of the confirmation of digital signature, or the administration of the member list, by also having this unit in each of the below-mentioned the encrypted message creation device, the message broadcast device, and encrypted message decrypting device.

In the above, the forms of each Example of the member list administration unit of this invention are explained.

Next, the form of the operation of the encrypted message generating device of this invention is explained. Figure 57 includes and expresses the form of the operation of Example 5-1b to Example 5-3b of the encrypted message generating device of this invention.

### Example 5-1b

The form of the operation of Example 5-1b of the encrypted message generating device of this invention comprises the list retrieval and storing unit 2aε which retrieves and stores the member list through the network, and the encryption unit 2bε which creates the encrypted message.

The list retrieval and storing unit 2aε retrieves the member list, which has been stored in the resource database arranged on the network, by using the protocols which is the same as or different from that of the broadcast communication (for example, HTTP, etc., when SMTP is used in the broadcast communication). Or the list retrieval and storing unit 2aε stores the transmitted member list in the memory device (not shown), and retrieves the member list by reading said member list from the storing place, when it is required.

Moreover, when the encrypted message generating device 2ε has already stored the member list, the list retrieval and storing unit 2aε operates to confirm whether the member list is the newest version or not. For example, the version of the newest member list is asked to confirm to the data base arranged on the network where the message about the newest version of the member list was stored, by using the protocols (for example, LDAP, OCSP, etc. when SMTP is used in the broadcast communication), which are the same as or different from those of the broadcast communication. Moreover, the list retrieval and storing unit 2aε has the unit to verify the authentication of the member list explained in the Example of the above mentioned member list administration device 1ε, and verifies the authentication of the member list at the time of retrieval of the member list. In addition, the memory unit (not shown) comprises the nonvolatile memory device, such as EEPROM, the hard disk, and the optical-magnetic disk.

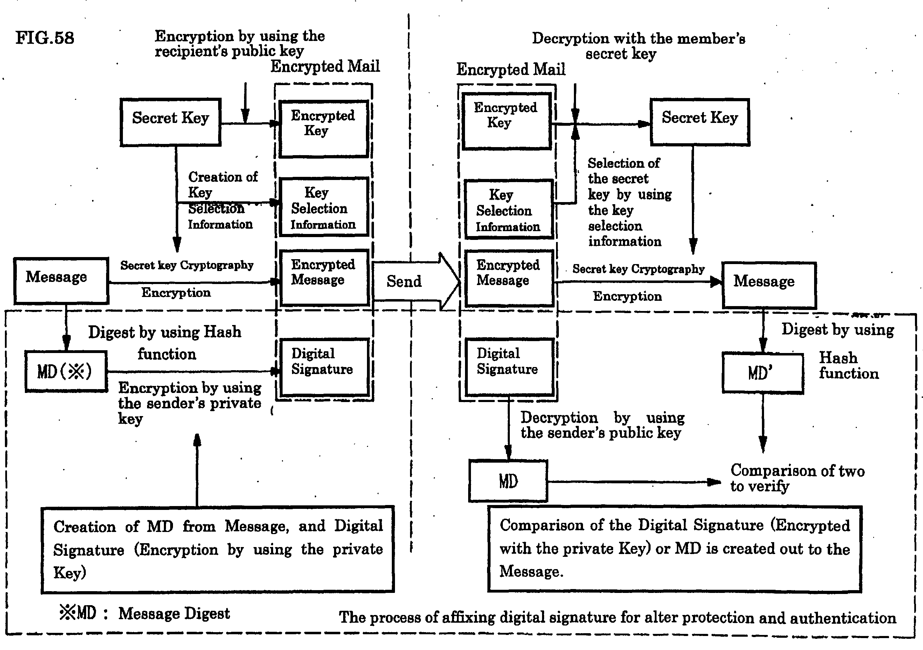

Next, the encryption unit 2bε retrieves the broadcast communication message (the plain message) and the member list, which are retrieved by the list retrieval and storing unit 2aε as shown in Figure 58, and encrypts the broadcast communication message to create the encrypted message, by the secret key cryptography (for example, the cryptography which uses the same key in encryption and decryption, such as DES etc.).
And the encrypted secret key, which is made by encrypting the secret key used for the encrypted message generation by the public key cryptography (for example, RSA cryptography) in use of each member public key included in the member list, is created. If the members are three at this time, three encrypted secret keys will be created.

Furthermore, the key selection information for selecting the encrypted secret key corresponding to the destination member, among the multiple encrypted secret keys, is created. As this key selection information, for example, the table, which indicates correspondence between the member names and the encrypted secret keys, may also be used.

Moreover, the broadcast communication message is digested by using Hash function and the digital signature encrypted by the sender's private key is affixed. It comes to be able to prevent tampering and to confirm the senders by this digital signature.

And as the encryption information, the encryption unit 2bε operates to out put the encrypted message, the encrypted secret key, the key selection information, and the digital signature.
In addition, in the broadcast communication system, this encrypted message generation device 2ε is used at the sender side terminal.

### Example 5-2b

Next, the Example 5-2b of the encrypted message creation device 2ε takes the structure which is further equipped with the destination check unit 2Cε in the Example 5-1b as shown in Figure 57.
The destination checking unit 2cε checks the recipient of the broadcast communication message, and only when the message broadcast device is the recipient and the member list used for the broadcast communication can be retrieved, said destination checking unit 2cε operates to deliver the broadcast communication message to the encryption unit 2bε.
By comprising this destination checking unit 2cε, the encrypted message generating device 2ε can be implemented only for the encryption operation and therefore, the generation of the broadcast communication message itself can be done with a general message generating device (a word processor, a mailer, a chat client, etc.).

For example, when the encrypted message generating device 2ε is realized as a plug-in software of the mailer, the text of the mail and the creation of the attachment file can use the unit of the conventional mailer. The plug-in software as the encrypted message generating device 2ε checks the destination address before the mail sending, and when the address of the mailing list server is the destination, the said encrypted message generating device 2ε retrieves the member list corresponding to this address, and does the above-mentioned encryption to create the encrypted message by using the public key included in the member list. This encrypted message is transmitted to the mailing list server by using the communication facility that the conventional mail uses (for example, communication facility which used SMTP as the protocol).
In addition, the encrypted message generation device 2ε of this Example may further be equipped with the exclusive broadcast communication message generating unit (not shown) which creates the broadcast communication message.

### Example 5-3b

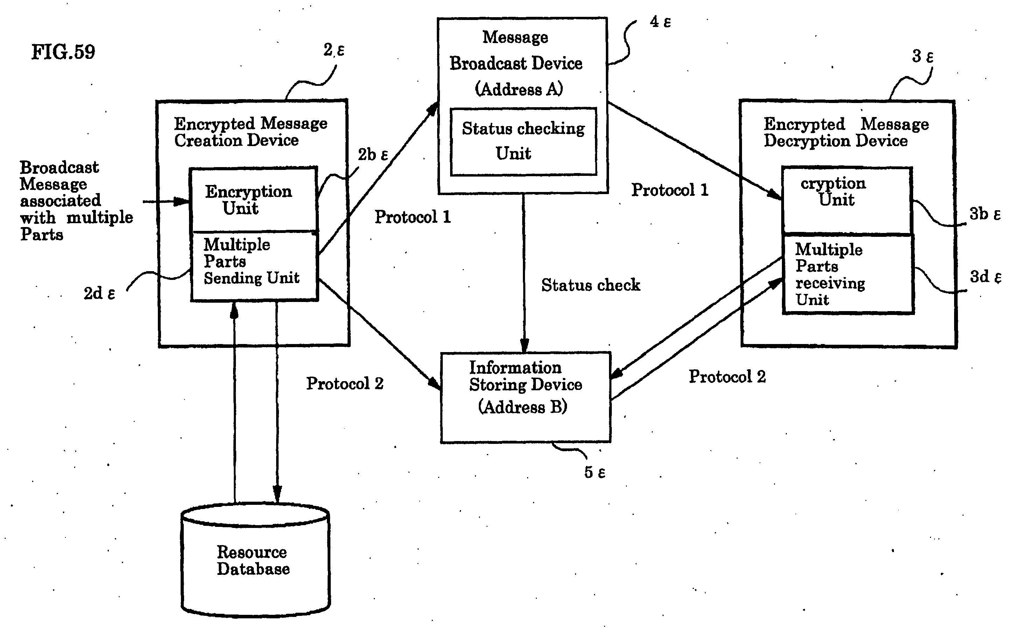

Next, the Example 5-3b of the encrypted message device 2ε takes the structure which is further equipped with the multiple parts sending unit 2dε in the form of Example 5-1b or Example 5-2b as shown in Figure 57.
In this Example, when the broadcast communication message consists of the multiple parts, the encrypted unit 2bε does the above-mentioned encryption operation for each part, to create the encrypted message. And, as shown in Figure 59, when the broadcast communication message associated with the multiple part, the multiple part sending unit 2dε operates that some of the parts are transmitted to the information storing unit 5ε which can check from the message broadcast device according to the receiving capacity of the message broadcast unit. In this case, the optimum protocol for the sending of each part can be used. For example, a real-time communications protocol is used for a voice chat, and a file transfer protocol is used for the transfer of the file.

In addition, the multiple part sending unit 2dε can know the information storing device 5ε, which can be checked from the message broadcast device 4ε and be permitted to transmit the part of the broadcast communication message, by asking to the resource database arranged on the network or said message broadcast device 4ε. Moreover, by the another method, the multiple sending unit 2dε can also know the information storing device 5ε by using to include the address of said information storing device 5ε to the member list.
Moreover, when the multiple parts are transmitted to the separated devices, the recipient has to verify whether all the original information becomes to complete or not. In such case, the perfection of the whole broadcast communication message can be verified by appending the following message, even when each information is transmitted to completely different device. The message, that is appended, is the message digests or the signed said message digest by digital signature, which is created by digesting the information which consists of one or some of following data:
the all original message parts, the all encrypted message parts, the set of the message digest of each message part, the set of the message digest of each encrypted message part.

In this Example, even if the communication becomes over the multiple protocols of the each part, the same encryption processing and member list are used, the broadcast communication between the members, who are registered by the team master, can be surely done, and the safety and certainty level of said broadcast communication of each part can be kept equivalent.

In the broadcast encrypted communication system, this Example is effective, when the messages in the different formats are broadcast simultaneously. For example, there are the eases that an agreement file may be transmitted simultaneously while the member over the multiple company has the business talk using the voice chat broadcast communication system, and a big file (for example, 5M bytes of image file), which exceeds the capacity of the mail system, may be transmitted simultaneously while the encryption mail is transmitted to the member by using the mailing list broadcast communication system. For example, in the case of the voice chat, when the agreement file is transmitted, if the voice of the voice chat stops and the broadcast communication is interrupted, there may be the risk of omission etc. occurring in the case of the important confidential information is being transmitted.

Moreover, in the mailing list broadcast communication device, while the capacity is different with the configurations of each receiving-side mail system (for example, 3 M byte in the mail system of the member A, and 1 M byte in the mail system of member Bε), the receiving capacity is also different from that how much capacity in the buffer for the mail reception assured for the specified members is there, so that the sender cannot assume whether he can transmit certainly. This Example operates effectively also in these environments.

Moreover, as for the public key included in the member list used at the encryption time, the safety of the security is improved more by verifying the validity of the public key before it is used for the encryption. For example, if all public keys are valid at the time when the team master creates the member list, there are the possibilities that the key, which passed the validity period, may exist, or the private key may be leaked, when the same keys are going to be used after in the fixed period. In the examples of each operation of the encrypted message generating device 2ε, the safety of the system improves further by having the key validity verification unit which is the same as the unit to verify the validity of the private key, which are used for the public key or the digital signature of the member list administration unit 1ε.

In the above, the examples of each operation of the encrypted message generating device of this invention were explained.

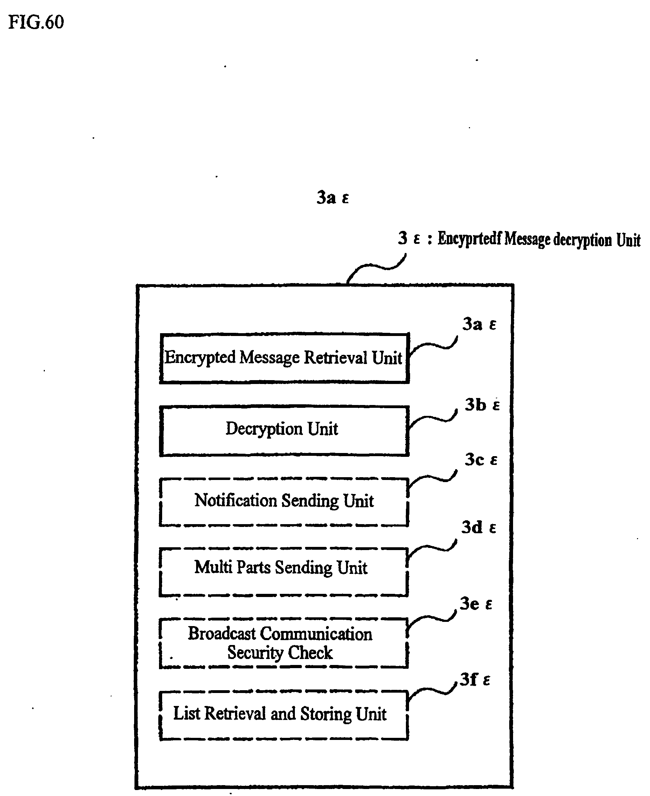

Next, the examples of the encrypted message decryption device of this invention are explained. Figure 60 includes and shows Example 5-1c to Example 5-5c of the encrypted message decryption device of this invention.

### Example 5-1c

Example 5-1c of the encrypted message device 3ε comprises the encrypted message retrieval device 3aε, which retrieves the encrypted message transmitted from the message broadcast device mentioned later, and decryption unit 3bε, which decrypts the encrypted message.
First, the decryption unit 3bε chooses the encrypted secret key used for the decryption from the multiple encrypted secret keys which is equivalent to the number of the members with checking to the key selection information included in the encrypted message as shown in Figure 58. And the encrypted secret key is decrypted to retrieve the secret key by using the private key of the recipient in use of the public key cryptography. The encrypted message included in the encryption information is decrypted, by using the secret key in use of the secret key cryptography, to retrieve the broadcast communication message, which is the plain text. And, the message digest MDε, in which the digital signature is decrypted by the sender's public key, and the message digest MD'ε in which the broadcast message (plain-text), which decrypted the encrypted message, is digested by using Hush function, are compared and verified to confirm tampering and the sender.

### Example 5-2c

Next, as Example 5-2c of the encrypted message decryption device 3ε, said encrypted message decryption device 3ε has the structure, which is equipped further with the notification sending unit 3cε which sends the notification to the message broadcast device to confirm that the recipient has received by himself, as shown in Figure 60. For example, the notification sending unit 3cε sends the message digest of the received contents of the broadcast communication, the time stamp of the received time, and the receipt information, in which the digital signature to ID of the recipient etc is appended..

Taking this structure is based on the possibilities that, for example, the communication content can not be received by the recipient when the communication line is interrupted. Therefore, it is desirable that the recipient sends the receipt information. However, in the conventional notification (for example, an opening notification of e-mail), since the malicious person is enabled to send said notification of this opportunity on the way, said notification cannot be called the safe one. The encrypted message decryption device 3ε of this Example has prepared the above-mentioned notification sending unit 3Cε. By this way, in the broadcast communication which sends or receives the confidential information, the notification, in which the recipient appended the digital signature by himself, can be sent to the message broadcast device, and it can be confirmed that said notification is certainly delivered to one of the members, who is registered in the member list, by verifying said digital signature, at said message broadcast device.

### Example 5-3c

Next, as Example 5-3c of the encrypted message decryption device 3ε, said encrypted message decryption device 3ε has the structure which is equipped further with the multiple parts notification unit 3dε in the encryption message decryption device of Example 5-1c or Example 5-2c. The multiple parts notification unit 3dε judges whether one part of parts is transmitted to the information storing device 5ε or not, according to the content of the broadcast communication message, as shown in Figure 59, and when said parts are transmitted, the said the multiple parts notification unit 3dε asks the information storing device 5ε, and retrieves said parts using the optimum protocol (for example, HTTP protocol and FTP protocol) for sending each parts. Moreover, when the encrypted message comprises the multiple parts, the decryption unit 3bε of this example operates to do the decryption processing for each parts of every.
In addition, this example corresponds to the case that the broadcast sentence comprises the multiple parts and some of the parts are transmitted from the message broadcast device 4ε to the information storing device 5ε, which can be checked, by the encrypted message generating device 2ε.

### Example 5-4c

The form of Example 5-4c of the encrypted message decryption device of this invention has the structure which is equipped further with the broadcast communication security checking unit 3eε in the encrypted message decryption device 3ε of Example 5-1c or Example 5-3c, as shown in Figure 60.
As one of the units, the broadcast security checking unit 3eε operates to verify whether the sender is the member registered in the member list or not. In the case of this verification, the broadcast security checking unit 3eε mentioned above retrieves the member list from the below-mentioned list retrieval and storing unit 3fε to confirm the sender.
Moreover, the broadcast security checking unit 3eε mentioned above may also ask whether the sender is included in the member list or not by using the protocol (for example , LDAP, etc.), which is accessed to the resource database, in which the information about the member list arranged on the network is registered. Moreover, the broadcast security checking unit 3eε mentioned above may also have further the same unit as the below-mentioned broadcast security checking unit in the message broadcast device.

### Example 5-5c

The form of Example 5-5c of the encrypted message decryption device of this invention has the structure which is equipped further with the list retrieval and storing unit 3fε in the encrypted message decryption device 3ε of Example 5-1c or Example 5-4c as shown in Figure 60.
The list retrieval and storing unit 3fε retrieves the member list stored in the resource database arranged on the network, by using the protocols which are the same or different in the broadcast communication (for example, HTTP, etc., when SMTP is used in the broadcast communication). Moreover, the list retrieval and storing unit 3fε stores the transmitted member list in the memory device (not shown), and retrieves said member list by reading said member list in the storing device.

Moreover, when the encryption message decryption device 3ε has already stored the member list, the list retrieval and storing unit 3fε operates in order to confirm whether the member list is the newest version or not. For example, the list retrieval and storing unit 3fε asks to confirm the version of the newest member list to the database which has been arranged on the network, where the information about the newest version of the member list is stored, by using the protocols which are the same as or different from that of the broadcast communication (for example, LDAP, OCSP, etc. when SMTP is used in the broadcast communication).

Moreover, the list retrieval and storing unit 3fε is equipped with the unit to verify the authentication of the member list explained in the example of the member list administration device 1ε mentioned above, and verifies the authentication of the member list at the time of the retrieval of the member list.
Furthermore, the unit to verify the validity of the private key used for the public key or the digital signature, which are explained in the example of the above-mentioned encryption message generating device, may also be equipped to use in the decryption unit 3bε and the list retrieval and storing unit 3fε. By having these units further, the safety of the system is improved further.
In the above, the each examples of the encrypted message decryption device of this invention was explained.

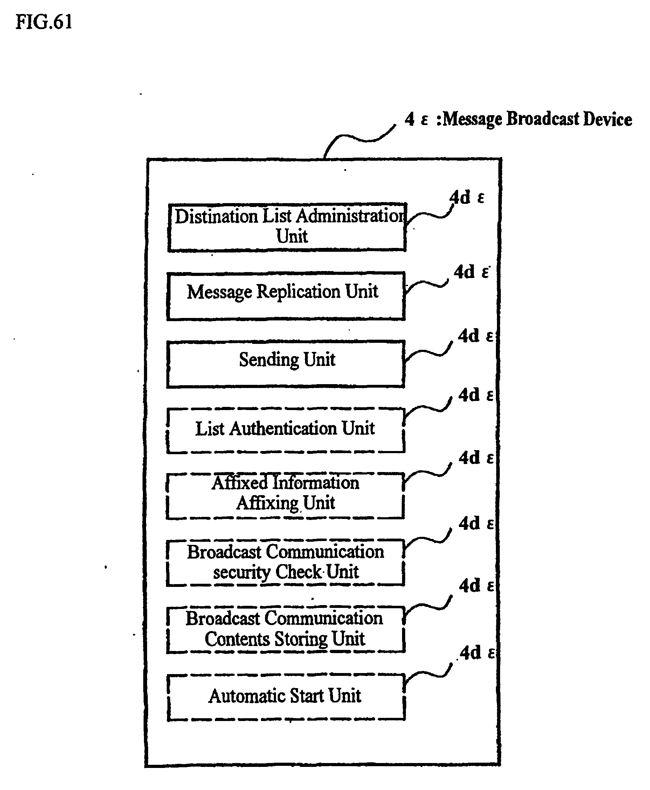

Figure 61 includes and shows Example 5-1d to Example 5-6d of the message broadcast device of this invention.

### Example 5-1d

First, Example 5-1d of the message broadcast device of this invention is explained.
This example comprises the destination list administration unit 4aε which stores and administrates the destination list administrated by the team master, the message replication unit 4bε which replicates the transmitted encryption message in order to transmit to the destination member included in the destination list, and the sending unit 4cε which transmits the replicated encryption message to each destination member.

The destination list administration unit 4aε is equipped with the units to store and administrate the destination list, to retrieve and store the member list, to verify the authentication of the member list explained in the example of the member list administration device in the case of the retrieval of the member list, and to match the member list and the member included in the destination list. In addition, when the destination list administration unit 4aε sets up the destination list by checking the member list, said destination list administration unit 4aε is further equipped with the unit to confirm whether the member list is the newest version or not. For example, the version of the newest member list may be asked to the database, which is arranged on the network where the information about newest version of the member list, by using the protocols which are the same as or different from that of broadcast communication (for example, LDAP, OCSP, etc., when SMTP is used in the broadcast communication).

### Example 5-2d

Example 5-2d of the message broadcast device of this invention has the structure which is equipped further with the list authentication unit 4dε in the message broadcast device 4ε of Example 5-1d.
The list authentication unit 4dε authenticates the member list, when the member list is retrieved. The unit to verify the authentication of this member list is already explained in the example of the member list administration device 1ε mentioned above.

### Example 5-3d

Example 5-3d of the message broadcast device of this invention has the structure which is equipped further with the affixed information affixing unit 4cε in the message broadcast device 4ε of Example 5-1d or Example 5-2d.
The affixed information affixing unit 4cε affixes the various information, which are made by the team master or the administrator of the message broadcast device 4ε (a service information, an administration information, etc.), to the encryption message. The destination member can be offered widely with large service by this unit to affix the additional information.

### Example 5-4d

Example 5-4d of the message broadcast device of this invention has the structure which is equipped further with the broadcast communication security checking unit 4fε in the message broadcast device 4ε of Example 5-1d or Example 5-3d.

The broadcast communication security checking unit 4fε has the unit to verity the identity of the member list as the 1st unit. For example, when the terminal of the sender's side is failed, or the communication line is interrupted, there is the possibility that the newest member list may not have delivered to the senders. The broadcast communication security checking unit 4fε verifies the identity between the member list used at the time of the encryption of the transmitted encryption message, and the member list used to create the destination list which is used by the server at the time of the transfer, in order to raise the safety of the broadcast communication more.

For example, the identity of the member list can be verified by using the information, such as the version No. of the member list or the time when the team master created the member list (for example, when the time stamp, etc., is affixed). Moreover, as another method, the identity can also be verified by verifying whether the digital signature affixed to the member list is the same or not. Moreover, as another method, the identity can be verified by comparing the message digest to the member list in use of Hash function.

Moreover, the broadcast communication security checking unit 4fε has the unit to verify the broadcast sender, as the 2nd unit. As in the conventional broadcast communication, since the administrator of the message broadcast device 4ε can see the content of information, for example, said administrator can examine whether the slander / calumny information exists or not. However, since the formula of this invention has realized the structure, in which the server administrator cannot see the content, information, there is the possibility that this message broadcast device 4ε may be used unjustly. So, the broadcast communication security checking unit 4fε has the unit which retrieves the receiving rejection information in which the information terminal, which rejects the information receiving (for example, it can be identified by IP address, etc.), or the identification information of users (for example, it can be identified by the mail address or the certificate published from the trusted certificate authority, in the case of the mail system), are included. And the broadcast communication security checking unit 4fε also has the unit which verify whether the sender of the message, which is transmitted to the message broadcast device 4ε, or the sender's terminal, are included in the receiving rejection information or not. In addition, as the receiving rejection information, for example, the personal mail address, which sent the SPAM mail in the past, and the IP address of the terminal, in which the security level is low and the identification of the principal may not be done by the right procedure, and the list of the network address, are included.

Moreover, the broadcast communication security checking unit 4fε has the unit to verify the content of the broadcast communication as the 3rd unit. This unit verifies also about the sender or the content of the communication, in order to raise the security of the broadcast communication. This unit verifies also whether the sender is the person in the member list or not, or the malicious programs or data lines are included in the transmitted information or not.

Moreover, the broadcast security checking unit 4fε has the unit which verifies that the parts, which is stored in the information storing device, and is checked from the encrypted message decryption device, among the encrypted message which comprises multiple parts, was rightly transmitted to the information storing device, as the 4th unit. This unit judges whether the parts are transmitted to another information storing device or not, among the encrypted message which comprises multiple parts, by checking to the transmitted encrypted message. And then, when the parts were transmitted to another information storing device, it is verified that said parts were transmitted certainly.
Furthermore, the unit to verify the validity of the public key and the private key used for the digital signature, which are explained in the example of the encrypted message generating device mentioned above, also has the form which is equipped and used in the broadcast communication security checking unit 4fε.

### Example 5-5d

Example 5-5d of the message broadcast device of this invention has the structure which is equipped further with the broadcast communication contents storing unit 4gε in one of the message broadcast device 4ε of Example 5-1d or Example 5-4d.

The broadcast communication contents storing unit 4gε stores the transmitted information or one part of the information or those information with affixed information. For example, when a hindrance occurred in the mail server in the mail system, or when the terminal of the recipient is failed, even if it is the transmitted information, it may not be received correctly. Moreover, in the voice chat, the voice may become discontinuity for the sake of the convenience of the communication line. Thus, even if the situation in which the data sent by the sender side and the data sent by the receiving side were not matched, occurs, said data is stored safely by the storing unit in the broadcast communication contents storing unit 4gε, and when said data becomes to be necessary, it is possible to reconfirm or retrieve.

### Example 5-6d

Example 5-6d of the message broadcast device of this invention has the structure which is equipped further with the broadcast communication automatic start unit 4hε in one of the message broadcast device 4ε of Example 5-1d or Example 5-5d.
In order to start the broadcast communication automatically without obtaining the server administrator's manual permission, the broadcast communication automatic start unit 4hε has the start request item presentation unit which shows the items which should be fulfilled by the start request claimant, at the start reception by the server administrator, the start license judgement unit which judges whether the start reception request, which is transmitted from the start request claimant, fulfills the start request items to permit the start or not, and the broad cast communication start setting up unit, which makes the start request claimant to the team master, and sets up the start so that the broadcast communication becomes possible by the member, who is specified by the team master, when the star is decided.

In the conventional broadcast communication system, the administrator of the message broadcast device had to do the working relating to the start at beforehand, For example, the workings to set up the destination list, to distribute the IC card, or to register the public key in the message broadcast device were required. Moreover, the encryption broadcast communication may be considered that it is not the communication that continues for a long time but to be used in the minimum time, when it was required, in many case. For example, the case, such as the voice chat of one hour, or the transfer of three agreement files, is considered. In this case, the working load about the start and the deletion of the broadcast communication in the message broadcast device 4ε becomes very large. Moreover, since there is dangers, such as the existence of the evolution of mistakes and existence of the administrator having malice, the system, which does not need the manual setups by such persons as much as possible, is desirable on the safety. Then, the message broadcast device 4ε of this example will offer the unit which can start broadcast communication automatically, if fixed usage conditions (for example, the payment of the charge proportional to usage time etc.) are fulfilled, without necessary the manual setups by the server administrator.

Furthermore, the broadcast communication automatic start unit 4hε can also be equipped with the start request confirmation unit which verifies whether the start receptionist request that the start claimant has transmitted, is a correct request or not. For example, when the credit card is described in the accounting item, the start request confirmation unit verifies whether the number of the credit card, is registered exactly, and is in the status in which the accounting is possible or not. In the case of this verification, when there are no data used for the verification in the message broadcast device 4ε, the start request confirmation unit asks to the data base, the server, etc., which are arranged on the network and have specified data.

The message broadcast device 4ε of Example 5-6d may also be equipped with the secession request acceptor unit (not shown) which accepts the secession request of the member of broadcast communication.
For example, there is a risk that a certain person who doesn't intend to join is registered without one's leave and only the unnecessary information and the slander / calumny information are transmitted to the person. In the message broadcast device 4ε of this example, when the secession request that the member of the broadcast communication leaves from said broadcast communication comes to the message broadcast device, the secession request reception unit stops the transfer of the message to this member, and notifies this information to the team master. And, the confirmation methods, such as the digital signature and the shake hand, can be used, in order to investigate whether the secession request is the transfer termination request which is created surely by the secession request member himself or not.
In the above, each examples of the message broadcast device of this invention was explained.

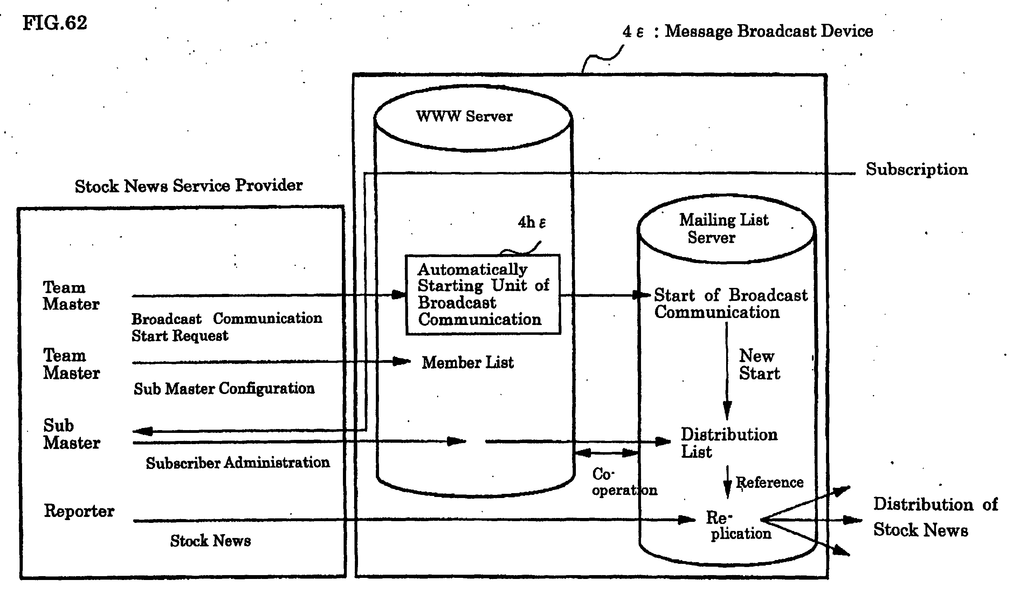

Next, as Example 5-1 of the broadcast communication system of this invention, the example in which a finance company distributes the stock news to the subscribers by using the message broadcast device which is operated by a third party is explained. In the case of Example 5-1 shown in Fig. 62, in order to realize secure broadcast communication of the mail system, the unit of the message broadcast device of this invention is realized by using the mailing list server and WWW server. This mailing list server is operated by the third party.

In the case of WWW server which links to the mailing list server, which is operated by the third party the home page, which showed the items that should be fulfilled by the starting claimant and was set up by the administrator of said mailing list server at the start of the broadcast communication, is stored in such WWW server. The finance company downloads this homepage using SSL (Secure Socket Layer) communication, in order to start the service automatically, and inputs the necessary items in the form corresponding to the items displayed on the browser. In Example 5-1, the name, the credit-card number, and the service, which can broadcast to a maximum of 1000 persons, are written down in the form mentioned above, and a sending button is pushed to transmit to WWW server.

The starting license judgment unit of the broadcast communication automatic start unit 4hε mounted as the programs (for example, CGI), which works on WWW server, judges whether the starting should be permitted or not by using 4 data of the accessing person, i.e., the certificate, the name, the credit card number, and "1000", who was identified by SSL communication. In Example 5-1, the credit card number is asked to the credit card service company to verify whether the card holder and the owner of the certificate are matched or not. When it matches, the page, which tells the permission of the starting, is transmitted again to the subscription claimant. However, when it not matches, the page which tells the rejection of the starting is transmitted again to the subscription claimant.

When the starting is permitted, the mailing list address for the broadcast communication, in which the subscription claimant assigned to the team master administrates, is set up newly, by the broadcast start setting up unit of the broadcast communication automatic start unit 4hε mounted as the programs which works on the mailing list server. Moreover, the destination list (the empty list at the beginning) for distributing the information transmitted to this mailing list address, is set up. If these staring setups are completed, the mailing list server transmits the mail which notifies that the starting setups were terminated with success to the team master.

The member list administration device 1ε in Example 5-1 is, for example, mounted as an applet of JAVA, is incorporated into the homepage, and is stored in WWW server. The team master administrates the member list, which is hoped to set up, by using the applet downloaded in use of SSL communication, when the member list is created. The member list in Example 5-1 consists of three lists, i.e., the team master list, the reporter list, and the recipient list. In the member list, the sub master which can administrates the team in addition to the team master is set in the team master list, and the reporter who writes stock news is registered in the reporter list. And the digital signature of the team master is done in the member list, and said member list is transmitted again to the message broadcast device 4ε. The message broadcast device 4ε sets up the destination list, after verifying the digital signature to judge whether the member list is rightly created by the team master or not. The destination rule in Example 5-1 is set up so that the broadcast communication information transmitted by the member of the reporter list may be replicated to the numbers of the members registered in the recipient list (included in the member list), and may be registered.

If the recipient is the user who can do monthly accounting generally, the recipient uses the subscription acceptor unit 1dε of the member list administration unit 1ε, in order to mount so that said user may join automatically, in Example 5-1. The multiple sub masters are set in the team master list included in the member list set up by the team master. The sub masters also work in the personnel of the finance company and this sub masters are taking charge of the administration of the recipient list. The sub masters download the subscription item setting unit of the subscription acceptor unit 1dε, which is implemented as the page of WWW, by using SSL communication. In this case, WWW server looks at the certificate of the sub master, which is obtainable by SSL communication, and does the identification and authentication of the sub master himself. Then, the subscription item is set up by filling the each item of the form in WWW page. In this example, the certificate including the agreement consent rule, the accounting item, the mail address and the certificate including the mail address are designated to present, and furthermore, the public key of the sub master for encrypting the subscription of the subscription claimant, is designated so that the subscription is transmitted.

The subscription claimant to the above-mentioned stock news destination service, first, does the digital signature to the agreement consent rule by using his own private key, and inputs the accounting item and the mail address, by using the subscription item presentation unit of subscription receptionist part 1eε mounted as JAVA applet embedded in WWW page. When these information are transmitted, since these confidential information (the information concerning accounting especially: the credit card number, the account number of the bank, etc.) must not be visible to the administrator of WWW server or the mailing list server, so the public key of the sub master is retrieved and encrypted, then the said information is transmitted to WWW server. Moreover, since the above communication is done by SSL, the certificate can also be confirmed in the case attesting.

The subscription from many subscription claimants are stored, as the subscription information encrypted, in WWW server. In Example 5-1 of the package, the program, in which the accession license judgment unit of the subscription acceptor unit 1eε is mounted, accesses WWW server, retrieves the encrypted subscription information, and judges whether the each item is fulfilled in order to permit of the service subscription or not. For example, the program mentioned above verifies whether the public key and the private key are still effective or not, by using the key authentication verification unit. As the result of the judgement, the notification mail, which indicates that the subscription is permitted or rejected, is transmitted to the subscription claimant. This program can operate automatically the member list administration device further.

To the subscription in which the license was permitted, the member list stored in WWW server by using the member list administration device 1ε, is retrieved by using member list retrieval and storing unit 1cε. And then, the subscription claimant is registered in the recipient list among the member lists. In this member list, the digital signature is affixed to make the new member list, to this recipient list by using the private key of the sub master registered as the sub master, and the said new member list is transmitted again to WWW server. In WWW server, the authentication of the member list is confirmed by using the unit to verify the authentication of the above-mentioned member list, and it is verified furthermore whether all the public keys included in the member list are effective or not, by using the unit to verify the validity of the public key and private key used for the digital signature. If these verification results are positive, the destination list is updated by using the destination list administration unit 4aε. Moreover, to the member included in the reporter list, the newest member list is transmitted by using the list sending unit 1dε (in the example, it is mounted by using SMTF protocol).

The terminal, with which the reporter creates stock news, is the general-purpose computers (in this Example 5-1, a notebook personal computer, etc.) in which the electronic-mail software is included. The terminal designates the address of the mailing list of the stock news, which was created by using this electronic-mail software, and transmits said stock news.
At this time, the encrypted message generating device 2ε, which was mounted as the plug-in software which links with this electronic-mail software, confirms that the stock news is going to be transmitted to the message broadcast device 4ε, in which the mailing list address exists as the member list, by using the destination checking unit 2cε.

In this case, first, the plug-in software verifies that whether the version of the member list, which exists in the personal computer of the terminal, is the newest version or not , by using the list retrieval and storing unit 2aε. This verification is done by asking the newest version to the resource database, which is constructed on the network on the base of the standard of X.500, by using LDAP.
When it is not the newest version, the newest member list is retrieved from the location, where the newest version registered in the resource database exists. (in this example, it is retrieved from WWW server by using SSL communication.)

In the encrypted message generating device 2ε, after confirming the authentication of the member list by using the unit to verify the authentication of the member list, the encryption is done in the encryption unit by using the public key of the member of the recipient list included in the member list. At this time, the digital signature affixing unit retrieves this reporter's private key from the IC card which recorded the private key which is hold by the reporter, and affixes the digital signature to the created news. By this signature, the recipient can confirm whether it is the news written by what reporter, and can confirm the reliability of the news. Moreover, the reporter who distributed the news becomes unable to deny having created the news.

The mailing list transmitted to the address of the mailing list confirms first, whether the signature affixing person (in Example 5-1, the reporter) of the information transmitted by using the broadcast communication security checking unit 4fε, is rightly included in the reporter list of the member list or not. Moreover, it is verified whether the versions of the member list is different or not by using the unit to verify the identity of the member list. As the result of verifying, when the version of the member list is different, the message, which specified this fact, and the broadcast communication information are answered to this reporter. As the result of the above verification, if all is normal, the encryption message is replicated by using the message replication unit 4bε, and said replicated encrypted message is transmitted to the member included in the recipient list of the member list by using the sending unit 4cε mounted by SMTP protocol.

The encrypted message decryption device 3ε of this invention, mounted as plug-in software installed in the electronic-mail software of the recipient, confirms, whether it is tampered or not, and who is the information creator, by using the unit to verify digital signature of the decryption unit 3bε, and confirms that the sender is the reporter of the finance company. After confirming, the encrypted message decryption device 3ε can decrypt to read the news. When the news can be decrypted safely, the receipt is transmitted to the message broadcast device 4ε by using the notification sending unit 3cε.

In addition, in order to confirm whether JAVA applet in this example is truly innocent or not, it can be verified to confirm the digital signature affixed to JAVA applet.
In the above, the operation of each equipment in Example 5-1 was explained.

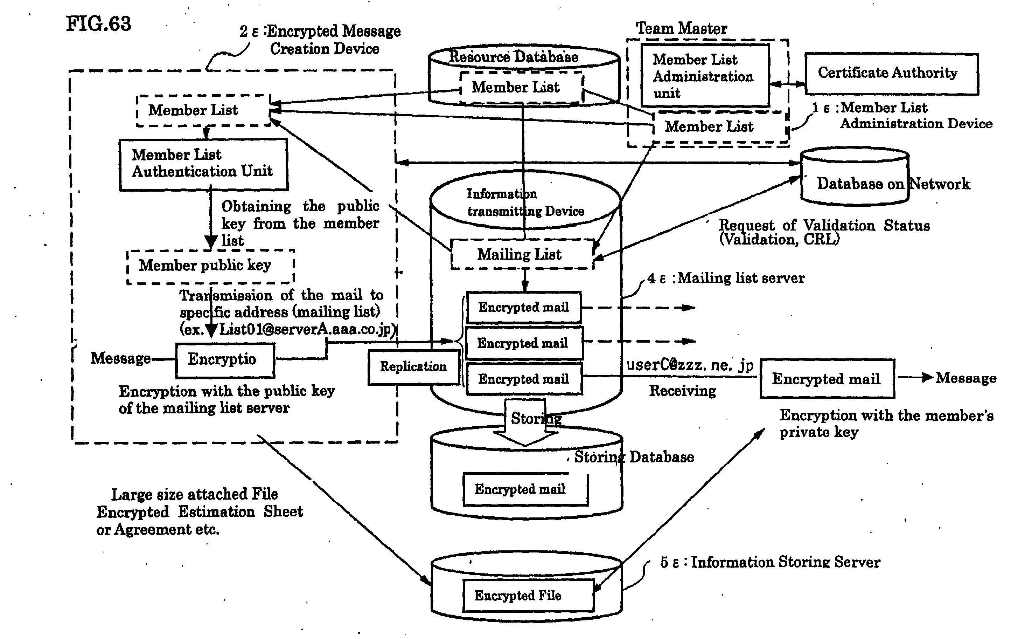

Next, as the case of Example 5-2 of the broadcast communication system of this invention, the example when the confidential information, such as the estimation and the business meeting, etc., is carried out among the members over between the multiple business company (this aggregation is said to the team 001ε), is explained. In Example 5-2 shown in Figure 63, the mailing list server is used as the message broadcast device.

The team master of the team 001ε does the member list administration, which carries out broadcast communication of the confidential information, by using the member list administration device 1ε implemented as the execution file on the OS of the general-purpose desktop computer. The team master of the team 001ε retrieves the member list by using the list retrieval and storing unit 1ce, and opens the list creation / modification GUI window. On this GUI window, the list of the member of the team 001ε and the list of the public key which is accessed and stored to the database of the public key in the terminal by using public-key administration unit 1bε, are displayed.

The team master of the team 001ε chooses the public key of the member, who joins the team, from the public-key list, and adds said public key to the member list of the team 001ε. Moreover, the team master of the team 001ε accesses the directory service, which is offered by the certificate authority on the network, by using the network accessing unit, which is offered by the public-key administration unit 1bε, and retrieves the public key of the member, which is not in the terminal and said member is wanted to add newly to the team 001ε, and adds this public key to the member list.

O.K. button is displayed on the GUI window, and after changing the member of team 001ε, this O.K. button will be pushed. At this point, the unit to verify the validity of the private key used for the public key or the digital signature, accesses to the directory service of the certificate authority which published the certificate, in which each public key included in the member list is included, by using LDAP protocol, and verifies whether said public key is available or not. As the result of the verification, when there is the unavailable public key, the fact of this is displayed on the dialog and is notified to the team master. When all is available, the member list, which comprises the time stamp, the address of the mailing list, the team ID, the identified name of the team master, is created, and all data of this member list is digested by using MD5 of Hush function to create the digested data.

Next, the private key of the team master is accessed, and the password decryption (in this example, the pass word decryption, mounted by using the secret key cryptography RC2, is used) is done, by using the password which is inputted from the dialog box by the team master. By using the private key of the team master retrieved as the result, the digital signature is created by encrypting the digested data in use of the public key cryptography RSA. This member list and the digital signature are transmitted to the message broadcast device 4ε as the mail, by using SMTP protocol.

In the message broadcast device 4ε, the contents of SMTP mail, which comprises the format of the received multi part (MIME (Multipurpose Internet Mail Extensions)), are analyzed by using the member list retrieval unit of the destination list administration unit 4aε, and the member list segment judged from Content-Type is obtained to be inputted in the list authentication unit 4dε. The list authentication unit 4dε confirms that the digital signature of the team master of the team 001ε is rightly affixed as the signature of a member list, and changes the recipient of the destination list by using the destination list administration unit 4aε. Then, the list authentication unit 4dε replicates the member list and the digital signature for every MIME format to the recipient of the just changed destination list, and sends them to each recipient of the destination list.

The encrypted message generating device 2ε, which operates as a mailer installed on the general-purpose desktop computer, recognizes that this mail is the member list in the broadcast communication, by Content-Type of MIME, when the mail, in which the member list was included, is received. At this time, the mailer obtains the member list and the digital signature, and, after confirming the authentication of the member list by using the unit to verify the authentication of the list, stores said member list and the digital signature by using the list retrieval and storing unit 2aε.

After the member included in the team 001 creates the mail which includes two attached files, i.e., the estimation and the agreement, by using the broadcast communication message creation unit of the encrypted message generating device 2ε mounted as the general running program which can be operated on the general-purpose desktop computer, when said member pushes the sending button, the destination checking unit 2cε checks the sender's address, and examines whether there is the member list, which is private used for the sender's address or not, in the multiple member list in which the sender's address is stored in the terminal.

When there is the member list, this attached file and mail are encrypted by using the public key of the member list. In this case, the encryption unit 2bε encrypts each attached file and the mail text separately, and also affixes the digital signature separately. The attached file is transmitted to the information storing device 5ε (information storing server) without attaching directly, among the information which comprises these multiple parts. The multiple parts sending unit 2dε asks to the database on the network about the information storing device 5ε corresponding to the mailing list address, and specifies the address of the information storing device 4ε which should transmit two attached files and the sending methods (for example, protocol etc.).

When the information storing device 5ε knows that the sending method has the structure, in which the file transfer is permitted by using HTTP protocol, the said information storing device 5ε sends the message by using HTTP protocol . In that case, since the user authentication is possible by using SSL communication, the information storing device 5ε can confirm whether the user is included in the member list, which uses the broadcast communication service currently done in the mailing list server, or not. Apart from the sending of two attached files, the mail text is transmitted with address which affixes the address of the information storing server.

The mailing list sent to the address of the mailing list, first, confirms whether the person, who affixed signature of the information, which is sent by using the broadcast communication security checking unit 4fε, is certainly included in the reporter list in the member list or not. Moreover, the mailing list mentioned above verifies whether the versions of the member list is different or not, by using the unit to verify the identity of the member list. When the versions of the member list is different as the result of the verification, the information of said result of the verification and the broadcast communication information is returned to the reporter. Moreover, the mailing list mentioned above is verified whether the malicious programs or virus, etc., which uses the bug of device or software, are included or not in the content of the communication, by using the broadcast communication contents verifying unit of the broadcast communication security checking unit 4fε. Moreover, the mailing list mentioned above verifies whether two attached encrypted files are transmitted and stored in the information storing device 4ε surely or not, by using the information storing device reference unit of the broadcast communication security checking unit 4fε.

If all is normal, as the result of the above verification, the content of broadcast communication is stored in the database connected to the mailing list server, by using the broadcast communication contents storing unit 4gε.

In that case, the time stamp and the digital signature using the private key of the mailing list server are affixed to store. And, the time about the confirmation that the attached file was stored in the information storing device 4ε, and the information about this encrypted message being stored in the mailing list server are affixed to the encryption message. And the encrypted message and the affixed message are replicated by using the message replication unit 4bε, and then, said replicated information are transmitted to the member included in the recipient list of the member list, by using the sending unit 4cε implemented by using SMTP protocol.

The user, who is going to retrieve the mail by the WWW browser at the business trip place, downloads the encrypted message decryption device 3ε mounted as the JAVA applet, and receives this encrypted message on the browser. This JAVA applet retrieves the newest version of the member list from the network by using the list retrieval and storing unit 3fε, and confirms whether the member list was created by the team master himself or not , by using the unit to verify the authentication of the list. When this encrypted message is retrieved, first, the JAVA applet confirms the tampering / information creator, by using the unit to verify the digital signature of the decryption unit 3bε, and furthermore confirms that the sender is the business negotiation partner included in the member list by using the sender's reliability authentication unit of the broadcast communication security checking unit 3eε. Then, after decrypting the information to see the encrypted message by using the decryption unit 3bε, it becomes clear that the attached file is transmitted to the information storing device 5ε. The multiple parts receiving unit 3dε downloads these attached files by using HTTP protocol, decrypts each file again, and can retrieve the original message.
In the above, the operation of each device in Example 5-2 was explained.

In addition, this invention can also use LAN or the network by the dial up other than internet.
Moreover, the member list administration can also be done by recording the programs for realizing the member list administration device of this invention to the record media which is readable by the computer, and by making to read and performing said program recorded in said record media in the computer system. That is to say, this member list administration program makes the computer to realize the unit, which creates the member list including the public key of one or more member, who does the broadcast communication, and the unit, which retrieves to store the above-mentioned public key.

Moreover, the encrypted message creation can also be done by recording the programs for realizing the encrypted message creation device of this invention to the record media which is readable by the computer, and by making to read to perform said program recorded by said record media in the computer system. That is to say, this encrypted message creation program makes the computer to realize the unit to retrieve to store the member list, through the network, and the unit, which retrieves the broadcast communication message and encrypts to make said broadcast communication message to the encrypted message, by using the public key included in the abovementioned member list.

Moreover, the encrypted message decryption can also be done by recording the program for realizing the encrypted message decryption device of this invention to the record media which is readable by the computer, and by making to read and to perform said program recorded by said record media in the computer system. That is to say, this encryption message decryption programs makes the computer to realize the unit which retrieves the encrypted message transmitted from the message broadcast device, and the unit which decrypts the encrypted message included in the above-mentioned encrypted message.

Moreover, the message broadcast processing can also be done by recording the program for realizing the message broadcast device of this invention to the record media which is readable by the computer, and by making to read and to perform said program recorded by said record media in the computer system. That is to say, this message broadcast processing program makes the computer realize the unit which administrates the destination list, the unit which replicates the transmitted encrypted message, and the unit which distributes the replicated encrypted message to each destination member.

Moreover, even when the terminal that doesn't have the member list administration device, the encrypted message generating device, and the encrypted message decryption device of this invention, which are required for broadcast communication, must be used in order to realize broadcast also in a mobile network environment, the broadcast communication may also be done by downloading the software, which realizes the unit of each device from the software storing device which is arranged on the network and stores said software to realize each unit of device, and by making to read and to perform said software in the computer system built in the terminal.

As explained to the detailed information above, according to invention of Example 5-1a to 5-4a, Example 5-1b to 5-3b, Example 5-1c to 5-5c, 5-1d to 5-6 d, there are the following effects.
Since this invention was made in the structure which does not decrypt the encrypted message in the message broadcast device, it can be prevented that the improper-act, such as leakage and tampering of the content of the broadcast communication, is done by the administrator of the message broadcast device. And the content of the broadcast communication mentioned above can be shared by only the members who are truly necessary to share said content.
Moreover, according to this invention, since the subscription unit was prepared in the member list administration unit and the broadcast communication automatic start unit was prepared in the message broadcast device, this invention can correspond quickly to the secession and subscription of the recipient who does broadcast communication, and even if there is the dynamic modification of the broadcast communication member, this invention can prevent transmitting accidentally the message to the member who must not do broadcast.

Moreover, since this invention does the administration by the member list, the administrator of the message broadcast device cannot administrate the distributed member of broadcast communication, but the distributed members can be administrated in the members who do broadcast communication, and the administration load concentrated on the administrator of the member can be alleviated.
Moreover, according to this invention, since the broadcast communication security checking unit and the broadcast communication contents storing unit are prepared in the message broadcast device and the notification sending unit and the broadcast communication security checking unit are prepared in the encrypted message decryption device, the majority of each distributed members can receive the message certainly.

### Example 6

Example 6 of this invention relates to the team data list processing system which creates, administrates and stores the team data list to share the various information and functions offering to the users, between the constituents of the team (the user or the member), which correspond to the organization unit, such as the division or the section of the company, and thereby, safely shares these information and units for every team between the users. Furthermore, in detail, Example 6 relates to the system which has the team data list storing device which takes the process for storing the team data list, and the team data list administration device which does various administrations to the team data list retrieved from said team data list storing device.

About Example 6 of this invention, the following technologies have been known.
In order to share the various resources, such as various information and functions offered to the users, among the multiple users, it is necessary to prepare the unit which verifies whether the user, who requests the access to said resources, has the proper privilege to access said resources truly or not. In order to do such verification, the list called as the access control list (hereinafter referred to as "ACL"), which defines beforehand the user who has the proper access privilege to the resources, has been conventionally used. In addition, ACL said here, is the one example of the lists which includes only the information for controlling the access to the shared resources, in the various information included in the team data list mentioned above.

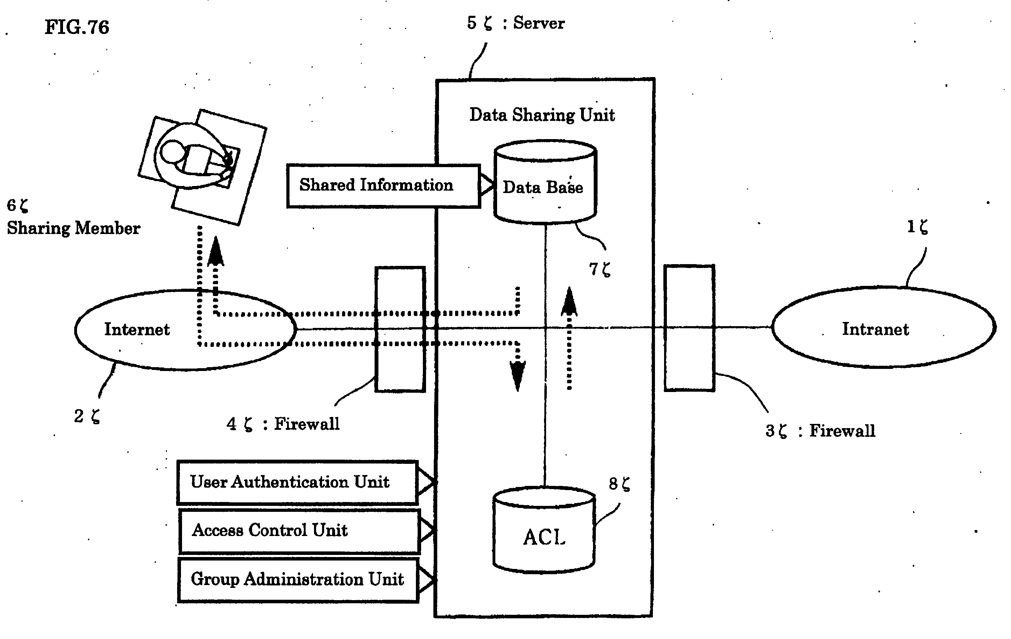

Figure 76 shows the outline of the conventional system, which does the information sharing between the multiple users by using ACL. In the system in Figure 76, the intranet 1ζ, the internet 2ζ, are connected with the server 5ζ through the fire wall 3ζ and 4ζ respectively. And the sharing member 6ζ, who is not only in the intranet 1ζ but also outside of the intranet 1ζ, shares the information each other through the internet 2ζ. As already known, the intranet 1ζ is the closed network which is installed in the company, on the other hand, the internet 2ζ is the public network in world wide.

Moreover, the fair walls 3ζ and 4ζ are the computers which prevent that the invader with malice accesses to the intranet 1ζ unfairly. The server 5ζ is the terminal (computer), in which the various resources are stored, and has the database 7ζ, in which the shared information is stored, and ACL 8ζ which stores the member list about the group, which can access the designated information or units, and about the members belonging in said group. This server 5ζ has the data storing unit which administrates the shared information stored in the database 7ζ, and as the others than said data storing unit, has the user authentication unit which authenticates whether the communication partner corresponding to the client is permitted beforehand, or not, the access control unit which verifies the access to the shared information based on ACL 8ζ, and the group administration unit which enables that only the specified group member accesses the specified shared information, based on ACL 8ζ.

In the system in Figure 76, when the access request is occurred from the sharing member or the user in the intranet 1ζ to the database 7ζ, the server 5ζ does the user authentication each time by checking ACL 8ζ, and permits the access when said user is defined as the member in ACL 8ζ, and rejects the access when said user is not defined. Moreover, when the access to the concerned user is permitted, the server 5ζ verifies whether the concerned member is included in the specific group or not, by checking ACL 8ζ, and investigates whether said member is permitted about the shared information in which the access request is done.

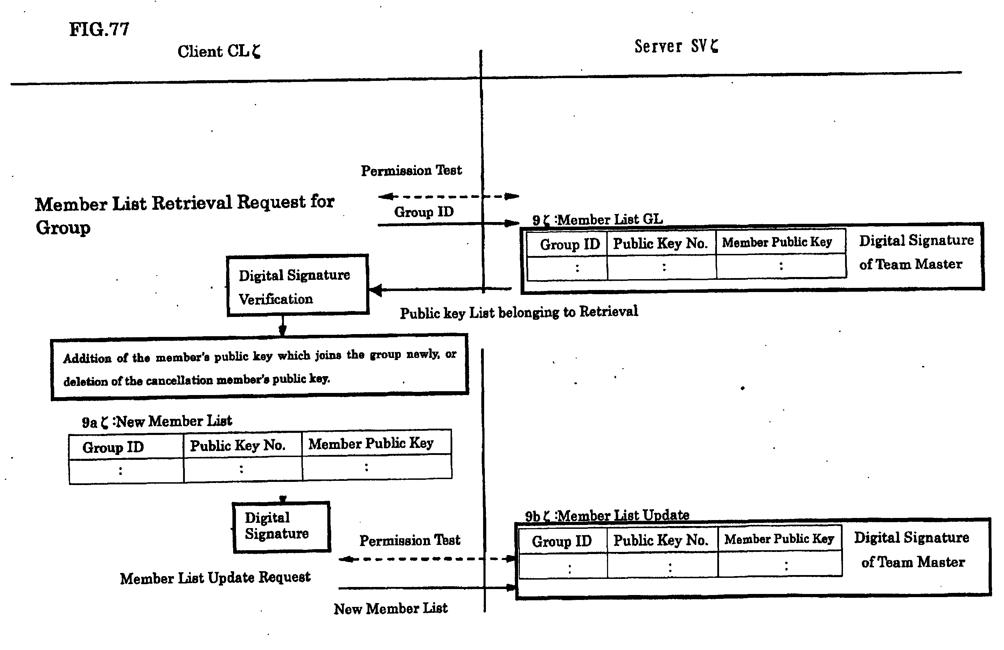

On the other hand, Figure 77 shows the conventional one realized example for sharing the information by only the member belonging in the specified group. The server SVζ in this figure corresponds to the server 5ζ in Figure 76 and the client CLζ corresponds to the sharing member 6ζ in Figure 76 and the terminal which is controlled by the person in the intranet 1ζ. In Figure 77, the member list 9ζ is installed on the server SVζ. The member list 9ζ, which exists on the each group, comprises the group ID, which is the identifier given to the concerned group, the public key of each member in the group, and the public key number, which is the identifier given to these public keys, and the signature of the group administrator in the concerned group is affixed.

When the client CLζ requires the member list about the specific group to the server SVζ by designating the group ID, the server SVζ transmits the member list 9ζ, which corresponds to the designated group ID, to the client CLζ, as the public key ID list, after doing the designated permission test. The client CLζ creates the member list 9aζ by adding or deleting the public key and the public key ID of the concerned member to the transmitted member list, corresponding to the admission or secession of the member to the group, after verifying whether or not the signature of the group administrator in said member list is the proper one. Next, the client CLζ signs to the member list 9aζ and does the member list update request to the server SVζ and returns the member list 9aζ. Thereby, the server SVζ receives the member list 9bζ from the client CLζ and updates member in the server SVζ, after doing the designated permission test.

By the way, when the resources are shared between the multiple users, there is the case that is not desirable to include the administrator of the server side in the sharing members. For example, in the case of the system administrator who is in the information system division in a certain company, it may be necessary that it is impossible for him to access the personal information that should be shared only in the personal division. However, in the system in Figure 76 and the operation process in Figure 77 mentioned above, the privilege to set up or administrate ACL 8ζ is permitted for the administrators of the server 5ζ and the server SVζ. Therefore, it is possible for these administrators to access unfairly to ACL 8ζ and there is the fault that can not prevent the intentional tampering of the contents of ACL 8ζ. In addition, there is threat that ACL 8ζ is tampered unfairly by the person who invades into the server SVζ unfairly (so-called the cracker).

Moreover, in the conventional system mentioned above, since it is necessary to set up the privilege by the limited small number of server administrators, there is a problem that the load for said setting up the privilege is concentrated to said small number of administrators. In addition, the form that shares the information only in the core of intranet would be better. For example, in the utilizing form that the company system is operated by charging to the third party which is outside of the company, if the necessity of the modification of the ACL8ζ will be occurred by increasing or decreasing of the information sharing members, it will be necessary to ask each time the set up of the operation for the operation person who is outside of said company. Therefore, the problem of reliability, whether the outside operator is believable or not, is retained in addition to the load of the time and cost for such operation.

Example 6 of this invention is done by considering these points mentioned above. Its object is to offer the team data list operation system, which makes not to do the administration of the team data list by the administrator of the server in which the team data list is stored, but can do the administration of the team data list by the member himself who is the administrator of the team data list in the group, and can prevent that said server administrator, the person who is the member but not the administrator, or cracker, etc., modifies the team data list. Moreover, another object of this invention is to offer the team data list processing system, in which the member, who is the administrator of the team data list, can change the administrator of the team data list by himself without any intervention by the outsider, such as the server administrator, etc.

Example 6 is explained by referring to the drawings as follows. At first, the team data list of this invention is explained. The team data list of this invention is the general term of the list which defines the information about the team, and is for the definition of "aggregation of the member", which is applied to the use required the high confidential administration, such as ACL mentioned above. As mentioned above, in the conventional system, the terminal administrator, the network administrator, or the server administrator, etc. who are not the member, can modify the information about the team. On the one hand, the team data list of this invention administrates the information about the team by dividing to the multiple lists (one or more member lists and team master lists mentioned below), so that, the team administration, such as the change of the team master himself, can be done by only the member in the team.

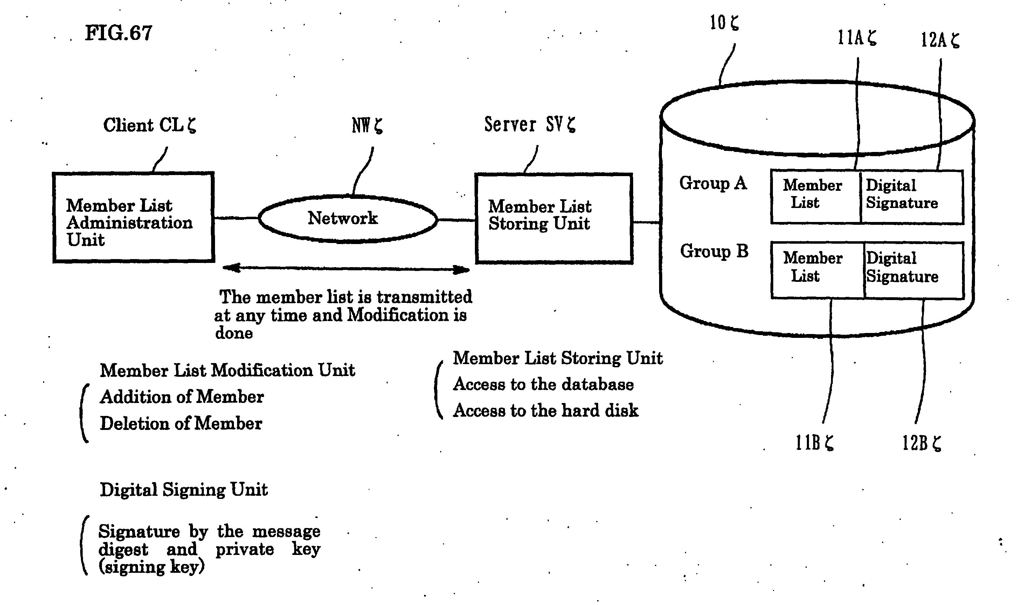

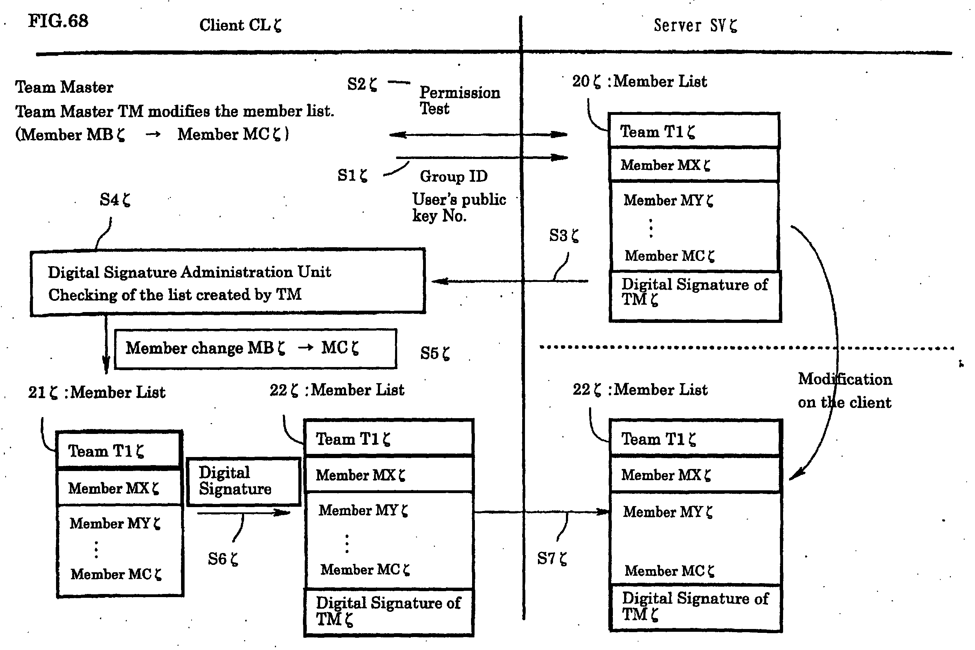

Next, the premised technology of this invention is explained by referring to Figure 67 or Figure 68.
In Figure 67, the assumable structure of the system of this invention is drawn roughly, and is the system constituted by connecting the client CLζ to the server SVζ through the network NWζ. The member list in this figure describes the member, who can access the resources, such as the various information or the functions offered to the user. Moreover, the server SVζ connects with the database 10ζ, which is constructed on the hard desk, etc., and, in said database, the member lists 11Aζ and 11Bζ, each of which is corresponding to the groups to which the multiple members are belonging (the group Aζ and Bζ in Figure 67), are memorized.

The server SVζ has only the member list storing unit, transmits the member list to the client CLζ, and replaces the content of the member list of 11Aζ and the member list 11Bζ in the database 10ζ, according to the member list which was returned from the client CLζ after modification. On the other hand, the client CLζ has the member list administration unit. There is the member list modification unit as one of this member list administration units and, by using said member list modification unit, the client CLζ returns the member list, which was retrieved from the server SVζ, to the server SVζ, after it modifies the list according to the addition or the deletion of the members.

Here, only by the units mentioned above, the server administrator or the cracker, etc. can tamper the member list in the server SVζ by operating the server SVζ without the intervention of the member list administration unit in the client CLζ side. In addition, the problem occurs, i.e., the proper administrator can not be distinguished from the client side, when the server administrator, etc., tampered unfairly the member list with the signature by himself. In order to avoid problems like this, in the system in Figure 67, the signatures of 12Aζ and 12Bζ were affixed to the member list 11Aζ and 11Bζ respectively. Moreover, in order to correspond with these affixes, the client CLζ has the digital signature unit as the one of the member list administration units. This digital signature unit retrieves the private key from the private key file or IC (integrated circuit) cards, etc., in which the private key were memorized, and sends the member list signed with said private key to the server SVζ. Then, the server SVζ can store the pair of the member list and the signature for every group. Thereby, the tampering of one part of the member list by the server administrator, etc., can be detected in the client CLζ side by verifying the signature belonging in the member list.

On the other hand, Figure 68 shows the abstract of the steps when the member list in the server SVζ is modified from the client CLζ side. In the member list 20ζ stored in the server SVζ, the digital signature (also said the electronic signature) of the team master TMζ (detail mentions are later), who is the administrator of the concerned team, is beforehand registered, in addition to the member MXζ, MYζ,···,MBζ (in practice, the public key number corresponding to the each member, as saying next), who comprise the team T1ζ which is the information sharing team.

At first, when the member list is modified, the team master TMζ in the client CLζ side sends the group ID (the identifier) to identify the group or the team, and the user public key number (the user public key No. in the figure) corresponding to the user public key (that is the designated length bite line) in the public key cryptography, to the server SVζ, and requires to send the member list for the server SVζ. (Step S1ζ) In addition, "the user public key number" said here is the information to identify/authenticate the user himself, who is the team master TMζ, etc., and, i.e., the serial numbers which are affixed beforehand to the each user public key. Furthermore, explaining in detail, the user public key number is the information corresponding to the each user public key to identify the user public key uniquely, and, for example, is the serial number of the concerned certificate included in the certificates published by the certification authority. Moreover, as the information to identify/authenticate the use himself, the various information, such as ID or name, etc., which identifies practically the key creator himself, can be used other than the user public key number mentioned above. Incidentally, in the explanation as follows, as one example of the information to identify/authenticate the user himself, the cases of using the public key number are explained.

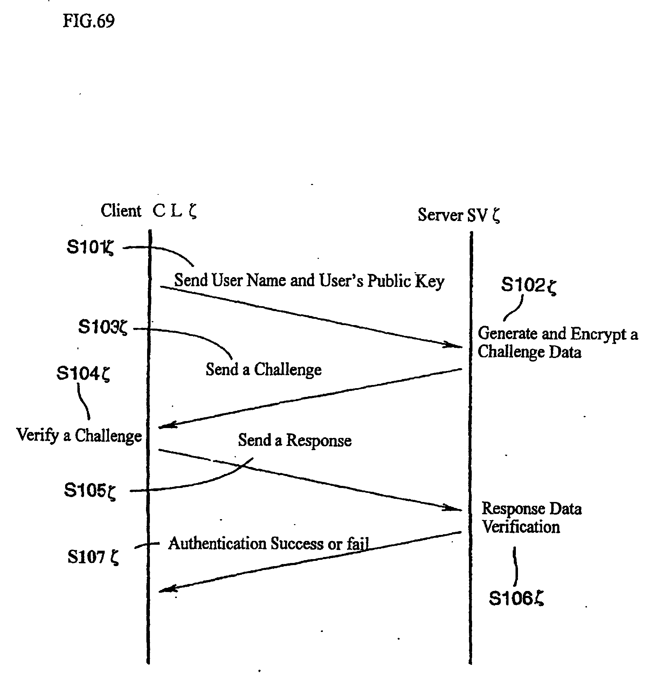

Next, the server SVζ verifies the privilege of the team master TMζ, on the basis of the group ID and the user public key number, which are sent from the client CLζ, as mentioning in detail below. (Step S2ζ) At first, the server SVζ does the identification/authentication of the team master TMζ himself by using the method called "Shake Hand" or "Challenge Response". This process is explained according to the steps in Figure 69 as follows. At first, as explained in Step S2ζ in Figure 68, the user name and the user public key (in practice, the user public key number mentioned above) are sent to the server SVζ side, when the client CLζ accesses the server SVζ. (Step S101ζ) Next, the server SVζ generates the random number, memorizes it inside of said server SVζ and encrypts said random number by the user public key (which is corresponding to the user public key number). (Step S102ζ) Then, the encrypted data is sent to the client CLζ, as the "Challenge Data". (Step S103ζ) The client CLζ decrypts the "Challenge Data" sent from the server SVζ by using the private key corresponding to the user public key. (Step S104ζ) Then, the obtained decrypted data is returned to the server SVζ as the "Challenge Response". (Step S105ζ) The server SVζ compares between the challenge response sent from the client CLζ and the random number generated at Step S102ζ to verify the communication partner. That is, when the both (the challenge response and the random number) matches, it can be verified that the person, who knows the private key corresponding to the user public key sent at Step S101ζ, is the communication partner. (the authentication is succeeded.) On the other hand, when the both does not match, there is the possibility that the communication partner has not the proper privilege. (the authentication is failed.) (Step S106ζ) After then, the server SVζ notifies the result of the verification (the authentication is succeeded or failed.) to the client CLζ. (Step S107ζ)

By this way, when the authentication of the person himself is succeeded, the server SVζ verifies whether the user public key number is written on the member list 20ζ or not, and also verifies whether the user (in this case, the team master TMζ) has the privilege, which can modify the member list 20ζ, or not. Here, it is assumed that the user public key number sent from the client CLζ is written on the member list 20ζ corresponding to the team T1ζ designated by the group ID. Incidentally, when the user public key number is not written on the member list 20ζ, the server SVζ notifies the fail of the authentication to the client CLζ. Next, since the digital signature on the member list 20ζ is the signature of the team master TMζ, the server SVζ agrees the rewriting request of the member list by the team master TMζ and transmits the requested member list 20ζ to the client CLζ side. (Step S3ζ) The client CLζ examines the digital signature in the member list 20ζ and verifies that the member list 20ζ is not tampered at the server SVζ side and is proper one, since said digital signature is affixed by the team master himself. (Step S4ζ) Next, the client CLζ does the member change process, which replaces the member MBζ with the member MCζ in the member list 20ζ, to create the member list 21ζ. (Step S5ζ) Here, since the digital signature is deleted in the created member list 21 at the member change, the client CLζ affixed the digital signature of the team master TMζ to said member list 21 to create the member list 22ζ (Step S6ζ), and returned said member list 22ζ to the server SVζ. (Step S7ζ)

By the way mentioned above, in this invention, the administration itself of the member list is done in the client CLζ side by the administrator selected from the members of the each team, and, in the server SVζ side, the structure, in which the persons who have not proper privilege, such as the person who corresponds to the server administrator or cracker, etc., can not tamper the member list unfairly, is employed. Then, the following example is the technology which is advanced more on the base of the premised technology mentioned above, and can reach the object of this invention mentioned above by incorporating the units describing below. First, in the administration of the member list of the department where many persons are employing, the structure of the administration, in which the multiple administrators administrate the member list, is realized, in order to decrease the load of one administrator. The second, the change of the team data list administrator by the team data list administrator himself is realized. For example, it is the case, etc., that the general manager, who is the team data list administrator, assigns the new general manager to the new team data list administrator, when he is transferred. In such case, while the present general manager, who is the team data list administrator, can delegate the administration privilege to the new general manager, there is no room for the third person, i.e., the server administrator, to intervene at this delegation of the privilege.

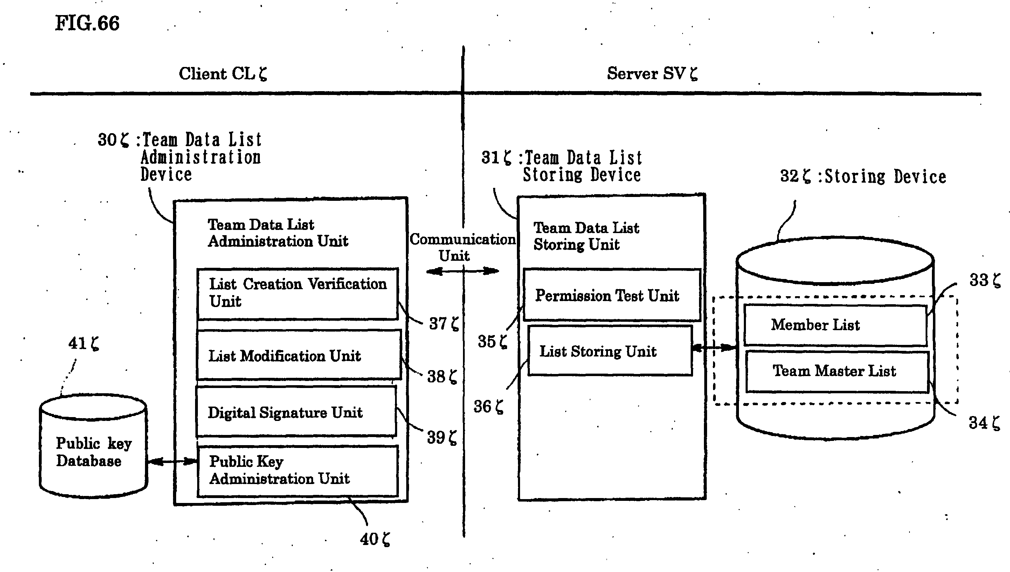

Then, this example is explained about the system having the two devices, which are the team data list administration device and the team data list storing device, as follows. Figure 66 is the block diagram, which shows the whole structure of this example, which has the team data list administration device and the team data list storing device. In this figure, the team data list administration device 30ζ and the team data list storing device 31ζ, are equipped with the team data list administration unit and the team data list storing unit respectively mentioned blow in detail, and each unit is delivering and receiving the data each other by using the communication line. Either the team data list administration device 30ζ or the team data list storing device 31ζ can be realized by the general computers, such as work stations, etc., and the programs to realize the team data list administration unit and the team data list storing unit (the team data list administration program and the team data list storing program), are memorized on the main memories of these computers.

One part or whole of these program is memorized on the transportable memory medium, such as the floppy desk, the IC (an integrated circuit) card, the optical-magnetic desk, or the CD-ROM (compact desk - read only memory), etc., or the computer readable memory medium, such as the large capacity memory medium of the hard desk, etc., in the computer. That is, said programs may be either the ones that realizes the one part of the units which will be mentioned in detail as follows or the ones that realizes these units by cooperating with the programs which is already memorized in the computer. And, at the beginning of the operation of the team data list administration device and the team data list storing device, these programs are transmitted from the memory medium to the main memory by directing of CPU (central processing unit) in the computer. Then, CPU performs the programs transmitted on the main memory, so that CPU controls the each part of the device to realize the various processes mentioned in detail below.

In this example, the persons, who can access to the team data list, are classified to 3 kinds, i.e., the member, the sub master, and the team master, corresponding to the content of their privilege, and their privilege increases according to this order. The sub master is the administrator in the team, who is nominated by the team master, and can not change the team master and the sub master but can change the general member, such as addition or deletion. On one hand, while the team master can change the sub master or the general member, said team master can change the team master himself On the other hand, the general member, who is not the team master and the sub master, is the person sharing the information and units, and is never given the privilege to modify the content of the team data list, etc.

While the sub master and the team master are given the special privilege, they are also the member of the team, and are called as the member in this mean.

By the way, the memory device 32ζ, which can file the database, such as the hard desk, etc., are connected with the team data list storing device 31ζ in Figure 66. This memory device 32ζ memorizes the pair of the team data list, which comprises the member list 33ζ and the team master list 34ζ in every teams which consist of the multiple members. In this figure, only one pair of the member list 33ζ and the team master list 34ζ is shown from the convenience of description but, in fact, these pairs exist in the number of the teams. The member list 33ζ comprises the list of the member who shares the information and units, which are offered to the users, and includes the identifying information of the member, the public key given to the member, the ID of the person who has private key corresponding to said public key (hereinafter refers to as the public key ID), the team ID identifying the team, the signature of the list creator (i.e., the team master or the sub master), the time stamp indicating the time when the concerned member list 33ζ was created, the information about the units which can be used by the member in the team (for example, application), and the information to hierarchize the team as tracing the company organization. As the other information about each member, the member list 33ζ, includes an e-mail (electronic mail) address and own address of the member, and can administrate the information resource about each member simultaneously by using these information. On the one hand, the team master list 34ζ, comprises the list of the team master and the sub master and includes the identifying information of the team master or the sub master, the public key, the public key ID, the team ID, the signature of the team master, and the time stamp indicating the time when the concerned team master list 34ζ was created, etc. As the other information about the team, the team master list 34ζ includes the number of the team member, the time creating the team, the various units which can be used by each member in the team, etc., and can administrate the information resource about each team simultaneously.

Next, in the team data list storing device 31ζ, when the modification request or the reference request to the member list 33ζ or the team master list 34ζ is occurred from the client side CLζ, the permission test unit 35ζ verifies the claimant himself in the client CLζ side on the basis of the contents of these two lists, and verifies whether said claimant is the person, who has the proper permission to do said modification or said reference, or not, and judges whether said member list 33ζ or said team master list 34ζ should be transmitted to the client side or not. Moreover, when the permission test unit 35ζ uses the member list 33ζ or the team master list 34ζ, the list storing unit 36ζ does the process, which retrieves these lists from the memory device 32ζ or stores these data lists to said memory device 32ζ. In the following explanation, it is premised that the list storing unit 36ζ always intervenes when the permission test unit 35ζ uses the member list 33ζ or the team master list 34ζ. However, the explanation about this will be omitted since it becomes complicated.

Next, in the team data list administration device 30ζ, the list creator verification unit 37ζ retrieves the member list 33ζ or the team master list 34ζ from the team data list storing device 31ζ, and verifies whether these lists are created by the administrator who has the administration privilege (i.e., the team master or the sub master) or not. By this verification, it can be detected that the administrator of the server SVζ or the person having not the proper privilege, such as the cracker, etc., who invades unfairly into the server SVζ, has tampered the member list 33ζ or the team master list 34ζ. The list modification unit 38ζ does the modification, i.e., the addition, the deletion or replacement, etc., of the member or the administrator, to the member list 33ζ or the team master list 34ζ which is retrieved by the list creator verification unit 37ζ. Moreover, the digital signature unit 39ζ affixes the digital signature of the person who modified these lists (i.e., the team master or the sub master), to the member list 33ζ or the team master list 34ζ which is modified by the list modification unit 38ζ, by using together the encryption using the private key or signed key, which can be known by only the person who modified these lists himself, and Hash function. On the one hand, the public key administration unit 40ζ accesses the public key database 41ζ, which is connected with the team data list administration device 30ζ, to retrieve the public key and the public key ID corresponding to said public key. Incidentally, in the practical form, the public key database 41ζ is, of course, considered to be not only the local form, in which said public key database 41ζ directly connects with the team data list administration device 30ζ, but also the form, which is in the server (for example, the certificate authority) which is located on the network, such as internet, etc. By such a form, it becomes possible that the public key administration unit 40ζ, for example, accesses the public key database 41ζ through the home page registered on the certificate authority, and retrieves the public key and the public key ID mentioned above from there, as the file format.

In addition, in Figure 66, the public key database 41ζ and the memory device 32ζ are considered as different formulation from the team data list administration device 30ζ and the team data list storing device 31ζ each other. However, for example, it may be, of course, acceptable that the team data list administration unit 30ζ includes the public key database 41ζ or the team data list storing unit 31ζ includes the memory device 32ζ.

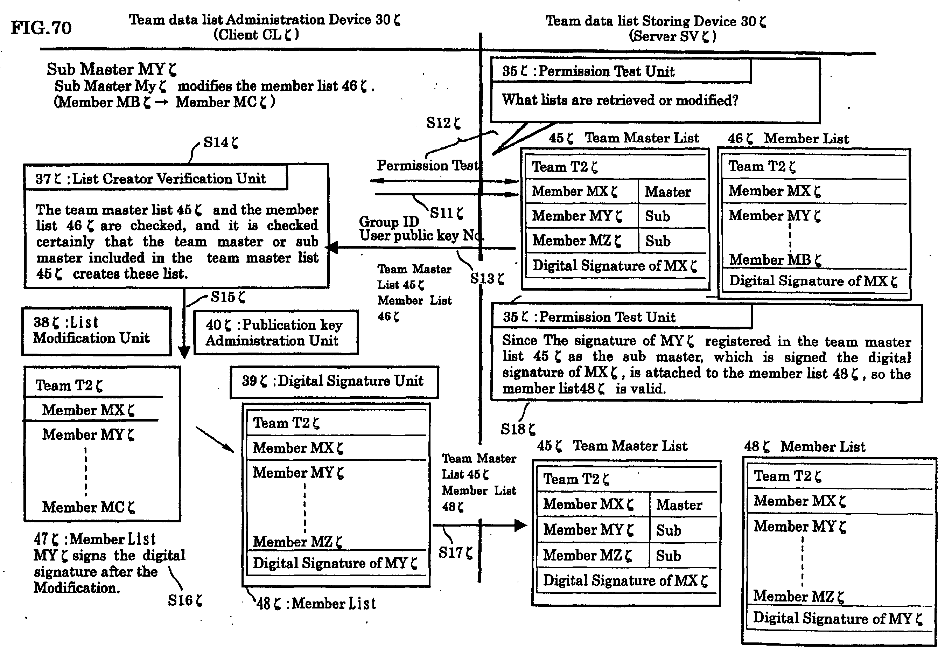

Next, the operation of the system, which has the team data list administration device 30ζ and the team data list storing device 31ζ, in the structure mentioned above, is explained. First, Figure 70 shows the operation process, which changes the member registered in the member list, in the operations, when the multiple administrators administrate the members. In the team data list storing device 31ζ, since the team T2ζ, which corresponds to the team master list 45ζ, is created by the team master TMζ, the digital signature of the member MXζ, who is the team master, is affixed. In this team master list 45ζ, the member MXζ is registered as the team master, and the member MYζ and the member MZζ are registered as the sub master. In addition, in the following explanation, when a certain member is the team master or the sub master, these members are written as the team master MXζ and sub master MYζ respectively.

### Member change

In the following, the case, that the member MBζ is departed from the member by the personnel transfer, etc., and the member MCζ joins as a new member, is assumed. Therefore, the sub master MYζ replaces the member MBζ belonging in the team T2ζ with the member MCζ. First, the team data list administration device 30ζ sends the modification request of the member to the team data list storing device 31ζ, with the group ID indicating the team T2ζ and the user public key number of the sub master MYζ. (Step S11ζ) In the team data list storing device 31ζ, the permission test unit 35ζ certifies the sub master MYζ by the Shake Hand mentioned above, and then, while said permission test unit 35ζ verifies that the public key number of the member MYζ exists in the concerned member list 46ζ by checking the member list 46ζ about the team T2ζ designated by the group ID, said permission test unit 35ζ verifies, that the sub master MYζ is the sub master of the team T2ζ and has the modification privilege of the member, by checking the team master list 5ζ. (Step S12ζ) Next, the permission test unit 35ζ transmits the team master list 45ζ and the member list 46ζ about the designated team T2ζ, to the team data list administration device 30ζ side. (Step S13ζ)
In the team data list administration device 30ζ, the list creator verification unit 37ζ checks the digital signature included in the team master list 45ζ and the member list 46ζ, which are transmitted from the team data list storing device 31ζ, and verifies that these list is right one, which was created by the person registered in the team master list 45ζ (i.e., the team master MXζ) (Step S14ζ)

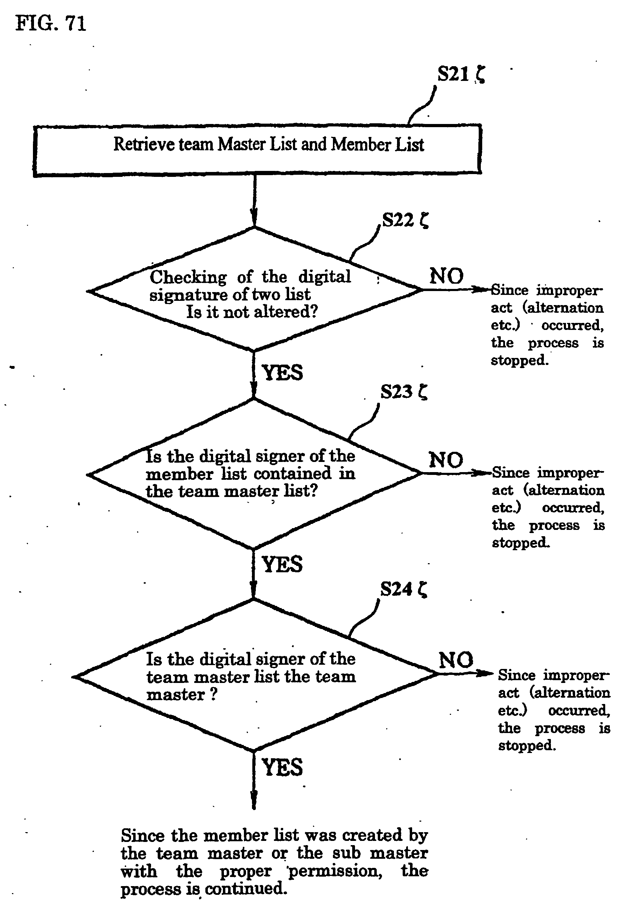

Here, the verification processed by the list creator verification unit 37ζ is explained in detail with the flow chart in Figure 71. At first, the list creator verification unit 37ζ retrieves the team master list 45ζ and the member list 46ζ from the team data storing device 31ζ (Step S21ζ), and then, verifies the digital signatures included in these two lists. (Step S22ζ) As the result of this verification, when any one of the digital signatures has been tampered, the process executed at that time, such as the member change, etc., is stopped, since it is considered that the improper act was done. On the other hand, when the tampering was not detected, the list creator verification unit 37ζ verifies that the signer of the member list 46ζ (i.e., the member MXζ in Figure 70) is included in the team master list 45ζ as the team master or the sub master. When the signer is not included in the team master list 45ζ, the process executed at that time is stopped since the improper act was done the same way as the Step S22ζ. (Step S23ζ)

However, when the signer of the member list 45ζ is included in the team master list 45ζ, the authentication of the member list 46ζ is verified, so that the list creator verification unit 37ζ continuously verifies whether the signatory of the team master list 45ζ (i.e., the member MXζ in Figure 70) is the team master or not. (Step S24ζ) When the signer is not the team master, the process is stopped in the same way as the Step 22ζ to Step 23ζ, since the improper act is occurred. On the other hand, when the signer of the team master list 45ζ is the team master, the authentication of the team master list is also verified and the following process is continued. For example, in the case mentioned above, the list creator verification unit 37ζ sends the team master list 45ζ and the member list 46ζ to the list modification unit 38ζ.

After the authentication of the team master list 45ζ and the member list 46ζ is verified by this way, in the Step S15ζ in Figure 70, the list modification unit 38ζ replaces the member MBζ, who is described in the member list 46ζ, with the member MCζ to create the member list 47ζ, and sends this member list 47ζ to the digital signature unit 39ζ. The digital signature unit 39ζ retrieves the private key about the sub master MYζ from the private key file mentioned above, etc., and creates the member list 48ζ, in which the digital signature of the sub master MYζ is affixed to the member list 47ζ, by using said private key. (Step S16ζ) After then, the digital signature unit 39ζ returns the team master list 45ζ and the member list 48ζ to the team data list storing device 31ζ. (Step S17ζ)

In the team data list storing device 31ζ, the permission test unit 35ζ verifies whether the digital signatures of said transmitted team master list 45ζ and the member list 48ζ are tampered or not, and also verifies the content of these lists as follows. That is, since the signer of the team master list 45ζ is the team master MXζ, the authentication of said team master list 45ζ is verified. On the one hand, the signer of the member list 48ζ is the sub master MYζ, and since it is judged that said sub master MYζ is the person, who was permitted to do the member change, by checking the team master list 45ζ whose authentication was verified, it can be believed that the member list 48ζ is proper one. On the other hand, when the authentication of the transmitted list can not be verified, the permission test unit 35ζ stops the process without modification of the team master list and the member list. (Step S18ζ) As mentioned above, the member change in the member list has been done.

### Sub master change

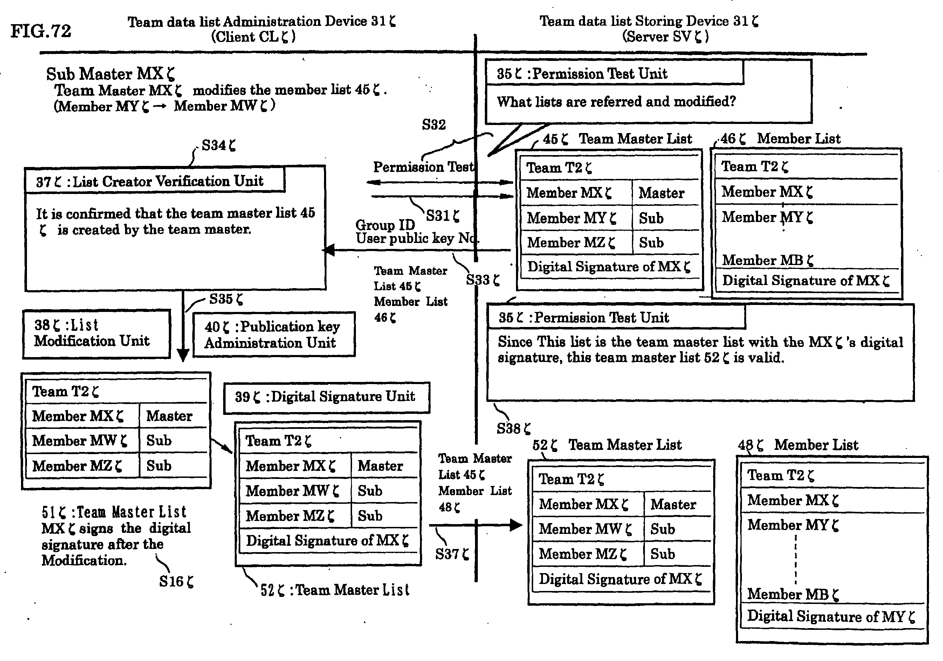

Next, the process steps, when the team master modifies the sub master, are explained by checking Figure 72. In the followings, the case, that the team master MXζ, who belongs in the team T2, replaces the member MYζ, who is the sub member, to the member MWζ, is assumed. When the team master MXζ requests to change the sub master from the member MYζ to the member MWζ, to the team data list administration device 30ζ, in said team data list administration device 30ζ, the list creator verification unit 37ζ sends the modification request of the sub master to the team data list storing device 31ζ with the group ID and the user public key number of the team master MXζ, in the same way as Step S11ζ in Figure 70. (Step S31ζ) In the team data list storing device 31ζ, the permission test unit 35ζ certifies the team master MXζ by Shake Hand according to the same steps explained in Step S12ζ in Figure 70, and then, verifies that the member MXζ is the team master of the team T2ζ and was given the modification privilege of the sub master, while said permission test unit 35ζ verifies that the user public key was written in the member list 46ζ. (Step S32ζ) Next, the permission test unit 35ζ transmits the team master list 45ζ and the member list 46ζ to the team data list storing device 30ζ as same as Step S13 in Figure 70. (Step S33ζ)

In the team data list administration device 30ζ, the list creator verification unit 37ζ investigates the digital signature included in the team master list 45ζ. By this way, the list creator verification unit 37ζ verifies that this team master list 45ζ is the proper one, which was created by the member MXζ who is the team master, and delivers said team master list 45ζ and the member list 46ζ to the list modification unit 38ζ. (Step S34ζ) The list modification unit 38ζ creates the team master list 51ζ, in which the sub master MYζ, who is described in the team master list 45ζ, is replaced to the sub master MWζ, and sends said team master list 51ζ to the digital signature unit 39ζ. (Step S35ζ)

The digital signature unit 39ζ retrieves the private key about the team master MXζ, from the above-mentioned private key file, etc., and creates the team master list 52ζ, in which the digital signature of the team master MXζ is affixed, to the member list 51ζ (Step S36ζ), and then, returns said team master list 52ζ and the member list 46ζ to the team data list storing device 31ζ. (Step S37ζ) In the team data list storing device 31ζ, the permission test unit 35ζ verifies the contents of the transmitted team master list 52ζ and the member list 46ζ according to the same step in Step S18ζ in Figure 70. In this case, the each signer of the team master list 52ζ and the member list 46ζ is the team master MXζ, so that the authentication of these lists is verified. On the other hand, when the authentication of the transmitted lists can not be verified, the permission test unit 35ζ stops the process without modification of the member list. (Step S38ζ) By this way mentioned above, the modification of the sub master in the team master list is done.

In addition, the example in Figure 72, the digital signature of the original member list is that of the team master MXζ, but there is no problem if this signature is that of the sub master MYζ. That is, the team master MXζ, who has the modification privilege of the sub master, can affix the own signature to the member list 46ζ. Then, in this case, the digital signature of the sub master MYζ is deleted from the member list 46ζ at the team data list side and the digital signature of the team master MXζ is affixed to said member list 46ζ instead of said signature of the sub master MYζ, and then, said member list 46ζ is returned to the team data list storing device 31ζ. By this way, the member list, which was signed by the sub master MYζ who is not the member, is not stored in the team data list storing device 31ζ.

### Team master self change

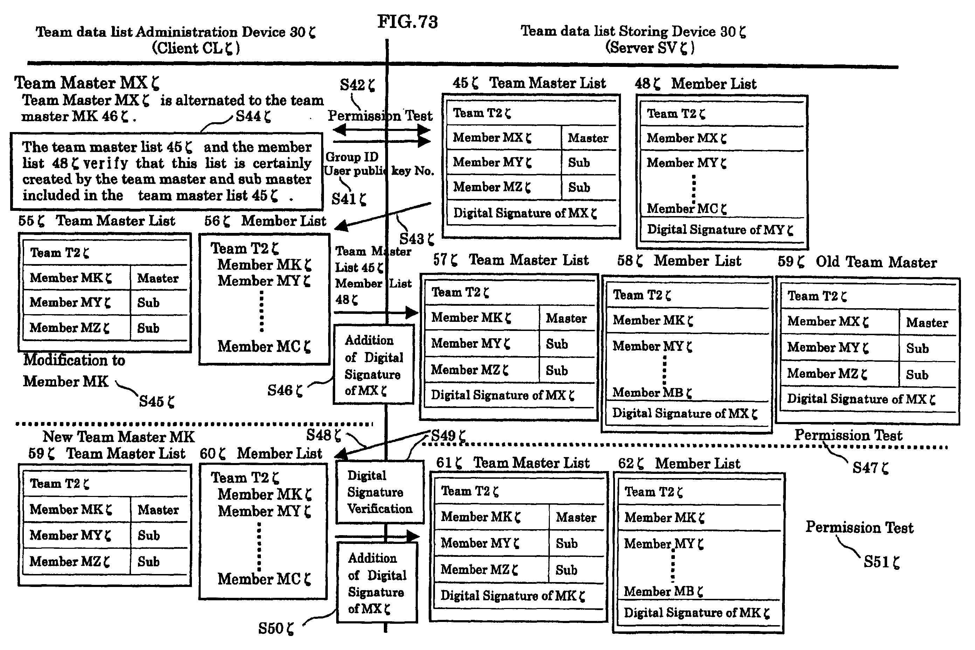

Next, the procedure at the time of the team master self change is explained in Figure 73. As mentioned below, it is assumed that the case, when the team master MXζ delegates the privilege to the team master MKζ to modify the team master. The team master list 45ζ stored in the team data list storing device 31ζ is the same list that was shown in Figure 70 or Figure 72, and the member list 48ζ is the same list that was modified in the member change shown in Figure 70.

First, the team master MXζ requests to the team data list administration device 30ζ, to change the team master to the member MKζ. Then, the list creator verification unit 37ζ sends the team master list 45ζ and the reference request of the member list 48ζ, to the team data list storing device 31ζ, with the group ID and the user's public key number of the team master MXζ, as well as Step S11ζ in Figure 70. (Step S41ζ)

In the team data list administration device 31ζ, the permission test unit 35ζ authenticates the member MXζ by Shake Hand as same step explained at Step S12ζ in Figure 70. Then, the permission test unit 35ζ verifies that the user's public key number of the member MXζ exists in the member list 48ζ and also verifies that the member MXζ is the team master of the team T2ζ and was given the reference privilege of the requested list. (Step S42ζ)

Next, the permission test unit 35ζ transmits the team master list 45ζ and the member list 48ζ about the designated team T2ζ, to the team data list administration device 30ζ as well as Step S13ζ of Figure 70. (Step S43ζ) At this time, the permission test unit 35ζ stores the team master list 45ζ, in order to use it at the permission test executed later. Next, in the team data list administration device 30ζ, the list creator verification unit 37ζ investigates the each digital signature of the transmitted team master list 45ζ and the member list 48ζ, and verifies that whether each list is the list rightly created by the team master MXζ and the sub master MYζ who are included in the team master list 45ζ. (Step S44ζ) Thereby, the list creator verification unit delivers two transmitted lists to the list modification unit 38ζ.

Next, the list modification unit 38ζ replaces the member MXζ, who is the team master described in the team master list 45ζ and the member list 48ζ, to the member MKζ, and then, creates the team master list 55ζ and the member list 56ζ, respectively to send out said two lists to the digital signature unit 39ζ. (Step S45ζ) The digital signature unit 39ζ retrieves the private key about the team master MXζ from the private key file mentioned above, and then, creates the team master list 57ζ and the member list 58ζ in which the digital signature of the team master MXζ are affixed to the team master list 55ζ and the member list 56ζ to return said two lists to the team data list storing device 31ζ. (Step S46ζ)

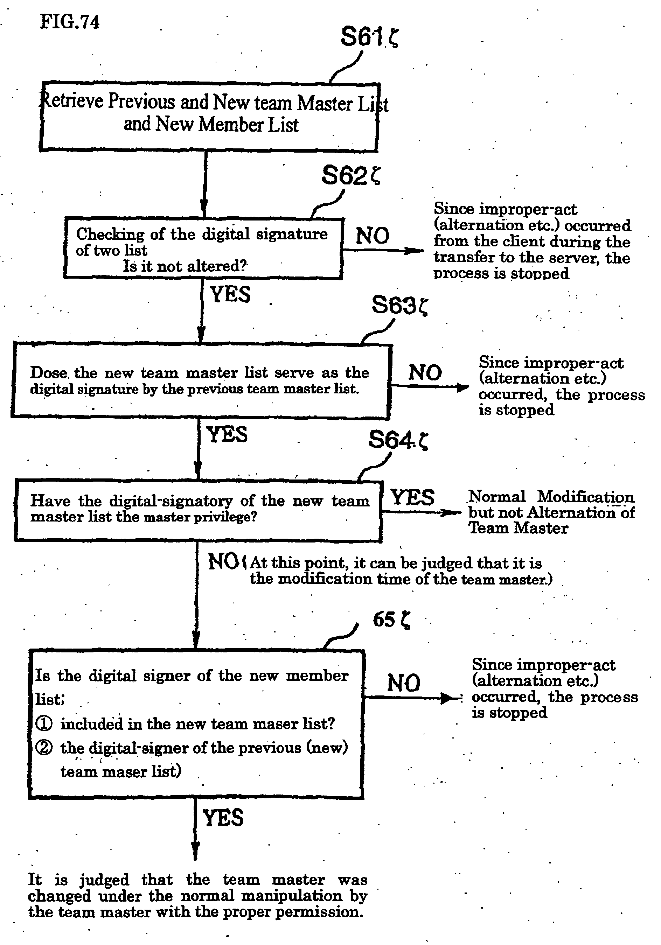

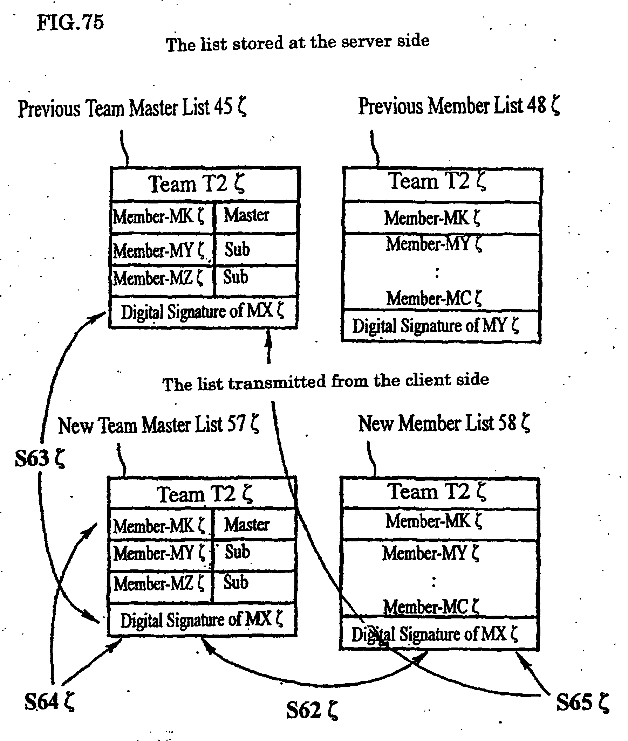

In the team data list storing device 31ζ, the permission test unit 35ζ does the permission test according to the flow chart shown in Figure 74, based on 3 list that is two transmitted lists and one team master list 45ζ (i.e., the old team master list) stored in the previous Step S43ζ. Moreover, Figure 75 shows the state of the team master list or the member list, in which the comparison and reference are done at each step of Figure 74, when such permission test is done.

First, the permission test unit 35ζ retrieves the team master lists 57ζ and 45ζ, as the new and old team master list, and also retrieves the member list 58ζ, as the new member list. (Step S61ζ) Next, the permission test unit 35ζ investigates the digital signatures of the team master list 57ζ and the member list 58ζ. (Step S62ζ) If either one is tampered, since the improper act has occurred in the process in which these two lists are transmitted to the team data list storing device 31ζ (server SVζ) from the team data list administration device 30ζ (client CLζ), the permission test unit 35ζ stops the team master change process.

On the other hand, if both of two transmitted lists are not tampered, the permission test unit 35ζ investigates the digital signature of the new team master list 57ζ, and verifies that the said digital signature is signed by the team master MXζ who is the signer of the old team master list 45ζ. (Step S63ζ) This is to verify that the privilege was delegated from the person who was the team master from the origin, and if the verification result of Step S63ζ is "NO", since the unjust act by the breach of privilege, etc., may occur, the team master change process is stopped.

Reasonably, in this case, since the digital signature of member MXζ is affixed to the team master list 57ζ, the permission test unit 35ζ verifies whether the signer of new team master list 57ζ has the master privilege or not, in order to distinguish the team master self change and other usual modification. (Step 64ζ) For example, in the member change explained in Figure 70 mentioned above, the digital signature of the team master list 45ζ is done by the member MXζ having the master privilege, this is the same as the team master 52ζ in the sub master change of Figure 72 (i.e., when the decision result of Step S64ζ is "YES").

On the other hand, when the team master himself is changed, the processing time of Step S47ζ of Figure 73 is equivalent to the transition period when the delegation of privilege to the member MKζ from the member MXζ is done , and the team master list 57ζ is the transition state that the member MKζ, who is the new administrator, is the master but the member MXζ, who is the old administrator, signed, so that the signer of the team master list 57ζ seems not to have the master privilege. If such a state is detected and the team master self change is recognized (the decision result of Step S64ζ is "NO"), the permission unit 35ζ investigates the digital signature of the new member list 58ζ to verifies whether said digital signature is included in the new team master list 57ζ or not, or whether the signer of said digital signature is the signer of one of the team master lists, 57ζ and 45ζ, which are new and old, or not. (Step S65ζ) If neither of the conditions is satisfied, it seems that the improper act, such as tampering, etc., is occurred, so that the permission test unit 35ζ stops the team master change process.
In fact, in this case, since the signer of the member list 58ζ is the same as the signer of the new and old team master lists, 57ζ and 45ζ, the permission test unit 35ζ can judge that the member list was created through the normal procedure. By the process from Step S62ζ to Step S65ζ mentioned above, it can be judged that the team master himself was modified through the normal operation by the team master MXζ.

Then, the permission test unit 35ζ sends out the new and old team master lists, 57ζ and 45ζ, and the member list 58ζ to the team data list administration device 30ζ. (Step S48ζ) The process after this is done by the directive of the new team master MKζ, and is the process for rewriting the digital signature of the team master list 57ζ and the member list 58ζ by the digital signature of the team master MKζ. In the team data list administration device 30ζ, the list creator verification unit 57ζ verifies the digital signature included in each transmitted list. (Step S49ζ) That is to say, the list creator verification unit 37ζ verifies that neither of the digital signatures of the old team master list 45ζ nor the new member list 58ζ is tampered, and, next, verifies whether the digital signature of the new and old team master lists, 57ζ and 45ζ, are identical or not, and furthermore, verifies whether the member MXζ, who is the signer of said list, has the privilege of the team master, on the basis of the description of the old team master list 45ζ. In this case, since all of three conditions described now are satisfied, the list creator verification unit 37ζ delivers the team master list 57ζ and the member list 58ζ to the list modification unit 38ζ.

Next, the list modification unit 38ζ creates the team master list 59ζ and the member list 60ζ to deliver to the digital signature unit 39ζ, on the basis of the team master list 57ζ and the member list 58ζ. The digital signature unit 39ζ retrieves the private key of the member MKζ from the private key file mentioned above, etc., and affixes the digital signature of the member MKζ to each of the team master list 59ζ and the member list 60ζ, to create the team master list 61ζ and the member list 62ζ, and then, returns these lists to the team data list storing device 31ζ. (Step S50ζ) In the team data list storing device 31ζ, the permission test unit 35ζ does the permission test to the transmitted team master list 61ζ and the member list 62ζ, according to the procedure shown in Figure 74. (Step S51ζ) In this case, since either of the signers of these two lists is the team master MKζ, either of these two lists can be judged as the proper one. In addition, in this case, since it is the usual modification, the decision result by step S64ζ of Figure 74 is "Yes". However, if the authentication cannot be verified about the transmitted list, the permission test unit 35ζ stops the processing for the team master list and the member list without updating. The team master self change is performed through the process mentioned above.

In addition, during the transition period from Step S47ζ to Step S51ζ in Figure 73, when the member list reference request, the member list modification request, and the master change request are made from the team data list administration device 30ζ to the team data list storing device 31ζ, the following verification of the list creator is done in the team data list administration device 30ζ and team data list storing device 31ζ.

First, when there is the member list reference request from the team data list administration device 30ζ, the team data list storing device 31ζ transmits the old team master list 45ζ and the new member list 58ζ to the team data list administration device 30ζ. In the team data list administration device 30ζ, after verification whether the digital signature of two transmitted lists is not tampered or not, the list creator verification unit 37ζ verifies whether the signer of said list (in the case of Figure 73, the member MXζ) has the privilege of the team master or not, on the basis of the description of the old team master list 45ζ.

On the other hand, when there is the member list modification request or the master change request from the team data list administration device 30ζ, the team data list storing device 31ζ transmits the new and old team master list, 57ζ and 45ζ, and the new member list 58ζ to the team data list administration device 30ζ. In the team data list administration device 30ζ, the list creator verification unit 37ζ verifies, whether the digital signature of two transmitted lists is tampered or not as it does in the case of the member list reference request. Next, the list creator verification unit 37ζ compares each digital signature of the new and old team master lists, 57ζ and 45ζ, to verify whether they are matched or not. Next, the list creator verification unit 37ζ verifies whether the signer of the old team master list 45ζ has the privilege of the team master or not, as it does in the case of the member list reference request.

### Automation of the team master verification

In the example mentioned above, whenever the team data list is used, the user needs to verify whether the team master is the surely right one or not, in the client CLζ side. For example, the following message is displayed on the display of the computer which constitutes team data list administration device 30ζ, i.e., "This list is administrated normally, with the following members serve as the administrator. Identifier: the member MXζ, Organization: MITSUBISHI MATERIALS CORP. Click O.K. button with a mouse to continue the operation." That is to say, since the user needs to confirm the concerned message visually, there may be troublesome impression on said user. In order to improve this point, it may be solved by the way that the following unit is added as the new unit to cooperate with the list creator verification unit 37ζ, or said unit is incorporated as one unit of list creator verification unit 37ζ.

That is, the public key of the team master is beforehand registered in the public key database 41ζ (refer to Figure 66) in the side of the client CLζ for every team, and the public-key administration unit 40ζ retrieves the public key of the team master from the public key database 41ζ, to notify this to the list creator verification unit 37ζ. Or, it may be constituted that the serial number, etc., for discriminating the public key, as the information about the public key, is registered in the public key database 41ζ, and after the public key administration unit 40ζ retrieves this serial number from the public key database 41ζ, it retrieves the public key registered the outside of the team data list administration device 30ζ by using the serial number, and delivers to the list creator verification unit 37ζ.

On the other hand, the list creator verification unit 37ζ verifies the digital signature included in the team master list transmitted from the team data list storing device 31ζ, on the basis of the public key of the team master notified from the public key administration unit 40ζ, instead of taking out the message which was mentioned above on the display of the computer, so that may judge that the concerned signature is the thing of the team master. By this way, the authentication of the team master can be verified, without verifying visually by the user, on the basis of the viewing on the display.

Automation of the team master verification at the time of the team master change.

By the way, the team master becomes unable to use the public key of the member MXζ who is the old administrator, when the member MXζ is modified to the member MKζ by the normal procedure, as shown in Figure 73. Therefore, it is necessary to modify automatically the public key of the team master registered in the client CLζ side, without the user's intervention. In order to realize this modification process, the following processes may be done, after creating the final team master list 61ζ. (referring to Figure 73) (i.e., after step S51ζ).

First, in the team data list storing device 31ζ, the permission test unit 35ζ transmits the old team master list, the team master list of the transition period, and the final team master list (i.e., the team master list 45ζ,,57ζ, and 61ζ), to the team data list administration device 30ζ. In the team data list administration device 30ζ, the list creator verification unit 37ζ knows, that the member MXζ is registered as the team master, in the public database 41ζ through the public key administration unit 40ζ. Next, the list creator verification unit 37ζ can verify that the member MXζ, who was the old administrator, carried out the delegation of privilege to the member MKζ, who is the new administrator, in conformity with the normal procedure, from three lists transmitted from the team data list storing device 31ζ.

That is to say, the team master registered in the team master lists 45ζ, 57ζ, and 61ζ, has been changed from the member MXζ to the member MKζ to the member MKζ respectively, and, on the other hand, the digital signatures affixed to these lists have been changed from the member MXζ to the member MXζ to the member MKζ, respectively. From these things, the list creator verification unit 37ζ modifies the public key of the person, who is registered in the public key database 41ζ as the team master, to the public key of the member MKζ from the public key of the member MXζ, through the public key administration unit 40ζ. In addition, the user may also be asked for the verification, at the time of the change of the team master, since the change of the team master is not occurred so many times. Moreover, as the information for verification of the team master, the various information, of course, can be used besides the public key.

In addition, in the example mentioned above, although only one member list was prepared, even if the multiple member list is used, the team master self change and the resource administration by the multiple team master are realizable. For example, it can be considered that to make two or more member lists subdivide the member list, according to the privilege haven by each member. Thereby, it is enabled to make the information shared by the members, who belong in the each member list, to the different one, according to the member list.

As mentioned above, in the record media in which the team data list administration program was recorded, the team data list administration program makes the computer execute the following processes;
(1) The process which notifies the information for the principal identification/authentication of the modification director to designated destination, and which retrieves the team data list from the above mentioned destination, includes the information about the team which is prepared by the member sharing the resource and the digital signature of the master having the administration privilege of said information, and is prepared with corresponding to the privilege of the member belonging the team;
(2) The verification process which verifies whether the master, who has the privilege, creates said team data list or not, on the basis of the said retrieved content of data list;
(3) The list modification process which adds the modification, which corresponds to the modification directive mentioned above, to the data list, in which it is verified that said data list is created by the master having the privilege;
(4) The signing process which creates the digital signature of said director, and sends said team data list, which is modified by said modification process, to said destination with affixing said digital signature.

Moreover, the above-mentioned team data list administration program uses one or more member lists in which the member information about the above-mentioned member and the digital signature of the above-mentioned master were at least included, and the master list in which the above-mentioned master information showing the privilege of the above-mentioned master and the digital signature of said master were at least included, as the above-mentioned team data list.
Moreover, in the above-mentioned team data list administration program, the team master having the privilege of the modification of the above-mentioned master list is included in the above-mentioned master. The above-mentioned modification directive is the modification directive of the above mentioned team master. The above-mentioned verification process may have the process which sends the above-mentioned modified member list and the master list to the above-mentioned destination, and the process which verifies the digital signature of the above-mentioned master, who is included in the member list and the master list which are at the transition period, when said lists is returned from said destination corresponding with said process. The above-mentioned signing process may also have the process which creates the digital signature of the team master, who is the one after the modification directed by the above-mentioned modification directive, and the process which returns the new member list and new master list, which affixed the said digital signature to the member list and the master list, which were at said transition period, to the above-mentioned destination.

And, the above-mentioned team data list administration program may also make the computer to do further the process which retrieves the identification information for identifying the above-mentioned team master himself, from the designated place to register beforehand, and the process which verifies whether the digital signature of this master is the digital signature of the above-mentioned team master or not, on the basis of the identification information of the above-mentioned team master and the digital signature of said master, which is included in the above-mentioned member list and the master list, which are transmitted from the above-mentioned destination.
And, the above-mentioned team data list administration program may also make the computer to do further the process which verifies that the above mentioned team master was changed through the normal procedure, on the basis of the change of the contents of the master list retrieved at the time of the above-mentioned modification directive, the master list at the above mentioned transition period, and the above-mentioned new master list, and the process] which retrieves the identification information of the team master who is the one after modification directed by the above-mentioned modification direction, and the process which updates the above-mentioned identification information of the team master who is the one before modification, which was registered beforehand, by said identification information.

On the other hand, in the record media which recorded the team data list storing program, the team data list storing program makes the computer to do the following process;
(1) The memorizing process which memorizes beforehand the team data list, in which the information about the team comprising the members sharing the resources and the digital signature of the master having the administration privilege of said information, are included, and is prepared corresponding to the privilege of the member in the team;
(2) The process which judges whether the above-mentioned director has the above-mentioned privilege of the request or not, on the basis of the information for the identification/authentication of the director himself, who requested the said team data list and the reference, when said reference request was sent from the designated claimant, and then, sends said team data list to said claimant only when said claimant has the privilege of said request;
(3) The permission test process which verifies the authentication of the team data list on the basis of the content of said team data list sent from the claimant, when the updating request was sent from said claimant, and then, updates said memorized team data list, only when said authentication was verified.

Moreover, in the above-mentioned team data list storing programs, the above-mentioned memorizing process may also make the computer execute the process, which memorizes beforehand the member information about above-mentioned member and one or more member lists at least including the digital signature of the above-mentioned master, and the process which memorizes beforehand the master information indicating the privilege of said master and the master list at least including the digital signature of said master.

Moreover, in the above-mentioned team data list storing programs, the above-mentioned master list includes the team master who has the privilege of the modification of the above-mentioned master list, and above-mentioned permission test process may also make the computer to do the following process, that is to say,
the process which stores the master list before this modification as the old master list when the modification direction of said team master by said director was notified from above-mentioned claimant;
the process which sends said master list and the above-mentioned member list to said claimant according to the request of said claimant, and detects the modification of said team master by receiving, from said claimant, the modified master list and the member list about the information of said team master, which are at the transition state;
the process which verifies the authentication of the modification of said team master, on the basis of said master list and member list which are at the transition state, when the modification of said team master was detected;
the process which sends said master list and member list, which are at the transition state, to said claimant, when the authentication of said modification was verified, and verifies the authentication of said lists by receiving, from said claimant, the new master list and member list in which the digital signature of the team master of said modification is affixed, who is designated by said modification directive to said lists at the transition state, and updates said master list and said member list, which are memorized, only when said authentication was verified.

As explained above, there are the following effects in the invention of Example 6.
In this invention, according to the modification directive from the master having the proper permission, the team data lists, such as the master list and the member list, etc., stored in the server etc., are retrieved, and, after verifying that these lists are created rightly by the master having the proper privilege, these lists are modified and returned to the destination. By this way, it is detectable that the person not having the proper privilege, such as the general members other than the master, the manager of the server, and the cracker, operated the team data list unjustly.

Moreover, since the team master himself can modify the team master in this invention, the delegation of privilege of the team master can be realized, without intervention of the administrator of the server, etc., where the team data list is stored. And since the structure, which can administrate the team data list by the multiple managers, is realizable, it becomes possible to make it alleviate that the load concentrates on few administrators.

Moreover, since the signature of the master is included in the team data list in this invention, it becomes possible to detect unjust acts, such as tampering, etc., made to the team data list.
Moreover, when the reference request or update request of the team data list are made in this invention, since the permission test whether the director, who did these request, has the proper privilege or not, is done, it can prevent that the person not having privilege does the improper acts.

Moreover, in this invention, while the information for identification/authentication of the team master himself, such as the public key, etc. is registered beforehand, said information is compared with digital signature of the master in the team data list, and this modification is detected, when the team master is changed, and the public key of the team master registered etc. is updated suitably. By this way, it becomes unnecessary that the user does the troublesome working by himself, in which the team master should be confirmed visually, whenever the user operates the team data list, so that said user can recognize the team master automatically.

In addition, the "computer system" here includes the hardware, such as OS and the peripheral devices. Moreover, "the record media in which computer reading is possible" means transferable mediums, such as floppy disks, optical-magnetic disks, ROM, and CD ROM, and memory devices, such as the hard disk installed in the computer system. Furthermore, "the computer readable record media" includes what holds programs dynamically in short time (the transmission medium and transmission wave), like the communication wire in the case of transmitting programs through communication lines, such as network, internet, and telephone line, and also includes what holds programs with a fixed time, like the volatile memories inside the computer system, which is the server and the client in that case. Moreover, the above-mentioned programs are for realizing one part of unit mentioned above, and the said programs can also realize the unit mentioned above in the combination with programs already recorded in the computer system.

Finally, all of the combination of the characteristic feature required of these examples is not enumerated. Moreover, combination other than the combination explained above may also be applied the invention.

## Claims

1. An information sharing system which employs the secret key cryptography and public key cryptography, wherein a secret key can be shared within at least a group, said information sharing system comprising:
an information storing device which can at least be accessed by multiple members, and which is capable of storing the digital signature of the team master, a member list including public key information regarding members, a secret key list including encrypted key information, and encrypted data;
a storing unit for storing the public key for at least one member which is permitted to view information;
an encryption unit for encrypting input information based on said secret key cryptography which uses a secret key for encrypting information, thereby generating encrypted data;
an encrypted key generation unit for encrypting the secret key used for encryption with a public key stored in said storing unit and specified, thereby generating an encrypted key;
a transmitting unit for transmitting said plurality of encrypted keys and encrypted data to said information storing device;
a list administration unit which obtains a member list from said information storing device, judges whether or not the signature of the team master of said member list matches the specified signature, performs registration of public keys of members to be added or deletion of canceling member's public keys only in the event that said signatures match, and in the event of additional registration or cancellation, creates a new member list including at least the signature of the team master and public key information of members, and transmits the created member list to said information storing device; and
an encryption/decryption device which has a decryption unit for obtaining desired encrypted key information and encrypted data from said information- storing device, decrypting said secret key from this encrypted key information, and decrypting the obtained encrypted data with the decrypted secret key.

2. An information sharing system according to Claim 1, wherein said information storing device and said encryption/decryption device further comprise a transmission/reception notification unit for, in the event that information or data is transmitted from a sender side to a recipient side, performing transmission notification wherein the reception side is notified that information or data has been transmitted from said transmission side, and performing reception notification wherein the tranmission side is notified that information or data has been received by said reception side indeed.

3. An information sharing system according to Claim 1, wherein said encryption/decryption device further comprises an output unit for obtaining at least encrypted key information from the secret key list in said information storing device, decrypting the secret key from this encrypted key information, encrypting input information based on said secret key cryptography with the decrypted secret key so as to generate encrypted data, and outputting said encrypted data to said transmitting unit.

4. An information processing method for an information sharing system which employs the secret key cryptography and public key cryptography, wherein a secret key can be shared within at least a group, and wherein an information storing device, which can at least be accessed by multiple members, stores the signature of the team master, a member list including public key information regarding members, a secret key list including encrypted key information, and encrypted data, said method comprising the steps of:
a step for obtaining the member list from said information storing device in the event of additional registration or cancellation of a member belonging to the group;
a step for judging whether or not the signature of the team master of said member list matches the specified signature;
a step for creating a new member list including at least the signature of the team master and public key information of members only in the event that said signatures match; and
a step for transmitting the created member list to said information storing device.

5. An information processing method for an information sharing system which employs the secret key cryptography and public key cryptography, wherein a secret key can be shared within at least a group, and wherein an information storing device, which can at least be accessed by multiple members, stores the signature of the team master, at least a member list including public key information regarding members, a secret key list including encrypted key information, and encrypted data, said method comprising the steps of:
a step for obtaining the member list from said information storing device in the event of registering a secret key to be used by members belonging to the group;
a step for judging whether or not the signature of the team master of said member list matches the specified signature;
a step for encrypting the secret key to be registered using said specified secret key, only in the event that said signatures match; and
a step for transmitting the encrypted secret key to said information storing device.

6. An information processing method for an information sharing system according to Claim 5 which employs the secret key cryptography and public key cryptography, wherein a secret key can be shared within at least a group, and wherein an information storing device, which can at least be accessed by multiple members, stores at least the signature of the team master, a member list including public key information regarding members, a secret key list including encrypted key information, and encrypted data, said method further comprising:
a transmission/reception notification step for, in the event that information or data is transmitted from a sender side to a recipient side, performing transmission notification wherein the reception side is notified that information or data has been transmitted from said transmission side, and performing receiving notification wherein the transmission side is notified that information or data has been received by said reception side indeed.

7. An information processing method for an information sharing system which employs the secret key cryptography and public key cryptography, wherein a secret key can be shared within at least a group, and wherein an information storing device which can at least be accessed by multiple members stores at least the signature of the team master, a group list including public key information regarding members, a secret key list including encryption key information, and encryption data, said method comprising the steps of:
a step for obtaining at least encrypted key information from the secret key list in said information storing device;
a step for decrypting a secret key from this encrypted key information;
a step for encrypting input information based on said common key cryptography with the decrypted secret key so as to generate encrypted data; and
a step for transmitting the encrypted data to said information storing device.

8. An information processing method for an information sharing system according to Claim 7 which employs the secret key cryptography and public key cryptography, wherein a secret key can be shared within at least a group, and wherein an information storing device which can at least be accessed by multiple members stores at least the signature of the team master, a member list including public key information regarding members, a secret key list including encrypted key information, and encrypted data, said method further comprising:
a transmission/reception notification step for, in the event that information or data is transmitted from a sender side to a recipient side, performing transmission notification wherein the reception side is notified that information or data has been transmitted from said transmission side, and performing reception notification wherein the transmission side is notified that information or data has been received by said reception side indeed.

9. An information processing method for an information sharing system which employs the secret key cryptography and public key cryptography, wherein a secret key can be shared within at least a group, and wherein an information storing device which can at least be accessed by multiple members stores at least the signature of the team master, a member list including public key information regarding members, a secret key list including encrypted key information, and encrypted data, said method comprising the steps of:
a step for obtaining desired encrypted key information and encrypted data from said information storing device;
a step for decrypting the secret key from this encrypted key information; and
a step for decrypting the obtained encrypted data with the decrypted secret key.

10. An information processing method for an information sharing system according to Claim 9 which employs the secret key cryptography and public key cryptography, wherein a secret key can be shared within at least a group, and wherein an information storing device which can at least be accessed by multiple members stores at least the signature of the team master, a member list including public key information regarding members, a secret key list including encrypted key information, and encrypted data, said method further comprising:
a transmission/reception notification step for, in the event that information or data is sent from a sender side to a recipient side, performing transmission notification wherein the reception side is notified that information or data has been transmitted from said transmission side, and performing reception notification wherein the transmission side is notified that information or data has been received by said reception side indeed.

11. A computer-readable recording medium storing programs for causing a computer to execute the following steps:
a step for obtaining a member list from an information storing device which can at least be accessed by multiple members, and which is capable of storing the signature of the team master, a member list including public key information regarding members, a secret key list including encrypted key information, and encrypted data;
a step for judging whether or not the signature of the team master of said member list matches the specified signature;
a step for creating a new member list including at least the signature of the team master and public key information of members only in the event that said signatures match; and
a step for transmitting the encrypted secret key to said information storing device.

12. A computer-readable recording medium storing programs for causing a computer to execute the following steps:
a step for obtaining a member list from an information storing device which can at least be accessed by multiple members, and which is capable of storing the signature of the team master, a member list including public key information regarding members, a secret key list including encrypted key information, and encrypted data;
a step for judging whether or not the signature of the team master of said member list matches the specified signature;
a step for encrypting the secret key to be registered using said specified secret key, only in the event that said signatures match; and
a step for transmitting the created member list to said information storing device.

13. A computer-readable recording medium according to Claim 12 further storing programs for causing a computer to execute a transmission/reception notification step for, in the event that information or data is sent from a sender side to a recipient side, performing transmission notification wherein the reception side is notified that information or data has been transmitted from said transmission side, and performing reception notification wherein the transmission side is notified that information or data has been received by said reception side indeed.

14. A computer-readable recording medium storing programs for causing a computer to execute the following steps:
a step for obtaining at least encrypted key information from the secret key list in an information storing device which can at least be accessed by multiple members, and which is capable of storing the signature of the team master, a member list including public key information regarding members, a secret key list including encrypted key information, and encrypted data;
a step for decrypting a secret key from this encrypted key information;
a step for encrypting input information based on said secret key cryptography with the decrypted secret key so as to generate encrypted data; and
a step for transmitting the encrypted data to said information storing device.

15. A computer-readable recording medium according to Claim 14 further storing programs for causing a computer to execute a transmission/reception notification step for, in the event that information or data is sent from a sender side to a recipient side, performing transmission notification wherein the reception side is notified that information or data has been transmitted from said transmission side, and performing reception notification wherein the transmission side is notified that information or data has been received by said recipient side indeed.

16. A computer-readable recording medium storing programs for causing a computer to execute the following steps:
a step for obtaining desired encrypted key information and encrypted data from said information storing device storing at least the signature of the team master, a member list including public key information regarding members, a secret key list including encrypted key information, and encrypted data;
a step for decrypting the secret key from this encrypted key information; and
a step for decrypting the obtained encrypted data with the decrypted secret key.

17. A computer-readable recording medium according to Claim 16 further storing programs for causing a computer to execute a transmission/reception notification step for, in the event that information or data is sent from a sender side to a recipient side, performing transmission notification wherein the reception side is notified that information or data has been transmitted from said transmission side, and performing reception notification wherein the transmission side is notified that information or data has been received by said reception side indeed.

18. An information storing device which can at least be accessed by multiple members, and which is capable of storing a member list including public key information regarding members, a secret key list including encrypted key information, and encrypted data, and which employs the secret key cryptography and public key cryptography, wherein a secret key can be shared within at least a group, said device comprising:
a member list administration unit capable of changing said member list in response to a member list manipulation request;
a secret key administration unit for registering a secret key for which a request has been made to said secret key list in response to a registration request for a secret key, this registration including the encrypted key information of said secret key, and selecting a secret key optimal for sharing information within a certain group at the time of the request, in response to the secret key request, and transmitting the selected secret key to the requesting destination; and
an encrypted data administration unit for storing the encrypted data along with secret key information used for encrypting said data in response to the registration request of the encrypted data, and transmitting the relevant stored encrypted data and secret key information to the requesting destination in response to the request for obtaining encrypted data.

19. An information storing device according to Claim 18, wherein said member list administration unit and secret key administration unit change said member list and secret key list so that in the event of newly registering a member to a certain group, information shared by the group before the time of registration can be read.

20. An information storing device according to Claim 18, wherein said member list administration unit and secret key administration unit change said member list and secret key list so that in the event of deleting a member from a certain group, information shared by the group after the member is deleted cannot be read by the deleted member.

21. An information processing method for an information storing device which can at least be accessed by multiple members, and which is capable of storing a member list including public key information regarding members, a secret key list including encrypted key information, and encrypted data, and which employs the secret key cryptography and public key cryptography, wherein a secret key can be shared within at least a group, said method comprising the steps of:
a step for changing said member list in response to a member list manipulation request;
a step for registering a secret key for which a request has been made to said secret key list in response to a registration request for a secret key, this registration including the encrypted key information of said secret key;
a step for selecting a secret key optimal for sharing information within a certain group at the time of the request, in response to the secret key request, and transmitting the selected secret key to the requesting destination;
a step for storing the encrypted data along with secret key information used for encrypting said data in response to the registration request of the encrypted data; and
a step for transmitting the relevant stored encrypted data and secret key information to the requesting destination in response to the request for obtaining encrypted data.

22. An information processing method for an information storing device according to Claim 21, further comprising a step for changing said member list and secret key list so that in the event of newly registering a member to a certain group, information shared by the group before the time of registration can be read.

23. An information processing method for an information storing device according to Claim 21, further comprising a step for changing said member list and secret key list so that in the event of deleting a member from a certain group, information shared by the group after the member is deleted cannot be read by the deleted member.

24. A computer-readable recording medium storing programs for causing a computer to execute the following steps:
a step for changing said member list in response to a member list manipulation request;
a step for registering a secret key for which a request has been made to said secret key list in response to a registration request for a secret key, this registration including the encrypted key information of said secret key;
a step for selecting a secret key optimal for sharing information within a certain group at the time of the request, in response to the secret key request, and transmitting the selected secret key to the requesting destination;
a step for storing the encrypted data along with secret key information used for encrypting said data in response to the registration request of the encrypted data; and
a step for transmitting the relevant stored encrypted data and secret key information to the requesting destination in response to the request for obtaining encrypted data.

25. A computer-readable recording medium storing programs for causing a computer to execute the following steps:
a step for changing said member list in response to a member list manipulation request;
a step for registering a secret key for which a request has been made to said secret key list in response to a registration request for a secret key, this registration including the encrypted key information of said secret key;
a step for selecting a secret key optimal for sharing information within a certain group at the time of the request, in response to the secret key request, and transmitting the selected secret key to the requesting destination;
a step for storing the encrypted data along with secret key information used for encrypting said data in response to the registration request of the encrypted data;
a step for transmitting the relevant stored encrypted data and secret key information to the requesting destination in response to the request for obtaining encryption data; and
a step for changing said member list and secret key list so that in the event of newly registering a member to a certain group, information shared by the group before the time of registration can be read.

26. A computer-readable recording medium storing programs for causing a computer to execute the following steps:
a step for changing said member list in response to a member list manipulation request;
a step for registering a secret key for which a request has been made to said secret key list in response to a registration request for a secret key, this registration including the encrypted key information of said secret key;
a step for selecting a secret key optimal for sharing information within a certain group at the time of the request, in response to the secret key request, and transmitting the selected secret key to the requesting destination;
a step for storing the encrypted data along with secret key information used for encrypting said data in response to the registration request of the encrypted data;
a step for transmitting the relevant stored encrypted data and secret key information to the requesting destination in response to the request for obtaining encrypted data; and
a step for changing said member list and secret key list so that in the event of deleting a member from a certain group, information shared by the group after the member is deleted cannot be read by the deleted member.

27. A computer-readable recording medium storing programs for causing a computer to execute the following steps:
a step for changing said member list in response to a member list manipulation request;
a step for registering a secret key for which a request has been made to said secret key list in response to a registration request for a secret key, this registration including the encrypted key information of said secret key;
a step for selecting a secret key optimal for sharing information within a certain group at the time of the request, in response to the secret key request, and transmitting the selected secret key to the requesting destination;
a step for storing the encrypted data along with secret key information used for encrypting said data in response to the registration request of the encrypted data;
a step for transmitting the relevant stored encrypted data and secret key information to the requesting destination in response to the request for obtaining encrypted data;
a step for changing said member list and secret key list so that in the event of newly registering a member to a certain group, information shared by the group before the time of registration can be read; and
a step for changing said member list and secret key list so that in the event of deleting a member from a certain group, information shared by the group after the member is deleted cannot be read by the deleted member.

28. An information tamper detection device having a sending terminal located at the sender side, and a receiving terminal located at the recipient side and connected with said sending terminal via a network, whereby information is sent and received between said sending terminal and receiving terminal, said information tamper detection device comprising:
a received contents confirmation data creation unit for creating received contents confirmation data indicating that said receiving terminal has confirmed reception of said information;
a sending unit for sending said received contents confirmation data via said network;
a receiving unit for receiving said receiving contents confirmation data via said network; and
a tamper detection unit which compares said information sent from said sending terminal with said receiving contents confirmation data, and detects tampering by the comparison results.

29. An information tamper detection device according to Claim 28, wherein said received contents confirmation data creation unit creates said receiving contents confirmation data based on one or a combination of a plurality of the following:
all or part of said information received by said receiving terminal;
a message digest consisting of all or part of said information digested by using Hash function;
sender information relating to the sender;
recipient information relating to the recipient; and
communication information.

30. An information tamper detection device according to Claim 28, wherein said receiving contents confirmation data creation unit creates said receiving contents confirmation data based on a message digest consisting of one or a combination of a plurality of the following, digested by using Hash function:
all or part of said information received by said receiving terminal;
a message digest consisting of all or part of said information digested by using Hash function;
sender information relating to the sender;
recipient information relating to the recipient; and
communication information.

31. An information tamper detection device according to Claim 28, wherein said receiving contents confirmation data creation unit creates said receiving contents confirmation data regarding one or a combination of a plurality of the following, bearing a digital signature:
all or part of said information received by said receiving side terminal;
a message digest consisting of all or part of said information digested by using Hash function;
sender information relating to the sender;
recipient information relating to the recipient; and
communication information.

32. An information tamper detection device according to Claim 28, wherein said receiving contents confirmation data creation unit
creates information consisting of one or a combination of a plurality of the following:
all or part of said information received by said receiving terminal;
a message digest consisting of all or part of said information digested by using Hash function;
sender information relating to the sender;
recipient information relating to the recipient; and
communication information;
creates a message digest comprised of said combination of information digested by using Hash function, and said combination of information bearing a digital signature; and
creates as the receiving contents confirmation data, a combination of two or more of the following:
said combination of information;
said message digest; and
said digital signed information.

33. An information tamper detection device having a sending terminal located at the sender side, and a receiving terminal located at the recipient side and connected with said sending terminal via a network, whereby information is sent and received between said sending terminal and receiving terminal, said information tamper detection device comprising:
a receiving contents confirmation data creation unit for creating receiving contents confirmation data indicating that said receiving terminal has confirmed reception of said information;
a transmitting unit for transmitting said receiving contents confirmation data via said network;
a receiving unit for receiving said receiving contents confirmation data via said network; and
a computer-readable recording medium storing tampering-detection programs causing a computer to serve as a tamper detection unit which compares said information sent from said sending terminal with said receiving contents confirmation data, and detects tampering by the comparison results.

34. An information tamper detection device having a sending terminal located at the sender side, and a receiving terminal located at the recipient side and connected with said transmitting terminal via a network, whereby information is sent and received, said information tamper detection device comprising:
a receiving unit provided to said sending terminal, which receives received contents confirmation data via said network, said received contents confirmation information having been generated by said receiving terminal and indicating that said receiving terminal has confirmed reception of said information; and
a tamper detection unit provided to said sender side, which compares said received contents confirmation data received from said receiving unit with said information sent from said sending terminal, and detects tampering based on the comparison results thereof.

35. An information tamper detection device according to Claim 34, wherein said received contents confirmation data comprises information consisting of one or a combination of a plurality of the following:
all or part of said information received by said receiving terminal;
a message digest consisting of all or part of said information digested by using Hash function;
sender information relating to the sender;
recipient information relating to the recipient; and
communication information.

36. An information tamper detection device according to Claim 34, wherein said received contents confirmation data comprises information consisting of a message digest consisting of one or a combination of a plurality of the following, digested by using Hash function:
all or part of said information received by said receiving terminal;
a message digest consisting of all or part of said information digested by using Hash function;
sender information relating to the sender;
recipient information relating to the recipient; and
communication information.

37. An information tamper detection device according to Claim 34, wherein said received contents confirmation data comprises information consisting of one or a combination of a plurality of the following, bearing a digital signature:
all or part of said information received by said receiving terminal;
a message digest consisting of all or part of said information digested by using Hash function;
sender information relating to the sender;
recipient information relating to the recipient; and
communication information.

38. An information tamper detection device according to Claim 34, wherein said receiving contents confirmation data is created based on information consisting of one or a combination of a plurality of the following:
all or part of said information received by said receiving terminal;
a message digest consisting of all or part of said information digested by using Hash function;
sender information relating to the sender;
recipient information relating to the recipient; and
communication information;
is created as a message digest comprised of said combination of information digested by using Hash function, and said combination of information bearing a digital signature; and
comprises a combination of two or more of the following:
said combination of information;
said message digest; and
said digital signed information.

39. An information tamper detection device having a sending terminal located at the sender side, and a receiving terminal located at the recipient side and connected with said sending terminal via a network, whereby information is sent and received, said information tamper detection device comprising:
a receiving unit provided to said sending terminal, which receives received contents confirmation data via said network, said received contents confirmation data having been generated by said receiving terminal and indicating that said receiving terminal has confirmed reception of said information; and
a computer-readable recording medium storing tampering-detection programs causing a computer to serve as a tamper detection unit provided to said sender side, which compares said reception contents confirmation information received from said receiving unit with said information sent from said sending terminal, and detects tampering based on the comparison results thereof.

40. An information tamper detection device having a sending terminal located at the sender side, and a receiving terminal located at the recipient side and connected with said sending terminal via a network, whereby information is sent and received between said sending terminal and receiving terminal, said information tamper detection device comprising:
a received contents confirmation data creation unit for creating receiving contents confirmation data indicating that said receiving terminal has confirmed reception of said information;
a sending unit for sending said received contents confirmation data via said network;
a receiving unit for receiving said received contents confirmation data via said network; and
a sent contents confirmation data creation unit which creates sent contents confirmation data based on said received contents confirmation data, indicating that the sending terminal has sent the information received by said receiving terminal, and sends the sent contents confirmation data to said receiving terminal via said network; and
a tamper detection unit which compares said sent contents confirmation data sent from said sent contents confirmation data creation unit with said information received by said receiving terminal, and detects tampering based on the comparison results.

41. An information tamper detection device according to Claim 40, wherein said sent contents confirmation data creation unit creates sent contents confirmation data based on one or a combination of a plurality of said received contents confirmation data and confirmation data indicating confirmation of the contents of said received contents confirmation data.

42. An information tamper detection device according to Claim 40, wherein said sent contents confirmation data creation unit creates sent contents confirmation data based on a message digest consisting of one or a combination of a plurality of said received contents confirmation data and said confirmation data, digested by using Hash function.

43. An information tamper detection device according to Claim 40, wherein said sent contents confirmation data creation unit creates sent contents confirmation data as one or a combination of a plurality of said received contents confirmation data and said confirmation data, with a digital signature.

44. An information tamper detection device according to Claim 40, wherein said sent contents confirmation data creation unit creates sent contents confirmation data based on a message digest consisting of one or a combination of a plurality of said received contents confirmation data and said confirmation data, digested by using Hash function;
and wherein said sent contents confirmation data creation unit creates sent contents confirmation data as one or a combination of a plurality of said received contents confirmation data and said confirmation data, with a digital signature;
and wherein said sent contents confirmation data creation unit creates sent contents confirmation data based on a combination of two or more of the following:
said combination of information;
said message digest; and
said digital signed information.

45. An information tamper detection device having a sending terminal located at the sender side, and a receiving terminal located at the recipient side and connected with said sending terminal via a network, whereby information is sent and received, said information tamper detection device comprising:
a received contents confirmation data creation unit, provided to said receiving terminal, for creating received contents confirmation data indicating that said receiving terminal has confirmed reception of said data;
a sending unit, provided to said sending terminal, for sending said received contents confirmation data via said network; and
a tamper detection unit provided to said receiving terminal, which receives sent contents confirmation data via said network indicating that the information received by said receiving terminal has been transmitted, said sent contents confirmation data having been created by said sending terminal based on said received contents confirmation data, and which compares said sent contents confirmation data with said information received from said receiving terminal, and which detects tampering based on the comparison results thereof.

46. An information tamper detection device according to Claim 45, wherein said sent contents confirmation data comprises one or a combination of a plurality of said received contents confirmation data and confirmation data indicating confirmation of the contents of said received contents confirmation data.

47. An information tamper detection device according to Claim 45, wherein said sent contents confirmation data comprises a message digest consisting of one or a combination of a plurality of said received contents confirmation data and said confirmation data, digested by using Hash function.

48. An information tamper detection device according to Claim 45, wherein said sent contents confirmation data comprises one or a combination of a plurality of said received contents confirmation data and said confirmation data, with a digital signature.

49. An information tamper detection device according to Claim 45, wherein said sent contents confirmation data is created based on a message digest consisting of one or a combination of a plurality of said received contents confirmation data and confirmation data indicating confirmation of the contents of said received contents confirmation data, digested by using Hash function;
and wherein said sent contents confirmation data is created as one or a combination of a plurality of said received contents confirmation data and said confirmation data, with a digital signature;
and wherein said sent contents confirmation data is created based on a combination of two or more of the following:
said combination of information;
said message digest; and
said digital signed information.

50. An information tamper detection device having a sending terminal located at the sender side, and a receiving terminal located at the recipient side and connected with said sending terminal via a network, whereby information is sent and received, said information tamper detection device comprising:
a received contents confirmation data creation unit, provided to said receiving terminal, for creating received contents confirmation data indicating that said receiving terminal has confirmed reception of said data;
a sending unit, provided to said sending terminal, for sending said received contents confirmation data via said network; and
a computer-readable recording medium storing tampering-detection programs causing a computer to serve as a tamper detection unit provided to said receiving terminal, which receives sent contents confirmation data via said network indicating that the data received by said receiving terminal has been sent, said sent contents confirmation data having been created by said sending terminal based on said received contents confirmation data, and which compares said sent contents confirmation data with said data received from said receiving terminal, and which detects tampering based on the comparison results thereof.

51. An encryption device comprising a key encryption unit and an encryption unit;
said key encryption unit comprising:
a secret key obtaining unit for either obtaining or generating a secret key used for encryption employing the secret key cryptography;
a secret key encryption unit for encoding said secret key employing the public key cryptography so as to create an encrypted secret key; and
a first secret key tamper detection code creation unit for creating key information from said secret key, to be used for secret key tamper detection;
and said encryption unit comprising:
a data encryption unit for encrypting plain text using said secret key to create encrypted message; and
a first data tamper detection code creation unit for creating first data tamper detection code from said plain text.

52. An encryption device according to Claim 51, wherein said secret key encryption unit uses the public key for each user sharing encrypted message generated by said data encryption unit to encrypt said secret key and generate an encrypted secret key.

53. An encryption device according to Claim 51, said encryption device further comprising a key decryption unit;
said key decryption unit comprising:
a secret key decrypting unit for decrypting said encrypted secret key employing the public key cryptography;
a second secret key tamper detection code creation unit for creating secret key tamper detection code from the secret key obtained by decrypting said encrypted secret key; and
a first tamper detection unit for detecting tampering using said key information and said secret key tamper detection code;
wherein said key decryption unit verifies tampering as well as decrypts said encrypted secret key to obtain a secret key;
and wherein said encryption unit further encrypts additional plain text using said secret key.

54. A decryption device comprising a key decryption unit and a decryption unit for decrypting said encrypted secret key and said encrypted message encrypted by said encryption device according to Claim 51;
said key decryption unit comprising:
a secret key decrypting unit for decrypting said encrypted secret key by using the public key cryptography;
a second secret key tamper detection code creation unit for creating secret key tamper detection code from the secret key obtained by decrypting said encrypted secret key; and
a first tamper detection unit for detecting tampering using said key information and said secret key tamper detection code;
and said decrypting unit comprising:
a data decryption unit for decrypting encrypted message by using the secret key cryptography;
a second data tamper detection code creation unit for creating second data tamper detection code from the plain text obtained by decrypting said encrypted message; and
a second tamper detection unit for detecting tampering using said first data tamper detection code and said second data tamper detection code.

55. A decryption device according to Claim 54, wherein said secret key decryption unit decrypts all encrypted secret keys corresponding with each user sharing encrypted message;
wherein said secret key tamper detection code creation unit creates said secret key tamper detection code for each secret key obtained by decrypting;
and wherein said first tamper detection unit detects tampering using said key information and said secret key tamper detection code, and also judges secret keys corresponding to users.

56. An encryption/decryption device comprising the encryption device according to Claim 51 and the decryption device according to Claim 54.

57. An encryption method, comprising:
a procedure for either obtaining or generating a secret key used for encryption employing the secret key cryptography;
a procedure for encoding said secret key employing the public key cryptography so as to create an encrypted secret key;
a procedure for creating key information from said secret key;
a procedure for encrypting plain text using said secret key to create encrypted message; and
a procedure for creating first data tamper detection code from said plain text.

58. A decryption method, comprising:
a procedure for decrypting said encrypted secret key by employing the public key cryptography;
a procedure for creating secret key tamper detection code from the secret key obtained by decrypting said encrypted secret key;
a procedure for detecting tamper using said key information and said secret key tamper detection code;
a procedure for decrypting encrypted message by using the secret key cryptography;
a procedure for creating second data tamper detection code from the plain text obtained by decrypting said encrypted message; and
a procedure for detecting tamper using said first data tamper detection code and said second data tamper detection code.

59. A computer-readable recording medium storing programs for causing a computer to execute the following procedures:
a procedure for either obtaining or generating a secret key used for encryption using the secret key cryptography;
a procedure for encoding said secret key using the public key cryptography so as to create an encrypted secret key;
a procedure for creating key information from said secret key;
a procedure for encrypting plain text using said secret key to create encrypted message; and
a procedure for creating first data tamper detection code from said plain text.

60. A computer-readable recording medium storing programs for causing a computer to execute the following procedures:
a procedure for decrypting said encrypted secret key by using the public key cryptography;
a procedure for creating secret key tamper detection code from the secret key obtained by decrypting said encrypted secret key;
a procedure for detecting tampering using said key information and said secret key tamper detection code;
a procedure for decrypting encrypted message by using the secret key cryptography;
a procedure for creating second data tamper detection code from the plain text obtained by decrypting said encrypted message; and
a procedure for detecting tampering using said first data tamper detection code and said second data tamper detection code.

61. A team data list administration device for administration of team data lists for hierarchical ordering of a team, said device comprising:
an authentication unit for requesting operation of said team data list to a certain request destination, and according to the operation request, obtaining from the request destination the following for each team from the team which is the object of operation to the root team:
authority data including the identifier indicating the parent team of own team, and the digital signature of the administrator of said parent team; and
a team data list having an authority list including administrator information relating to authorized administration personnel of sub-teams under own team, and the digital signature of the team master which is the administrator of own team or the administrator of a parent team;
wherein confirmation is made for each team while backtracking the obtained team to said root team using said identifier, that there has been no tampering with the digital signature on said team data list and that the signature is that of one having authority, using said administrator information;
a team data list modification unit for modifying said team data list according to said operation request, once the validity thereof has been confirmed by said authentication unit; and
a signing unit for creating a digital signature of the individual instructing said operation request and attaching said digital signature said modified team data list, and sending this to said request destination.

62. A team data list administration device according to Claim 61, wherein said administration information comprises information relating to one or more sub-authorities which have been appointed from own team by said team master and have administrating authority over said sub-teams, and relating to said team master having administrating authority over said sub-authorities in addition to the authority of said sub-authorities.

63. A team data list administration device according to Claim 61, further comprising:
a registering unit for obtaining identification information for performing identification of the team master of said root team and registering said identification information; and
a team master verification unit for using said identification information which has been pre-registered to verify that the digital signature of the authority data of said root team being sent from the request destination is the digital signature of the team master.

64. A team data list storing device for storing team data lists for hierarchical ordering of a team, said device comprising:
an authority data storing unit for storing, for each team, authority data including the identifier indicating the parent team of own team, and the digital signature of the administrator of said parent team;
an authority list storing unit for storing, for each team, an authority list having an authority list including administrator information relating to authorized administration personnel of sub-teams under own team, and the digital signature of the team master which is the administrator of own team or the administrator of a parent team; and
a permission test unit which uses said administrator information to confirm that the individual instructing said operation request from a certain request source to a team data list including at least said authority data and said authority list has request authority wherein in the case of a reference request or deletion request, the requested team data list is returned to said request source or deleted, according to the reference request or deletion request, and wherein in the case of an update request, confirmation is made that the digital signature of the team data list sent from said request source is the signature of an individual having authority, thereby updating the stored contents of said authority data storing unit and said authority list storing unit with the team data list that has been sent.

65. A team data list administration device according to Claim 64, wherein said administration information comprises information relating to one or more sub-authorities which have been appointed from own team by said team master and have administrating authority over said sub-teams, and relating to said team master having administrating privilege over said sub-authorities in addition to the privilege of said sub-authorities.

66. A team data list processing system having a team data list administration device according to one of the items in Claim 61 which is the request source, and the team data list storing device according to Claim 64 which is the request destination.

67. A recording medium, storing team data list administration programs for administration of team data lists for hierarchical ordering of a team, said programs causing a computer to execute the following processes:
a process for requesting operation of said team data list to a certain request destination;
a process for obtaining from the request destination the following for each team from the team which is the object of operation to the root team, according to the operation request:
authority data including the identifier indicating the parent team of own team, and the digital signature of the administrator of said parent team; and
a team data list having an authority list including administrator information relating to authorized administration personnel of sub-teams under own team, and the digital signature of the team master which is the administrator of own team or the administrator of a parent team;
an authentication process for confirming each team while backtracking the obtained team to said root team using said identifier, that there has been no tampering with the digital signature on said team data list and that the signature is that of one having privilege, using said administrator information;
a modification process for modifying said team data list according to said operation request, once the validity thereof has been confirmed by said authentication process; and
a process for creating a digital signature of the individual instructing said operation request and attaching said digital signature to said modified team data list, and sending this to said request source.

68. A recording medium, storing team data list administration programs for administration of team data lists for hierarchical ordering of a team, said programs causing a computer to execute the following processes:
a process for storing beforehand, for each team, authority data including the identifier indicating the parent team of own team, and the digital signature of the administrator of said parent team;
a process for storing beforehand, for each team, an authority list having an authority list including administrator information relating to authorized administration personnel of sub-teams under own team, and the digital signature of the team master which is the administrator of own team or the administrator of a parent team; and
a permission test process which uses said administrator information to confirm that the individual instructing said operation request from a certain request source to a team data list including at least said authority data and said authority list has request privilege, wherein in the case of a reference request or deletion request, the requested team data list is returned to said request source or deleted, according to the reference request or deletion request, and wherein in the case of an update request, confirmation is made that the digital signature of the team data list sent from said request source is the signature of a director having authority, thereby updating the stored contents of said authority data storing unit and said authority list storing unit with the team data list that has been sent.

69. A member list administration device in a broadcast communication system, said system comprising:
an encryption information creating device which creates code information including encrypted information formed by encrypting information to be sent;
a member list administration device performing administration of members lists including public keys of members to receive distribution of the broadcast;
an encrypted message decryption device which decrypts said encrypted message; and
a message broadcast device which receives encrypted message sent from said encrypted message creation device and distributes said encrypted message to one or more of said encrypted message decryption devices, based on said member list;
said member list administration device comprising:
a list creation unit for creating a member list including the public key(s) of one or more members for broadcast communication; and
a public key administration unit for obtaining and saving said public keys.

70. A member list administration device according to Claim 69, further comprising a list retrieval and storing unit for retrieving and storing said member list either from a terminal via a network, or from a storage medium connected to the device.

71. A member list administration device according to Claim 69, further comprising a list transmitting unit for transmitting said member list via a network to a database connected to said network, said message broadcast device, or said encrypted message creation device or said encrypted message decryption device used by members included in said member list.

72. A member list administration device according to Claim 69, further comprising a subscription acceptor comprising:
a subscription request item setting unit for setting subscription request items for joining a broadcast communication member list; and
a subscription license judgement unit for judging whether or not the request items input and transmitted from the applicant satisfy said subscription request items, and whether or not subscription is admitted.

73. A encrypted message creation device in a broadcast communication system, said system comprising:
an encrypted message creation device which creates encrypted message including encrypted information formed by encrypting information to be sent;
a member list administration device performing administration of members lists including public keys of members to receive distribution of the broadcast;
an encrypted message decryption device which decrypts said encrypted message; and
a message broadcast device which receives encrypted message sent from said encrypted message creation device and distributes said encrypted message to one or more of said encrypted message decryption devices, based on said member list;
said encrypted message creation device comprising:
a list retrieval and storing unit for retrieving and storing said member list either from a terminal via a network, or from a storage medium connected to the device; and
an encryption unit which obtains broadcast communication text, and encrypts said broadcast communication text using a public key included in said member list so as to form encrypted information.

74. A encrypted message creation device according to Claim 73, wherein said encryption unit creates an encrypted message of said broadcast communication text encrypted by the secret key cryptography, creates one or more encrypted secret keys of the secret key used in said secret key cryptography encrypted by the public key cryptography using one or more public keys included in said member list, creating key selection information for selecting encrypted secret keys corresponding to the members receiving distribution of the broadcast, and outputting said encrypted message, said encrypted secret key, and said key selecting information, as said encrypted information.

75. An encrypted message creation device according to Claim 73, wherein, in the event that the broadcast communication text is composed of a plurality of components, said encryption unit performs encryption for each of the components making up said broadcast communication text and creates said encrypted information.

76. An encrypted message creation device according to Claim 73, further comprising a destination check unit for, in the event that the destination of the broadcast communication text is checked and said destination is said message broadcast device, and also in the event that a member list is obtained from said list retrieval and storing unit, sending said broadcast communication text to said encryption unit.

77. An encrypted message creation device according to Claim 73, further comprising a multiple parts sending unit for, in the event that the broadcast communication text is comprised of a main component and one or more dependent components, including reference information enabling reference to encrypted message corresponding to the dependent component to encrypted message corresponding to the main component and sending this to said message broadcast device, and sending encrypted message corresponding to the dependent components to an information storing device on the network.

78. An encrypted message decryption device in a broadcast communication system, said system comprising:
an encrypted message creation device which creates encrypted message including encrypted information formed by encrypting information to be sent;
a member list administration device performing administration of members lists including public keys of members to receive distribution of the broadcast;
an encrypted message decryption device which decrypts said encrypted message; and
a message broadcast device which receives encrypted message sent from said encrypted message creation device and distributes said encrypted message to one or more of said encrypted message decryption devices, based on said member list;
said encrypted message decryption device further comprising:
an encrypted message retrieval unit for retrieving encrypted message transmitted from said message broadcast device; and
a decryption unit for decrypting the encrypted information included in said encrypted message.

79. An encrypted message decryption device according to Claim 78, said decryption unit comprising:
a key selection unit for making reference to key selection information included in said encrypted message, and selecting the encrypted secret key to be used for decryption;
an encrypted secret key decryption unit for decrypting with a private key of the recipient the encrypted secret key selected using the public key cryptography, thereby obtaining a secret key; and
an encrypted message decryption unit for decrypting the encrypted information included in said encrypted message using said secret key with the secret key cryptography, thereby obtaining the broadcast communication text in plain text.

80. An encrypted message decryption device according to Claim 78, said encrypted message decryption device further comprising a received notification transmitting unit for transmitting a received notification to said message broad cast device, thereby notifying that the member to receive the distribution has indeed received the same in person.

81. An encrypted message decryption device according to Claim 78, further comprising a multiple parts receiving unit for, in the event that the broadcast communication text is comprised of a main component and one or more dependent components, receiving encrypted message corresponding to the main component including reference information enabling reference to code information corresponding to the main component, and receiving encrypted message corresponding to the dependent components, based on said reference information.

82. An encrypted message decryption device according to Claim 78, further comprising a broadcast communication security checking unit for performing said checking according to one or a combination of the following:
checking of whether or not the member list used for creating encrypted message in said encrypted message creation device and the member list used for creating said distribution list are identical;
checking of whether or not the sender of encrypted message was included in the member list;
checking of security regarding whether or not encrypted message has been tampered with along the communication path;
checking of whether or not there are malicious programs or data strings in transmitted information; and
checking of whether or not a part of encrypted message comprised of a plurality of parts created at the encrypted message creation device with reference to the transmitted encrypted message is being transmitted to another information storing device.

83. An encrypted message decryption device according to Claim 78, further comprising a list retrieval and storing unit for retrieving and storing said member list from a device already storing the member list, via a network.

84. An encrypted message decryption device in a broadcast communication system, said system comprising:
an encrypted message creation device which creates encrypted message including encrypted information formed by encrypting information to be sent;
a member list administration device performing administration of members lists including public keys of members to receive distribution of the broadcast;
an encrypted message decryption device which decrypts said encrypted information; and
a message broadcast device which receives encrypted message sent from said encrypted message creation device and distributes said encrypted message to one or more of said encrypted message decryption devices, based on said member list;
said message broadcast device further comprising:
a destination list administration unit for performing administration of a destination list;
a message replication unit for replicating transmitted information; and
a transmitting unit for distributing the replicated encrypted message to each of the members to receive the distribution.

85. A message broadcast device according to Claim 84, wherein said destination list administration unit further comprises a list retrieval and storing unit which is capable of retrieving a members list from the location of storing whenever necessary, and storing said transmitted member list;
and changing said destination list so that information is distributed to the same set of members as the members included in the member list transmitted from the team master.

86. A message broadcast device according to Claim 84, further comprising a list authentication unit for automatically judging whether or not an digital signature is the signature of the valid team master, in the event that the validity of the digital signature attached to the member list is to be authenticated.

87. A message broadcast device according to Claim 84, further comprising an affixed information affixing unit for affixing an affixed information to all or a part of transmitted information.

88. A message broadcast device according to Claim 84, said message broadcast device further comprising a broadcast communication security checking unit for performing said checking according to one or a combination of the following:
checking of whether or not the member list used for creating encrypted message in said encrypted message creation device and the member list used for creating said destination list are identical;
obtaining received refusal information including the identification information of the receiving terminal or user refusing reception of information, checking whether or not the sender or sending terminal of information transmitted to the message broadcast device is included in said received refusal information;
checking of whether or not the sender of encrypted message was included in the member list;
checking of security regarding whether or not encrypted message has been tampered with along the communication path;
checking of whether or not there are malicious programs or data strings in transmitted information; and
checking of whether or not a part of encrypted message comprised of a plurality of parts created at the encrypted message creation device with reference to the transmitted encrypted message is being transmitted to another information storing device.

89. A message broadcast device according to Claim 84, further comprising a broadcast communication contents storing unit for storing the transmitted information or part of the transmitted information.

90. A message broadcast device according to Claim 84, further comprising a broadcast communication automatic start unit including:
a start request items presentation unit for presenting, on the terminal of the individual requesting start, the start request items which the individual requesting start should satisfy at the time of applying for start of broadcast communication service;
a start license judgement unit for judging whether or not the start application request transmitted by said individual requesting start satisfies the start request items, and whether start of broadcast communication service is to be permitted;
a broadcast communication start setting up unit, which, once start of broadcast communication service has been decided upon by said start license judgement unit, starts broadcast communication service wherein information is distributed to members specified by the team master, said individual requesting establishment being the team master.

91. A broadcast communication system, comprising:
a member list administration device according to Claim 69;
an encrypted message creation device according to Claim 73;
an encrypted message decryption device according to Claim 78; and
a message broadcast device according to Claim 84.

92. A computer-readable recording medium storing programs for causing a computer to execute the following procedures:
a procedure for creating a member list including the public key of at one or more members to which broadcast communication is to be conducted; and
a procedure for retrieving and storing said public key.

93. A computer-readable recording medium storing programs for causing a computer to execute the following procedures:
a procedure for retrieving and storing a member list via a network; and
a procedure for retrieving the broadcast communication text, and encrypting said broadcast communication text using the public key included in said members list.

94. A computer-readable recording medium storing programs for causing a computer to execute the following procedures:
a procedure for obtaining encrypted message transmitted from said message broadcast device; and
a procedure for decrypting encrypted information included in said encrypted message.

95. A computer-readable recording medium storing programs for causing a computer to execute the following procedures:
a procedure for performing administration of the destination list;
a procedure for replicating transmitted encrypted message; and
a procedure for distributing the replicated encrypted message to the each member to receive distribution.

96. A team data list administration device, comprising:
a list creator verification unit for notifying a certain request destination of information for performing personal identification/authentication regarding an individual instructing changes, the team data list which includes information relating to a team comprised of members mutually sharing resources and the digital signature of a master having administrative authority regarding said information and which has been prepared according to the authority of the members of the team is obtained from said request destination, and for confirming whether or not a master having authority created said team data list, based on the contents of said received team data list;
a list modification unit for modifying said team data list which has been confirmed to be a team data list created by said master having authority, according to said modifying instructions; and
a signing unit for creating a digital signature of the individual instructing the change, and affixing said digital signature to the modified team data list and sending said team data list to said request destination.

97. A team data list administration device according to Claim 96, said team data list comprising:
at least one member list including member information relating to said member and the digital signature of said master; and
a master list including master information indicating the privilege of said master and the digital signature of said master.

98. A team data list administration device according to Claim 97, wherein said master includes a team master having privilege to modify said master list, with said instruction to change being an instruction to change from said team master;
wherein said list creator verification unit verifies the digital signature of said member list at the transition state and master list at the transition state owing to being returned from said request destination corresponding to the member list and master list sent to said request destination and thereby changed;
and wherein said signature unit creates the digital signature of said master following the instructed modification owing to directive of modification, and returns the new member list and new master list formed by affixing said digital signature to said member list at the transition state and master list at the transition state.

99. A team data list administration device according to Claim 98, further comprising:
a registration unit for obtaining identification information for personal identification of said team master from a certain location, and registering said information; and
a team master verification unit for verifying whether or not the digital signature of said master is the digital signature of said team master, based on identification information of said team master, and the digital signature of said master included in said member list and said master list sent from said request destination.

100. A team data list administration device according to Claim 99, further comprising:
a modification verification unit for verifying that said team master has been modified by means of legal procedures, based on the modification in contents of the master list obtained at the time of said directive of modification, the master list at said transition state, and said new master list; and
an identification information updating unit for obtaining identification information for the team master following the modification instructed by said directive to modify, and updating the identification information of the team master before the modification which is registered in said registration unit by identification information, with confirmation of said modification being a prerequisite to this operation of said identification information updating unit.

101. A team data list storing device, comprising:
a team data list storing unit for storing the team data list which includes information relating to a team comprised of members mutually sharing resources and the digital signature of a master having administrative privilege regarding said information and which has been prepared according to the authority of members of the team;
a first permission test unit for judging to a reference request from a certain request source, whether or not a director has the privilege for said request, based on said team data list and information for performing personal identification/authentication of said director who has made the request, and sending out said team data list only to request sources including said, director having privilege; and
a second permission test unit for confirming the validity of a team data list in a modification request from said request source, based on the contents of the team data list sent from said request source, and for updating the stored contents of said time data list with the team data list regarding which the validity thereof has been confirmed.

102. A team data list storing device according to Claim 101, said team data storing unit comprising:
a member list storing unit for storing one or more member lists including at least member information relating to said members, and the digital signature of said master; and
a master list storing unit for storing a master list including at least master information indicating the authority of said master, and the digital signature of said master.

103. A team data list storing device according to Claim 102, wherein said master includes a team master having privilege to modify said master list, said second permission test unit further comprising:
a master list holding unit for holding the master list before a modification owing to a directive notified from said director to modify said team master, as a prior master list;
a portion for receiving from said request source the transitional master list and transitional member list in which information regarding said team master has been modified, out of said master list and said member list sent out to said request source by request of said request source, and detecting the modification in said team master based on these lists;
a portion for confirming the validity of the modification of said team master, based on said transitional master list and transitional member list as well as said prior master list, with detecting of said modification being a prerequisite to this operation; and
a portion for receiving the new master list and new member list to which is attached the digital signature of the post-modification chief master specified by said directive of modification, as to the transitional master list and transitional member list sent out to said request source with confirmation of the validity thereof as a prerequisite, and for confirming the authority of these lists and modifying the stored contents of said member list storing unit and said master list storing portion.

104. A team data list processing system, comprising:
a team data list administration device according to Claim 96 which is the request source; and
a team data list storing device according to Claim 101, which is the request destination.

105. A computer-readable recording medium storing team data list administration programs for causing a computer to execute the following procedures:
a process for notifying a certain request destination of information for performing personal identification/authentication regarding a director of the modifications, the team data list which includes information relating to a team comprised of members mutually sharing resources and the digital signature of a master having administrative authority regarding said information and which has been prepared according to the privilege of the members of the team is obtained from said request destination;
a processing for confirming whether or not a master having privilege created said team data list, based on the contents of said received team data list;
a list modification process for modifying said team data list which has been confirmed to be a team data list created by said master having privilege, according to said modification directive; and
a signing process for creating a digital signature of the director of the modification, and affixing said digital signature to the modified team data list and sending said team data list to said request destination.

106. A computer-readable recording medium storing team data list administration programs for causing a computer to execute the following procedures:
a process for storing the team data list which includes information relating to a team comprised of members mutually sharing resources and the digital signature of a master having administrative privilege regarding said information and which has been prepared according to the authority of members of the team;
a process for judging whether or not a director of a reference request from a certain request source has the privilege for said request, based on said team data list and information for performing personal identification/authentication of the director who has made the request, and sending out said team data list only to request sources including a director having privilege; and
a permission test process for testing the permission of a team data list in a modification request from said request source, based on the contents of the team data list sent from said request source, and for updating the stored contents of said time data list with the team data list regarding which the validity thereof has been confirmed.
